# EUROPEAN PATENT SPECIFICATION

(11) **EP 4 466 101 B1**
(45) Date of publication and mention of the grant of the patent: **25.02.2026**
(21) Application number: 23708543.6
(22) Date of filing: 16.01.2023
(51) Int. Cl.: B01J 31/22, B01J 31/24

(54) **NEW STEREORETENTIVE RUTHENIUM COMPLEXES, METHOD OF THEIR PREPARATION, INTERMEDIATES USED IN THIS METHOD AND USE OF NEW STEREORETENTIVE RUTHENIUM COMPLEXES IN OLEFIN METATHESIS REACTIONS**
STEREORETENTIVE RUTHENIUMKOMPLEXE, VERFAHREN ZU IHRER HERSTELLUNG, ZWISCHENPRODUKTE UND VERWENDUNG VON STEREORETENTIVE RUTHENIUMKOMPLEXE IN OLEFINMETATHESEREAKTIONEN
NOUVEAUX COMPLEXES DE RUTHÉNIUM STÉRÉORÉTENTIFS, PROCÉDÉ DE LEUR PRÉPARATION, INTERMÉDIAIRES UTILISÉS DANS CE PROCÉDÉ ET UTILISATION DE NOUVEAUX COMPLEXES DE RUTHÉNIUM STÉRÉORÉTENTIFS DANS DES RÉACTIONS DE MÉTATHÈSE D'OLÉFINES

(30) Priority: 17.01.2022 PL 44014722
(43) Date of publication of application: 27.11.2024
(73) Proprietor: Uniwersytet Warszawski, 00-927 Warszawa (PL)
(72) Inventor: GRELA, Karol, 01-471 Warszawa (PL); KAJETANOWICZ, Anna, 04-030 Warszawa (PL); GRZESINSKI, Lukasz, 05-300 Nowe Osiny (PL); MILEWSKI, Mariusz, 05-800 Pruszkow (PL)
(74) Representative: JD&P Patent Attorneys Joanna Dargiewicz & Partners
(86) International application number: PCT/IB2023/050374
(87) International publication number: WO 2023/135582

(56) References cited:
- WO-A1-2017/100585
- WO-A1-2018/087230
- US-A1- 2014 371 454
- MÜLLER DANIEL S ET AL: "A tutorial review of stereoretentive olefin metathesis based on ruthenium dithiolate catalysts", BEILSTEIN JOURNAL OF ORGANIC CHEMISTRY, vol. 14, 19 November 2018 (2018-11-19) - 2018, pages 2999 - 3010, XP093032731, DOI: 10.3762/bjoc.14.279

## Description

The subject matter of the invention is new stereoretentive ruthenium complexes useful as catalysts and/or (pre)catalysts for olefin metathesis reaction and their use in olefin metathesis reactions. The subject matter of the invention is also intermediates used to produce new stereoretentive ruthenium complexes, as well as a method of producing new stereoretentive ruthenium complexes. The invention finds its application as a desirable and universal tool in organic synthesis when selective synthesis Z- or E-configured olefins, depends on the C=C bond configuration in the substrate.

In recent years, great progress has been made in the application of olefin metathesis in organic synthesis [R. H. Grubbs (Ed.), A. G. Wenzel (Ed.), D. J. O'Leary (Ed.), E. Khosravi (Ed.), Handbook of Olefin Metathesis, 2nd. edition, 3 volumes 2015, Wiley-VCH Verlag GmbH & Co. KGaA, 1608 pages]. A number of homogeneous ruthenium-based olefin metathesis catalysts are known in the state of the art, which have both high activity in different types of metathesis reactions and high tolerance to functional groups found in the substrate/product. Due to the combination of these features, metathesis catalysts are of significant importance in modern organic synthesis and industry. The most extensively described (pre)catalysts in the literature are Grubbs-type, Hoveyda-type and indenylidene complexes, containing a carbene *N*-heterocyclic carbene ligand (NHC) in their structure, and more recently Bertrand-type catalysts, having a cyclic alkylaminocarbene ligand (CAAC) *[*Grubbs et al. Chem. Rev., 2010, 110, 1746-1787; WO2017055945A1]. In other cases, most of the structures of olefin metathesis catalysts are derived from these above-mentioned ruthenium complexes.

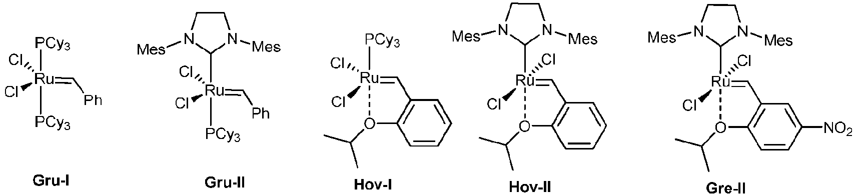

In the application of olefin metathesis in modern organic synthesis, the control of the C=C double bond configuration is very important. The first literature report on Z-selective ruthenium catalysts for olefin metathesis is from 2011 [Grubbs et al. J. Am. Chem. Soc., 2011, 133, 8525-8527]. In this scientific publication, Grubbs *et al*. described ruthenium complexes containing symmetric (Gru-Mes) and asymmetric (Gru-Ada-1) NHC ligands containing a mesyl and adamantyl substituent at the nitrogen atom, as well as the anionic ligand of pivalic acid (^{t}BuCOO⁻). Then, Prof. Grubbs' team obtained analogous structures (Gru-Ada-2, Gru-Ada-3) in which the anionic ligand is a nitro acid residue [Grubbs et al. Angew. Chem. Int. Ed., 2013, 52, 9001-9004]. These catalysts showed high chemoselectivity towards terminal C=C double bonds, which selectively form Z-configured products in the olefin metathesis reaction. In the substrate structure there was an internal (non-terminal) C=C bond with *E*-configuration, which, despite the high loading of the ruthenium catalyst and the long duration of the reaction (1 mol%, 5 hours, RT, THF), did not undergo the olefin metathesis reaction.

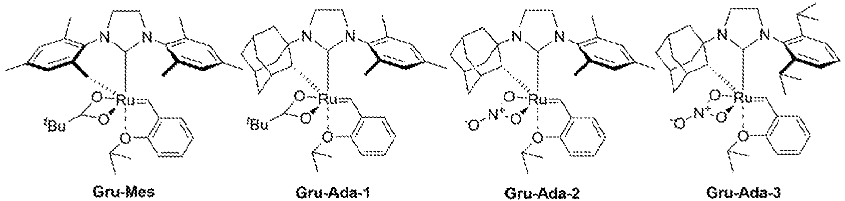

Subsequent modifications of ruthenium catalysts involved Hoveyda-Grubbs-type complexes, in the structure of which the two anionic ligands were replaced by a dithiocatechol bidentate ligand [WO2014201300A1, and A. Hoveyda et al., J. Am. Chem. Soc, 2013, 135, 10258-10261].

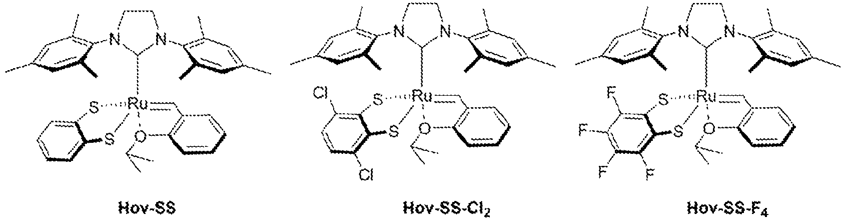

The principle of action of the above complexes is based on the retention (preservation) of the double bond configuration in the reaction product. Grubbs et al. [Org. Lett. 2016, 18, 772-775, DOI: 10.1021/acs.orglett.6b00031] showed that the use of the **Hov-SS-Cl₂** complex in the Z-5-tetradecene metathesis reaction leads to two products having only a Z-configured double bond, while when E-5-tetradecene is used as a substrate for the same reaction, the products of the transformation are exclusively olefins with an E-configuration. In other words, catalysts containing various modifications of the dithiocatechol ligand **(Hov-SS, Hov-SS-Cl₂, Hov-SS-F₄)** are characterized by high stereoretentivity, i.e. the ability to transfer the original configuration of the C=C double bond from the substrates to the products of the olefin metathesis reaction.

Chelating catalysts containing various modifications of the dithiocatechol ligand show high chemoselectivity and higher yields of the desired products compared to previous complexes reported by Grubbs. It is noteworthy that the reactions were carried out at room temperature with high catalyst loading, and with long catalyst exposure to substrates/products (up to 12 hours, THF, room temperature, 1 mol%). As the first reports in the literature described the activity of ruthenium dithiocatechol catalysts in ROMP and rare ROM/CM reactions, so it was difficult to compare the activities of the new catalysts with those previously reported.

In patent document from 2017 [WO2017100585A1], Californian researchers claimed a list of 53 ruthenium complexes containing the dianionic dithiocatechol ligand or derivatives thereof. All of the ruthenium compounds in this document contain a chelating benzylidene and an NHC ligand, substituted either symmetrically or nonsymmetrically at the NHC ligand nitrogen atoms. In contrast, not all claimed ruthenium compounds have been obtained and well characterized by comparative olefin metathesis reactions.

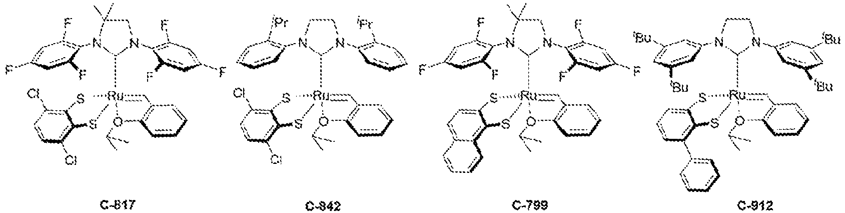

In another patent document from 2018 [WO2018087230A1], its authors obtained and characterized ruthenium complexes containing chelating benzylidene ligand activated by electron withdrawing group. The ruthenium catalysts contained a bidentate dithiocatechol derivative and NHC or CAAC ligands. The new **E5** and **E8** complexes in the model reaction proved to be slightly more active, with identical Z-selectivity, compared to previously known stereoretentive ruthenium complexes.

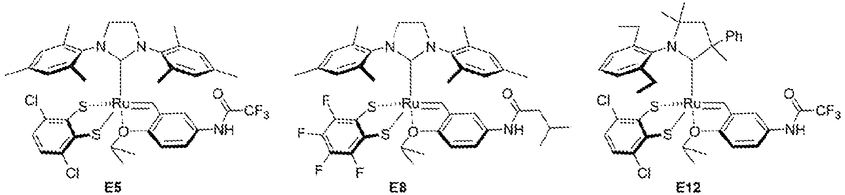

In another patent document [WO2018038928A1], its authors, from Californian company Materia, have obtained alkylidene ruthenium complexes containing a dithiocatechol ligand and a dimethylsulfoxide (**C785ₛₛ** and **C885ₛₛ**). One of the complexes, **C785ₛₛ**, was tested in a model olefin metathesis reaction (cis-5-tetradecene homometathesis), wherein there is no comparison to other known stereoretentive ruthenium complexes.

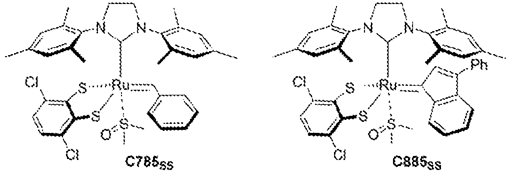

It is noteworthy that the authors of this invention predict stereoretentive properties of the ruthenium complexes (**C885ₛₛ**), which are non-benzylidene derivatives of ruthenium catalysts (they are not Hoveyda-Grubbs-type complexes). However, these complexes have not been studied, and their catalytic activities in model olefin metathesis reactions with particular emphasis on Z-selective and stereoretentive reactions are unknown.

A significant problem in the state of the art is the high price of dithiocatechol derivatives, especially those substituted with halogens, as well as long synthesis pathways for other derivatives in which the expected products are obtained in low yields. These features are a barrier to further development of stereoselective and/or stereoretentive catalysts. Obtaining, by chemical synthesis, new ruthenium catalysts for olefin metathesis with dithiocatechol-based ligands of planned properties, is becoming difficult, and economically unjustifiable for industrial scale-up.

In the search for new ruthenium complexes with high catalytic activity and enhanced selectivity to obtain the expected *Z*- or *E*-isomer, it is important that convenient synthesis pathways based on readily available and inexpensive substrates lead to these compounds. It is also important to increase the library of ligands, the use of which will constitute an alternative and/or improved source of structures for ruthenium complexes used as catalysts in stereoretentive olefin metathesis.

Another problem is the low thermal stability of *E*- and especially *Z*-selective metathesis catalysts known in the state of the art. As a result, currently used ruthenium *E*-/*Z*-selective complexes require the use of very high catalyst loading to obtain the desired product in high yield. As an example, one can mention the paper by Grubbs *et al*. from 2013, where researchers describe the possibility of synthesizing macrocyclic compounds with a *Z*-configuration double bond *via* ringclosing metathesis using Z-selective complexes [V. M. Marx, M. B. Herbert, B. K. Keitz, R. H. Grubbs, J. Am. Chem. Soc. 2013, 135, 94-97, DOI: 10.1021/ja311241q]. In the presented study, the authors use 7.5 mol% of catalyst dissolved in 1,2-dichloroethane at 60°C to obtain macrocycles in yields ranging from 30 to 75% and *Z*-isomer content in the product varying from 64 to 94%. In a study on macrocyclization and entropy-driven polymerization by ring-opening metathesis by Meyer and co-authors, as much as 10 mol% of catalyst is required to obtain a highly functionalized macrocyclic compound with an 88% yield and a *Z*-isomer content of 88% [A. L. Short, C. Fang, J. A. Nowalk, R. M. Weiss, P. Liu, T. Y. Meyer, ACS Macro Lett. 2018, 7, 858-862, DOI: 10.1021/acsmacrolett.8b00460]. Z-selective complexes of other transition metals, such as molybdenum, are characterized by low stability already at room temperature, which is again solved by using high (up to 10 mol%) loading of these complexes [M. Yu, C. Wang, A. F. Kyle, P. Jakubec, D. J. Dixon, R. R. Schrock, A. H. Hoveyda, Nature 2011, 479, 88-93, DOI: 10.1038/nature10563; H. Zhang, E. C. Yu, S. Torker, R. R. Schrock, A. H. Hoveyda, J. Am. Chem. Soc. 2014, 136, 16493-16496 DOI: 10.1021/ja510768c]. Obviously, this increases the cost of the synthesis process and contaminates the final product with a harmful transition metal. Unexpectedly, it turned out that 1,2-dithio derivatives of pyrazine, quinoxalines, derivatives thereof and other similar organic compounds can act as ligands for new stereoretentive ruthenium catalysts and/or (pre)catalysts for olefin metathesis.

In addition, it was unexpectedly found that the new olefin metathesis (pre)catalysts in the model reactions exhibit stereoretentive properties, even under significantly elevated temperature conditions. Known in the state of the art stereoselective and stereoretentive ruthenium and molybdenum olefin metathesis catalysts retain their properties only under low temperature conditions (usually room temperature), which is a major difficulty and inconvenience for large organic compounds possessing many functional groups in their structure.

In addition, it was unexpectedly found that the addition of the zinc complex has a positive effect on the activity and selectivity of the new stereoretentive ruthenium complexes in metathesis reactions allowing to obtain higher yields and/or selectivity of the reactions compared to the reactions carried out without the addition of the zinc complex.

**Summary of the invention** - the invention is disclosed in and by the appended claims.

The present invention relates to a ruthenium complex of the formula **1-Ru** 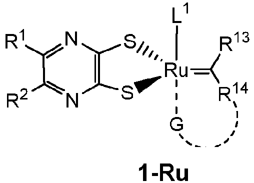 in which:
L¹ is a neutral ligand selected from N-heterocyclic carbenes (NHCs), cyclic alkylaminocarbenes (CAACs), or phosphines;
R¹ and R² are independently hydrogen, halogen, C₁-C₂₅ alkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl or C₅-C₂₄ heteroaryloxy, which are optionally substituted by at least one C₁-C₁₂ alkyl, C₁-C₁₂ perfluoroalkyl, or R¹ and R² are independently an alkoxy group (-OR"), a sulfide group (-SR"), a sulfoxide group (-S(O)R"), a sulfonium group (-S⁺R"₂), a sulfonyl group (-SO₂R"), a sulfonamide group (-SO₂NR"₂), an amine group (-NR"₂), an ammonium group (-N⁺R"₃), a nitro group (-NO₂), a cyano group (-CN), a phosphonate group (-P(O)(OR")₂), a phosphinate group (-P(O)R"(OR")), a phosphonite group (-P(OR")₂), a phosphine group (-PR"₂), a phosphine oxide group (-P(O)R"₂), a phosphonium group (-P⁺R"₃), a carboxyl group (-COOH), an ester group (-COOR"), an amide group (-CONR"₂), an amide group (-NR"C(O)R"), a formyl group (-CHO), a ketone group (-COR"), a thioamide group (-CSNR"₂), a thioketone group (-CSR"), a thionoester group (-CSOR"), a thioester group (-COSR"), a dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups to form a quaternary ammonium group, a tertiary sulfonium group, or a quaternary phosphonium group;
or R¹ and R², taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, halogen, C₁-C₂₅ alkyl group, C₁-C₁₂ perfluoroalkyl group, C₁-C₁₂ alkoxy group, C₅-C₂₄ aryloxy group, C₅-C₂₀ heteroaryloxy group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two R" groups, taken together, form C₅-C₂₅ ring, which alternatively may contain at least one heteroatom selected from oxygen, sulfur, selenium, nitrogen, phosphorus;
R¹³ and R¹⁴ are independently hydrogen, halogen, optionally substituted C₁-C₂₅ alkyl, optionally substituted C₃-C₂₅ cycloalkyl, optionally substituted C₁-C₁₂ perfluoroalkyl, optionally substituted C₂-C₂₅ alkene, optionally substituted C₂-C₂₅ alkenyl, optionally substituted C₃-C₂₅ cycloalkenyl, optionally substituted C₂-C₂₅ alkynyl, optionally substituted C₃-C₂₅ cycloalkynyl, optionally substituted C₁-C₂₅ alkoxy, optionally substituted C₅-C₂₅ aryl, optionally substituted C₅-C₂₅ aryloxy, optionally substituted C₆-C₂₅ aralkyl, optionally substituted C₅-C₂₅ heteroaryl, optionally substituted C₅-C₂₅ heteroaryloxy, optionally substituted C₅-C₂₅ perfluoroaryl, 3-12-membered heterocycle containing sulfur, oxygen, nitrogen, selenium or phosphorus, optionally substituted;
wherein the R¹³ and R¹⁴ substituents, taken together, may form a ring selected from a group comprising C₃-C₂₅ cycloalkyl, C₃-C₂₅ cycloalkenyl, C₃-C₂₅ cycloalkynyl, C₅-C₂₅ aryl, C₅-C₂₅ heteroaryl, C₅-C₂₅ perfluoroaryl, 3-12-membered heterocycle containing sulfur, oxygen, nitrogen, selenium or phosphorus, optionally substituted with one and/or more substituents independently selected from a group comprising hydrogen, halogen, C₁-C₂₅ alkyl, C₃-C₂₅ cycloalkyl, C₁-C₁₂ perfluoroalkyl, C₂-C₂₅ alkene, C₂-C₂₅ alkenyl, C₃-C₂₅ cycloalkenyl, C₂-C₂₅ alkynyl, C₃-C₂₅ cycloalkynyl, C₁-C₂₅ alkoxy, C₅-C₂₅ aryl, C₅-C₂₅ aryloxy, C₆-C₂₅ arylalkyl, C₅-C₂₅ heteroaryl, C₅-C₂₅ heteroaryloxy, C₅-C₂₅ perfluoroaryl, 3-12-membered heterocycle;
wherein the R¹³ and R¹⁴ substituents are independently preferably hydrogen and/or C₅-C₂₅ aryl independently substituted with hydrogen, halogen, C₁-C₂₅ alkyl group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group independently is hydrogen, C₁-C₅ alkyl, C₁-C₅ perfluoroalkyl, C₆-C₂₄ aryl, C₇-C₂₄ aralkyl, C₅-C₂₄ perfluoroaryl, the two R" groups, taken together, may form either C₃-C₁₂ cycloalkyl ring or C₃-C₂₅ heterocycloalkyl ring containing nitrogen, oxygen or sulfur, optionally additionally substituted with C₁-C₁₂ alkyl group, alternatively R" is a ketone group (-COR^{c}) in which R^{c} is C₁-C₁₂ perfluoroalkyl or alkoxy group (-OR^{d}) in which R^{d} is C₁-C₁₂ alkyl or C₃-C₁₂ heterocycloalkyl containing nitrogen, oxygen or sulfur optionally additionally substituted with C₁-C₁₂ alkyl group;
G is chosen from such as

- L² ligand
   L² = 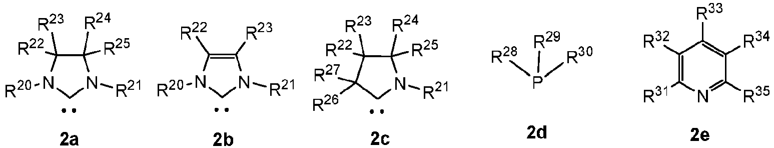
   in which the R²⁰ and R²¹ substituents are independently C₁-C₁₂ alkyl group, C₃-C₁₂ cycloalkyl group, C₅-C₂₀ aryl group, or C₅-C₂₀ heteroaryl group, C₅-C₂₅ aralkyl group, which may be substituted independently by one and/or more substituents selected from a group comprising hydrogen, halogen, C₁-C₁₂ alkyl group, C₁-C₁₂ perfluoroalkyl group, C₅-C₂₀ aryl group, C₅-C₂₀ perfluoroaryl, C₅-C₂₀ heteroaryl, C₁-C₁₂ alkoxy, C₅-C₂₄ aryloxy, C₅-C₂₀ heteroaryloxy, alkoxy group (-OR"), sulfide group (-SR"), amine group (-NR"₂), in which the R" group independently is hydrogen, C₁-C₅ alkyl, C₆-C₂₄ aryl, C₇-C₂₄ aralkyl, alternatively R²⁰ and R²¹, taken together, form C₅-C₂₅ ring;
   each R²⁰, R²¹, R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a}), in which each R^{a} is independently either hydrogen or C₁-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-CORd) group, methylester group (-CH₂OCOR^{b}), in which R^{b} is either C₅-C₂₀ aryl group or C₅-C₂₀ perfluoroaryl group; amine group (-NR^{c} 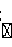 ), methylamine group (-CH₂NR^{c} 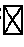 ), in which each R^{c} is independently either hydrogen or C₁-C₁₂ alkyl, the two R^{c} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
   which can be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted by C₁-C₁₂ alkyl group, (-COOR^{d}) ester group or (-COR^{d}) group, in which R^{d} is C₅-C₂₀ aryl group or C₅-C₂₀ perfluoroaryl group, or amine group (-NR^{e}₂) in which each R^{e} is independently hydrogen or C₁-C₁₂ alkyl, the two R^{e} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or quaternary ammonium group, tertiary sulfonium group or quaternary phosphonium group, and R²⁰, R²¹, R²², R²³, R²⁴, R²⁵, R²⁶, and R²⁷ substituents may optionally be interconnected to form C₄-C₁₀ cyclic system or C₄-C₁₂ polycyclic system;
   each R²⁸, R²⁹, and R³⁰ substituent is independently C₁-C₂₅ alkyl, C₃-C₁₂ cycloalkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R²⁸, R²⁹, R³⁰, taken together, form a substituted or unsubstituted cyclic C₄-C₁₀, polycyclic C₄-C₁₂, aromatic C₄-C₁₀, heteroaromatic C₄-C₁₀ system that may be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy and halogen;
   each R³¹, R³², R³³, R³⁴ and R³⁵ substituent is independently C₁-C₁₂ alkyl group, C₃-C₁₂ cycloalkyl group, C₅-C₂₀ aryl group or C₅-C₂₀ heteroaryl group, which may be substituted independently by one and/or more substituents selected from a group comprising hydrogen, C₁-C₁₂ alkyl group, C₁-C₁₂ perfluoroalkyl group, C₁-C₁₂ alkoxy group, C₅-C₂₄ aryloxy group, C₅-C₂₀ heteroaryloxy group, or halogen;
      or
- heteroatom 1
   selected from a group comprising oxygen, sulfur, selenium, substituted by a group selected from such as hydrogen, halogen, oxygen, C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, optionally substituted by acyl (-COR'), cyano (-CN), carboxyl (-COOH), ester (-COOR'), ester (-CH₂COOR'), ester (-CHR'COOR'), ester (-C(R')₂COOR'), amide (-CONR'₂), Weinreb-type amide (-CON(R')(OR')), sulfonic (-SO₂R'), formyl (-COH), sulfonamide (-SO₂NR'₂), ketone (-COR'), thioamide (-CSNR'₂), thioketone (-CSR'), thionoester (-CSOR'), thioester (-COSR') or dithioester (-CS₂R') group, in which R' group is independently C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl, C₅-C₂₄ heteroaryloxy and then the dashed line represents a direct binding of the heteroatom to the R¹⁴ substituent or represents the connection of the R¹⁴ substituent to the heteroatom via a -CH₂-, -CHR'-, or -CR'₂- methylene bridge, wherein the R¹⁴ substituent is C₅-C₁₅ aryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl; or
- heteroatom 2
   selected from a group comprising either nitrogen or phosphorus, substituted by a group selected from such as hydrogen, methylidene optionally substituted by substituent R', C₁-C₂₅ alkyl, perfluoroaryl C₁-C₂₅, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, acyl group (-COR'), ester group (-COOR'), tert-butyloxycarbonyl group (t-Boc) or 9-fluorenylmethoxycarbonyl group (Fmoc), carbamate group (-CONR 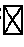 ₂), sulfonic group (-SO₂R'), formyl group (-COH), in which the R' group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy optionally substituted by acyl (-COR'), cyano (-CN), carboxyl (-COOH), ester (-COOR'), ester (-CH₂COOR'), ester (-CHR'COOR'), ester (-C(R')₂COOR'), amide (-CONR'₂), sulfonic (-SO₂R'), formyl (-COH), sulfonamide (-SO₂NR'₂), ketone (-COR'), thioamide (-CSNR'₂), thioketone (-CSR'), thionoester (-CSOR'), thioester (-COSR'), dithioester (-CS₂R') group, in which the R' group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇₋C₂₀ aralkyl, C₅-C₂₄ aryloxy, C₂-C₁₂ alkenyl, C₆-C₂₀ heteroaryl or C₅-C₂₄ heteroaryloxy and then the dashed line represents a direct binding of the heteroatom to the R¹⁴ substituent or the connection of the R¹⁴ substituent to the heteroatom via a (CH₂)-, -(CHR')-, or (CR'₂)- methylene bridge;
   wherein the R¹⁴ substituent is C₅-C₁₅ aryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, or
- heteroatom 3
   selected from a group comprising halogen, and then the dashed line represents a direct binding of the heteroatom to the R¹⁴ substituent, wherein the R¹⁴ substituent is C₅-C₁₅ aryl, or C₅-C₂₅ polyaryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which R" group is C₁-C₅ alkyl, C₁-C₅ perfluoroalkyl, C₆-C₂₄ aryl, C₇-C₂₄ aralkyl, C₅-C₂₄ perfluoroaryl.

Preferably, the neutral L¹ ligand has a structure represented by a general formula selected from either **2a, 2b,** 2c or **2d**
L¹ = 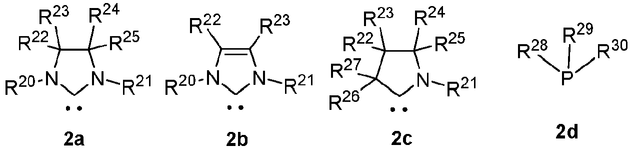 in which:
each R²⁰ and R²¹ substituent is independently C₁-C₁₂ alkyl group, C₃-C₁₂ cycloalkyl group, C₅-C₂₀ aryl group, or C₅-C₂₀ heteroaryl group which may be substituted independently by one and/or more substituents selected from a group comprising hydrogen, C₁-C₁₂ alkyl group, C₁-C₁₂ perfluoroalkyl group, C₅-C₂₀ aryl group, C₅-C₂₀ perfluoroaryl group, C₅-C₂₀ heteroaryl group, C₁-C₁₂ alkoxy, C₅-C₂₄ aryloxy, C₅-C₂₀ heteroaryloxy, or halogen, alkoxy group (-OR"), sulfide group (-SR"), halogen, amino group (-NR"₂), in which the R" group independently is hydrogen, C₁-C₅ alkyl, C₆-C₂₄ aryl, C₇-C₂₄ aralkyl, alternatively R²⁰ and R²¹, taken together, form ring C₅-C₂₅ group;
each R²⁰, R²¹, R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a}), in which each R^{a} is independently either hydrogen or C₁-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-COR^{d}) group, methylester group (-CH₂OCOR^{b}), in which R^{b} is either C₅-C₂₀ aryl group or C₅-C₂₀ perfluoroaryl group; amine group (-NR^{c} 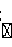 ), methylamine group (-CH₂NR^{c} 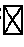 ), in which each R^{c} is independently either hydrogen or C₁-C₁₂ alkyl, the two R^{c} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
which can be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted with C₁-C₁₂ alkyl group, ester group (-COOR^{d}) or (-COR^{d}) group, in which R^{d} is C₅-C₂₀ aryl group or C₅-C₂₀ perfluoroaryl group, or amine group (-NR^{e}₂) in which each R^{d} is independently hydrogen or C₁-C₁₂ alkyl, the two R^{e} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group, and R²⁰, R²¹, R²², R²³, R²⁴, R²⁵, R²⁶, and R²⁷ substituents may optionally be interconnected to form cyclic C₄-C₁₀ system or polycyclic C₄-C₁₂ system;
R²⁸, R²⁹, and R³⁰ are independently C₁-C₂₅ alkyl, C₃-C₁₂ cycloalkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy which are optionally substituted by at least one C₁-C₁₂ alkyl or C₁-C₁₂ perfluoroalkyl, or R¹ and R², taken together, form a substituted or unsubstituted cyclic C₄-C₁₀, polycyclic C₄-C₁₂, aromatic C₄-C₁₀, heteroaromatic C₄-C₁₀ system which can be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy and halogen.

Preferably, the subject matter of the invention is the ruthenium complex represented by the formula **1a-Ru** 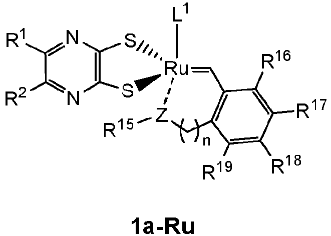 in which:
L¹ is a neutral ligand selected from N-heterocyclic carbenes (NHCs), cyclic alkylaminocarbene (CAAC) or phosphines;
'n' is 1 or 0
Z is selected from a group comprising halogens, O, S, Se, or an NR‴ group, in which R‴ is methylidene, C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, acyl group (-COR'), ester group (-COOR'), tert-butyloxycarbonyl group (*t*-Boc) or 9-fluorenylmethoxycarbonyl group (Fmoc), carbamate group (- CONR 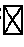 ₂), sulfonic group (-SO₂R'), formyl group (-COH), in which R' group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy,
or a halogen, wherein when Z is a halogen, R¹⁵ does not exist;
R¹ and R² are independently hydrogen, halogen, C₁-C₂₅ alkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R², taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, halogen, C₁-C₁₂ alkyl, C₁-C₁₂ perfluoroalkyl, C₁-C₁₂ alkoxy, C₅-C₂₄ aryloxy, C₅-C₂₀ heteroaryloxy, C₁-C₂₅ alkyl group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which R" group is C₁-C₅ alkyl, C₁-C₅ perfluoroalkyl, C₆-C₂₄ aryl, C₇-C₂₄ aralkyl, C₅-C₂₄ perfluoroaryl;
R¹⁵ is independently hydrogen, C₁-C₂₅ alkyl, C₁-C₂₅ cycloalkyl, C₅-C₂₀ alkoxy, C₅-C₂₀ aryl, C₅-C₂₄ aryloxy, -COOR‴ group, -CH₂COOR‴ group, -CONR‴₂ group, -CH₂CONR‴₂ group, -COR‴ group, -CH₂COR‴ group, -CH₂CON(OR‴)(R‴) group, -CH₂CON(OR‴)(R‴) group, or a halogen, wherein R‴ is C₁-C₁₂ alkyl, C₃-C₁₂ cycloalkyl, C₂-C₁₂ alkenyl, C₆-C₂₀ aryl, which are optionally substituted by at least one C₁-C₁₂ alkyl, C₁-C₁₂ perfluoroalkyl, C₁-C₁₂ alkoxy, C₆-C₂₄ aryloxy, or halogen;
R¹⁶, R¹⁷, R¹⁸, and R¹⁹ are independently hydrogen, halogen, C₁-C₂₅ alkyl group, C₂-C₂₅ alkenyl group, C₅-C₂₅ aryl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, wherein R¹⁶, R¹⁷, R¹⁸, and R¹⁹ substituents, taken together, may form a substituted or unsubstituted cyclic C₄-C₁₀ or polycyclic C₄-C₁₂ system.

Preferably, the subject matter of the invention is the ruthenium complex represented by the formula **1b-Ru** 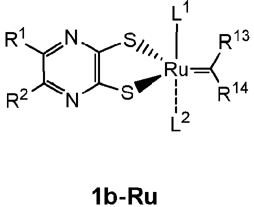 in which:
L¹ is a neutral ligand selected from *N*-heterocyclic carbenes (NHCs), cyclic alkylaminocarbene (CAAC) or PR₃ phosphines;
L² is a neutral ligand selected from *N*-heterocyclic carbenes (NHCs), cyclic alkylaminocarbene (CAAC), PR₃ phosphine derivatives or pyridine derivatives;
R¹ and R² are independently hydrogen, halogen, C₁-C₂₅ alkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R², taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, halogen, C₁-C₂₅ alkyl group, C₁-C₁₂ perfluoroalkyl group, C₁-C₁₂ alkoxy group, C₅-C₂₄ aryloxy group, C₅-C₂₀ heteroaryloxy group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus; R¹³ and R¹⁴ are independently hydrogen, halogen, optionally substituted C₁-C₂₅ alkyl, optionally substituted C₃-C₂₅ cycloalkyl, optionally substituted C₁-C₁₂ perfluoroalkyl, optionally substituted C₂-C₂₅ alkene, optionally substituted C₂-C₂₅ alkenyl, optionally substituted C₃-C₂₅ cycloalkenyl, optionally substituted C₂-C₂₅ alkynyl, optionally substituted C₃-C₂₅ cycloalkynyl, optionally substituted C₁-C₂₅ alkoxy, optionally substituted C₅-C₂₅ aryl, optionally substituted C₅-C₂₅ aryloxy, optionally substituted C₆-C₂₅ arylalkyl, optionally substituted C₅-C₂₅ heteroaryl, optionally substituted C₅-C₂₅ heteroaryloxy, optionally substituted C₅-C₂₅ perfluoroaryl, 3-12-membered heterocycle containing sulfur, oxygen, nitrogen, selenium or phosphorus, optionally substituted;
wherein R¹³ and R¹⁴ substituents, taken together, may form a ring selected from a group comprising C₃-C₂₅ cycloalkyl, C₃-C₂₅ cycloalkenyl, C₃-C₂₅ cycloalkynyl, C₅-C₂₅ aryl, C₅-C₂₅ heteroaryl, C₅-C₂₅ perfluoroaryl, 3-12-membered heterocycle containing sulfur, oxygen, nitrogen, selenium, or phosphorus which may be substituted independently with one and/or more substituents selected from a group comprising hydrogen, halogen, C₁-C₂₅ alkyl, C₃-C₂₅ cycloalkyl, C₁-C₁₂ perfluoroalkyl, C₂-C₂₅ alkene, C₂-C₂₅ alkenyl, C₃-C₂₅ cycloalkenyl, C₂-C₂₅ alkynyl, C₃-C₂₅ cycloalkynyl, C₁-C₂₅ alkoxy, C₅-C₂₅ aryl, C₅-C₂₅ aryloxy, C₆-C₂₅ arylalkyl, C₅-C₂₅ heteroaryl, C₅-C₂₅ heteroaryloxy, C₅-C₂₅ perfluoroaryl, 3-12-membered heterocycle.

Preferably, the subject matter of the invention is the ruthenium complex represented by the formula **1b-Ru** 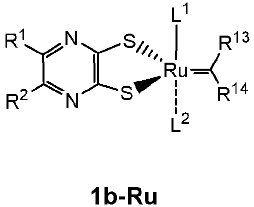 in which L¹ ligand is 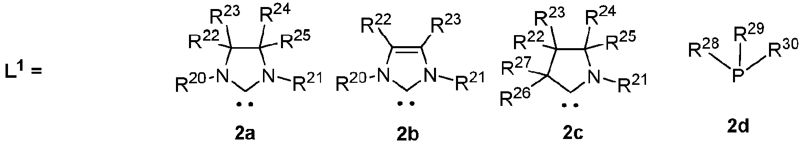 in which:
each R²⁰ and R²¹ substituent is independently C₁-C₁₂ alkyl group, C₃-C₁₂ cycloalkyl group, C₅-C₂₀ aryl group, or C₅-C₂₀ heteroaryl group which may be substituted independently by one and/or more substituents selected from a group comprising hydrogen, C₁-C₁₂ alkyl group, C₁-C₁₂ perfluoroalkyl group, C₅-C₂₀ aryl group, C₅-C₂₀ perfluoroaryl group, C₅-C₂₀ heteroaryl group, C₁-C₁₂ alkoxy group, C₅-C₂₄ aryloxy group, C₅-C₂₀ heteroaryloxy group, or halogen, alkoxy group (-OR"), sulfide group (-SR"), halogen, amino group (-NR"₂), in which the R" group independently is hydrogen, C₁-C₅ alkyl, C₆-C₂₄ aryl, C₇-C₂₄ aralkyl, alternatively R²⁰ and R²¹, taken together, form ring C₅-C₂₅ group;
each R²⁰, R²¹, R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a}), in which each R^{a} is independently either hydrogen or C₁-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-COR^{d}) group, methylester group (-CH₂OCOR^{b}), in which R^{b} is C₅-C₂₀ aryl group or C₅-C₂₀ perfluoroaryl group; amine group (-NR^{c} 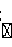 ), methylamine group (- CH₂NR^{c} 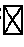 ), in which each R^{c} is independently either hydrogen or C₁-C₁₂ alkyl, the two R^{c} groups, taken together, may form either C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
which can be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted with C₁-C₁₂ alkyl group, ester group (-COOR^{d}) or (-COR^{d}) group, in which R^{d} is C₅-C₂₀ aryl group or C₅-C₂₀ perfluoroaryl group, or amine group (-NR^{e}₂) in which each R^{d} is independently hydrogen or C₁-C₁₂ alkyl, the two R^{e} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group, and R²⁰, R²¹, R²², R²³, R²⁴, R²⁵, R²⁶, and R²⁷ substituents may optionally be interconnected to form cyclic C₄-C₁₀ system or polycyclic C₄-C₁₂ system;
R²⁸, R²⁹, and R³⁰ are independently C₁-C₂₅ alkyl, C₃-C₁₂ cycloalkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R²⁸, R²⁹ and R³⁰, taken together, form a substituted or unsubstituted cyclic C₄-C₁₀, polycyclic C₄-C₁₂, aromatic C₄-C₁₀, heteroaromatic C₄-C₁₀ system which can be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy and halogen;
in which L² ligand is: 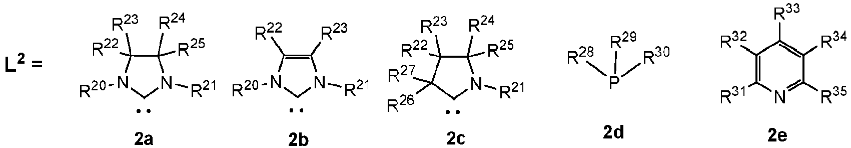 in which
   each R²⁰ and R²¹ substituent is independently C₁-C₁₂ alkyl group, C₃-C₁₂ cycloalkyl group, C₅-C₂₀ aryl group, or C₅-C₂₀ heteroaryl group, which may be substituted independently by one and/or more substituents selected from a group comprising hydrogen, C₁-C₁₂ alkyl group, C₁-C₁₂ perfluoroalkyl group, C₅-C₂₀ aryl group, C₅-C₂₀ perfluoroaryl group, C₅-C₂₀ heteroaryl group, C₁-C₁₂ alkoxy, C₅-C₂₄ aryloxy, C₅-C₂₀ heteroaryloxy, or halogen, alkoxy group (-OR"), sulfide group (-SR"), halogen, amino group (-NR"₂), in which the R" group independently is hydrogen, C₁-C₅ alkyl, C₆-C₂₄ aryl, C₇-C₂₄ aralkyl, alternatively R²⁰ and R²¹, taken together, form ring C₅-C₂₅ group;
   each R²⁰, R²¹, R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a} 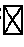 ), in which each R^{a} is independently either hydrogen or C₁-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-COR^{d}) group, methylester group (-CH₂OCOR^{b}), in which R^{b} is either C₅-C₂₀ aryl group or C₅-C₂₀ perfluoroaryl group; amine group (-NR^{c} 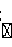 ), methylamine group (-CH₂NR^{c} 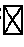 ), in which each R^{c} is independently either hydrogen or C₁-C₁₂ alkyl, the two R^{c} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
   which can be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted with C₁-C₁₂ alkyl group, ester group (-COOR^{d}) or (-COR^{d}) group, in which R^{d} is C₅-C₂₀ aryl group or C₅-C₂₀ perfluoroaryl group, or amine group (-NR^{e}₂) in which each R^{d} is independently hydrogen or C₁-C₁₂ alkyl, the two R^{e} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group, and R²⁰, R²¹, R²², R²³, R²⁴, R²⁵, R²⁶, and R²⁷ substituents may optionally be interconnected to form cyclic C₄-C₁₀ system or polycyclic C₄-C₁₂ system;
   each R²⁸, R²⁹ and R³⁰ substituent is independently hydrogen, halogen, C₁-C₂₅ alkyl, C₃-C₁₂ cycloalkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R²⁸, R²⁹ and R³⁰, taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy, and halogen;
   each R³¹, R³², R³³, R³⁴ and R³⁵ substituent is independently hydrogen, halogen, C₁-C₁₂ alkyl group, C₃-C₁₂ cycloalkyl group, C₅-C₂₀ aryl group or C₅-C₂₀ heteroaryl group, which may be substituted independently by one and/or more substituents selected from a group comprising hydrogen, C₁-C₁₂ alkyl group, C₁-C₁₂ perfluoroalkyl group, C₁-C₁₂ alkoxy group, C₅-C₂₄ aryloxy group, C₅-C₂₀ heteroaryloxy group, or halogen;
   R¹³ and R¹⁴ are independently hydrogen, halogen, optionally substituted C₁-C₂₅ alkyl, optionally substituted C₃-C₂₅ cycloalkyl, optionally substituted C₁-C₁₂ perfluoroalkyl, optionally substituted C₂-C₂₅ alkene, optionally substituted C₂-C₂₅ alkenyl, optionally substituted C₃-C₂₅ cycloalkenyl, optionally substituted C₂-C₂₅ alkynyl, optionally substituted C₃-C₂₅ cycloalkynyl, optionally substituted C₁-C₂₅ alkoxy, optionally substituted C₅-C₂₅ aryl, optionally substituted C₅-C₂₅ aryloxy, optionally substituted C₆-C₂₅ arylalkyl, optionally substituted C₅-C₂₅ heteroaryl, optionally substituted C₅-C₂₅ heteroaryloxy, optionally substituted C₅-C₂₅ perfluoroaryl, 3-12-membered heterocycle containing sulfur, oxygen, nitrogen, selenium or phosphorus, optionally substituted;
   wherein the R¹³ and R¹⁴ substituents, taken together, may form a ring selected from a group comprising C₃-C₂₅ cycloalkyl, C₃-C₂₅ cycloalkenyl, C₃-C₂₅ cycloalkynyl, C₅-C₂₅ aryl, C₅-C₂₅ heteroaryl, C₅-C₂₅ perfluoroaryl, 3-12-membered heterocycle containing sulfur, oxygen, nitrogen, selenium or phosphorus, optionally substituted with one and/or more substituents independently selected from a group comprising hydrogen, halogen, C₁-C₂₅ alkyl, C₃-C₂₅ cycloalkyl, C₁-C₁₂ perfluoroalkyl, C₂-C₂₅ alkene, C₂-C₂₅ alkenyl, C₃-C₂₅ cycloalkenyl, C₂-C₂₅ alkynyl, C₃-C₂₅ cycloalkynyl, C₁-C₂₅ alkoxy, C₅-C₂₅ aryl, C₅-C₂₅ aryloxy, C₆-C₂₅ arylalkyl, C₅-C₂₅ heteroaryl, C₅-C₂₅ heteroaryloxy, C₅-C₂₅ perfluoroaryl, 3-12-membered heterocycle.

Preferably, the subject matter of the invention is a ruthenium complex represented by a formula selected from such as

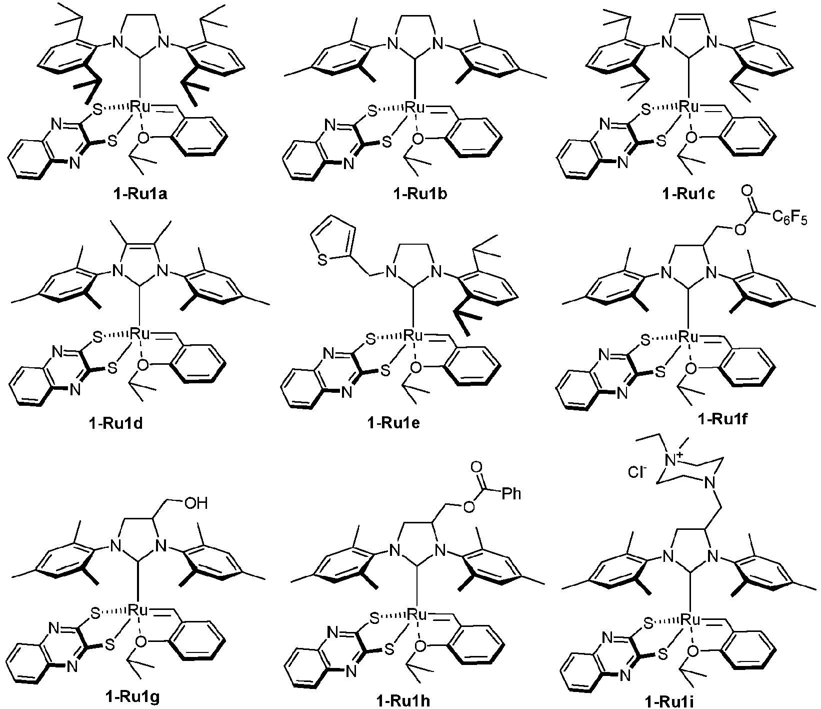

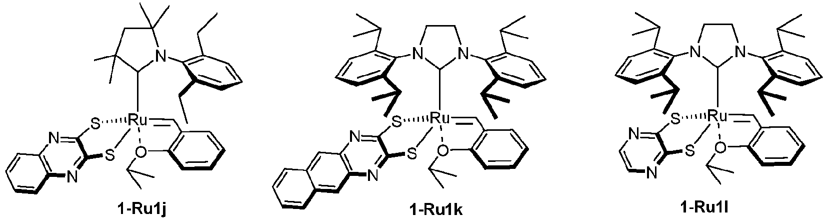

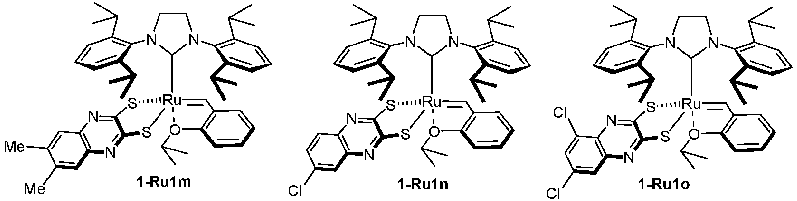

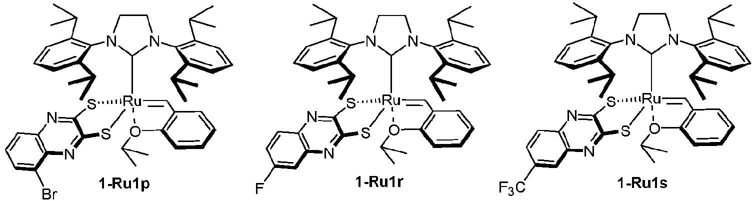

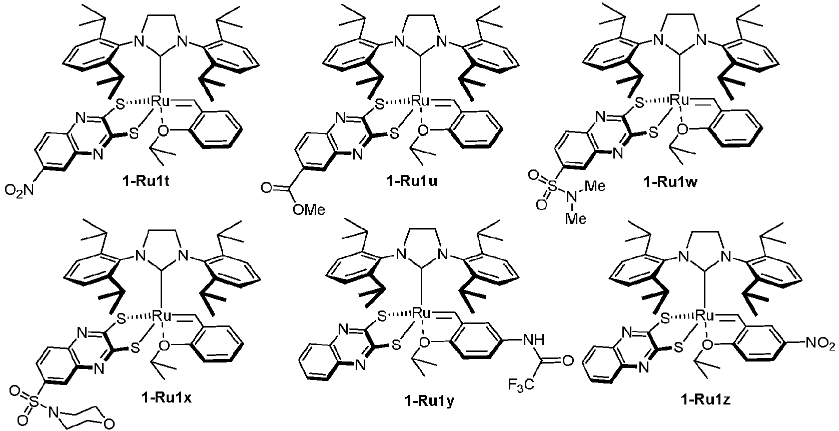

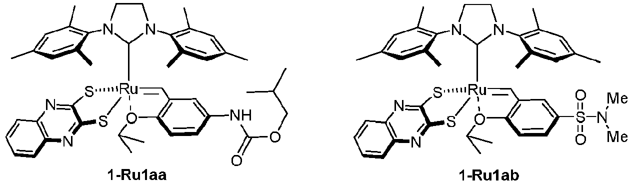

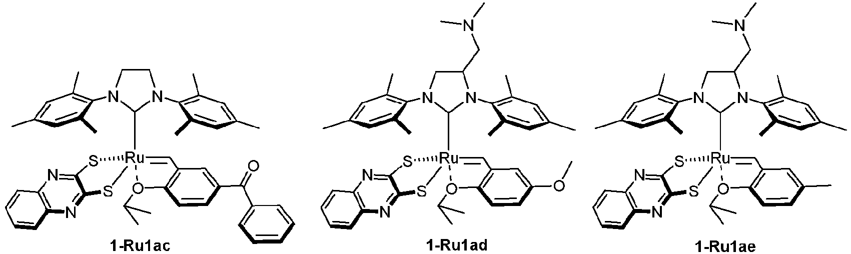

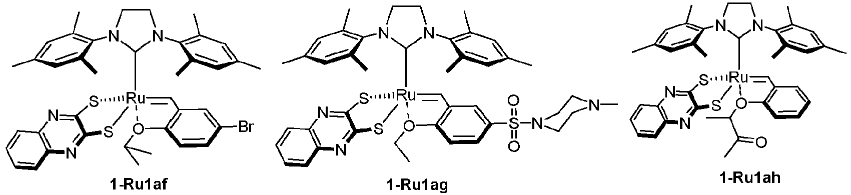

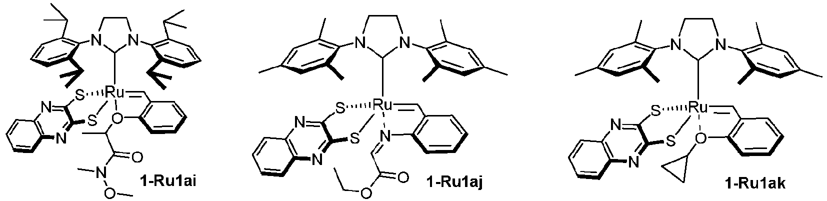

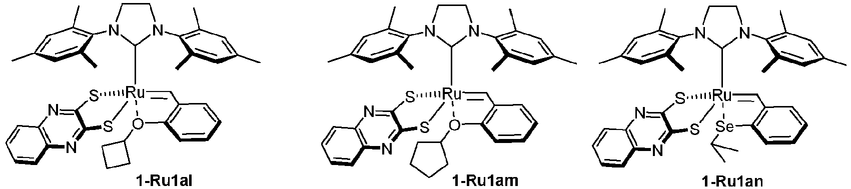

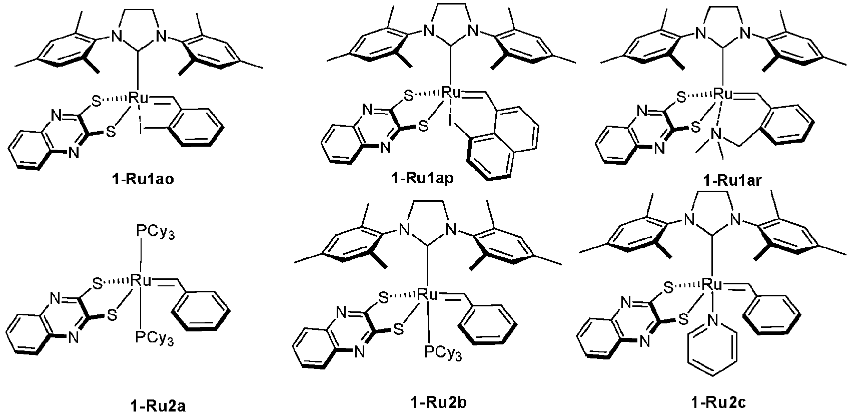

The subject matter of the invention is also a compound of the structure defined by the formula **3a** or **3b** 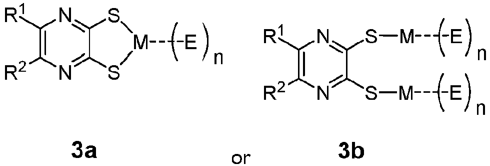 in which
M is monovalent or divalent metal cation;
n is 0, 1, 2 or 3;
E is at least one heteroatom selected from a group comprising oxygen, sulfur, selenium, nitrogen, phosphorus, which are substituted by a group, or if the heteroatom is nitrogen or phosphorus, by groups: C₁-C₂₅ alkyl group, C₁-C₂₅ cycloalkyl group, C₅-C₂₀ alkoxy group, C₅-C₂₀ aryl group, C₇-C₂₀ aralkyl group, C₅-C₂₄ aryloxy group, C₂-C₁₂ alkenyl group, C₆-C₂₀ heteroaryl group, C₅-C₂₄ heteroaryloxy group, or hydrogen, which are optionally substituted by at least one C₁-C₁₂ alkyl or C₁-C₁₂ perfluoroalkyl, or if two identical or different heteroatoms constitute a chelating system then, taken together, they form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy and halogen;
R¹ and R² are independently hydrogen, halogen, C₁-C₂₅ alkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R² are independently an alkoxy group (-OR"), a sulfide group (-SR"), a sulfoxide group (-S(O)R"), a sulfonium group (-S⁺R"₂), a sulfonyl group (-SO₂R"), a sulfonamide group (-SO₂NR"₂), an amine group (-NR"₂), an ammonium group (-N⁺R"₃), a nitro group (-NO₂), a cyano group (-CN), a phosphonate group (-P(O)(OR")₂), a phosphinate group (-P(O)R"(OR")), a phosphonite group (-P(OR")₂), a phosphine group (-PR"₂), a phosphine oxide group (-P(O)R"₂), a phosphonium group (-P⁺R"₃), a carboxyl group (-COOH), an ester group (-COOR"), an amide group (-CONR"₂), an amide group (-NR"C(O)R"), a formyl group (-CHO), a ketone group (-COR"), a thioamide group (-CSNR"₂), a thioketone group (-CSR"), a thionoester group (-CSOR"), a thioester group (-COSR"), a dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
or R¹ and R², taken together, form a substituted or unsubstituted C₄-C₁₀ cyclic, C₄-C₁₂ polycyclic, C₄-C₁₀ aromatic, C₄-C₁₀ heteroaromatic, C₄-C₁₀ polyaromatic, and C₄-C₁₀ polyheteroaromatic system, which can be substituted by one and/or more substituents selected from hydrogen, halogen, C₁-C₂₅ alkyl group, C₁-C₁₂ perfluoroalkyl group, C₁-C₁₂ alkoxy group, C₅-C₂₄ aryloxy group, C₅-C₂₀ heteroaryloxy group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two R" groups, taken together, form a C₅-C₂₅ ring, which alternatively may contain at least one heteroatom selected from oxygen, sulfur, selenium, nitrogen, phosphorus.

Preferably, the subject matter of the invention is a compound represented by a formula **3c** or **3d** or **3e** 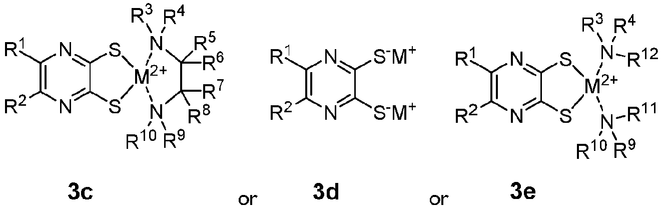 in which
M²⁺ is Zn, Cu, Mg, Ca cation,
M⁺ is Li, Na, K, Cs, Cu or Cu×(E)*ₙ* cation
n is 1 or 2;
R' and R² are independently hydrogen, halogen, C₁-C₂₅ alkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R² are independently an alkoxy group (-OR"), a sulfide group (-SR"), a sulfoxide group (-S(O)R"), a sulfonium group (-S⁺R"₂), a sulfonyl group (-SO₂R'), a sulfonamide group (-SO₂NR"₂), an amine group (-NR"₂), an ammonium group (-N⁺R"₃), a nitro group (-NO₂), a cyano group (-CN), a phosphonate group (-P(O)(OR")₂), a phosphinate group (-P(O)R"(OR")), a phosphonite group (-P(OR")₂), a phosphine group (-PR"₂), a phosphine oxide group (-P(O)R"₂), a phosphonium group (-P⁺R"₃), a carboxyl group (-COOH), an ester group (-COOR"), an amide group (-CONR"₂), an amide group (-NR"C(O)R"), a formyl group (-CHO), a ketone group (-COR"), a thioamide group (-CSNR"₂), a thioketone group (-CSR"), a thionoester group (-CSOR"), a thioester group (-COSR"), a dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group;
or R¹ and R², taken together, form a substituted or unsubstituted cyclic C₄-C₁₀, polycyclic C₄-C₁₂, aromatic C₄-C₁₀, heteroaromatic C₄-C₁₀, polyaromatic C₄-C₁₀, and polyheteroaromatic C₄-C₁₀ system, which can be substituted by one and/or more substituents selected from hydrogen, halogen, C₁-C₂₅ alkyl group, C₁-C₁₂ perfluoroalkyl group, C₁-C₁₂ alkoxy group, C₅-C₂₄ aryloxy group, C₅-C₂₀ heteroaryloxy group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-**CONR"₂),** amide group **(-NR"C(O)R"),** formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two **R"** groups, taken together, form C₅-C₂₅ ring, which alternatively may contain at least one heteroatom selected from oxygen, sulfur, selenium, nitrogen, phosphorus;
**R³, R⁴, R⁵, R⁶,** R⁷, **R⁸, R⁹,** R¹⁰, R¹¹ and R¹² independently are hydrogen, C₁-C₂₅ alkyl, C₁-C₂₅ cycloalkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or two selected R³, R⁴, R⁵, R⁶, R⁷, R⁸, R⁹, R¹⁰, R¹¹ and R¹² substituents, taken together, form a substituted or unsubstituted cyclic C₄-C₁₀, polycyclic C₄-C₁₂, heterocyclic C₄-C₁₂, aromatic C₄-C₁₀, heteroaromatic C₄-C₁₀, which may be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy, and halogen.

Preferably, the subject matter of the invention is a compound **3f** 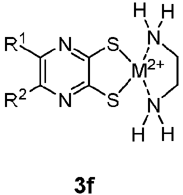 in which
M²⁺ is Zn cation,
R' and R² are independently hydrogen, halogen, C₁-C₂₅ alkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R² are independently an alkoxy group (-OR"), a sulfide group (-SR"), a sulfoxide group (-S(O)R"), a sulfonium group (-S⁺R"₂), a sulfonyl group (-SO₂R"), a sulfonamide group (-SO₂NR"₂), an amine group (-NR"₂), an ammonium group (-N⁺R"₃), a nitro group (-NO₂), a cyano group (-CN), a phosphonate group (-P(O)(OR")₂), a phosphinate group (-P(O)R"(OR")), a phosphonite group (-P(OR")₂), a phosphine group (-PR"₂), a phosphine oxide group (-P(O)R"₂), a phosphonium group (-P⁺R"₃), a carboxyl group (-COOH), an ester group (-COOR"), an amide group (-CONR"₂), an amide group (-NR"C(O)R"), a formyl group (-CHO), a ketone group (-COR"), a thioamide group (-CSNR"₂), a thioketone group (-CSR"), a thionoester group (-CSOR"), a thioester group (-COSR"), a dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group;
or R¹ and R², taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, halogen, C₁-C₁₂ perfluoroalkyl group, C₁-C₁₂ alkoxy group, C₅-C₂₄ aryloxy group, C₅-C₂₀ heteroaryloxy group, C₁-C₂₅ alkyl group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two R" groups, taken together, form C₅-C₂₅ ring, which alternatively may contain at least one heteroatom selected from oxygen, sulfur, selenium, nitrogen, phosphorus.

Preferably, the subject matter of the invention is a compound whose structure is represented by a formula selected from such as **3-Zn1, 3-Zn2, 3-Zn3, 3-Zn4, 3-Zn5, 3-Zn6, 3-Zn7, 3-Zn8, 3-Zn9, 3-Zn10, 3-Zn11, 3-Zn12, 3-Zn13,** and **3-K1:**

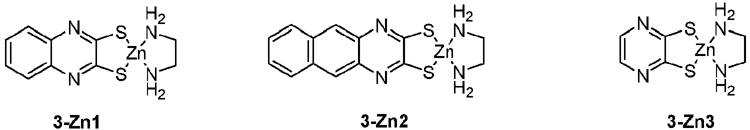

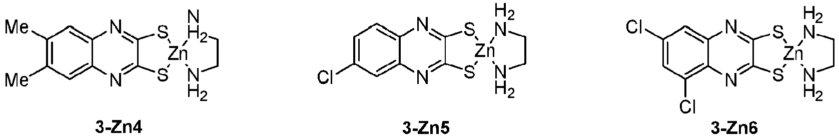

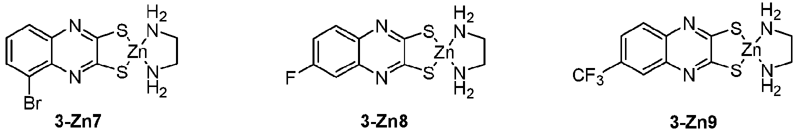

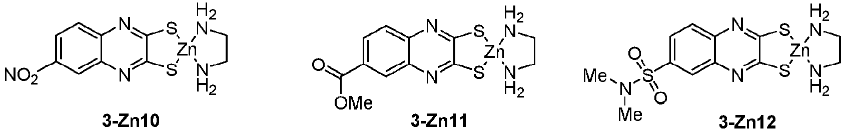

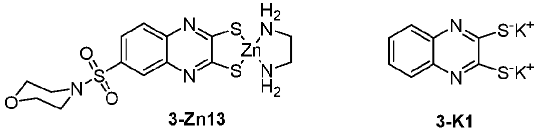

The subject matter of the invention is also a method of producing a ruthenium complex of formula **1-Ru,** as defined above 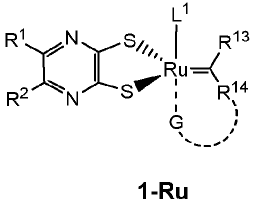 in which:
L¹ is a neutral ligand, selected from N-heterocyclic carbenes (NHCs), cyclic alkylaminocarbene (CAAC) or phosphines;
R' and R² are independently hydrogen, halogen, C₁-C₂₅ alkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl or C₅-C₂₄ heteroaryloxy, which are optionally substituted by at least one C₁-C₁₂ alkyl or C₁-C₁₂ perfluoroalkyl, or R¹ and R² are independently an alkoxy group (-OR"), a sulfide group (-SR"), a sulfoxide group (-S(O)R"), a sulfonium group (-S⁺R"₂), a sulfonyl group (-SO₂R'), a sulfonamide group (-SO₂NR"₂), an amine group (-NR"₂), an ammonium group (-N⁺R"₃), a nitro group (-NO₂), a cyano group (-CN), a phosphonate group (-P(O)(OR")₂), a phosphinate group (-P(O)R"(OR")), a phosphonite group (-P(OR")₂), a phosphine group (-PR"₂), a phosphine oxide group (-P(O)R"₂), a phosphonium group (-P⁺R"₃), a carboxyl group (-COOH), an ester group (-COOR"), an amide group (-CONR"₂), an amide group (-NR"C(O)R"), a formyl group (-CHO), a ketone group (-COR"), a thioamide group (-CSNR"₂), a thioketone group (-CSR"), a thionoester group (-CSOR"), a thioester group (-COSR"), a dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group;
or R¹ and R², taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, halogen, C₁-C₂₅ alkyl group, C₁-C₁₂ perfluoroalkyl group, C₁-C₁₂ alkoxy group, C₅-C₂₄ aryloxy group, C₅-C₂₀ heteroaryloxy group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two R" groups, taken together, form C₅-C₂₅ ring, which alternatively may contain at least one heteroatom selected from oxygen, sulfur, selenium, nitrogen, phosphorus.
R¹³ and R¹⁴ are independently hydrogen, halogen, optionally substituted C₁-C₂₅ alkyl, optionally substituted C₃-C₂₅ cycloalkyl, optionally substituted C₁-C₁₂ perfluoroalkyl, optionally substituted C₂-C₂₅ alkene, optionally substituted C₂-C₂₅ alkenyl, optionally substituted C₃-C₂₅ cycloalkenyl, optionally substituted C₂-C₂₅ alkynyl, optionally substituted C₃-C₂₅ cycloalkynyl, optionally substituted C₁-C₂₅ alkoxy, optionally substituted C₅-C₂₅ aryl, optionally substituted C₅-C₂₅ aryloxy, optionally substituted C₆-C₂₅ arylalkyl, optionally substituted C₅-C₂₅ heteroaryl, optionally substituted C₅-C₂₅ heteroaryloxy, optionally substituted C₅-C₂₅ perfluoroaryl, 3-12-membered heterocycle containing sulfur, oxygen, nitrogen, selenium or phosphorus, optionally substituted;
wherein R¹³ and R¹⁴ substituents, taken together, may form a ring selected from a group comprising C₃-C₂₅ cycloalkyl, C₃-C₂₅ cycloalkenyl, C₃-C₂₅ cycloalkynyl, C₅-C₂₅ aryl, C₅-C₂₅ heteroaryl, C₅-C₂₅ perfluoroaryl, 3-12-membered heterocycle containing sulfur, oxygen, nitrogen, selenium or phosphorus, optionally substituted with one and/or more substituents independently selected from a group comprising hydrogen, halogen, C₁-C₂₅ alkyl, C₃-C₂₅ cycloalkyl, C₁-C₁₂ perfluoroalkyl, C₂-C₂₅ alkene, C₂-C₂₅ alkenyl, C₃-C₂₅ cycloalkenyl, C₂-C₂₅ alkynyl, C₃-C₂₅ cycloalkynyl, C₁-C₂₅ alkoxy, C₅-C₂₅ aryl, C₅-C₂₅ aryloxy, C₆-C₂₅ arylalkyl, C₅-C₂₅ heteroaryl, C₅-C₂₅ heteroaryloxy, C₅-C₂₅ perfluoroaryl, 3-12-membered heterocycle;
wherein R¹³ and R¹⁴ substituents are independently preferably hydrogen and/or C₅-C₂₅ aryl independently substituted with hydrogen, halogen, C₁-C₂₅ alkyl group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group independently is hydrogen, C₁-C₅ alkyl, C₁-C₅ perfluoroalkyl, C₆-C₂₄ aryl, C₇-C₂₄ aralkyl, C₅-C₂₄ perfluoroaryl, the two R" groups, taken together, may form either C₃-C₁₂ cycloalkyl ring or C₃-C₂₅ heterocycloalkyl ring containing nitrogen, oxygen or sulfur, optionally additionally substituted with C₁-C₁₂ alkyl group, alternatively R" is a ketone group (-COR^{c}) in which R^{c} is C₁-C₁₂ perfluoroalkyl or an alkoxy group (-OR^{d}) in which R^{d} is C₁-C₁₂ alkyl or C₃-C₁₂ heterocycloalkyl containing nitrogen, oxygen or sulfur optionally additionally substituted with C₁-C₁₂ alkyl group;
G is selected from such as
   - L² ligand 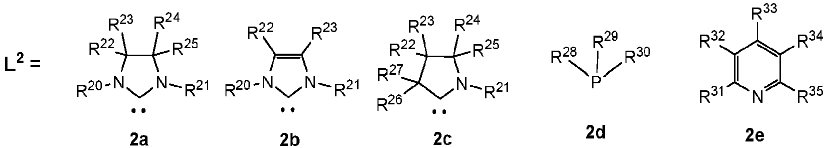
      in which R²⁰ and R²¹ substituents are independently C₁-C₁₂ alkyl group, C₃-C₁₂ cycloalkyl group, C₅-C₂₀ aryl group or C₅-C₂₀ heteroaryl group, C₅-C₂₅ aralkyl group, which may be substituted independently by one and/or more substituents selected from a group comprising hydrogen,
      C₁-C₁₂ alkyl group, C₁-C₁₂ perfluoroalkyl group, C₅-C₂₀ aryl group, C₅-C₂₀ perfluoroaryl group, C₅-C₂₀ heteroaryl group, C₁-C₁₂ alkoxy group, C₅-C₂₄ aryloxy group, C₅-C₂₀ heteroaryloxy group, or halogen, alkoxy group (-OR"), sulfide group (-SR"), halogen, amine group (-NR"₂), in which the R" group independently is hydrogen, C₁-C₅ alkyl, C₆-C₂₄ aryl, C₇-C₂₄ aralkyl, alternatively R²⁰ and R^{2'}, taken together, form C₅-C₂₅ ring;
      each R²⁰, R²¹, R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a} 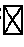 ), in which each R^{a} is independently either hydrogen or C₁-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-COR^{d}) group, methylester group (-CH₂OCOR^{b}), in which the R^{b} is either C₅-C₂₀ aryl group or C₅-C₂₀ perfluoroaryl group;
      amine group (-NR^{c} 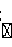 ), methylamine group (-CH₂NR^{c} 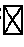 ), in which each R^{c} is independently either hydrogen or C₁-C₁₂ alkyl, the two R^{c} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
      which can be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted with C₁-C₁₂ alkyl group, ester group (-COOR^{d}) or (-COR^{d}) group, in which R^{d} is C₅-C₂₀ aryl group or C₅-C₂₀ perfluoroaryl group, or amine group (-NR^{e}₂) in which each R^{d} is independently hydrogen or C₁-C₁₂ alkyl, the two R^{e} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group, and R²², R²¹, R²², R²³, R²⁴, R²⁵, R²⁶, and R²⁷ substituents may optionally be interconnected to form C₄-C₁₀ cyclic system or C₄-C₁₂ polycyclic system;
      each R²⁸, R²⁹, and R³⁰ substituent is independently C₁-C₂₅ alkyl, C₁-C₂₅ cycloalkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R²⁸, R²⁹, R³⁰, taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy and halogen;
      each R³¹, R³², R³³, R³⁴ and R³⁵ substituent is independently C₁-C₁₂ alkyl group, C₃-C₁₂ cycloalkyl group, C₅-C₂₀ aryl group or C₅-C₂₀ heteroaryl group, which may be substituted independently by one and/or more substituents selected from a group comprising hydrogen, C₁-C₁₂ alkyl group, C₁-C₁₂ perfluoroalkyl group, C₁-C₁₂ alkoxy group, C₅-C₂₄ aryloxy group, C₅-C₂₀ heteroaryloxy group, or halogen; or
   - heteroatom 1
      selected from a group comprising oxygen, sulfur, selenium, substituted by a group selected from such as hydrogen, halogen, oxygen, C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, optionally substituted by acyl (-COR'), cyano (-CN), carboxyl (-COOH), ester (-COOR'), ester (-CH₂COOR'), ester (-CHR'COOR'), ester (-C(R')₂COOR'), amide (-CONR'₂), Weinreb-type amide (-CON(R')(OR')), sulfonic (-SO₂R'), formyl (-COH), sulfonamide (-SO₂NR'₂), ketone (-COR'), thioamide (-CSNR'₂), thioketone (-CSR'), thionoester (-CSOR'), thioester (-COSR'), dithioester (-CS₂R') group, in which R' group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl, or C₅-C₂₄ heteroaryloxy and then the dashed line represents a direct binding of the heteroatom to the R¹⁴ substituent or represents the connection of the R¹⁴ substituent to the heteroatom via a (CH₂)-, -(CHR')-, or (CR'₂)- methylene bridge, wherein the R¹⁴ substituent is C₅-C₁₅ aryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), wherein the R" group is C₁-C₅ alkyl, C₁-C₅ perfluoroalkyl, C₆-C₂₄ aryl, C₇-C₂₄ aralkyl, C₅-C₂₄ perfluoroaryl; or
   - heteroatom 2
      selected from a group comprising nitrogen, or phosphorus, substituted by a group selected from such as hydrogen, methylidene optionally substituted by an R' substituent, C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, acyl group (-COR'), tert-butyloxycarbonyl group (t-Boc) or 9-fluorenylmethoxycarbonyl group (Fmoc), carbamate group (-CONR 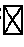 ₂), sulfonic group (-SO₂R'), formyl group (-COH), in which R' group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy optionally substituted by acyl (-COR'), cyano (-CN), carboxyl (-COOH), ester (-COOR'), ester (-CH₂COOR'), ester (-CHR'COOR'), ester (-C(R')₂COOR'), amide (-CONR'₂), sulfonic (-SO₂R'), formyl (-COH), sulfonamide (-SO₂NR'₂), ketone (-COR'), thioamide (-CSNR'₂), thioketone (-CSR'), thionoester (-CSOR'), thioester (-COSR'), dithioester (-CS₂R') group, in which the R' group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy and then the dashed line represents a direct binding of the heteroatom to the R¹⁴ substituent or represents the connection of the R¹⁴ substituent to the heteroatom via a (CH₂)-, -(CHR')-, or (CR'₂)- methylene bridge; wherein the R¹⁴ substituent is C₅-C₁₅ aryl optionally substituted by **1-4** substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, or
   - heteroatom 3
      selected from a group comprising a halogen, and then the dashed line represents a direct binding of the heteroatom to the R¹⁴ substituent, wherein the R¹⁴ substituent is C₅-C₁₅ aryl, or C₅-C₂₅ polyaryl optionally substituted by **1-4** substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which R" group is C₁-C₅ alkyl, C₁-C₅ perfluoroalkyl, C₆-C₂₄ aryl, C₇-C₂₄ aralkyl, C₅-C₂₄ perfluoroaryl;
characterized in that the alkylidene ruthenium complex of formula **4-Ru:** 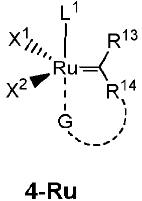 in which:
   X¹ and X², independently, are anionic ligand selected from a group comprising halogen anion, - CN, -SCN, -OR^{a}, -SR^{a}, -O(C=O)R^{a}, -O(SO₂)R^{a}, and -OSi(R^{a})₃, in which R^{a} is C₁-C₁₂ alkyl, C₃-C₁₂ cycloalkyl, C₂-C₁₂ alkenyl or C₅-C₂₀ aryl, which is optionally substituted by at least one C₁-C₁₂ alkyl, C₁-C₁₂ perfluoroalkyl, C₁-C₁₂ alkoxy, C₅-C₂₄ aryloxy, C₅-C₂₀ heteroaryloxy or a halogen;
   L¹ is a neutral ligand selected from N-heterocyclic carbenes (NHCs), cyclic alkylaminocarbene (CAAC) or phosphines;
   R¹³ and R¹⁴ are independently hydrogen, halogen, optionally substituted C₁-C₂₅ alkyl, optionally substituted C₃-C₂₅ cycloalkyl, optionally substituted C₁-C₁₂ perfluoroalkyl, optionally substituted C₂-C₂₅ alkene, optionally substituted C₂-C₂₅ alkenyl, optionally substituted C₃-C₂₅ cycloalkenyl, optionally substituted C₂-C₂₅ alkynyl, optionally substituted C₃-C₂₅ cycloalkynyl, optionally substituted C₁-C₂₅ alkoxy, optionally substituted C₅-C₂₅ aryl, optionally substituted C₅-C₂₅ aryloxy, optionally substituted C₆-C₂₅ arylalkyl, optionally substituted C₅-C₂₅ heteroaryl, optionally substituted C₅-C₂₅ heteroaryloxy, optionally substituted C₅-C₂₅ perfluoroaryl, 3-12-membered heterocycle containing sulfur, oxygen, nitrogen, selenium or phosphorus, optionally substituted;
   wherein R¹³ and R¹⁴ substituents, taken together, may form a ring selected from a group comprising C₃-C₂₅ cycloalkyl, C₃-C₂₅ cycloalkenyl, C₃-C₂₅ cycloalkynyl, C₅-C₂₅ aryl, C₅-C₂₅ heteroaryl, C₅-C₂₅ perfluoroaryl, 3-12-membered heterocycle containing sulfur, oxygen, nitrogen, selenium, or phosphorus which may be substituted independently with one and/or more substituents selected from a group comprising hydrogen, halogen, C₁-C₂₅ alkyl, C₃-C₂₅ cycloalkyl, C₁-C₁₂ perfluoroalkyl, C₂-C₂₅ alkene, C₂-C₂₅ alkenyl, C₃-C₂₅ cycloalkenyl, C₂-C₂₅ alkynyl, C₃-C₂₅ cycloalkynyl, C₁-C₂₅ alkoxy, C₅-C₂₅ aryl, C₅-C₂₅ aryloxy, C₆-C₂₅ arylalkyl, C₅-C₂₅ heteroaryl, C₅-C₂₅ heteroaryloxy, C₅-C₂₅ perfluoroaryl, 3-12-membered heterocycle;
   wherein the R¹³ and R¹⁴ substituents independently preferably are hydrogen and/or C₅-C₂₅ aryl independently substituted with hydrogen, C₁-C₂₅ alkyl group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl;
   G is selected from such as
      - L² ligand 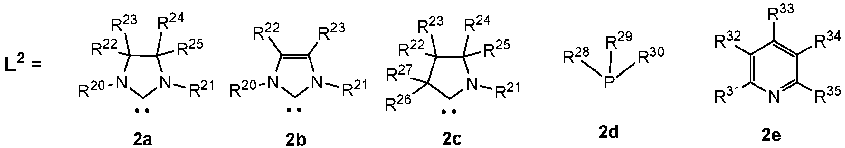
         in which the R²⁰ and R²¹ substituents are independently C₁-C₁₂ alkyl group, C₃-C₁₂ cycloalkyl group, C₅-C₂₀ aryl group or C₅-C₂₀ heteroaryl group, C₅-C₂₅ aralkyl group, which can be substituted independently by one and/or more substituents selected from a group comprising hydrogen,
         C₁-C₁₂ alkyl group, C₁-C₁₂ perfluoroalkyl group, C₅-C₂₀ aryl group, C₅-C₂₀ perfluoroaryl group, C₅-C₂₀ heteroaryl group, C₁-C₁₂ alkoxy group, C₅-C₂₄ aryloxy group, C₅-C₂₀ heteroaryloxy group, or halogen, alkoxy group (-OR"), sulfide group (-SR"), halogen, amine group (-NR"₂), in which the R" group independently is hydrogen, C₁-C₅ alkyl, C₆-C₂₄ aryl, C₇-C₂₄ aralkyl, alternatively R²⁰ and R^{2'}, taken together form C₃-C₂₅ ring;
         each R²⁰, R²¹, R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a} 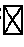 ), in which each R^{a} is independently either hydrogen or C₁-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-COR^{d}) group, methylester group (-CH₂OCOR^{b}), in which R^{b} is either C₃-C₂₀ aryl group or C₅-C₂₀ perfluoroaryl group; amine group (-NR^{c} 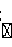 ), methylamine group (-CH₂NR^{c} 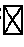 ), in which each R^{c} is independently either hydrogen or C₁-C₁₂ alkyl, the two R^{c} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
         which can be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted with C₁-C₁₂ alkyl group, ester group (-COOR^{d}) or (-COR^{d}) group, in which R^{d} is C₅-C₂₀ aryl group or C₅-C₂₀ perfluoroaryl group, or an amino group (-NR^{e}₂) in which each R^{d} is independently hydrogen or C₁-C₁₂ alkyl, the two R^{e} groups may, taken together, form a C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group, and R²⁰, R²¹, R²², R²³, R²⁴, R²⁵, R²⁶, and R²⁷ substituents may optionally be interconnected to form cyclic C₄-C₁₀ system or polycyclic C₄-C₁₂ system;
         each R²⁸, R²⁹, and R³⁰ substituent is independently C₁-C₂₅ alkyl, C₃-C₁₂ cycloalkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R²⁸, R²⁹, R³⁰, taken together, form a substituted or unsubstituted cyclic C₄-C₁₀, polycyclic C₄-C₁₂, aromatic C₄-C₁₀, heteroaromatic C₄-C₁₀ system which may be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy and halogen;
         each R³¹, R³², R³³, R³⁴ and R³⁵ substituent is independently C₁-C₁₂ alkyl group, C₃-C₁₂ cycloalkyl group, C₅-C₂₀ aryl group or C₅-C₂₀ heteroaryl group, which may be substituted independently by one and/or more substituents selected from a group comprising hydrogen, C₁-C₁₂ alkyl group, C₁-C₁₂ perfluoroalkyl group, C₁-C₁₂ alkoxy group, C₅-C₂₄ aryloxy group, C₅-C₂₀ heteroaryloxy group, or halogen; or
      - heteroatom 1
         selected from a group comprising oxygen, sulfur, selenium, substituted by a group selected from such as hydrogen, halogen, oxygen, C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, optionally substituted by acyl (-COR'), cyano (-CN), carboxyl (-COOH), ester (-COOR'), ester (-CH₂COOR'), ester (-CHR'COOR'), ester (-C(R')₂COOR'), amide (-CONR'₂), Weinreb-type amide (-CON(R')(OR')), sulfonic (-SO₂R'), formyl (-COH), sulfonamide (-SO₂NR'₂), ketone (-COR'), thioamide (-CSNR'₂), thioketone (-CSR'), thionoester (-CSOR'), thioester (-COSR'), dithioester (-CS₂R') group, in which R' group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl, or C₅-C₂₄ heteroaryloxy and then the dashed line represents a direct binding of the heteroatom to the R¹⁴ substituent or represents the connection of the R¹⁴ substituent to the heteroatom via a -CH₂-, -CHR'-, or -CR'₂- methylene bridge, wherein the R¹⁴ substituent is C₅-C₁₅ aryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, or
      - heteroatom 2
         selected from a group comprising nitrogen, or phosphorus, substituted by a group selected from such as hydrogen, methylidene optionally substituted by an R' substituent, C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, acyl group (-COR'), tert-butyloxycarbonyl group (t-Boc) or 9-fluorenylmethoxycarbonyl group (Fmoc), carbamate (-CONR 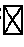 ₂), sulfonic (-SO₂R 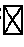 ), formyl (-COH), in which the R 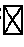 group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy optionally substituted by acyl (-COR'), cyano (-CN), carboxyl (-COOH), ester (-COOR'), ester (-CH₂COOR'), ester (-CHR'COOR'), ester (-C(R')₂COOR'), amide (-CONR'₂), sulfonic (-SO₂R'), formyl (-COH), sulfonamide (-SO₂NR'₂), ketone (-COR'), thioamide (-CSNR'₂), thioketone (-CSR'), thionoester (-CSOR'), thioester (-COSR'), dithioester (-CS₂R') group, in which the R' group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy and then the dashed line represents a direct binding of the heteroatom to the R¹⁴ substituent, or represents the connection of the R¹⁴ substituent to the heteroatom via a (CH₂)-, -(CHR')-, or (CR'₂)- methylene bridge; wherein the R¹⁴ substituent is C₅-C₁₅ aryl eventually substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, or
      - heteroatom 3
         selected from a group comprising halogen, and then the dashed line represents a direct binding of the heteroatom to the R¹⁴ substituent, wherein the R¹⁴ substituent is C₅-C₁₅ aryl, or C₅-C₂₅ polyaryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which R" group is C₁-C₅ alkyl, C₁-C₅ perfluoroalkyl, C₆-C₂₄ aryl, C₇-C₂₄ aralkyl, C₅-C₂₄ perfluoroaryl;
   is reacted with a compound of the structure defined by formula **3a** or **3b** 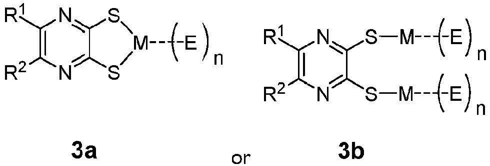 in which
      M is monovalent or divalent metal cation;
      n is 0, 1 or 2;
      E is at least one heteroatom selected from a group comprising oxygen, sulfur, selenium, nitrogen, phosphorus, which are substituted with a group, or if the heteroatom is nitrogen or phosphorus, with groups: C₁-C₂₅ alkyl group, C₁-C₂₅ cycloalkyl group, C₅-C₂₀ alkoxy group, C₅-C₂₀ aryl group, C₇-C₂₀ aralkyl group, C₅-C₂₄ aryloxy group, C₂-C₁₂ alkenyl group, C₆-C₂₀ heteroaryl group, C₅-C₂₄ heteroaryloxy group, or hydrogen, which are optionally substituted by at least one C₁-C₁₂ alkyl or C₁-C₁₂ perfluoroalkyl, or if two identical or different heteroatoms constitute a chelating system then, taken together, they form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy, and halogen;
      R¹ and R² are independently hydrogen, halogen, C₁-C₂₅ alkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R² are independently alkoxy group (-OR"), sulfide group (-SR"), sulfoxide group (-S(O)R"), sulfonium group (-S⁺R"₂), sulfonyl group (-SO₂R'), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
      or R¹ and R², taken together, form a substituted or unsubstituted C₄-C₁₀ cyclic, C₄-C₁₂ polycyclic, C₄-C₁₀ aromatic, C₄-C₁₀ heteroaromatic, C₄-C₁₀ polyaromatic, and C₄-C₁₀ polyheteroaromatic system which can be substituted by one and/or more substituents selected from hydrogen, halogen, C₁-C₂₅ alkyl group, C₁-C₁₂ perfluoroalkyl group, C₁-C₁₂ alkoxy group, C₅-C₂₄ aryloxy group, C₅-C₂₀ heteroaryloxy group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two R" groups, taken together, form C₅-C₂₅ ring, which alternatively may contain at least one heteroatom selected from oxygen, sulfur, selenium, nitrogen, phosphorus.

The invention also relates to the use of a compound of formula **1-Ru** as a precatalyst and/or catalyst in olefin metathesis reactions, particularly in ring-closing metathesis (RCM), cross-metathesis (CM), homometathesis (cross-metathesis between two molecules of the same olefin), ethenolysis, isomerization, in diastereoselective ring rearrangement metathesis (DRRM) reactions, alkene-alkyne (ene-yne) metathesis or ROMP and ADMET-type polymerization reactions.

Preferably, the olefin metathesis reactions are carried out with **1-Ru** catalyst and/or precatalyst in the presence of a compound with a structure represented by a formula selected from such as **3-Zn1, 3-Zn2, 3-Zn3, 3-Zn4, 3-Zn5, 3-Zn6, 3-Zn7, 3-Zn8, 3-Zn9, 3-Zn10, 3-Zn11, 3-Zn12, 3-Zn13, 3-K1** in an amount ranging from 0.0001 mol% to 200 mol%.

Preferably, the reaction is carried out in an organic solvent such as toluene, benzene, mesitylene, hexane, dichloromethane, dichloroethane, chlorobenzene, perfluorobenzene, perfluorotoluene, ethyl acetate, methyl acetate, methyl carbonate, ethyl carbonate, methyl tert-butyl ether, cyclopentyl methyl ether, diethyl ether, THF, 2-Me-THF, 4-Me-THP, dioxane, DME, PAO, PEG, paraffin, esters of saturated fatty acids.

Preferably, the reaction is carried out in a solvent-free system.

Preferably, the reaction is carried out at a temperature of 20 to 200°C.

Preferably, the reaction is carried out over a period of 5 minutes to 48 hours.

Preferably, the **1-Ru** compound is used in an amount of not more than 10 mol%.

Preferably, the **1-Ru** compound is used in an amount of not more than 0.1 mol%.

Preferably, the **1-Ru** compound is added to the reaction mixture portion-wise in a solid form and/or continuously, using a pump, as a solution in an organic solvent.

Preferably, a gaseous by-product of the reaction, selected from ethylene, propylene, butylene, is actively removed from the reaction mixture using an inert gas barbotage or by vacuum.

The subject matter of the invention is explained in the embodiments shown in the figures, where:

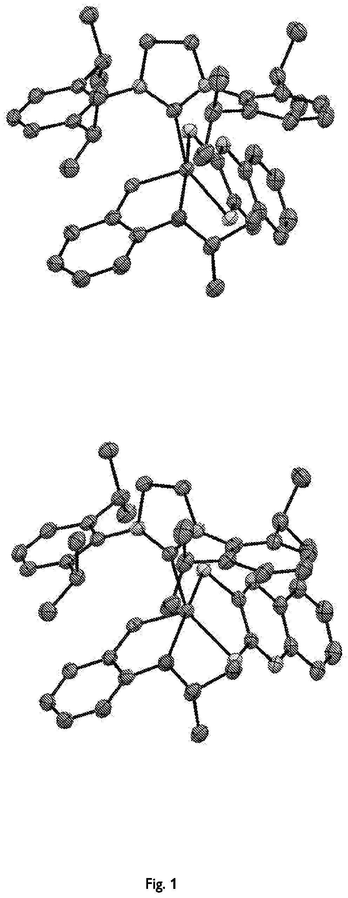

Fig. 1 shows the structure of stereoretentive ruthenium complex **1-Ru1a** according to the invention, obtained from X-ray structural analysis, presented in two spatial projections.

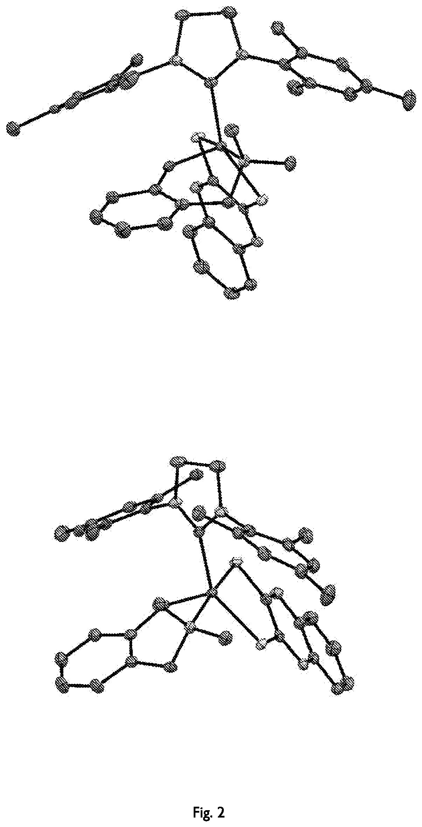

Fig. 2 shows the structure of stereoretentive ruthenium complex **1-Ru1ar** according to the invention, obtained from X-ray structural analysis, presented in two spatial projections.

In this description the terms used have the following meanings. Undefined terms herein have meanings which are given and understood by a person skilled in the art in light of the best knowledge possessed, the present disclosure and the context of the patent application specification. Unless stated otherwise, the following conventions of chemical terms are used in this description and have the meanings indicated as in the definitions below:

As used herein, the term "halogen" means an element selected from F, Cl, Br, I.

The term "carbene" means an electrically neutral molecule in which the carbon atom has two non-bonding electrons in the singlet or triplet state and is linked by a single covalent bond to two groups or linked by a double covalent bond to one group. The term "carbene" also includes carbene analogues in which the carbene carbon atom is replaced by another chemical element such as boron, silicon, germanium, tin, lead, nitrogen, phosphorus, sulfur, selenium or tellurium.

The term *"alkyl"* means a saturated, linear, or branched hydrocarbon substituent with the indicated number of carbon atoms. Examples of an alkyl substituent are -methyl, -ethyl, -n-propyl, -n-butyl, -n-pentyl, -n-hexyl, -n-heptyl, -n-octyl, -n-nonyl, and -n-decyl. Representative branched - (C₁-C₁₀) alkyls include -isopropyl, -sec-butyl, -isobutyl, -tert-butyl, -isopentyl, -neopentyl, -1-methylbutyl, -2-methylbutyl, -3-methylbutyl, -1,1-dimethylpropyl, -1,2-dimethylpropyl, -1-methylpentyl, -2-methylpentyl, -3-methylpentyl, -4-methylpentyl, -1-ethylbutyl, -2-ethylbutyl, -1,1-dimethylbutyl, -1,2-dimetylbutyl, -1,3-dimethylbutyl, -2,2-dimethylbutyl, -2,3-dimethylbutyl, -3,3-dimethylbutyl, -1-methylhexyl, -2-methylhexyl, -3-methylhexyl, -4-methylhexyl, -1,2-dimethylpentyl, -1,3-dimethylpentyl, -5-methylhexyl, -1,2-dimethylhexyl, -1,3-dimethylhexyl, -3,3-dimethylhexyl, -1,2-dimethylheptyl, -1,3-dimethylheptyl, -3,3-dimethylheptyl, and the like.

The term *"alkoxy"* means an alkyl substituent as defined above attached *via* an oxygen.

The term "perfluoroalkyl" means an alkyl group as defined above in which all hydrogens have been replaced by identical or different halogens.

The term *"cycloalkyl"* means a saturated mono- or polycyclic hydrocarbon substituent with the indicated number of carbon atoms. Examples of a cycloalkyl substituent are -cyclopropyl, - cyclobutyl, -cyclopentyl, -cyclohexyl, -cycloheptyl, -cyclooctyl, -cyclononyl, -cyclodecyl, and the like.

The term *"alkenyl"* means an unsaturated, linear, or branched non-cyclic hydrocarbon substituent with the indicated number of carbon atoms and containing at least one carbon-carbon double bond. Examples of an alkenyl substituent are -vinyl, -allyl, -1-butenyl, -2-butenyl, -isobutylenyl, -1-pentenyl, -2-pentenyl, -3-methyl-1-butenyl, -2-methyl-2-butenyl, -2,3-dimethyl-2-butenyl, -1-hexenyl, -2-hexenyl, -3-hexenyl, -1-heptenyl, -2-heptenyl, -3-heptenyl, -1-octenyl, -2-octenyl, -3-octenyl, -1-nonenyl, -2-nonenyl, -3-nonenyl, -1-decenyl, -2-decenyl, -3-decenyl, and the like.

The term *"cycloalkenyl"* means an unsaturated cyclic or branched cyclic hydrocarbon substituent with the indicated number of carbon atoms and containing at least one carbon-carbon double bond. Examples of cycloalkenyl substituent are -cyclopropene, -cyclobutene, -cyclopentene, - cyclohexene, -cycloheptene, -cyclooctene, cyclononene, -cyclodecene, -methylcyclopropene, - ethylcyclobutene, -isopropylcyclopentene, -methylcyclohexene, and the like.

The term "aryl" means an aromatic mono- or polycyclic hydrocarbon substituent with the indicated number of carbon atoms. Examples of an aryl substituent are -phenyl, -tolyl, -xylyl, - naphthyl, -2,4,6-trimethylphenyl, -2-fluorophenyl, -4-fluorophenyl, -2,4,6-trifluorophenyl, -2,6-difluorophenyl, -4-nitrophenyl, and the like.

The term *"aralkyl"* means an alkyl substituent as defined above substituted with at least one aryl as defined above. Examples of an aralkyl substituent are -benzyl, -diphenylmethyl, - triphenylmethyl, and the like.

The term "heteroaryl" means an aromatic mono- or polycyclic hydrocarbon substituent with the indicated number of carbon atoms, in which at least one carbon atom has been replaced by a heteroatom selected from the O, N and S. Examples of a heteroaryl substituent are -furyl, -tienyl, -imidazolyl, -oxazolyl, -thiazolyl, -isoxazolyl, -triazolyl, -oxadiazolyl, -thiadiazolyl, -tetrazolyl, - pyridyl, -pyrimidyl, -triazinyl, -indolyl, -benzo[b]furyl, -benzo[b]thienyl, -indazolyl, - benzoimidazolyl, -azaindolyl, -quinolyl, -isoquinolyl, -carbazolyl, and the like.

The term "heterocycle" means a saturated, unsaturated or partially unsaturated, mono- or polycyclic hydrocarbon substituent, with the indicated number of carbon atoms, in which at least one carbon atom has been replaced by a heteroatom selected from O, N and S. Examples of a heterocyclic substituent are -furyl, -thiophenyl, -pirolyl, -oxazolyl, -imidazolyl, -thiazolyl, - isoxazolyl, -pirazolyl, -isothiazolyl, -triazinyl, -pirolidinonyl, -pirolidinyl, -hydantoinyl, -oxiranyl, - oxetanyl, -tetrahydrofuranyl, -tetrahydrothiophenyl, -quinolinyl, -isoquinolinyl, -chromonyl, - coumarinyl, -indolyl, -indolizinyl, -benzo[b]furanyl, -benzo[b]thiophenyl, -indazolyl, -purinyl, -4H-quinolysinyl, -isoquinolyl, -quinolyl, -phthalazinyl, -naphthyridinyl, -carbazolyl, -β-carbolinyl, and the like.

The term *"neutral ligand"* means an uncharged substituent capable of coordinating with a metallic center (transition metal atom). Examples of such ligands may be: N-heterocyclic carbenes (NHCs), cyclic alkylaminocarbenes (CAACs), amines, phosphines and their oxides, alkyl and aryl phosphites and phosphates, arsines and their oxides, ethers, alkyl and aryl sulfides, coordinated unsaturated or aromatic hydrocarbons, alkyl and aryl halides, nitriles, isonitriles, sulfides, sulfoxides, sulfones, thioketones, thioamides, thioesters, thionoesters and dithioesters.

The term *"anionic ligand"* means a substituent capable of coordinating with a metallic center (transition metal atom) and having a charge which is capable of partial or full metallic center charge compensation. Examples of such ligands may be fluoride anions, chloride anions, bromide anions, iodide anions, cyanide anions, cyanate anions and thiocyanate anions, anions of carboxylic acids, anions of alcohols, anions of phenols, anions of thiols and thiophenols, anions of hydrocarbons with delocalized charge (such as cyclopentadiene anion), anions of (organo)sulfuric and (organo)phosphoric acids and esters thereof (such as for example anions of alkyl and aryl sulfonic acids, anions of alkyl and aryl phosphoric acids, anions of alkyl and aryl esters of sulfuric acid, anions of alkyl and aryl esters of phosphoric acids, anions of alkyl and aryl esters of alkyl and aryl phosphoric acids). Alternatively, an anionic ligand may have L¹, L² and L³ groups, linked as the catechol anion, acetylacetone anion, salicylaldehyde anion. Anionic ligands (X¹, X²) and neutral ligands (L¹, L², L³) can be linked together to form multidentate ligands, for example, a bidentate ligand (X¹-X²), a tridentate ligand (X¹-X²-L¹), tetradentate ligand (X¹-X²-L¹-L²), bidentate ligand (X¹-L¹), tridentate ligand (X¹-L¹-L²), tetradentate ligand (X¹-L¹-L²-L³), bidentate ligand (L¹-L²), tridentate ligand (L¹-L²-L³). Examples of such ligands are catechol anion, dithiocatechol anion, acetylacetone anion, and salicylaldehyde anion.

The term "heteroatom" means an atom selected from a group comprising oxygen, sulfur, nitrogen, phosphorus, boron, silicon, arsenic, selenium, tellurium.

The term "PAO" means polyolefins, an abbreviation for Poly-Alpha-Olefins, in the case of the present invention it is an abbreviation used for low molecular weight polyolefins used as high boiling point solvents. It denotes also a class of solvents and/or lubricants that are the product of the polymerization of ethylene derivatives, leading to the formation of branched, saturated hydrocarbons, used here as heat-resistant, non-polar, high boiling point solvents.

### Embodiments of the invention

The following examples are included only to illustrate the invention and to clarify particular aspects of the invention, not to limit it, and should not be considered the entire scope of the invention as defined in the appended claims. In the following examples, unless stated otherwise, standard materials and methods used in the art were applied or manufacturers' recommendations for specific reactants and methods were followed.

When necessary, model compounds for the metathesis reaction were purified by fractional distillation and then stored in an inert gas atmosphere over activated inert aluminum oxide. Tetrahydrofuran was purified by distillation over sodium-potassium alloy in the presence of benzophenone and then stored over 4 Å molecular sieves. When appropriate, the selected reactions were carried out under an argon atmosphere using reaction vessels heated at 130°C.

Starting compounds for the synthesis of zinc complexes were commercially available.

The composition of the reaction mixtures of the metathesis reactions was studied by gas chromatography, using a PerkinElmer Clarus 680 GC equipped with a GL Sciences InertCap^{®} 5MS/NP capillary column.

Individual components of the reaction mixtures were identified by comparing retention times with commercial standards or isolated from reaction mixtures for which the structure was confirmed by NMR.

### Example I

### Synthesis of new dithiolate ligands and corresponding metal salts

The following Scheme 1 illustrates the synthesis of dithiolate ligand precursors and compounds (general formula **VI** and general formula **VII)** allowing the preparation of stereoretentive ruthenium catalysts (general formula **1-Ru1a** to **1-Ru1ar** and **1-Ru2a to 1-Ru2c,** Scheme 10), which are the subject matter of the present invention.

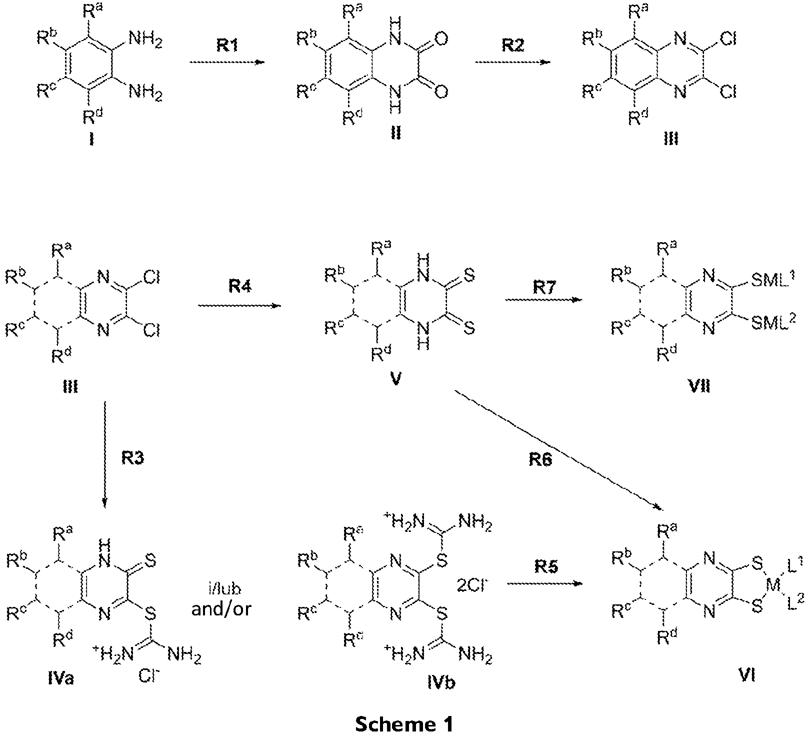

The reactions **R1** to **R4** shown in Scheme 1 were carried out using commercially available substrates based on procedures described in the literature with modifications developed by the authors. Unless stated otherwise, in the reactions described commercially available solvents were used and no attention was paid to the presence of oxygen and/or moisture.

The subsequent transformations described in Scheme 1 are shown below.

### a. Reaction R1

In step **R1** (Scheme 1), the synthesis of diamide of general formula **II** is carried out. For this purpose, diamine of general formula I and a dicarbonyl compound, preferably oxalic acid, dimethyl oxalate or oxalyl chloride, are used. The transformation is carried out in water or an organic solvent, using a catalytic amount of an organic or inorganic acid or using a stoichiometric amount of a base, preferably a non-nucleophilic base. The reaction mixture is heated under a reflux condenser or in a microwave reactor. The product is isolated by filtration from the reaction mixture. [(i) J. Lin, P. Wang, Z. Zhang, G. Xue, D. Zha, J. Wang, X. Xu, Z. Li, Synth. Commun. 2020, 50, 823-830; (ii) O. O. Ajani, C. A. Obafemi, C. O. Ikpo, K. O. Ogunniran, O. C. Nwinyi, Chem. Heterocycl. Compd. 2009, 45, 1370-1378].

### Example of reaction R1:

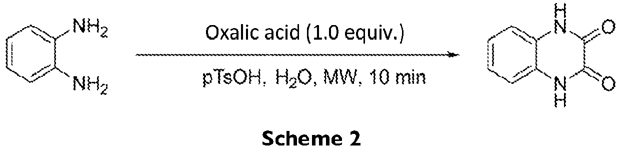

*O*-phenylenediamine (2.0 g, 18.4 mmol), oxalic acid dihydrate (1.66 g, 18.4 mmol), 15 mL of water and a catalytic amount of para-toluenesulfonic acid (pTsOH) were introduced into a reaction vessel equipped with a stirring element. The vessel was placed in a microwave reactor (MW), and the content of the vessel was heated for 10 min while maintaining a constant temperature of 100°C. After cooling the mixture to room temperature, the resulting red crystals of the product were filtered off, washed successively with a small amount of ethanol and diethyl ether, and then dried in air to obtain the expected product in 80% yield (2.4 g, 14.8 mmol).

**¹H NMR (400 MHz, DMSO-d₆)** δ =11.90 (brs, 2H), 7.07 (ddt, J = 18.1, 5.6, 3.5 Hz, 4H).

**¹³C NMR (101 MHz, DMSO-d₆)** δ = 155.6, 126.0, 123.4, 115.6.

### b. Reaction R2

In step **R2** (Scheme 1), the resulting diamide of general formula **II** is converted to a 2,3-dichloroquinoxaline derivative of general formula **III** with dehydrating chlorinating agent, preferably phosphoryl chloride or thionyl chloride. The reaction is carried out in organic solvent or without solvent; preferably in the presence of dimethylformamide. The reaction mixture is heated under a reflux condenser or in a microwave reactor. The product is isolated by precipitation, followed by filtration of the resulting precipitate, or by extraction with an organic solvent [R. Beldi, K. F. Atta, S. Aboul-Ela, E. S. H. El Ashry, J. Heterocycl. Chem. 2011, 48, 50-56].

### Example of reaction R2:

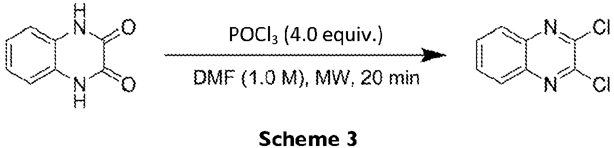

The corresponding reaction product R1 (2.4 g, 14.8 mmol), POCl₃ (5.5 mL, 59.2 mmol) and 15 mL of dry dimethylformamide were introduced into a reaction vessel equipped with a stirring element. The reaction mixture was heated in a microwave reactor for 20 min while maintaining a constant temperature of 50°C. After cooling the post-reaction mixture to the room temperature, the contents of the vessel were carefully poured onto ice. Thus obtained colorless precipitate was filtered off and washed successively with ethanol and diethyl ether. As a result, the expected product was obtained as a colorless solid in 71% yield (2.1 g, 10.6 mmol).

**¹H NMR (400 MHz, CDCl₃)** δ = 8.03 (dd, J = 6.4, 3.4 Hz, 2H), 7.81 (dd, J = 6.4, 3.4 Hz, 2H).

**¹³C NMR (101 MHz, CDCl₃)** δ = 145.4, 140.6, 131.3, 128.2.

### c. Functionalization of substituents forming carboxylic or sulfonic acid chlorides

When one of the substituents from R^{a} to R^{d} (Scheme 1.) contains functional groups that react with thionyl chloride or phosphoryl chloride (e.g. carboxylic acids, sulfonic acids), one obtains the compounds of the general formula:

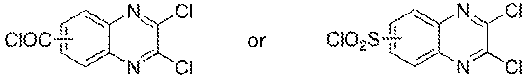

These compounds were used in an additional reaction with a nucleophile in the presence or absence of a base, and can form esters: acyl or sulfonic, or amides: acyl or sulfonic according to Scheme 4.

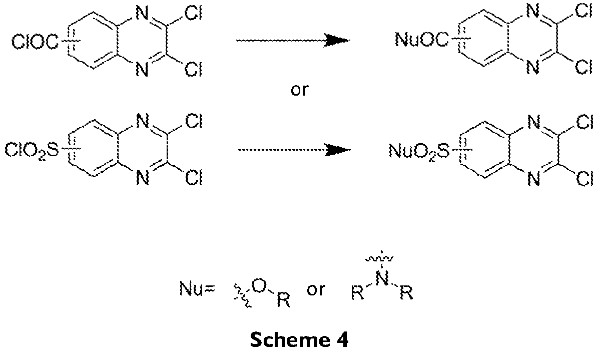

### Example of reaction:

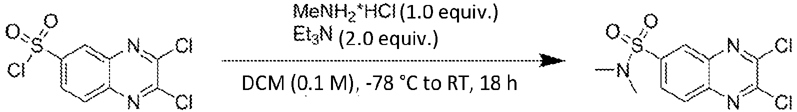

Dimethylamine hydrochloride (206 mg, 2.52 mmol), 2,3-dichloroquinoxalin-6-sulfonyl chloride (750 mg, 2.52 mmol) and 25 mL of dichloromethane were introduced into the reaction vessel. The vessel was placed in an acetone/dry ice cooling bath, after which triethylamine (0.7 mL, 5.04 mmol) was added dropwise into the reaction mixture. The vessel was then left to warm slowly overnight using the temperature inertia of the cooling bath. The next day, the reaction mixture was transferred to a separatory funnel and washed with water. The aqueous phase was extracted with two portions of dichloromethane. The combined organic phases were dried with anhydrous sodium sulfate, concentrated to about 10% of the initial volume, and then the product was precipitated by adding n-hexane. The resulting precipitate was filtered off under reduced pressure and dried to provide the product as a yellow solid in 65% yield (0.5 g, 1.63 mmol).

**¹H NMR (400 MHz, Chloroform-d) δ 8.49** (dd, J = 2.0, 0.6 Hz, 1H), 8.22-8.17 (m, 1H), 8.14-8.10 (m, 1H), 2.81 (s, 6H).

### d. Reaction R3

In step **R3** (Scheme 1), the derivative of general formula **III** obtained in the previous steps is reacted with an alcoholic thiourea solution. The reaction is carried out at an elevated temperature, preferably 40 to 80°C. Depending on the water content in the solvent, and the substrate used in the reaction, a mixture of products of general formula **IVa** and **IVb** of different proportions can be obtained, which can be used in further reactions without much effect on their yields. In the example shown, the dominant compound was the one with the general formula **IVa.** [(iii) R. Beldi, K. F. Atta, S. Aboul-Ela, E. S. H. El Ashry, J. Heterocycl. Chem. 2011, 48, 50-56; (iv) Ya. Z. Voloshin, A. S. Belov, A. Yu. Lebedev, O. A. Varzatskii, M. Yu. Antipin, Z. A. Starikova, T. E. Kron, Russ. Chem. Bull. 2004, 53, 1218-1222]. The reaction product is isolated and purified by filtration.

### Example of reaction R3:

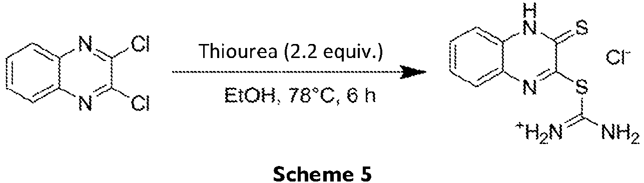

2,3-dichloroquinoxaline (10.3 g, 52 mmol) and thiourea (8.7 g, 115 mmol) were introduced into a reaction vessel equipped with a stirring element. The contents of the vessel were suspended in 120 mL of ethanol and then heated under a reflux condenser for 6 h. After completion of the reaction, the resulting suspension was cooled to room temperature, then filtered off and washed with a small amount of ethanol and diethyl ether. After drying, the product was obtained as a yellow solid in 61% yield (11.0 g, 31.72 mmol).

**¹H NMR (400 MHz, DMSO-d₆)** δ 15.14 (brs, 1H), 9.97 (brs, 2H), 9.83 (brs, 2H), 7.88 (dt, J = 8.0, 1.0 Hz, 1H), 7.70-7.63 (m, 2H), 7.51 (ddd, *J* = 8.4, 5.6, 2.9 Hz, 1H).

**¹³C NMR (101 MHz, DMSO-d₆)** δ 171.0, 164.9, 160.3, 135.1, 131.6, 131.5, 128.2, 127.0, 117.0.

### e. Reaction R4

In step **R4** (Scheme 1), a derivative of general formula **III** is treated with sodium bisulfide, in water or an organic solvent, preferably ethanol, at an elevated temperature or in a microwave reactor [(v) S. Henfling, R. Kempt, J. Klose, A. Kuc, B. Kersting, H. Krautscheid, Inorg. Chem. 2020, 59, 16441-16453]. The product after the reaction is isolated by filtration.

Alternatively, the derivative of general formula **III** is treated with thiourea, in water or an organic solvent, preferably ethanol, at elevated temperature or in a microwave reactor, and then hydrolysis of the resulting mixture under aqueous conditions is carried out using first a solution of an alkali, preferably sodium hydroxide, and then a solution of an organic or inorganic acid, preferably acetic acid.

### Example of reaction R4:

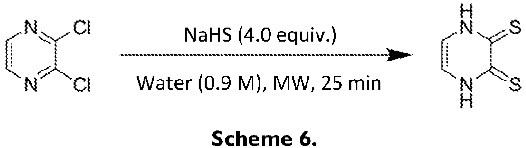

1,2-dichloropyrazine (2.0 g, 13.2 mmol), hydrated sodium bisulfide (2.95 g, 52.6 mmol) and 15 mL of water were introduced into a reaction vessel equipped with a stirring element. The vessel was placed in a microwave reactor, and the contents were heated by maintaining temperature of 95°C for 25 min. After cooling the reaction mixture to the room temperature, the precipitate formed was filtered off, washed with a small amount of water, ethanol and diethyl ether and then allowed to dry to give the expected product in the form of purple crystals in 84% yield (1.6 g, 11.1 mmol).

**¹H NMR (400 MHz, DMSO-d₆)** δ =13.72 (s, 2H), 6.87 (s, 2H).

**¹³C NMR (101 MHz, DMSO-d₆)** δ = 180.5, 118.0.

### Alternative example of reaction R4:

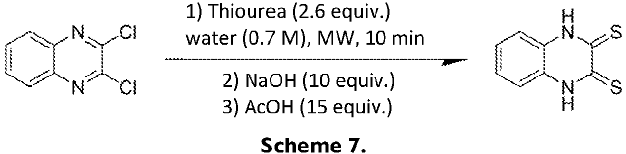

1,2-dichloroquinoxaline (2.1 g, 10.6 mmol), thiourea (2.1 g, 27.4 mmol) and 15 mL of water were introduced into a reaction vessel equipped with a stirring element. The vessel was placed in a microwave reactor, and the content of the vessel was heated by maintaining a temperature of 100°C for 10 min. After cooling the reaction mixture to the room temperature, NaOH solution (4.22 g in 30 mL of water) was added. The content of the flask was then stirred for another 10 min, after which 9.1 mL of glacial acetic acid was added. The precipitate was filtered off, washed with water, ethanol and diethyl ether, and then allowed to dry. As a result, the expected product was obtained as a brown solid in 73% yield (1.5 g, 7.72 mmol).

**¹H NMR (400 MHz, DMSO-d₆)** δ = 14.25 (s, 2H), 7.45-7.35 (m, 2H), 7.32-7.21 (m, 2H).

**¹³C NMR (101 MHz, DMSO-d₆)** δ = 179.7, 128.3, 126.0, 116.0.

### f. Reactions R5 and R6

Compounds of general formula **IVa, IVb** and **V** can be directly converted to compound of general formula **VI** using similar reaction conditions. Each of these compounds (IVa, **IVb** and **V)** is treated with a metal complex, preferably zinc acetate or zinc chloride, in the presence of ethylenediamine, in water or an organic solvent. The reaction product is separated by filtration.

### Example of reaction R5:

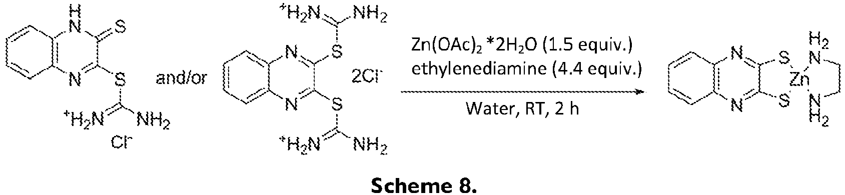

Isothiourethane salt (5.6 g, 15.9 mmol), zinc acetate dihydrate (7.0 g, 31.9 mmol), ethylenediamine (6.5 mL, 95.7 mmol) and 100 mL of water were introduced into a reaction vessel equipped with a stirring element. The reaction was carried out for 2 hours at room temperature, and then the yellow precipitate formed was filtered off, washed with water, ethanol and diethyl ether, and allowed to dry. The expected product was obtained in 66% yield (4.5 g, 14.2 mmol).

By reaction **R5** using zinc(II) acetate, or iron(II) chloride, or copper(II) chloride, respectively, the following compounds with the general formula 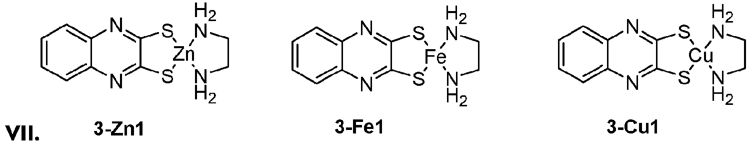 were generated.

### Example of reaction R6:

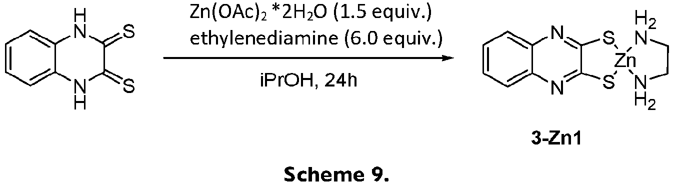

Zinc acetate dihydrate (1.19 g, 5.4 mmol), ethylenediamine (1.46 mL, 21.6 mmol), 1.2 dithioquinoxaline (0.7 g, 3.6 mmol) and 10 mL of isopropanol were introduced into a reaction vessel equipped with a stirring element. The reaction was carried out for 24 hours at room temperature, and then the yellow precipitate formed was filtered off, washed with water, ethanol and diethyl ether and allowed to dry to obtain the expected product **3-Zn1** in 75% yield (0.7 g, 2.72 mmol).

By Reaction **R6,** the following list of compounds of general formula **VI** was obtained.

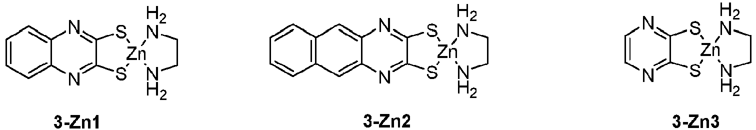

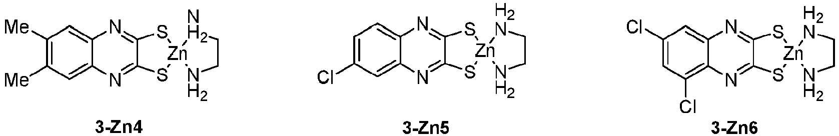

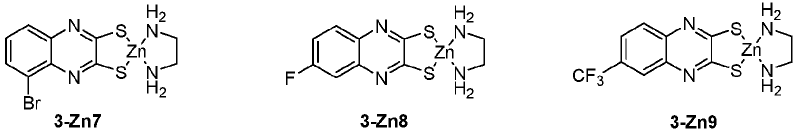

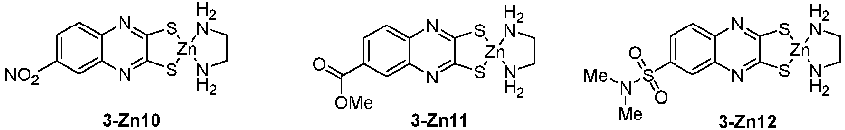

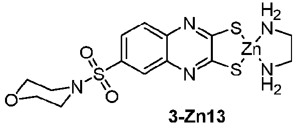

Zinc complexes **3-Zn1** to **3-Zn13** were characterized using ATR IR. The most characteristic absorption bands are shown below: 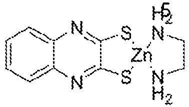
**Code name:** 3-Zn1
**Molecular formula:** C₁₀H₁₂N₄S₂Zn
**Molar mass:** 315.98 g/mol
**IR (ATR IR):v** = 3331.91, 3250.43, 3063.37, 2949.59, 2882.09, 1698.01, 1590.99, 1374.51, 1268.93, 1158.53, 1128.15, 1099.23, 1019.19, 999.43, 742.94 cm⁻¹ 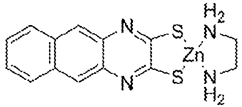
**Code name:** 3-Zn2
**Molecular formula:** C₁₄H₁₄N₄S₂Zn
**Molar mass:** 366.00 g/mol
**IR (ATR IR):v** = 3048.91, 1659.93, 1650.29, 1632.45, 1591.47, 1394.76, 1320.04, 1293.52, 1177.81, 1150.81, 1098.74, 1023.05, 863.95, 735.23 cm⁻¹ 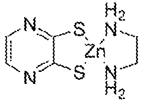
**Code name:** 3-Zn3
**Molecular formula:** C₆H₁₀N₄S₂Zn
**Molar mass:** 265.96 g/mol
**IR (ATR IR):v** = 3302.98, 3260.56, 3210.41, 3057.10, 2954.89, 2938.50, 2880.17, 1608.34, 1410.19, 1318.11, 1122.85, 1063.55, 1048.60, 1029.80 cm⁻¹ 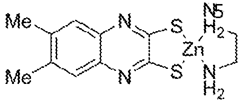
**Code name:** 3-Zn4
**Molecular formula:** C₁₂H₁₆N₄S₂Zn
**Molar mass:** 344.01 g/mol
**IR (ATR IR):v** = 3344.93, 3327.09, 3295.75, 3248.98, 2975.14, 2942.84, 2915.36, 2885.47, 1243.86, 1198.54, 1127.67, 1108.39, 998.46 cm⁻¹ 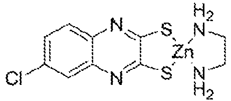
**Code name:** 3-Zn5
**Molecular formula:** C₁₀H₁₁ClN₄S₂Zn
**Molar mass:** 349.94 g/mol
**IR (ATR IR):v** = 3297.68, 3225.36, 3130.87, 2936.09, 2883.54, 1588.09, 1574.59, 1369.21, 1270.38, 1134.42, 1105.98, 1024.98, 1008.59 cm⁻¹ 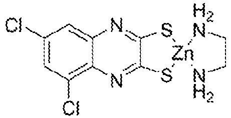
**Code name:** 3-Zn6
**Molecular formula:** C₁₀H₁₀Cl₂N₄S₂Zn
**Molar** mass: 383.90 g/mol
**IR (ATR IR):v** = 3326.12, 3139.54, 2947.18, 2884.99, 1698.50, 1585.68, 1432.37, 1378.85, 1261.22, 1116.58, 1022.57 cm⁻¹ 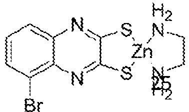
**Code name:** 3-Zn7
**Molecular formula:** C₁₀H₁₁BrN₄S₂Zn
**Molar** mass: 393.89 g/mol
**IR (ATR IR):v** = 3057.58, 2963.57, 2883.06, 2734.08, 1657.52, 1544.22, 1401.51, 1360.53, 1256.88, 1154.19, 1110.80, 1015.34 cm⁻¹ 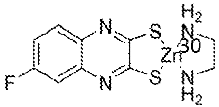
**Code name:** 3-Zn8
**Molecular formula:** C₁₀H₁₁FN₄S₂Zn
**Molar** mass: 333,97 g/mol
**IR (ATR IR):v** = 3317.44, 3203.67, 3113.03, 3034.44, 2946.22, 2886.43, 1613.64, 1567.36, 1489.26, 1169.13, 1103.08, 1033.18, 1016.78 cm⁻¹ 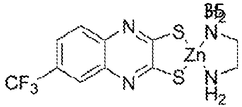
**Code name:** 3-Zn9
**Molecular formula:** C₁₁H₁₁F₃N₄S₂Zn
**Molar mass:** 383.97 g/mol
**IR (ATR IR):v** = 3226.32, 2953.93, 2885.95, 2647.30, 1378.37, 1340.28, 1306.54, 1277.61, 1108.87, 1169.62, 1060.17, 1023.05 cm⁻¹ 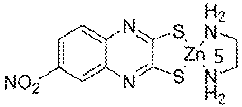
**Code name:** 3-Zn10
**Molecular formula:** C₁₀H₁₁N₅O₂S₂Zn
**Molar mass:** 360.96 g/mol
**IR (ATR IR):v** = 3337.69, 3286.11, 3261.52, 3145.33, 2920.18, 2874.86, 1602.07, 1556.75, 1506.13, 1399.10, 1382.71, 1335.95, 1319.07, 1269.90, 1144.06, 1110.31, 1068.37, 1004.25, 988.82 cm⁻¹ 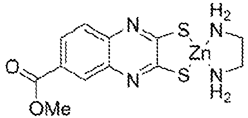
**Code name:** 3-Zn11
**Molecular formula:** C₁₂H₁₄N₄O₂S₂Zn
**Molar mass:** 373.98 g/mol
**IR (ATR IR):v** = 3261.04, 2946.70, 2884.50, 1698.98, 1607.86, 1378.85, 1294.48, 1266.04, 1229.40, 1137.31, 1107.90, 1013.89, 1433.82 cm⁻¹ 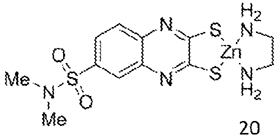
**Code name:** 3-Zn12
**Molecular formula:** C₁₂H₁₇N₅O₂S₃Zn
**Molar mass:** 422.98 g/mol
**IR (ATR IR):v** = 3329.98, 3254.29, 3166.54, 2939.95, 2882.58, 1590.99, 1458.40, 1374.03, 1315.70, 1243.86, 1138.76, 1106.94, 1065.96, 1003.28, 948.81, 728.00 cm⁻¹ 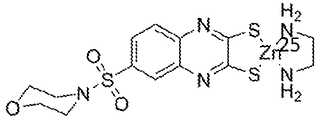
**Code name:** 3-Zn13
**Molecular formula:** C₁₄H₁₉N₅O₃S₃Zn
**Molar mass:** 464,99 g/mol
**IR (ATR IR):v** = 3544.52, 3319.37, 3249.47, 3139.06, 2945.73, 2888.84, 2865.70, 1704.28, 1698.50, 1581.34, 1456.47, 1378.85, 1260.74, 1141.65, 1110.31, 1017.27, 943.02, 738.12 cm⁻¹

### f. Example of reaction R7

In step **R7** (Scheme 1), a derivative of general formula **V** is treated with one or more salts, or an organometallic compound, or a metal hydride, preferably lithium, sodium, potassium, magnesium, calcium or copper, respectively, in an organic solvent, preferably THF, at room temperature. The product **VII** does not have to be isolated, but can be used directly in the synthesis of suitable catalysts (Example IV). By reaction **R7,** the following compounds with the general formula VII were generated.

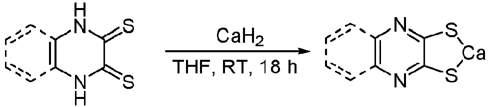

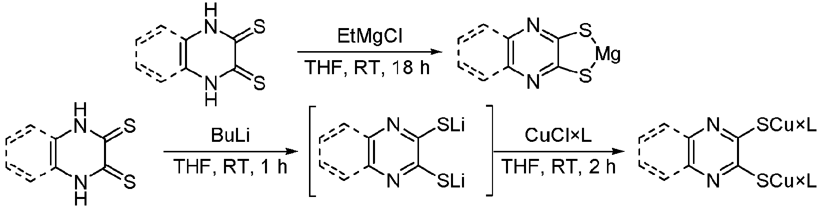

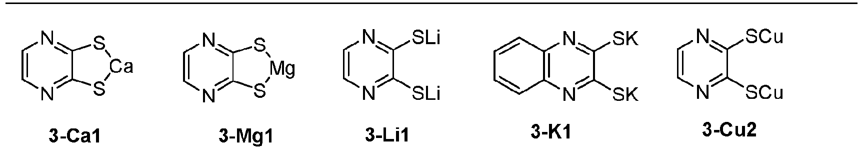

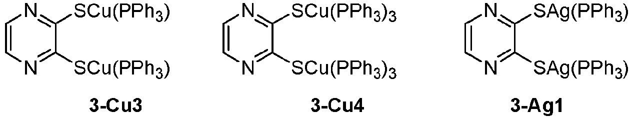

### Example II

### General method for the synthesis of stereoretentive ruthenium complexes 1-Ru1a to 1-Ru1ar and 1-Ru2a to 1-Ru2c

The synthesis of stereoretentive ruthenium complexes, which are the subject matter of the present invention, consists in mixing together a metal complex of general structure **VI** or a reaction **R7** product of general formula **VII,** which is formed *in situ* by reacting a compound of general formula **V** with a source of the previously mentioned metal cations and optionally neutral ligands, and an alkylidene ruthenium complex of general structure **4, 4a-Ru or 4b-Ru,** according to Scheme 10. The reaction is carried out at room or elevated temperature, in organic solvents, preferably in tetrahydrofuran, while maintaining anhydrous and anaerobic conditions. The product is isolated by filtration of the reaction mixture, followed by evaporation of the resulting filtrate to obtain the expected products **1-Ru1a to 1-Ru1ar or 1-Ru2a to 1-Ru2c** according to Scheme 10.

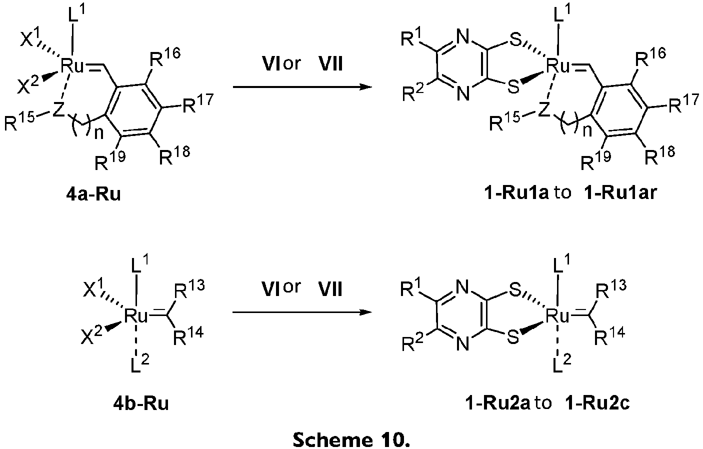

### Example III

### Preparation of stereoretentive ruthenium complexes using 3-Zn1 ligand

The transformations described below were performed, when necessary, using a glovebox and/or vacuum-argon line under an inert gas atmosphere, with deoxygenated and anhydrous reactants and solvents.

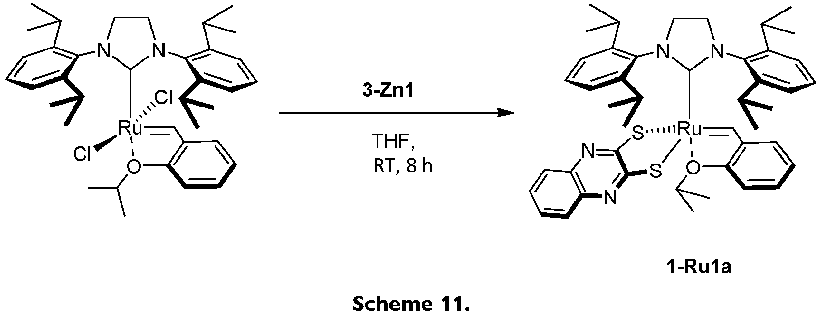

Hoveyda-Grubbs II generation-type complex (50.0 mg, 0.07 mmol), a quinoxalino-2,3-dithiolate zinc **3-Zn1** complex (33.5 mg, 0.14 mmol), and 5 mL of tetrahydrofuran were introduced into a 10 mL vial equipped with a stirring element. The content of the vial was stirred at room temperature for 8 hours and the solvent was evaporated. The residue was suspended in dichloromethane and filtered, preferably through a syringe filter or a Celite pad. After evaporation of the solvent the product **1-Ru1a** was obtained as a solid in 95% yield (0.067 mmol, 55.8 mg).

### Example IV

### Preparation of stereoretentive ruthenium complexes using 3-K1 ligand (obtained from reaction R7, Scheme 1)

The transformations described below were performed when necessary using a glovebox and/or vacuum-argon line under an inert gas atmosphere, with deoxygenated and anhydrous reactants and solvents.

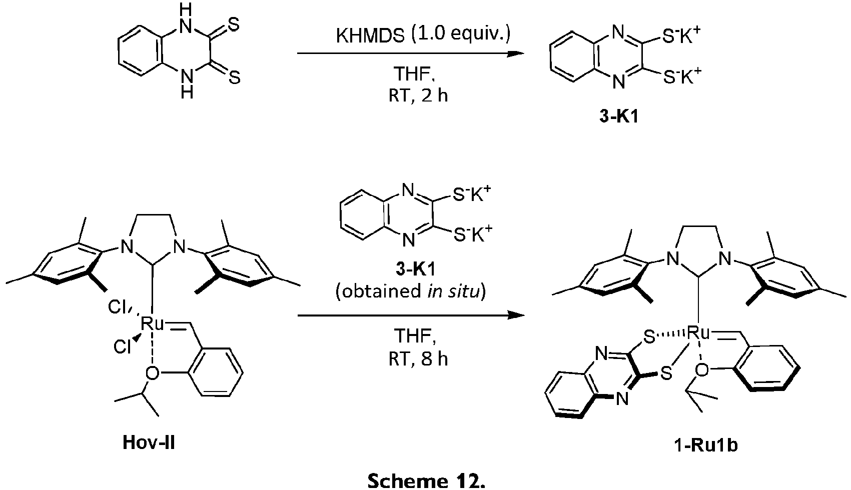

Quinoxalino-2,3-dition (18.6 mg, 0.096 mmol), KHMDS (38.2 mg, 0.196 mmol) and 5 mL of THF were introduced into a 10 mL vial equipped with a stirring element. The content of the vial was stirred for 2 hours, then the Hoveyda-Grubbs II generation complex **(Hov-II,** 30.0 mg, 0.048 mmol) was added, and the mixture was stirred for another 22 hours, after which the solvent was evaporated. The residue was suspended in dichloromethane and filtered, preferably through a syringe filter or a Celite pad. The filtrate was concentrated to about 2 mL and then 15 mL of hexane was slowly added. The crystals formed were collected and washed with a small amount of hexane. After removal of residual solvent, the solid **1-Ru1b** product was obtained in 70% yield (0.033 mmol, 25.0 mg).

Using the method presented in examples III and IV, a series of complexes **1-Ru1a to 1-Ru1ar or 1-Ru2a to 1-Ru2c** were obtained, the structures of which are shown below.

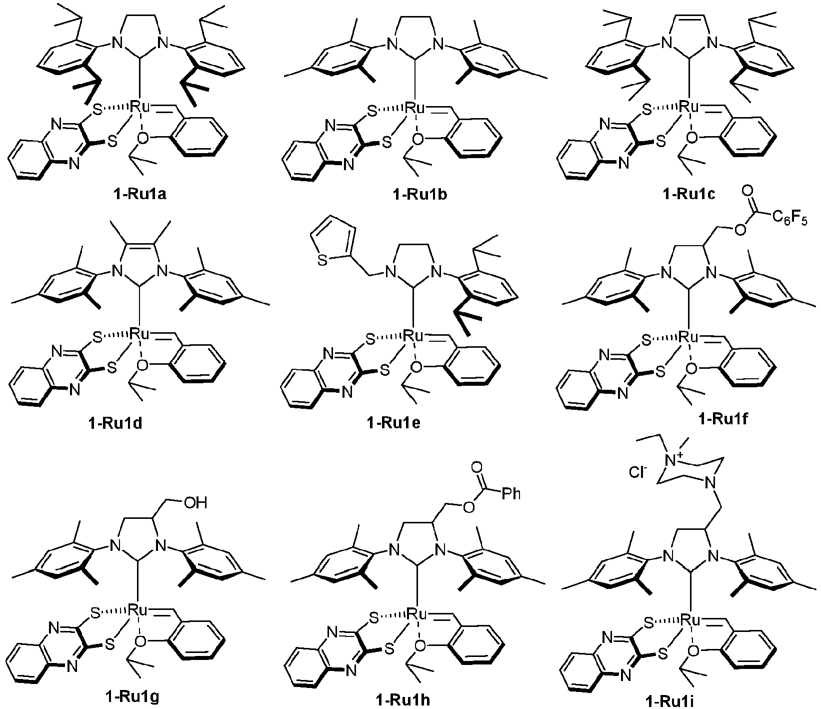

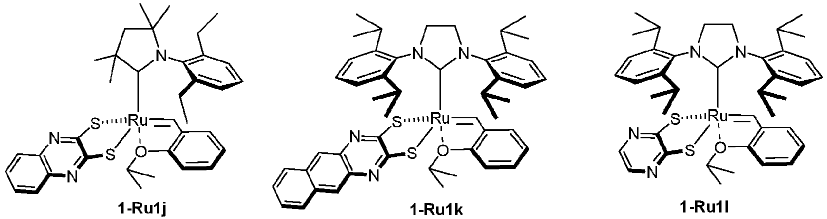

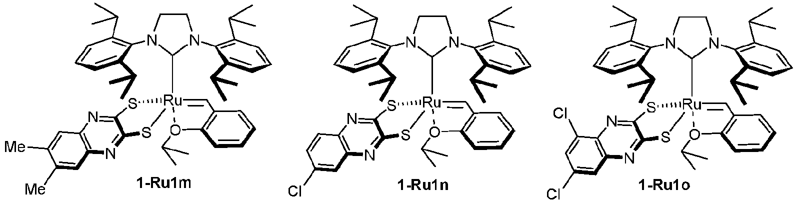

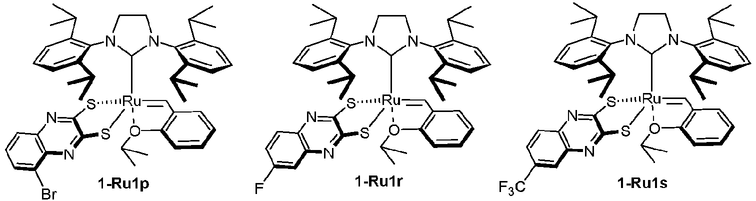

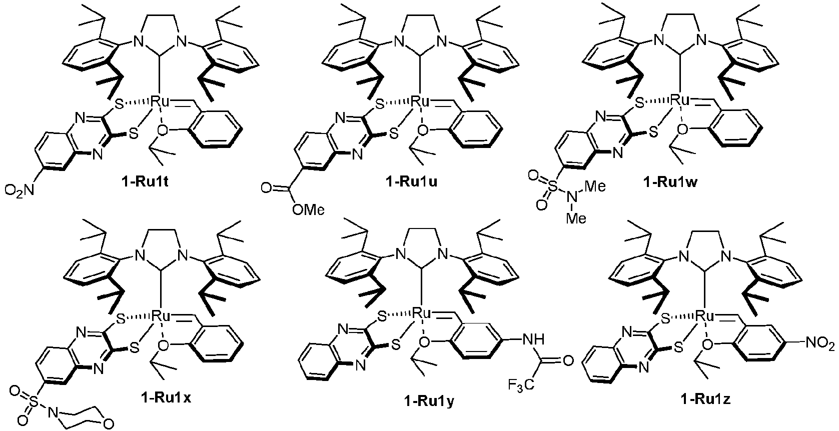

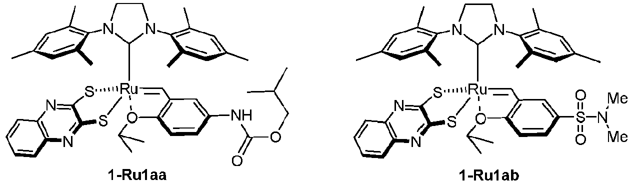

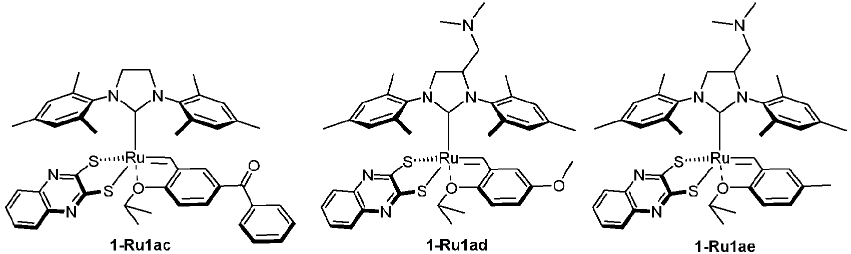

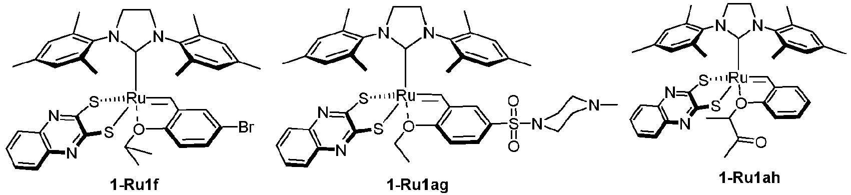

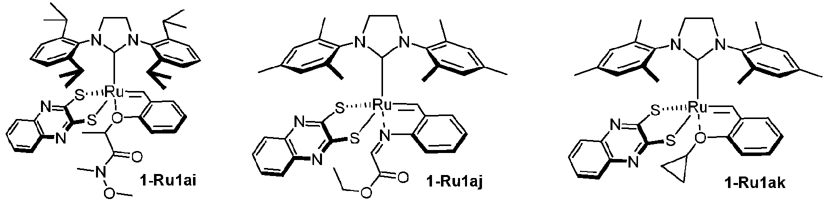

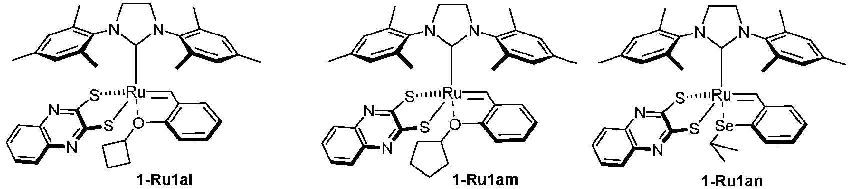

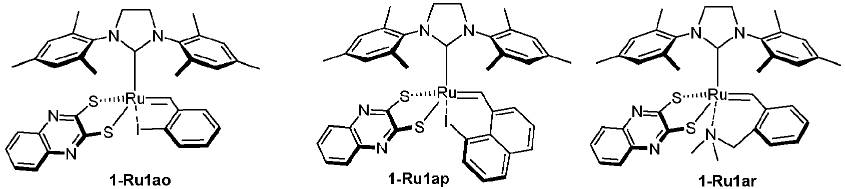

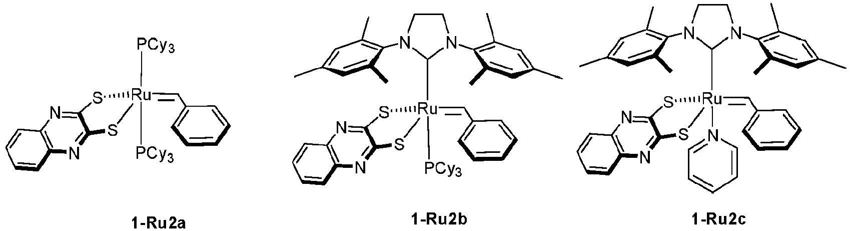

All of the above complexes were characterized using nuclear magnetic resonance spectroscopy. Table 1 summarizes the benzylidene proton shifts of each complex in the **¹H** NMR spectrum in a given solvent.

**Table 1. Summary of the obtained ruthenium complex structures according to the general procedure of example III and IV and the shift of their benzylidene proton in the ¹H NMR spectrum.**

| Item | Compound No. | Structure | Molecular formula | Molar mass [g/mol] | ¹H NMR δ Ru=C***H*** (solvent) |
|---|---|---|---|---|---|
| 1. | **1-Ru1a** | 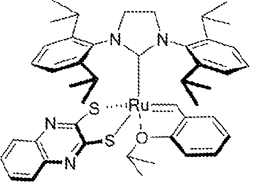 | C₄₅H₅₄N₄ORuS₂ | 832.14 | 15.02 ppm (CD₂Cl₂) |
| 2. | **1-Ru1b** | 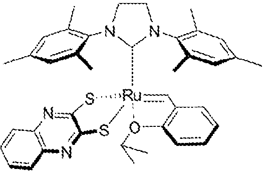 | C₃₉H₄₂N₄ORuS₂ | 748.19 | 14.78 ppm (CD₂Cl₂) |
| 3. | **1-Ru1c** | 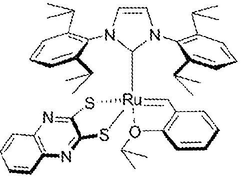 | C₄₅H₅₂N₄ORuS₂ | 830.27 | 15.15 ppm (CD₂Cl₂) |
| 4. | **1-Ru1d** | 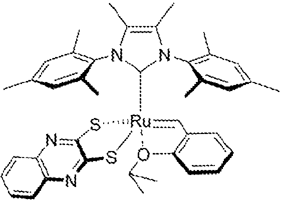 | C₄₁H₄₄N₄ORuS₂ | 754.21 | 15.33 ppm (THF) |
| 5. | **1-Ru1e** | 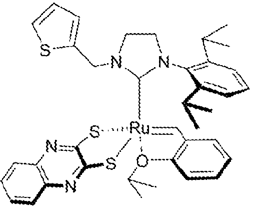 | C₃₈H₄₂N₄ORuS₃ | 768.16 | 14.80 ppm (CD₂Cl₂) |
| 6. | **1-Ru1f** | 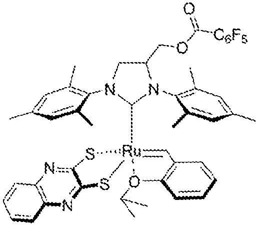 | C₄₇H₄₃F₅N₄O₃RuS₂ | 972.07 | 14.74 ppm (THF) |
| 7. | **1-Ru1g** | 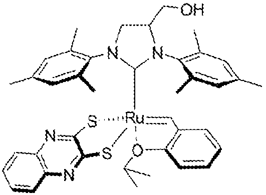 | C₄₀H₄₄N₄O₂RuS₂ | 778.20 | 15.03 ppm; 14.78 ppm (THF) |
| 8. | **1-Ru1h** | 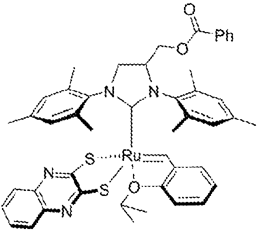 | C₄₇H₄₈N₄O₃RuS₂ | 882.23 | 14.82 ppm (THF) |
| 9. | **1-Ru1i** | 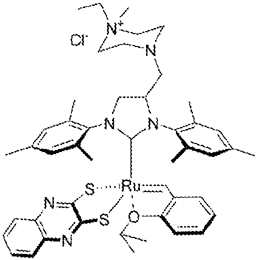 | C₄₇H₅₉ClN₆ORuS₂ | 924.67 | 14.73 ppm (THF) |
| 10. | **1-Ru1j** | 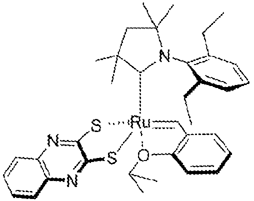 | C₃₆H₄₃N₃ORuS₂ | 699.20 | 14.45 ppm (THF) |
| 11. | **1-Ru1k** | 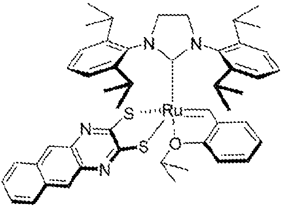 | C₄₉H₅₆N₄ORuS₂ | 882.30 | 14.97 ppm (CD₂Cl₂) |
| 12. | **1-Ru1l** | 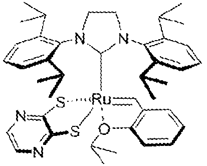 | C₄₁H₅₂N₄ORuS₂ | 782.27 | 14.79 ppm (CD₂Cl₂) |
| 13. | **1-Ru1m** | 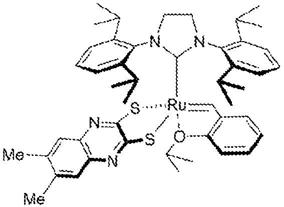 | C₄₇H₅₈N₄ORuS₂ | 860.32 | 14.94 ppm (CD₂Cl₂) |
| 14. | **1-Ru1n** | 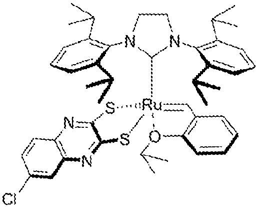 | C₄₅H₅₃N₄ClORuS₂ | 866.25 | 14.97 ppm; 14.94 ppm (CD₂Cl₂) |
| 15. | **1-Ru1o** | 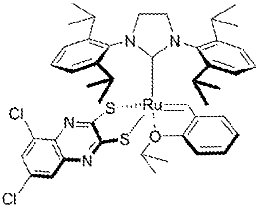 | C₄₅H₅₂N₄Cl₂ORuS₂ | 900.24 | 14.98 ppm; 14.94 ppm (CD₂Cl₂) |
| 16. | **1-Ru1p** | 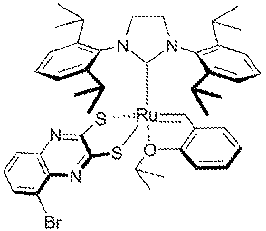 | C₄₅H₅₃N₄BrORuS₂ | 910.20 | 14.97 ppm (CD₂Cl₂) |
| 17. | **1-Ru1r** | 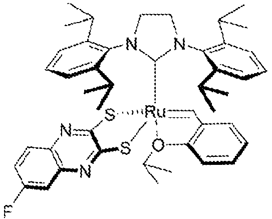 | C₄₅H₅₃FN₄ORuS₂ | 850.28 | 15.00 ppm 14.92 ppm (CD₂Cl₂) |
| 18. | **1-Ru1s** | 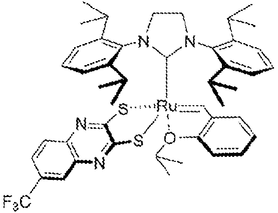 | C₄₆H₅₃F₃N₄ORuS₂ | 900.27 | 14.98 ppm 14.94 ppm (CD₂Cl₂) |
| 19. | **1-Ru1t** | 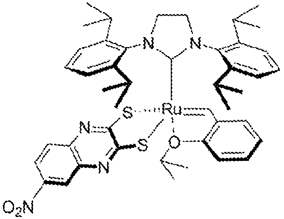 | C₄₅H₅₃N₅O₃RuS₂ | 877.27 | 15.00 ppm 14.89 ppm (CD₂Cl₂) |
| 20. | **1-Ru1u** | 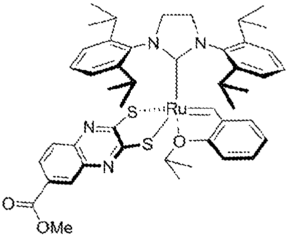 | C₄₇H₅₆N₄O₃RuS₂ | 890.29 | 15.00 ppm; 14.91 ppm (CD₂Cl₂) |
| 21. | **1-Ru1w** | 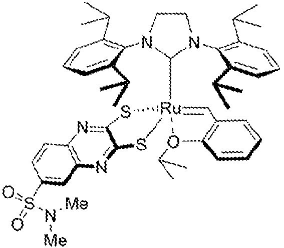 | C₄₇H₅₉N₅O₃RuS₃ | 939.29 | 14.98 ppm 14.94 ppm (CD₂Cl₂) |
| 22. | **1-Ru1x** | 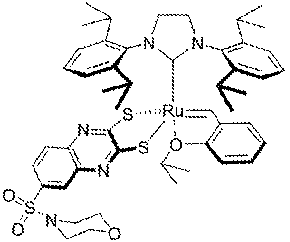 | C₄₉H₆₁N₅O₄RuS₃ | 981.30 | 14.98 ppm 14.92 ppm (CD₂Cl₂) |
| 23. | **1-Ru1y** | 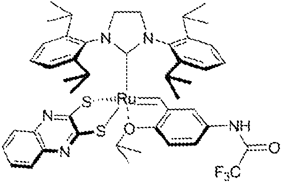 | C₄₇H₅₄F₃N₅O₂RuS₂ | 943.28 | 15.11 ppm (THF) |
| 24. | **1-Ru1z** | 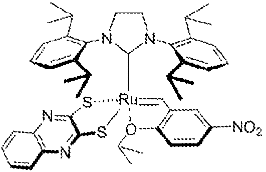 | C₄₅H₅₃N₅O₃RuS₂ | 877.27 | 15.14 ppm (THF) |
| 25. | **1-Ru1aa** | 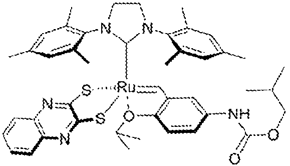 | C₄₄H₅₁N₅O₃RuS₂ | 863.26 | 14.95 ppm (THF) |
| 26. | **1-Ru1ab** | 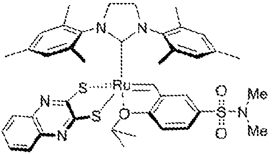 | C₄₁H₄₇N₅O₃RuS₃ | 855.20 | 14.88 ppm (THF) |
| 27. | **1-Ru1ac** | 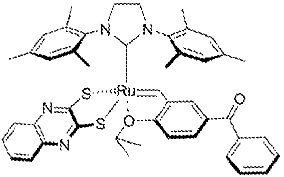 | C₄₆H₄₆N₄O₂RuS₂ | 852.22 | 14.94 ppm (THF) |
| 28. | **1-Ru1ad** | 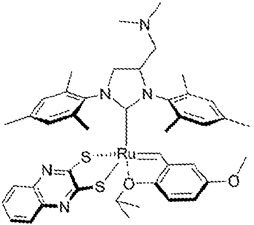 | C₄₃H₅₁N₅O₂RuS₂ | 835.26 | 14.74 ppm (THF) |
| 29. | **1-Ru1ae** | 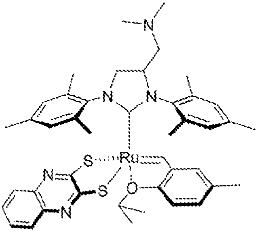 | C₄₃H₅₁N₅ORuS₂ | 819.27 | 14.76 ppm (THF) |
| 30. | **1-Ru1af** | 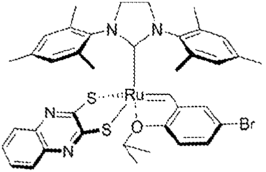 | C₃₉H₄₁BrN₄ORuS₂ | 826.10 | 14.86 ppm (THF) |
| 31. | **1-Ru1ag** | 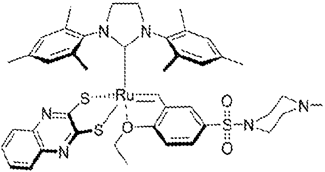 | C₄₃H₅₀N₆O₃RuS₃ | 896.22 | 14.78 ppm (THF) |
| 32. | **1-Ru1ah** | 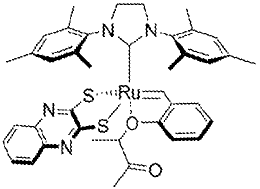 | C₄₀H₄₂N₄O₂RuS₂ | 776.19 | 15.00 ppm (THF) |
| 33. | **1-Ru1ai** | 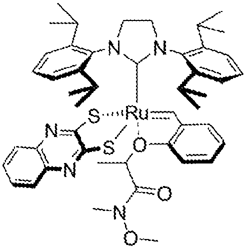 | C₄₇H₅₇N₅O₃RuS₂ | 905.30 | 14.98 ppm (THF) |
| 34. | **1-Ru1aj** | 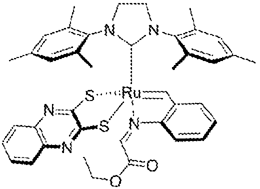 | C₄₀H₄₁N₅O₂RuS₂ | 789.18 | 15.17 ppm 15.00 ppm (Dioxane) |
| 35. | **1-Ru1ak** | 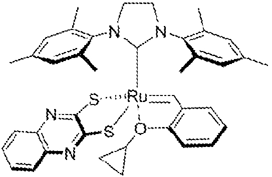 | C₃₉H₄₀N₄ORuS₂ | 746.18 | 15.04 ppm (TH F) |
| 36. | **1-Ru1al** | 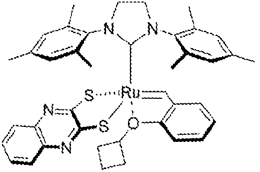 | C₄₀H₄₂N₄ORuS₂ | 760.19 | 15.17 ppm (THF) |
| 37. | **1-Ru1am** | 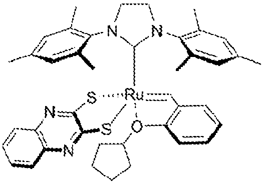 | C₄₁H₄₄N₄ORuS₂ | 774.21 | 15.11 ppm (THF) |
| 38. | **1-Ru1an** | 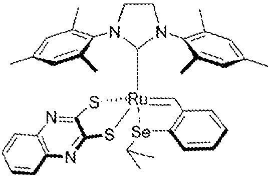 | C₃₉H₄₂N₄RuS₂Se | 812.11 | 15.36 ppm (THF) |
| 39. | **1-Ru1ao** | 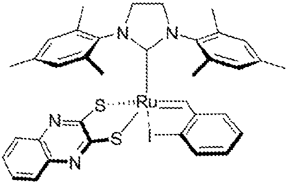 | C₃₆H₃₅IN₄RuS₂ | 816.05 | 15.79 ppm (THF) |
| 40. | **1-Ru1ap** | 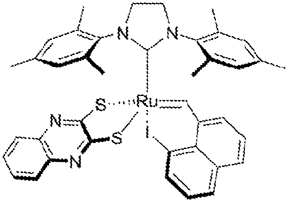 | C₄₀H₃₇IN₄RuS₂ | 866.06 | 16.34 ppm (THF) |
| 41. | **1-Ru1ar** | 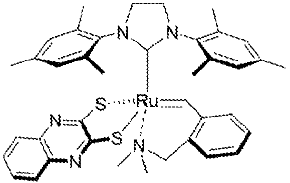 | C₃₉H₄₃N₅RuS₂ | 747.21 | 16.14 ppm (CD₂Cl₂) |
| 42. | **1-Ru2a** | 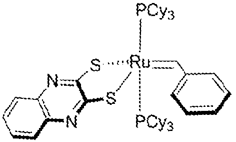 | C₅₁H₇₆N₂P₂RuS₂ | 944.40 | 18.43 ppm (THF) |
| 43. | **1-Ru2b** | 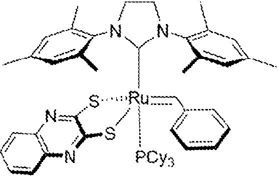 | C₅₄H₆₉N₄PRuS₂ | 970.38 | 19.02 ppm (THF) |
| 44. | **1-Ru2c** | 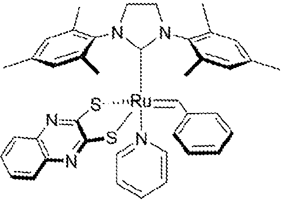 | C₄₁H₄₁N₅RuS₂ | 769.19 | 19.06 ppm (THF) |

### Example V

### Application of new stereoretentive ruthenium complexes

In the example applications of the new stereoretentive metathesis catalysts also the reference ruthenium catalysts **1-Ru0a, 1-Ru0b, 1-Ru0c** and the reference molybdenum catalysts **Mo1, Mo2, Mo3,** shown below, were used for comparison. Reference values described in the literature are shown for some of the results. The %Z and %E values indicate the percentage of a given isomer relative to both present in the product. Unless stated otherwise, all manipulations were carried out under an inert gas atmosphere with anhydrous and deoxygenated solvents and reagents. Gas chromatograph analyses were performed using the internal standard method.

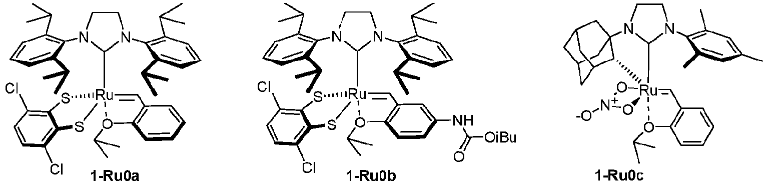

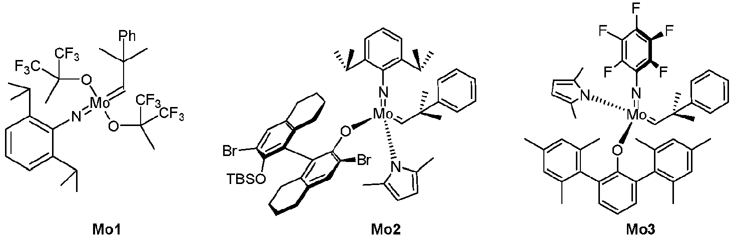

### Example VI

### Activity study of the new stereoretentive ruthenium complexes in the cross-metathesis reaction of methyl oleate (OM)

A solution of methyl oleate (1.0 equiv.) in THF, a solution of tetradecane (0.1 equiv.) in THF and a solution of **1-Ru0a, 1-Ru1a, 1-Ru1c, 1-Ru1m, 1-Ru1n, 1-Ru1x** catalyst (0.001 equiv.) in THF were introduced into a vial equipped with a stirring element so that the concentration of methyl oleate in the mixture was 0.1 M. The reactions were carried out at room temperature (RT) for 18 hours. The conversion and composition of the mixture were determined by gas chromatography. The results of the model reaction are shown in Table 2, where "OM" is methyl oleate, "9-ODE" is octadec-9-ene, "9-OKD" in this example is dimethyl octadec-9-enodiate.

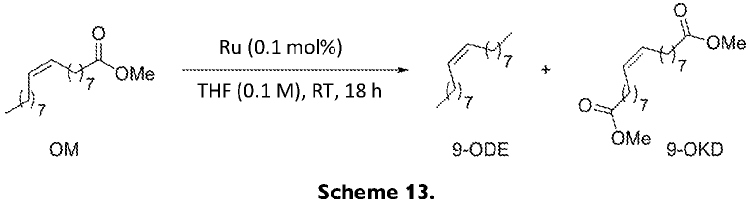

**Table 2. Comparison of model reaction results for selected ruthenium complexes**

| Catalyst | Conversion [%] | Z/E ratio after reaction | | |
|---|---|---|---|---|
| | | 9-ODE | OM | 9-OKD |
| **1-Ru0a** | 50 | >99/1 | >99/1 | >99/1 |
| **1-Ru1a** | 50 | >99/1 | >99/1 | >99/1 |
| **1-Ru1c** | 50 | 98/2 | >99/1 | >99/1 |
| **1-Ru1m** | 50 | >99/1 | >99/1 | >99/1 |
| **1-Ru1n** | 30 | >99/1 | >99/1 | >99/1 |
| **1-Ru1x** | 50 | >99/1 | >99/1 | >99/1 |

### Example VII

### Activity study of the new stereoretentive ruthenium complexes in the cross-metathesis reaction of methyl oleate (OM) at elevated temperature

A solution of methyl oleate (1.0 equiv.) in THF, a solution of tetradecane (0.1 equiv.) in THF and a solution of **1-Ru1a, 1-Ru1c, 1-Ru1n, 1-Ru1x** catalyst (0.0001 equiv.) in THF were introduced into a vial equipped with a stirring element so that the concentration of methyl oleate in the mixture was 0.1 M. The reactions were carried out at 60°C for 18 hours. The conversion and composition of the mixture were determined by gas chromatography. The reaction results are shown in Table 3, where "OM" is methyl oleate, "9-ODE" is octadec-9-ene, and "9-OKD" is dimethyl octadec-9-enodiate.

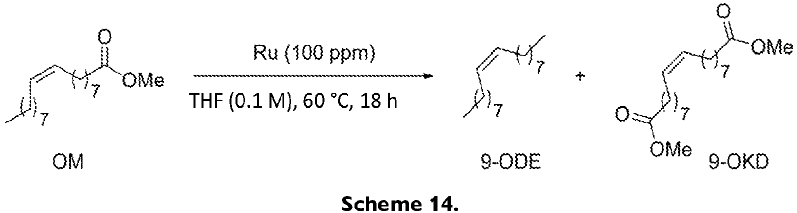

**Table 3. Comparison of model reaction results for selected ruthenium complexes**

| Catalyst | Conversion [%] | Z/E ratio after reaction | | |
|---|---|---|---|---|
| | | 9-ODE | OM | 9-OKD |
| **1-Ru1a** | 18 | 96/4 | >99/1 | >99/1 |
| **1-Ru1c** | 21 | 90/10 | >99/1 | >99/1 |
| **1-Ru1n** | 13 | 98/2 | >99/1 | >99/1 |
| **1-Ru1x** | 36 | 76/24 | 74/26 | 76/24 |

### Example VIII

### Study of the effect of addition of zinc derivative and other metals on the activity and selectivity of new stereoretentive ruthenium complexes in the cross-metathesis reaction of methyl oleate (OM)

A solution of methyl oleate (1.0 equiv.) in THF, a solution of tetradecane (0.1 equiv.) in THF, a solution of catalyst **1-Ru1c** (0.0002 equiv.) in THF and **3-Zn1** (0.0-1.0 equiv.) was introduced into a vial equipped with a stirring element so that the concentration of methyl oleate in the reaction mixture was 0.1 M. The reactions were carried out at 60°C for 18 hours. The conversion and composition of the mixture were determined by gas chromatography. The results of the reactions are shown in Table 4, where "OM" is methyl oleate, "9-ODE" is octadec-9-ene, "9-OKD" is dimethyl octadec-9-enodiate

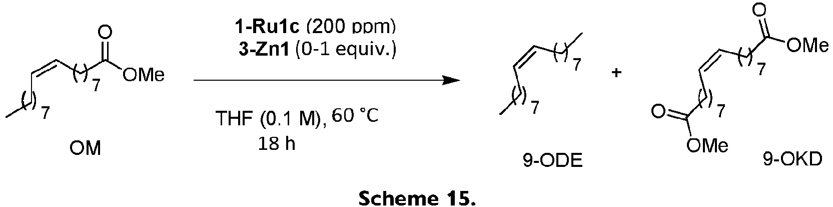

**Table 4. Effect of zinc complex addition on the course of the model reaction**

| Number of **3-Zn1** equivalents per **1-Ru1c** | Conversion [%] | Z/E ratio after reaction | | |
|---|---|---|---|---|
| | | 9-ODE | OM | 9-OKD |
| 1 | 19 | 98/2 | 95/5 | 97/3 |
| 0.5 | 21 | 98/2 | 95/5 | 96/4 |
| 0.25 | 22 | 96/4 | 94/6 | 94/6 |
| 0 | 24 | 88/12 | 88/12 | 82/18 |

### Example IX

### Activity study of the new stereoretentive ruthenium complexes in the cross-metathesis reaction of allylbenzene with (Z)-1,4-diacetoxybut-2-ene

A solution of allylbenzene (1.0 equiv.) in THF, a solution of (Z)-1,4-diacetoxybut-2-ene (2.0 equiv.) in THF, a solution of tetradecane (0.1 equiv.) in THF, a solution of catalyst **1-Ru0a, 1-Ru1a, 1-Ru1c, 1-Ru1m** or **1-Ru1x** (0.05 equiv.) in THF were introduced into a vial equipped with a stirring element so that the concentration of allylbenzene in the mixture was 0.237 M. The reactions were carried out at room temperature for 4 hours. The conversion and composition of the mixture were determined by gas chromatography. The results of the reactions are shown in Table 5.

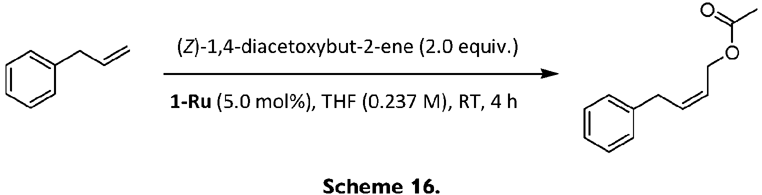

**Table 5. Comparison of model reaction results for selected ruthenium complexes**

| Catalyst | Conversion [%] | Z/E ratio in the product |
|---|---|---|
| **1-Ru0a** | 52 | 98/2 |
| **1-Ru1a** | 49 | 98/2 |
| **1-Ru1c** | 46 | 97/3 |
| **1-Ru1m** | 27 | >99/1 |
| **1-Ru1x** | 32 | >99/1 |
| **1-Ru0b^{a}** | 55 | 97/3 |

| | | |
|---|---|---|
| ^{[a]} Literature result [A. Dumas, D. S. Müller, I. Curbet, L. Toupet, M. Rouen, O. Baslé, M. Mauduit, Organometallics 2018, 37, 829-834] | | |

### Example X

### Activity study of the new stereoretentive ruthenium complexes in the cross-metathesis reaction of allylbenzene with (Z)-but-2-en-1,4-diol

A solution of allylbenzene (1.0 equiv.) in THF, a solution of (Z)-but-2-ene-1,4-diol (2.0 equiv.) in THF, a solution of tetradecane (0, 1 equiv.) in THF, a solution of catalyst **1-Ru0a, 1-Ru1a, 1-Ru1c, 1-Ru1m or 1-Ru1x** (0.05 equiv.) in THF were introduced into a vial equipped with a stirring element so that the concentration of allylbenzene in the mixture was 0.237 M. The reactions were carried out at room temperature for 4 hours. The conversion and composition of the mixture were determined by gas chromatography (GC). The results of the model reaction are summarized in Table 6.

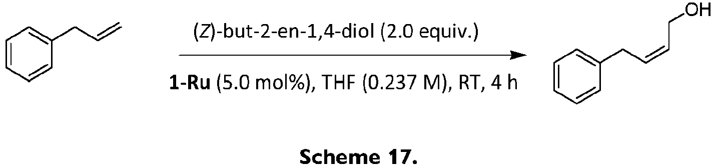

**Table 6. Comparison of model reaction results for selected ruthenium complexes**

| Catalyst | Conversion [%] | Z/E ratio in the product |
|---|---|---|
| **1-Ru0a** | 56 | 98/2 |
| **1-Ru1a** | 42 | 98/2 |
| **1-Ru1c** | 47 | 79/21 |
| **1-Ru1m** | 29 | 98/2 |
| **1-Ru1x** | 34 | >99/1 |
| **1-Ru0b^{[a]}** | 78 | 98/2 |

| | | |
|---|---|---|
| ^{[a]} Literature result [A. Dumas, D. S. Müller, I. Curbet, L. Toupet, M. Rouen, O. Baslé, M. Mauduit, Organometallics 2018, 37, 829-834] | | |

### Example XI

### Activity study of the new stereoretentive ruthenium complexes in the cross-metathesis reaction of methyl elaidinate (EM)

A solution of methyl elaidinate (1.0 equiv.) in THF, a solution of tetradecane (0.1 equiv.) in THF and a solution of catalyst **1-Ru0a, 1-Ru1a, 1-Ru1c, 1-Ru1m or 1-Ru1x** (0.075 equiv.) in THF were introduced into a vial equipped with a stirring element so that the concentration of methyl elaidinate in the mixture was 0.42 M. The reactions were carried out at room temperature for 20 hours. The conversion and composition of the mixture were determined by gas chromatography. The results of the model reaction are shown in Table 7, where "EM" is methyl elaidinate,"9-ODE" is octadec-9-ene, and "9-OKD" is dimethyl octadec-9-enodiate.

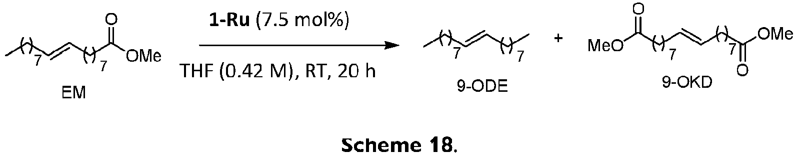

**Table 7. Comparison of model reaction results for selected ruthenium complexes**

| Catalyst | Conversion [%] | E/Z ratio after reaction | | |
|---|---|---|---|---|
| | | 9-ODE | OM | 9-OKD |
| **1-Ru0a** | 50 | 84/16 | 89/11 | 86/14 |
| **1-Ru1a** | 50 | 95/5 | 94/6 | 95/5 |
| **1-Ru1c** | 50 | 95/5 | 94/6 | 91/9 |
| **1-Ru1m** | 50 | 82/18 | 82/18 | 79/21 |
| **1-Ru1x** | 50 | 94/6 | 93/7 | 88/12 |

### Example XII

### Activity study of the new stereoretentive ruthenium complexes in the cross-metathesis reaction of dec-9-en-1-ol acetate and (Z)-hex-3-ene. Synthesis of (Z)-dodec-9-en-1-ol acetate, the insect sex pheromone of the moth Eupoecilia ambiguella

A solution of dec-9-en-1-ol (1.0 equiv.) in THF, a solution of (Z)-hex-3-ene (2.0 equiv.) in THF, a solution of tetradecane (0, 1 equiv.) in THF, and a solution of catalyst **1-Ru0a, 1-Ru1a, 1-Ru1c, 1-Ru1m, 1-Ru1t** or **1-Ru1x** (0.05 equiv.) in THF were introduced into a vial equipped with a stirring element so that the concentration of dec-9-en-1-ol in the mixture was 0.237 M. The reactions were carried out at room temperature for 20 hours. The conversion and composition of the mixture were determined by gas chromatography. The results of the model reaction are shown in Table 8.

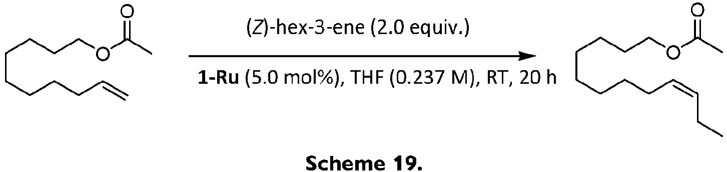

**Table 8. Comparison of model reaction results for selected ruthenium complexes**

| Catalyst | Conversion [%] | Z/E ratio in the product |
|---|---|---|
| **1-Ru0a** | 97 | 87/13 |
| **1-Ru1a** | 91 | 81/19 |
| **1-Ru1c** | 95 | 41/59 |
| **1-Ru1m** | 84 | 82/18 |
| **1-Ru1t** | 63 | 96/4 |
| **1-Ru1x** | 89 | 90/10 |

### Example XIII

### Activity study of the new stereoretentive ruthenium complexes in the ring-closing metathesis reaction of (Z)-6-nonenyl oleate

(Z)-6-nonenyl oleate (1.0 equiv.), 2.5 mL PAO6, and an appropriate amount of catalyst **1-Ru1a** or **1-Ru0a** were introduced into a reaction vessel equipped with a stirring element. The vessel was equipped with a Hickman distillation adapter, then connected to a diffusion pump (nominal pressure was 1x10⁻⁶ mbar) and placed in a heating bath. The reaction was carried out for 8 hours at 110°C. After the reaction was completed, the distillate was purified on a column chromatography (SiO₂, using n-hexane followed by ethyl acetate as eluents). The fractions collected with ethyl acetate were combined and then concentrated on a rotary evaporator. As a result, a pure product was obtained, in which the Z-isomer content was determined by gas chromatography. The results of the model reaction are shown in Table 9.

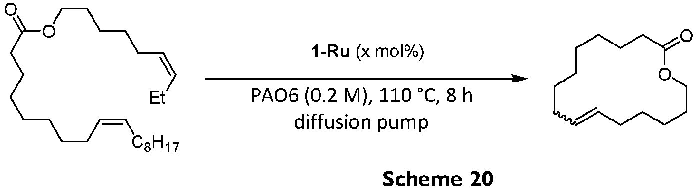

**Table 9. Effect of the amount of ruthenium complex on the course of the model reaction**

| Catalyst amount | Catalyst | Yield [%] | Z/E ratio in the product |
|---|---|---|---|
| 10 mol% | **1-Ru0a** | 52% | 58/42 |
| 10 mol% | **1-Ru1a** | 84% | 93/7 |
| 1.0 mol% | **1-Ru1a** | 76% | 96/4 |
| 0.5 mol% | **1-Ru1a** | 78% | 98/2 |

### Example XIV

### Activity study of the new stereoretentive ruthenium complexes in the reaction to obtain civetone by ring-closure metathesis (RCM) reaction

Substrate (1.0 equiv.), 2.5 mL PAO6, and the appropriate **1-Ru1a or 1-Ru0a** catalyst amount were introduced into the reaction vessel. The vessel was equipped with a Hickman distillation adapter, then connected to a diffusion pump (nominal pressure was 1x10⁻⁶ mbar) and placed in a heating bath. The reaction was carried out for 8 hours at 110°C. After the reaction was completed, the distillate was purified on a column chromatography (SiO₂, using n-hexane followed by ethyl acetate as eluents). The fractions collected with ethyl acetate were combined and then concentrated on a rotary evaporator. As a result, a pure product was obtained, in which the content of the Z-isomer was determined by gas chromatography. The results of the model reaction are shown in Table 10.

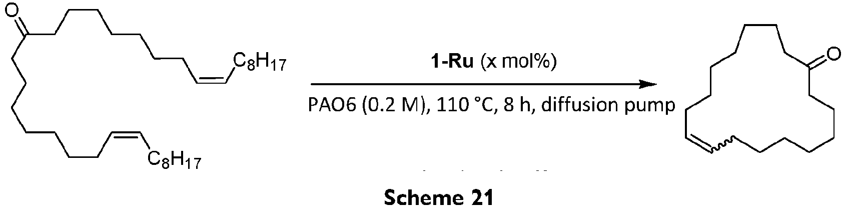

**Table 10. Comparison of model reaction results for selected ruthenium complexes**

| Catalyst amount | Temperature | Catalyst | Yield [%] | Z/E ratio in the product |
|---|---|---|---|---|
| 1.0 mol% | 110°C | **1-Ru1a** | 54% | 96/4 |
| 0.5 mol% | 110°C | **1-Ru1a** | 54% | 98/2 |
| 0.5 mol% | 110°C | **1-Ru0a** | 13% | 83/17 |
| 0.5 mol% | 130°C | **1-Ru1a** | 45% | 96/4 |
| 0.5 mol% | 150°C | **1-Ru1a** | 27% | 96/4 |

The results shown in **Example XIII** and **Example XIV** indicate that the representative for the state of the art stereoretentive thiocatechol complex **1-Ru0a** does not yield satisfactory results in the synthesis of macrocyclic lactones and ketones at elevated temperature, while the complexes that are the subject matter of the invention show much higher stereoselectivity and/or yield under the same conditions.

### Example XV

### Study of the Z-selective molybdenum complex activities in the ring-closure metathesis reaction of (Z)-6-nonenyl oleate

Substrate (1.0 equiv.), 2.5 mL PAO6, and catalyst **Mo1, Mo2 or Mo3** in tablet form were introduced into the reaction vessel. The vessel was equipped with a Hickman distillation adapter, then connected to a diffusion pump (nominal pressure was 1x10⁻⁶ mbar) and placed in a heating bath. The reactions were carried out for 8 hours at 110°C. After the reaction was completed, the distillate was purified on a column chromatography (SiO₂, using n-hexane followed by ethyl acetate as eluents). The fractions collected with ethyl acetate were combined and then concentrated on a rotary evaporator. As a result, a pure product was obtained, in which the content of the Z-isomer was determined by gas chromatography. The results of the model reaction are shown in Table 11.

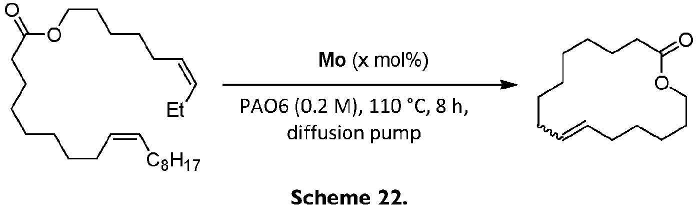

**Table 11. Comparison of model reaction results for selected ruthenium complexes**

| Catalyst | Catalyst amount | Yield [%] | Z/E ratio in the product |
|---|---|---|---|
| **Mo1** | 2.6 mol% | 92% | 18/82 |
| **Mo2** | 1.9 mol% | 93% | 30/70 |
| **Mo3** | 2.4 mol% | 87% | 26/74 |

As expected, the non-stereoselective **Mo1** complex yielded the E/Z ratio typical of standard molybdenum complexes. In contrast, the Z-selective **Mo2** complex unexpectedly did not show the expected Z-selectivity. Similarly, in the case of another representative for the state of the art Z-selective **Mo3** complex, the obtaining of an excess Z-isomer also did not occur. The above results indicate that the cited method for the synthesis of macrocyclic lactones at elevated temperature is incompatible with representative Z-selective alkylidene molybdenum complexes, while the complexes that are the subject matter of the invention show high stereoselectivity under the same conditions.

### Example XVI

### Activity study of the Z-selective ruthenium complex in the ring-closure metathesis reaction of (Z)-6-nonenyl oleate

Substrate (1.0 equiv.), 2.5 mL PAO6, and catalyst were introduced into the reaction vessel. The vessel was equipped with a Hickman distillation adapter, then connected to a diffusion pump (nominal pressure was 1x10⁻⁶ mbar) and placed in a heating bath. The reaction was carried out for 8 hours at 110°C. After the reaction was completed, the distillate was purified on a column chromatography (SiO₂, hexane then ethyl acetate). The fractions collected with ethyl acetate were combined and then concentrated on a rotary evaporator. As a result, a pure product was obtained, in which the Z-isomer content was determined by gas chromatography. The results of the model reaction are shown in Table 12.

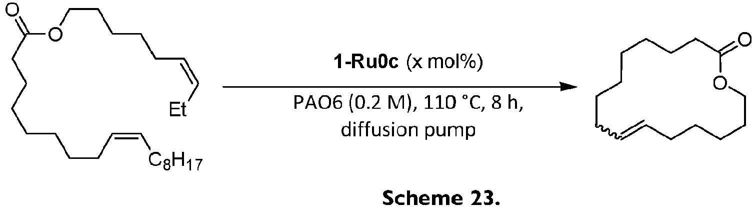

**Table 12. Comparison of results of model reaction carried out at different temperatures for different 1-Ru0c catalyst loadings**

| **1-Ru0c** catalyst amount [mol%] | Temperature | Yield [%] | Z/E ratio in the product |
|---|---|---|---|
| 0.5 | 110 | 0 | - |
| 0.5 | 40→110 | 0 | - |
| 10 | 110 | 0 | - |

The results shown in **Example XVI** indicate that the representative for the state of the art Z-selective **1-Ru0c** complex does not give satisfactory results in the synthesis of macrocyclic lactones at elevated temperature.

### Example XV

### Activity study of the new stereoretentive ruthenium complexes in the reaction to obtain macrocyclic compounds by ring-closure metathesis (RCM) reaction

Substrate (1.0 equiv.), 2.5 mL PAO6, and the corresponding **1-Ru1a** catalyst amount were introduced into the reaction vessel. The vessel was equipped with a Hickman distillation adapter, then connected to a diffusion pump (nominal pressure was 1x10⁻⁶ mbar) and placed in a heating bath. The reaction was carried out for 8 hours at 110°C. After the reaction was completed, the distillate was purified on a column chromatography (SiO₂, using n-hexane followed by ethyl acetate as eluents). The fractions collected with ethyl acetate were combined and then concentrated on a rotary evaporator. As a result, a pure product was obtained, in which the Z-isomer content was determined by gas chromatography. The results of the model reaction are shown in Scheme 24.

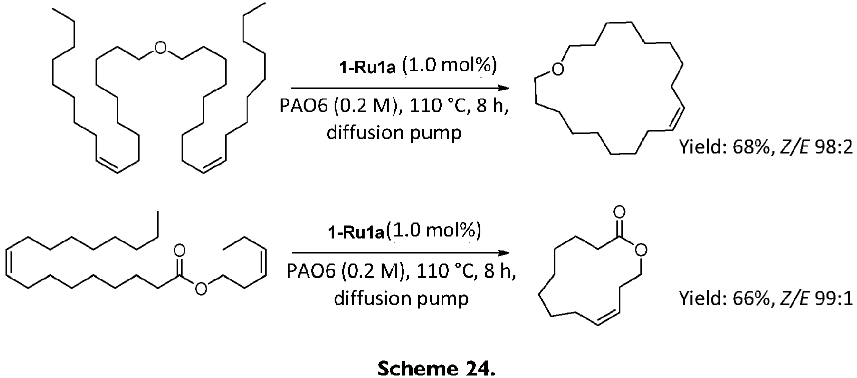

### Example XVI

### Activity study of the new stereoretentive ruthenium complexes in the cross-metathesis reaction of terminal olefins or internal olefins of Z-configuration with internal symmetric olefins of Z-configuration

A solution of terminal olefin or internal olefin of Z-configuration (1.0 equiv.) in THF and a solution of symmetric internal olefin of Z-configuration (2.0 equiv.) in THF was introduced into a vial equipped with a stirring element so that the concentration of terminal olefin in the mixture was 0.2 M. A solution of **1-Ru0a, 1-Ru1a** (0.02 equiv.) catalyst in THF was added to the mixture, or a solution of **1-Ru0a, 1-Ru1a** (0.04 equiv.) catalyst in THF was added in two portions (the second portion was added one hour after the start of the reaction). The reactions were carried out at room temperature for 2 hours. The composition of the mixture was determined by **NMR** spectroscopy. The results of the model reaction are shown in Scheme 25.

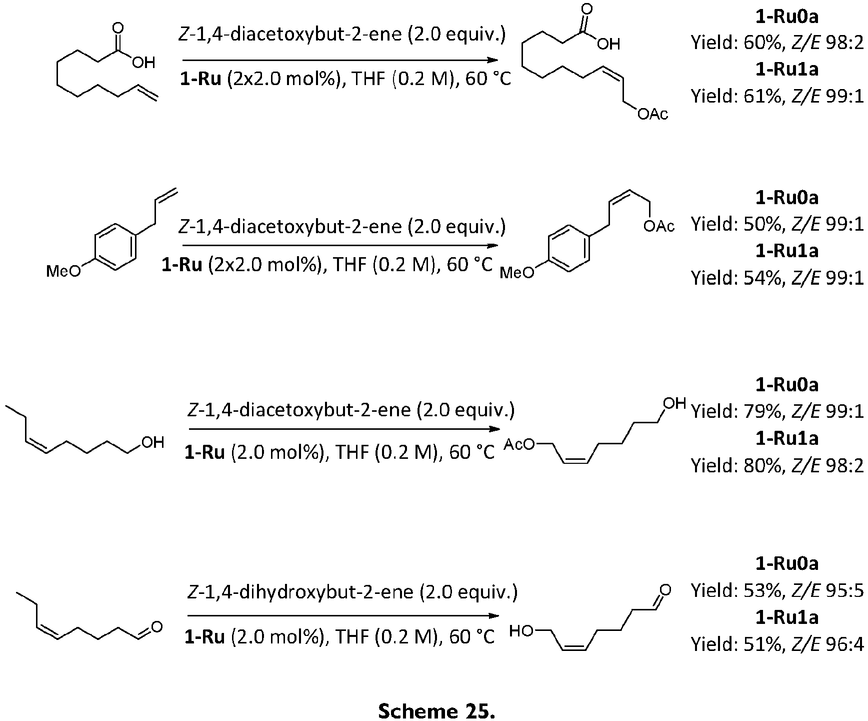

### Literature

[1] J. Lin, P. Wang, Z. Zhang, G. Xue, D. Zha, J. Wang, X. Xu, Z. Li, Synth. Commun. 2020, 50, 823-830.
[2] O. O. Ajani, C. A. Obafemi, C. O. Ikpo, K. O. Ogunniran, O. C. Nwinyi, Chem. Heterocycl. Compd. 2009, 45, 1370-1378.
[3] R. Beldi, K. F. Atta, S. Aboul-Ela, E. S. H. El Ashry, J. Heterocycl. Chem. 2011, 48, 50-56.
[4] Ya. Z. Voloshin, A. S. Belov, A. Yu. Lebedev, O. A. Varzatskii, M. Yu. Antipin, Z. A. Starikova, T. E. Kron, Russ. Chem. Bull. 2004, 53, 1218-1222.
[5] S. Henfling, R. Kempt, J. Klose, A. Kuc, B. Kersting, H. Krautscheid, Inorg. Chem. 2020, 59, 16441-16453.
[6] A. Dumas, D. S. Müller, I. Curbet, L. Toupet, M. Rouen, O. Baslé, M. Mauduit, Organometallics 2018, 37, 829-834.

## Claims

1. Ruthenium complex of formula **1-Ru** 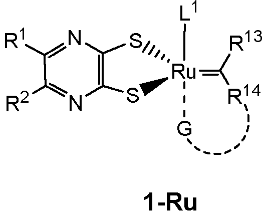 in which:
L¹ is a neutral ligand selected from N-heterocyclic carbenes (NHCs), cyclic alkylaminocarbene (CAAC) or phosphines;
R¹ and R² are independently hydrogen, halogen, C₁-C₂₅ alkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl or C₅-C₂₄ heteroaryloxy, which are optionally substituted by at least one C₁-C₁₂ alkyl, C₁-C₁₂ perfluoroalkyl, or R¹ and R² are independently alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups to form a quaternary ammonium group, a tertiary sulfonium group, or a quaternary phosphonium group;
or R¹ and R², taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, halogen, C₁-C₂₅ alkyl group, C₁-C₁₂ perfluoroalkyl group, C₁-C₁₂ alkoxy group, C₅-C₂₄ aryloxy group, C₅-C₂₀ heteroaryloxy group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two R" groups, taken together, form C₅-C₂₅ ring, which alternatively may contain at least one heteroatom selected from oxygen, sulfur, selenium, nitrogen, phosphorus;
R¹³ and R¹⁴ are independently hydrogen, halogen, optionally substituted C₁-C₂₅ alkyl, optionally substituted C₃-C₂₅ cycloalkyl, optionally substituted C₁-C₁₂ perfluoroalkyl, optionally substituted C₂-C₂₅ alkene, optionally substituted C₂-C₂₅ alkenyl, optionally substituted C₃-C₂₅ cycloalkenyl, optionally substituted C₂-C₂₅ alkynyl, optionally substituted C₃-C₂₅ cycloalkynyl, optionally substituted C₁-C₂₅ alkoxy, optionally substituted C₅-C₂₅ aryl, optionally substituted C₅-C₂₅ aryloxy, optionally substituted C₆-C₂₅ aralkyl, optionally substituted C₅-C₂₅ heteroaryl, optionally substituted C₅-C₂₅ heteroaryloxy, optionally substituted C₅-C₂₅ perfluoroaryl, 3-12-membered heterocycle containing sulfur, oxygen, nitrogen, selenium or phosphorus, optionally substituted;
wherein the R¹³ and R¹⁴ substituents, taken together, may form a ring selected from a group comprising C₃-C₂₅ cycloalkyl, C₃-C₂₅ cycloalkenyl, C₃-C₂₅ cycloalkynyl, C₅-C₂₅ aryl, C₅-C₂₅ heteroaryl, C₅-C₂₅ perfluoroaryl, 3-12-membered heterocycle containing sulfur, oxygen, nitrogen, selenium or phosphorus, optionally substituted with one and/or more substituents independently selected from a group comprising hydrogen, halogen, C₁-C₂₅ alkyl, C₃-C₂₅ cycloalkyl, C₁-C₁₂ perfluoroalkyl, C₂-C₂₅ alkene, C₂-C₂₅ alkenyl, C₃-C₂₅ cycloalkenyl, C₂-C₂₅ alkynyl, C₃-C₂₅ cycloalkynyl, C₁-C₂₅ alkoxy, C₅-C₂₅ aryl, C₅-C₂₅ aryloxy, C₆-C₂₅ arylalkyl, C₅-C₂₅ heteroaryl, C₅-C₂₅ heteroaryloxy, C₅-C₂₅ perfluoroaryl, 3-12-membered heterocycle;
G is selected from
- L² ligand 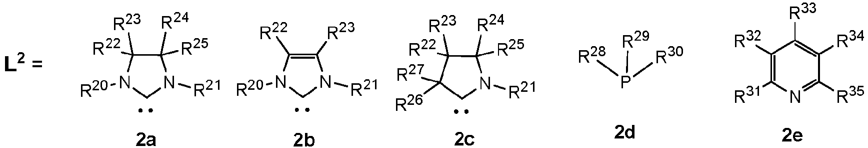
in which the R²⁰ and R²¹ substituents are independently C₁-C₁₂ alkyl group, C₃-C₁₂ cycloalkyl group, C₅-C₂₀ aryl group, or C₅-C₂₀ heteroaryl group, C₅-C₂₅ aralkyl group, which may be substituted independently by one and/or more substituents selected from a group comprising hydrogen, halogen, C₁-C₁₂ alkyl, C₁-C₁₂ perfluoroalkyl, C₅-C₂₀ aryl, C₅-C₂₀ perfluoroaryl, C₅-C₂₀ heteroaryl, C₁-C₁₂ alkoxy, C₅-C₂₄ aryloxy, C₅-C₂₀ heteroaryloxy, alkoxy (-OR"), sulfide (-SR"), amine (-NR"₂) group, in which the R" group independently is hydrogen, C₁-C₅ alkyl, C₆-C₂₄ aryl, C₇-C₂₄ aralkyl, alternatively R²⁰ and R²¹, taken together, form C₅-C₂₅ ring;
each R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a}₂), in which each R^{a} is independently either hydrogen or C₁-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-COR^{d}) group, methylester group (-CH₂OCOR^{b}), in which R^{b} is either C₅-C₂₀ aryl group or C₅-C₂₀ perfluoroaryl group; amine group (-NR^{c}₂), methylamine group (-CH₂NR^{c}₂), in which each R^{c} is independently either hydrogen or C₁-C₁₂ alkyl, the two R^{c} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
which can be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted with C₁-C₁₂ alkyl group, ester group (-COOR^{d}) or (-COR^{d}) group, in which R^{d} is C₅-C₂₀ aryl group or C₅-C₂₀ perfluoroaryl group, or amine group (-NR^{e}₂) in which each R^{e} is independently hydrogen or C₁-C₁₂ alkyl, the two R^{e} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group, and R²⁰, R²¹, R²², R²³, R²⁴, R²⁵, R²⁶, and R²⁷ substituents may optionally be interconnected to form cyclic C₄-C₁₀ system or polycyclic C₄-C₁₂ system;
each R²⁸, R²⁹, and R³⁰ substituent is independently C₁-C₂₅ alkyl, C₃-C₁₂ cycloalkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R²⁸, R²⁹, R³⁰, taken together, form a substituted or unsubstituted cyclic C₄-C₁₀, polycyclic C₄-C₁₂, aromatic C₄-C₁₀, heteroaromatic C₄-C₁₀ system which may be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy and halogen;
each R³¹, R³², R³³, R³⁴ and R³⁵ substituent is independently C₁-C₁₂ alkyl group, C₃-C₁₂ cycloalkyl group, C₅-C₂₀ aryl group or C₅-C₂₀ heteroaryl group, which may be substituted independently by one and/or more substituents selected from a group comprising hydrogen, C₁-C₁₂ alkyl group, C₁-C₁₂ perfluoroalkyl group, C₁-C₁₂ alkoxy group, C₅-C₂₄ aryloxy group, C₅-C₂₀ heteroaryloxy group, or halogen;
or
- heteroatom 1
selected from a group comprising oxygen, sulfur, selenium, substituted by a group selected from hydrogen, halogen, oxygen, C₁-C₂₅ alkyl, C₁-C₂₅ perfluoroalkyl, C₃-C₂₅ cycloalkyl, Cs-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, optionally substituted by acyl (-COR'), cyano (-CN), carboxyl (-COOH), ester (-COOR'), ester (-CH₂COOR'), ester (-CHR'COOR'), ester (-C(R')₂COOR'), amide (-CONR'₂), Weinreb-type amide (-CON(R')(OR')), sulfonic (-SO₂R'), formyl (-COH), sulfonamide (-SO₂NR'₂), ketone (-COR'), thioamide (-CSNR'₂), thioketone (-CSR'), thionoester (-CSOR'), thioester (-COSR'), dithioester (-CS₂R') group, in which R' group is independently C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl, C₅-C₂₄ heteroaryloxy and then the dashed line represents a direct binding of the heteroatom to the R¹⁴ substituent or represents the connection of the R¹⁴ substituent to the heteroatom via a -CH₂-, -CHR'-, or CR'₂- methylene bridge, wherein the R¹⁴ substituent is C₅-C₁₅ aryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl; or
- heteroatom 2
selected from a group comprising either nitrogen or phosphorus, substituted by a group selected from hydrogen, methylidene optionally substituted by an R' substituent, C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, acyl group (-COR'), ester group (-COOR'), tert-butyloxycarbonyl group (t-Boc) or 9-fluorenylmethoxycarbonyl group (Fmoc), carbamate group (-CONR'₂), sulfonic group (-SO₂R'), formyl group (-COH), in which the R' group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy optionally substituted by acyl group (-COR"), cyano (-CN), carboxyl (-COOH), ester (-COOR"), ester (-CH₂COOR"), ester (-CHR"COOR"), ester (-C(R")₂COOR"), amide (-CONR"₂), sulfonic (-SO₂R"), formyl (-COH), sulfonamide (-SO₂NR"₂), ketone (-COR"), thioamide (-CSNR"₂), thioketone (-CSR"), thionoester (-CSOR"), thioester (-COSR"), dithioester (-CS₂R") group, in which the R" group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl, or C₅-C₂₄ heteroaryloxy and then the dashed line represents a direct binding of the heteroatom to the R¹⁴ substituent or represents the connection of the R¹⁴ substituent to the heteroatom via a (CH₂)-, - (CHR')-, or (CR'₂)- methylene bridge; wherein the R¹⁴ substituent is C₅-C₁₅ aryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄aryl, C₇-C₂₄aralkyl, C₅-C₂₄ perfluoroaryl, or
- heteroatom 3
selected from a group comprising a halogen, and then the dashed line represents a direct binding of the heteroatom to the R¹⁴ substituent, wherein the R¹⁴ substituent is C₅-C₁₅ aryl, or C₅-C₂₅ polyaryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₅-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which R" group is C₁-C₅ alkyl, C₁-C₅ perfluoroalkyl, C₆-C₂₄ aryl, C₇-C₂₄ aralkyl, C₅-C₂₄ perfluoroaryl.

2. The ruthenium complex according to claim 1, wherein the R¹³ and R¹⁴ substituents are independently hydrogen and/or C₅-C₂₅ aryl independently substituted with hydrogen, halogen, C₁-C₂₅ alkyl group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group independently is hydrogen, C₁-C₅ alkyl, C₁-C₅ perfluoroalkyl, C₆-C₂₄ aryl, C₇-C₂₄ aralkyl, C₅-C₂₄ perfluoroaryl, the two R" groups, taken together, may form either C₃-C₁₂ cycloalkyl ring or C₃-C₂₅ heterocycloalkyl ring containing nitrogen, oxygen or sulfur, optionally additionally substituted with C₁-C₁₂ alkyl group, alternatively R" is a ketone group (-COR^{c}) in which R^{c} is C₁-C₁₂ perfluoroalkyl or alkoxy group (-OR^{d}) in which R^{d} is C₁-C₁₂ alkyl or C₃-C₁₂ heterocycloalkyl containing nitrogen, oxygen or sulfur optionally additionally substituted with C₁-C₁₂ alkyl group;

3. The ruthenium complex according to claim 1 or 2,
in which the neutral L¹ ligand has a structure represented by a general formula selected from 2a, **2b, 2c** or **2d** 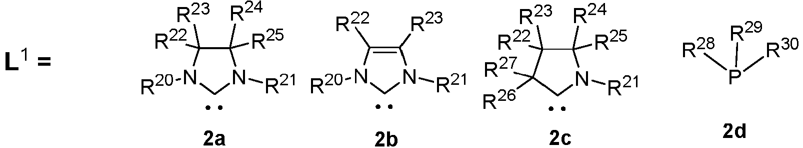 in which:
each R²⁰ and R²¹ substituent is independently C₁-C₁₂ alkyl group, C₃-C₁₂ cycloalkyl group, C₅-C₂₀ aryl group, or C₅-C₂₀ heteroaryl group, which may be substituted independently by one and/or more substituents selected from a group comprising hydrogen, C₁-C₁₂ alkyl group, C₁-C₁₂ perfluoroalkyl group, C₅-C₂₀ aryl group, C₅-C₂₀ perfluoroaryl group, C₅-C₂₀ heteroaryl group, C₁-C₁₂ alkoxy group, C₅-C₂₄ aryloxy group, C₅-C₂₀ heteroaryloxy group, or halogen, alkoxy group (-OR"), sulfide group (-SR"), halogen, amino group (-NR"₂), in which the R" group independently is hydrogen, C₁-C₅ alkyl, C₆-C₂₄ aryl, C₇-C₂₄ aralkyl, alternatively R²⁰ and R²¹, taken together, form ring C₅-C₂₅ group;
each R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a}₂), in which each R^{a} is independently either hydrogen or C₁-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-COR^{d}) group, methylester group (-CH₂OCOR^{b}), in which R^{b} is either C₅-C₂₀ aryl group or C₅-C₂₀ perfluoroaryl group; amine group (-NR^{c}₂), methylamine group (-CH₂NR^{c}₂), in which each R^{c} is independently either hydrogen or C₁-C₁₂ alkyl, the two R^{c} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
which may be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted with C₁-C₁₂ alkyl group, ester group (-COOR^{d}) or (-COR^{d}) group, in which R^{d} is C₅-C₂₀ aryl group or C₅-C₂₀ perfluoroaryl group, or amine group (-NR^{e}₂) in which each R^{d} is independently hydrogen or C₁-C₁₂ alkyl, the two R^{e} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group, and R²⁰, R²¹, R²², R²³, R²⁴, R²⁵, R²⁶, and R²⁷ substituents may optionally be interconnected to form cyclic C₄-C₁₀ system or polycyclic C₄-C₁₂ system;
R²⁸, R²⁹ and R³⁰ independently are C₁-C₂₅ alkyl, C₃-C₁₂ cycloalkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl or C₅-C₂₄ heteroaryloxy, which are optionally substituted by at least one C₁-C₁₂ alkyl or C₁-C₁₂ perfluoroalkyl, or R¹ and R², taken together, form a substituted or unsubstituted cyclic C₄-C₁₀, polycyclic C₄-C₁₂, aromatic C₄-C₁₀, heteroaromatic C₄-C₁₀ system which can be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy and halogen.

4. The ruthenium complex according to claim 1 or 2 or 3 represented by the formula **1a-Ru** 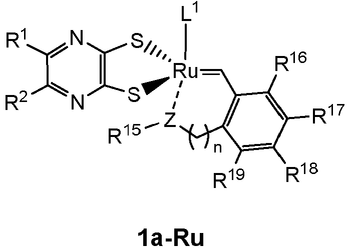 in which:
L¹ is a neutral ligand selected from N-heterocyclic carbenes (NHCs), cyclic alkylaminocarbene (CAAC), or phosphines;
'n' is 1 or 0
Z is selected from a group comprising halogen, O, S, Se, or NR" group, in which R" is methylidene, C₁-C₂₅ alkyl, C₁-C₂₅ perfluoroalkyl, C₃-C₂₅ cycloalkyl, C₅-C₂₀ alkoxy, C₃-C₂ aryl, C₃-C₂₀ perfluoroaryl, C₇-C₂₀ aralkyl, C₃-C₂₄ aryloxy, C₂-C₁₂ alkenyl, C₆-C₂₀ heteroaryl or C₅-C₂₄ heteroaryloxy, 3-12-membered heterocycle, acyl group (-COR'), ester group (-COOR'), tert-butyloxycarbonyl group (t-Boc) or 9-fluorenylmethoxycarbonyl group (Fmoc), carbamate group (-CONR'₂), sulfonic group (-SO₂R'), formyl group (-COH), in which the R' group is C₁-C₂₅ alkyl, C₁-C₂₅ perfluoroalkyl, C₃-C₂₅ cycloalkyl, C₅-C₂₀ alkoxy, C₅-C₂₀ aryl, C₃-C₂₀ perfluoroaryl, C₇-C₂₀ aralkyl,
C₃-C₂₄ aryloxy, C₂-C₁₂ alkenyl, C₆-C₂₀ heteroaryl or C₃-C₂₄ heteroaryloxy or halogen, wherein when Z is halogen, R¹⁵ does not exist;
R¹ and R² are independently hydrogen, halogen, C₁-C₂₅ alkyl, C₅-C₂₀ alkoxy, C₅-C₂₀ aryl, C₇-C₂₀ aralkyl, C₃-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R², taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, halogen, C₁-C₁₂ alkyl, C₁-C₁₂ perfluoroalkyl, C₁-C₁₂ alkoxy, C₃-C₂₄ aryloxy, C₃-C₂₀ heteroaryloxy, C₁-C₂₅ alkyl group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄aryl, C₇-C₂₄aralkyl, C₃-C₂₄ perfluoroaryl;
R¹⁵ is independently hydrogen, C₁-C₂₅ alkyl, C₁-C₂₅ cycloalkyl, C₅-C₂₀ alkoxy, C₅-C₂₀ aryl, C₃-C₂₄ aryloxy, -COOR‴ group, -CH₂COOR‴ group, -CONR‴₂ group, -CH₂CONR‴₂ group, -COR‴ group, -CH₂COR‴ group, -CON(OR‴)(R‴) group, -CH₂CON(OR‴)(R‴) group, or a halogen, wherein R‴ is C₄-C₁₂ alkyl, C₃-C₁₂ cycloalkyl, C₂-C₁₂ alkenyl, C₆-C₂₀ aryl, which are optionally substituted by at least one C₁-C₁₂ alkyl, C₁-C₁₂ perfluoroalkyl, C₁-C₁₂ alkoxy, C₆-C₂₄ aryloxy, or halogen;
R¹⁶, R¹⁷, R¹⁸, and R¹⁹ are independently hydrogen, halogen, C₁-C₂₅ alkyl group, C₂-C₂₅ alkenyl group, C₅-C₂₅ aryl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₃-C₂₄ perfluoroaryl, wherein R¹⁶, R¹⁷, R¹⁸, and R¹⁹ substituents, taken together, may form a substituted or unsubstituted cyclic C₄-C₁₀ or polycyclic C₄-C₁₂ system.

5. The ruthenium complex according to claim 1 or 2 or 3 with the formula **1b-Ru** 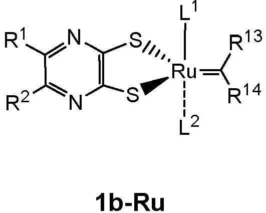 in which:
L¹ is a neutral ligand selected from *N*-heterocyclic carbenes (NHCs), cyclic alkylaminocarbene (CAAC) or PR₃ phosphines;
L² is a neutral ligand selected from *N*-heterocyclic carbenes (NHCs), cyclic alkylaminocarbene (CAAC), PR₃ phosphine derivatives or pyridine derivatives;
R¹ and R², are independently hydrogen, halogen, C₁-C₂₅ alkyl, C₅-C₂₀ alkoxy, C₅-C₂₀ aryl, C₇-C₂₀ aralkyl, C₃-C₂₄ aryloxy, C₂-C₁₂ alkenyl, C₆-C₂₀ heteroaryl or C₅-C₂₄ heteroaryloxy, which are optionally substituted by at least one C₁-C₁₂ alkyl or C₁-C₁₂ perfluoroalkyl, or R¹ and R², taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, halogen, C₁-C₂₅ alkyl group, C₁-C₁₂ perfluoroalkyl group, C₁-C₁₂ alkoxy group, C₃-C₂₄ aryloxy group, C₃-C₂₀ heteroaryloxy group, C₂-C₂₅ alkenyl group, alkoxy group (-OR"), sulfide group (-SR"), sulfoxide group (-S(O)R"), sulfonium group (-S⁺R"₂), sulfonyl group (-SO₂R'), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus; R¹³ and R¹⁴ are independently hydrogen, halogen, optionally substituted C₁-C₂₅ alkyl, optionally substituted C₃-C₂₅ cycloalkyl, optionally substituted C₁-C₁₂ perfluoroalkyl, optionally substituted C₂-C₂₅ alkene, optionally substituted C₂-C₂₅ alkenyl, optionally substituted C₃-C₂₅ cycloalkenyl, optionally substituted C₂-C₂₅ alkynyl, optionally substituted C₃-C₂₅ cycloalkynyl, optionally substituted C₁-C₂₅ alkoxy, optionally substituted C₅-C₂₅ aryl, optionally substituted C₅-C₂₅ aryloxy, optionally substituted C₆-C₂₅ arylalkyl, optionally substituted C₅-C₂₅ heteroaryl, optionally substituted C₅-C₂₅ heteroaryloxy, optionally substituted C₅-C₂₅ perfluoroaryl, 3-12-membered heterocycle containing sulfur, oxygen, nitrogen, selenium or phosphorus, optionally substituted;
wherein R¹³ and R¹⁴ substituents, taken together, may form a ring selected from a group comprising C₃-C₂₅ cycloalkyl, C₃-C₂₅ cycloalkenyl, C₃-C₂₅ cycloalkynyl, C₅-C₂₅ aryl, C₅-C₂₅ heteroaryl, C₅-C₂₅ perfluoroaryl, 3-12-membered heterocycle containing sulfur, oxygen, nitrogen, selenium, or phosphorus which may be substituted independently with one and/or more substituents selected from a group comprising hydrogen, halogen, C₁-C₂₅ alkyl, C₃-C₂₅ cycloalkyl, C₁-C₁₂ perfluoroalkyl, C₂-C₂₅ alkene, C₂-C₂₅ alkenyl, C₃-C₂₅ cycloalkenyl, C₂-C₂₅ alkynyl, C₃-C₂₅ cycloalkynyl, C₁-C₂₅ alkoxy, C₅-C₂₅ aryl, C₅-C₂₅ aryloxy, C₆-C₂₅ arylalkyl, C₅-C₂₅ heteroaryl, C₅-C₂₅ heteroaryloxy, C₅-C₂₅ perfluoroaryl, 3-12-membered heterocycle.

6. The ruthenium complex according to any of the claims 1 to 5 with the formula **1b-Ru** 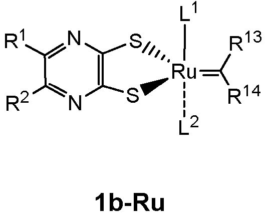 in which the L¹ ligand is 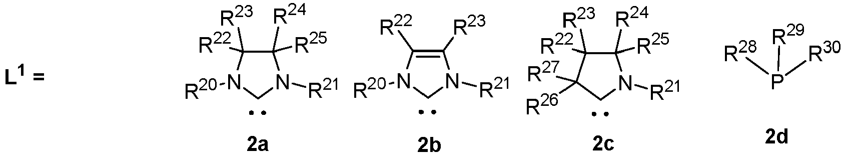 in which:
each R²⁰ and R²¹ substituent is independently C₁-C₁₂ alkyl group, C₃-C₁₂ cycloalkyl group, C₃-C₂₀ aryl group, or C₅-C₂₀ heteroaryl group, which may be substituted independently by one and/or more substituents selected from a group comprising hydrogen, C₁-C₁₂ alkyl group, C₁-C₁₂ perfluoroalkyl group, C₅-C₂₀ aryl group, C₃-C₂₀ perfluoroaryl group, C₅-C₂₀ heteroaryl group, C₁-C₁₂ alkoxy group, C₃-C₂₄ aryloxy group, C₃-C₂₀ heteroaryloxy group, or halogen, alkoxy group (-OR"), sulfide group (-SR"), halogen, amino group (-NR"₂), in which the R" group independently is hydrogen, C₁-C₅ alkyl, C₆-C₂₄ aryl, C₇-C₂₄ aralkyl, alternatively R²⁰ and R²¹, taken together, form ring C₅-C₂₅ group;
each R²⁰, R²¹, R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a}₂), in which each R^{a} is independently either hydrogen or C₄-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-COR^{d}) group, methylester group (-CH₂OCOR^{b}), in which R^{b} is either C₃-C₂₀ aryl group or C₃-C₂₀ perfluoroaryl group; amine group (-NR^{c}₂), methylamine group (-CH₂NR^{c} 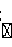 ₂), in which each R^{c} is independently either hydrogen or C₁-C₁₂ alkyl, the two R^{c} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
which may be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted with C₁-C₁₂ alkyl group, ester group (-COOR^{d}) or (-COR^{d}) group, in which R^{d} is C₅-C₂₀ aryl group or C₃-C₂₀ perfluoroaryl group, or amine group (-NR^{e}₂) in which each R^{d} is independently hydrogen or C₁-C₁₂ alkyl, the two R^{e} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group, and R²⁰, R²¹, R²², R²³, R²⁴, R²⁵, R²⁶, and R²⁷ substituents may optionally be interconnected to form cyclic C₄-C₁₀ system or polycyclic C₄-C₁₂ system;
R²⁸, R²⁹, and R³⁰ are independently C₁-C₂₅ alkyl, C₃-C₁₂ cycloalkyl, C₃-C₂₀ alkoxy, C₅-C₂₀ aryl, C₇-C₂₀ aralkyl, C₃-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R²⁸, R²⁹ and R³⁰, taken together, form a substituted or unsubstituted cyclic C₄-C₁₀, polycyclic C₄-C₁₂, aromatic C₄-C₁₀, heteroaromatic C₄-C₁₀ system which can be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₃-C₂₀ heteroaryloxy and halogen;
in which L² ligand is: 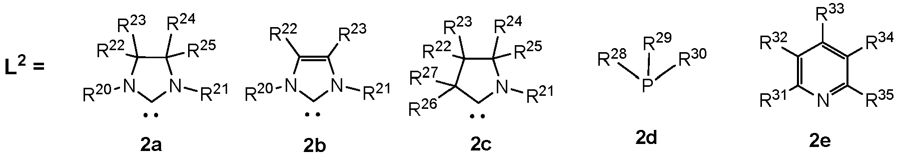 in which
each R²⁰ and R²¹ substituent is independently C₁-C₁₂ alkyl group, C₃-C₁₂ cycloalkyl group, C₃-C₂₀ aryl group, or C₅-C₂₀ heteroaryl group, which may be substituted independently by one and/or more substituents selected from a group comprising hydrogen, C₁-C₁₂ alkyl group, C₁-C₁₂ perfluoroalkyl group, C₅-C₂₀ aryl group, C₃-C₂₀ perfluoroaryl group, C₅-C₂₀ heteroaryl group, C₁-C₁₂ alkoxy group, C₃-C₂₄ aryloxy group, C₃-C₂₀ heteroaryloxy group, or halogen, alkoxy group (-OR"), sulfide group (-SR"), halogen, amino group (-NR"₂), in which the R" group independently is hydrogen, C₁-C₅ alkyl, C₆-C₂₄ aryl, C₇-C₂₄ aralkyl, alternatively R²⁰ and R²¹, taken together, form ring C₅-C₂₅ group;
each R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a}₂), in which each R^{a} is independently either hydrogen or C₁-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-COR^{d}) group, methylester group (-CH₂OCOR^{b}), in which R^{b} is either C₅-C₂₀ aryl group or C₅-C₂₀ perfluoroaryl group; amine group (-NR^{c}₂), methylamine group (-CH₂NR^{c}₂), in which each R^{c} is independently either hydrogen or C₁-C₁₂ alkyl, the two R^{c} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
which may be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted with C₁-C₁₂ alkyl group, ester group (-COOR^{d}) or (-COR^{d}) group, in which R^{d} is C₅-C₂₀ aryl group or C₃-C₂₀ perfluoroaryl group, or amine group (-NR^{e}₂) in which each R^{d} is independently hydrogen or C₁-C₁₂ alkyl, the two R^{e} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group, and R²⁰, R²¹, R²², R²³, R²⁴, R²⁵, R²⁶, and R²⁷ substituents may optionally be interconnected to form C₄-C₁₀ cyclic system or C₄-C₁₂ polycyclic system;
each R²⁸, R²⁹, and R³⁰ substituent is independently hydrogen, halogen, C₁-C₂₅ alkyl, C₃-C₁₂ cycloalkyl, C₅-C₂₀ alkoxy, C₅-C₂₀ aryl, C₇-C₂₀ aralkyl, C₃-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R²⁸, R²⁹ and R³⁰, taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, C₁-C₁₂ alkyl, C₁-C₁₂ perfluoroalkyl, C₁-C₁₂ alkoxy, C₃-C₂₄ aryloxy, C₅-C₂₀ heteroaryloxy, and halogen;
each R³¹, R³², R³³, R³⁴ and R³⁵ substituent is independently hydrogen, halogen, C₁-C₁₂ alkyl group, C₃-C₁₂ cycloalkyl group, C₃-C₂₀ aryl group or C₅-C₂₀ heteroaryl group, which can be substituted independently by one and/or more substituents selected from a group comprising hydrogen, C₁-C₁₂ alkyl group, C₁-C₁₂ perfluoroalkyl group, C₁-C₁₂ alkoxy group, C₃-C₂₄ aryloxy group, C₃-C₂₀ heteroaryloxy group, or halogen;
R¹³ and R¹⁴ are independently hydrogen, halogen, optionally substituted C₁-C₂₅ alkyl, optionally substituted C₃-C₂₅ cycloalkyl, optionally substituted C₁-C₁₂ perfluoroalkyl, optionally substituted C₂-C₂₅ alkene, optionally substituted C₂-C₂₅ alkenyl, optionally substituted C₃-C₂₅ cycloalkenyl, optionally substituted C₂-C₂₅ alkynyl, optionally substituted C₃-C₂₅ cycloalkynyl, optionally substituted C₁-C₂₅ alkoxy, optionally substituted C₅-C₂₅ aryl, optionally substituted C₅-C₂₅ aryloxy, optionally substituted C₆-C₂₅ arylalkyl, optionally substituted C₅-C₂₅ heteroaryl, optionally substituted C₅-C₂₅ heteroaryloxy, optionally substituted C₅-C₂₅ perfluoroaryl, 3-12-membered heterocycle containing sulfur, oxygen, nitrogen, selenium or phosphorus, optionally substituted;
wherein R¹³ and R¹⁴ substituents, taken together, may form a ring selected from a group comprising C₃-C₂₅ cycloalkyl, C₃-C₂₅ cycloalkenyl, C₃-C₂₅ cycloalkynyl, C₅-C₂₅ aryl, C₅-C₂₅ heteroaryl, C₅-C₂₅ perfluoroaryl, 3-12-membered heterocycle containing sulfur, oxygen, nitrogen, selenium or phosphorus which may be substituted independently with one and/or more substituents selected from a group comprising hydrogen, halogen, C₁-C₂₅ alkyl, C₃-C₂₅ cycloalkyl, C₁-C₁₂ perfluoroalkyl, C₂-C₂₅ alkene, C₂-C₂₅ alkenyl, C₃-C₂₅ cycloalkenyl, C₂-C₂₅ alkynyl, C₃-C₂₅ cycloalkynyl, C₁-C₂₅ alkoxy, C₅-C₂₅ aryl, C₅-C₂₅ aryloxy, C₆-C₂₅ arylalkyl, C₅-C₂₅ heteroaryl, C₅-C₂₅ heteroaryloxy, C₅-C₂₅ perfluoroaryl, 3-12-membered heterocycle.

7. The ruthenium complex according to any of the claims **1** to 6, **characterized in that** its structure is represented by a formula selected from

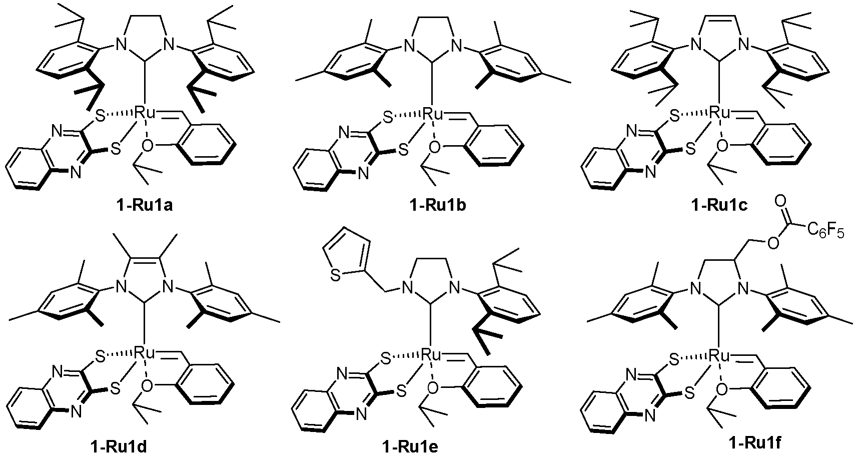

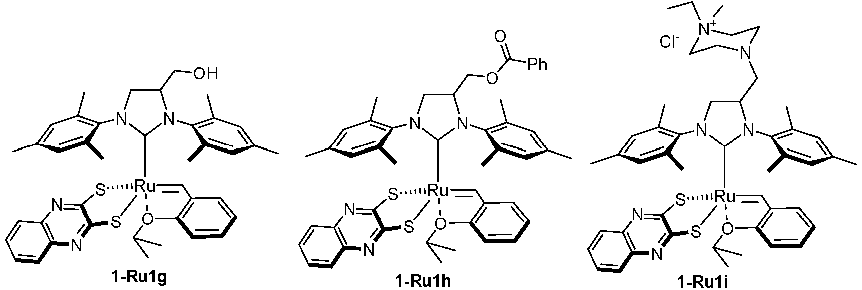

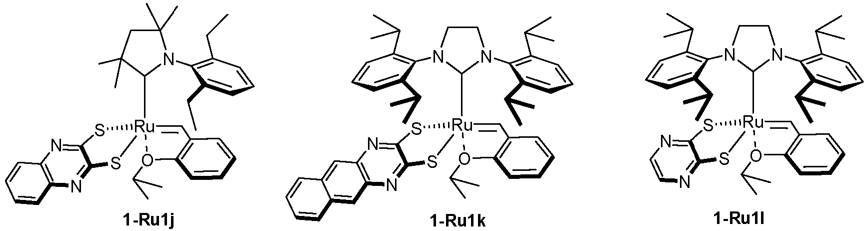

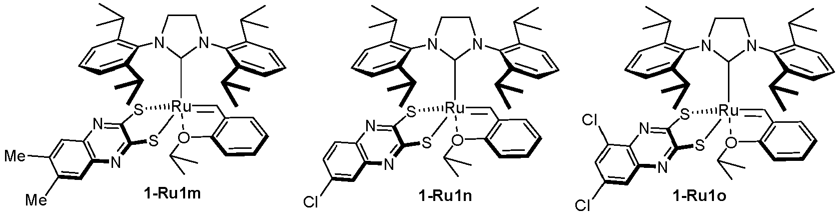

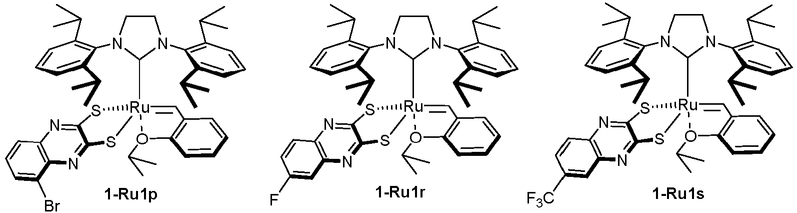

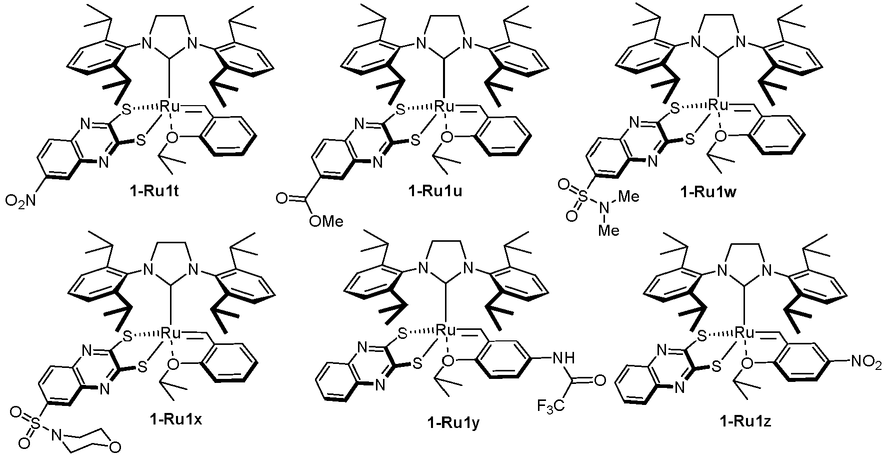

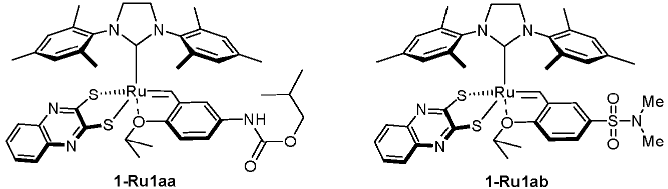

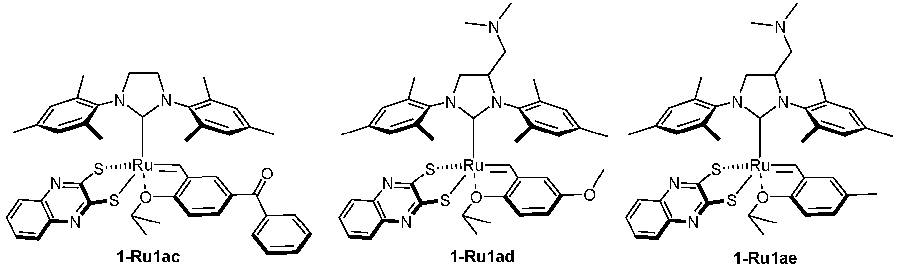

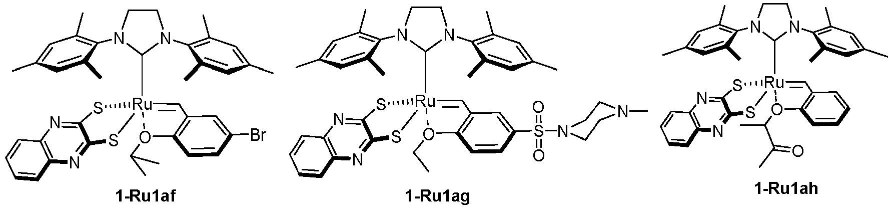

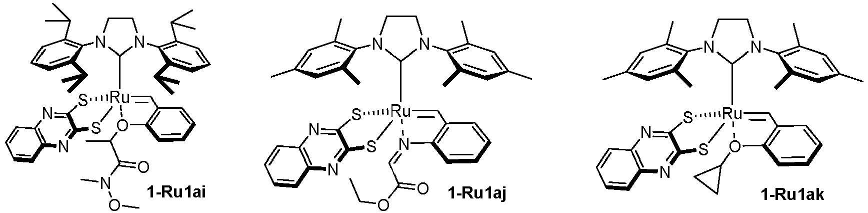

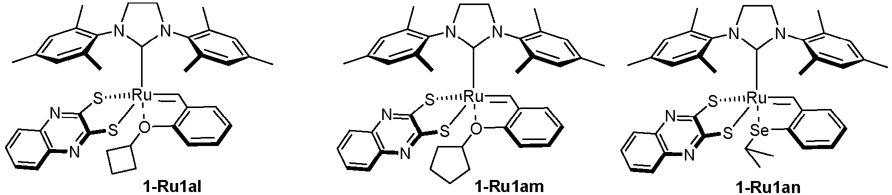

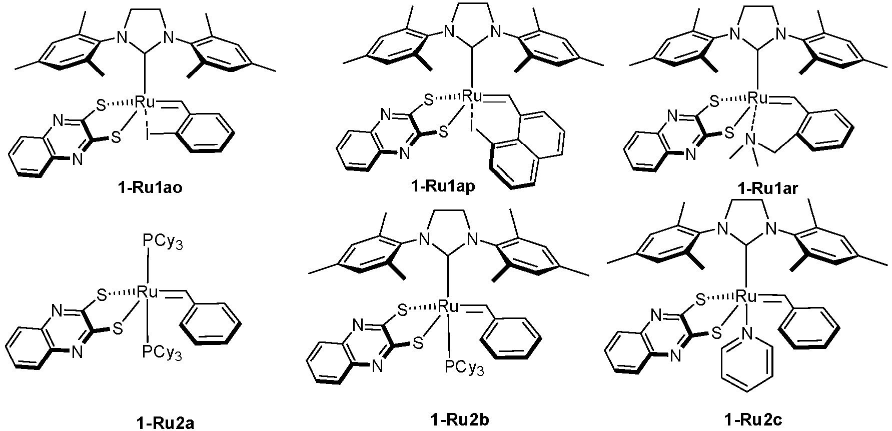

8. A compound with the structure defined by formula **3a** or **3b** 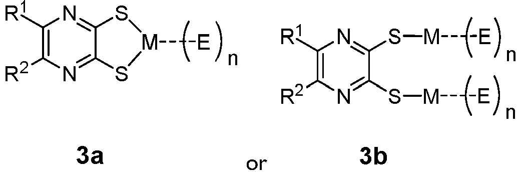 in which
M is monovalent or divalent metal cation;
n is 0, 1, 2 or 3;
E is at least one heteroatom selected from a group comprising oxygen, sulfur, selenium, nitrogen, phosphorus, which are substituted with a group, or if the heteroatom is nitrogen or phosphorus, with groups: C₁-C₂₅ alkyl group, C₁-C₂₅ cycloalkyl group, C₅-C₂₀ alkoxy group, C₅-C₂₀ aryl group, C₇-C₂₀ aralkyl group, C₃-C₂₄ aryloxy group, C₂-C₁₂ alkenyl group, C₆-C₂₀ heteroaryl group, C₃-C₂₄ heteroaryloxy group, or hydrogen, which are optionally substituted by at least one C₁-C₁₂ alkyl or C₁-C₁₂ perfluoroalkyl, or if two identical or different heteroatoms constitute a chelating system then, taken together, they form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, C₁-C₁₂ alkyl, C₁-C₁₂ perfluoroalkyl, C₁-C₁₂ alkoxy, C₃-C₂₄ aryloxy, C₃-C₂₀ heteroaryloxy, and halogen;
R¹ and R² are independently hydrogen, halogen, C₁-C₂₅ alkyl, C₅-C₂₀ alkoxy, C₅-C₂₀ aryl, C₇-C₂₀ aralkyl, C₃-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R² are independently alkoxy group (-OR"), sulfide group (-SR"), sulfoxide group (-S(O)R"), sulfonium group (-S⁺R"₂), sulfonyl group (-SO₂R'), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
or R¹ and R², taken together, form a substituted or unsubstituted cyclic C₄-C₁₀, polycyclic C₄-C₁₂, aromatic C₄-C₁₀, heteroaromatic C₄-C₁₀, polyaromatic C₄-C₁₀, and polyheteroaromatic C₄-C₁₀ system, which can be substituted by one and/or more substituents selected from hydrogen, halogen, C₁-C₂₅ alkyl group, C₁-C₁₂ perfluoroalkyl group, C₁-C₁₂ alkoxy group, C₃-C₂₄ aryloxy group, C₃-C₂₀ heteroaryloxy group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two R" groups, taken together, form C₅-C₂₅ ring, which alternatively may contain at least one heteroatom selected from oxygen, sulfur, selenium, nitrogen, phosphorus.

9. Compound **3c** or **3d** or **3e** according to claim 8 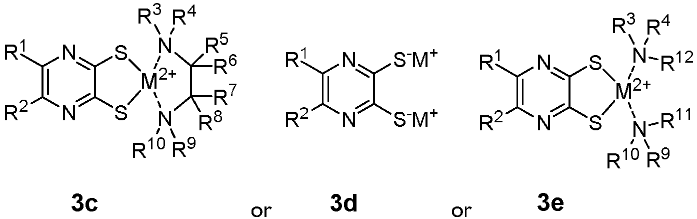 in which
M²⁺ is Zn, Cu, Mg, Ca cation,
M⁺ is Li, Na, K, Cs, Cu or Cu×(E)ₙ cation
n is 1 or 2;
R¹ and R² are independently hydrogen, halogen, C₁-C₂₅ alkyl, C₅-C₂₀ alkoxy, C₅-C₂₀ aryl, C₇-C₂₀ aralkyl, C₃-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R² are independently alkoxy group (-OR"), sulfide group (-SR"), sulfoxide group (-S(O)R"), sulfonium group (-S⁺R"₂), sulfonyl group (-SO₂R'), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group;
or R¹ and R², taken together, form a substituted or unsubstituted cyclic C₄-C₁₀, polycyclic C₄-C₁₂, aromatic C₄-C₁₀, heteroaromatic C₄-C₁₀, polyaromatic C₄-C₁₀, and polyheteroaromatic C₄-C₁₀ system, which can be substituted by one and/or more substituents selected from hydrogen, halogen, C₁-C₂₅ alkyl group, C₁-C₁₂ perfluoroalkyl group, C₁-C₁₂ alkoxy group, C₃-C₂₄ aryloxy group, C₃-C₂₀ heteroaryloxy group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two R" groups, taken together, form C₅-C₂₅ ring, which alternatively may contain at least one heteroatom selected from oxygen, sulfur, selenium, nitrogen, phosphorus;
R³, R⁴, R⁵, R⁶, R⁷, R⁸, R⁹, R¹⁰, R¹¹ and R¹² independently are hydrogen, C₁-C₂₅ alkyl, C₁-C₂₅ cycloalkyl, C₅-C₂₀ alkoxy, C₅-C₂₀ aryl, C₇-C₂₀ aralkyl, C₃-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or two selected R³, R⁴, R⁵, R⁶, R⁷, R⁸, R⁹, R¹⁰, R¹¹ and R¹² substituents, taken together, form a substituted or unsubstituted cyclic C₄-C₁₀, polycyclic C₄-C₁₂, heterocyclic C₄-C₁₂, aromatic C₄-C₁₀, heteroaromatic C₄-C₁₀ system, which may be substituted by one and/or more substituents selected from hydrogen, C₁-C₁₂ alkyl, C₁-C₁₂ perfluoroalkyl, C₁-C₁₂ alkoxy, Cs-C₂₄ aryloxy, C₃-C₂₀ heteroaryloxy, and halogen.

10. Compound **3f** according to claim 8 or 9 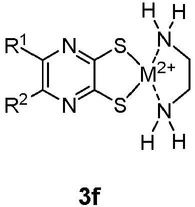 in which
M²⁺ is Zn cation,
R¹ and R² are independently hydrogen, halogen, C₁-C₂₅ alkyl, C₅-C₂₀ alkoxy, C₅-C₂₀ aryl, C₇-C₂₀ aralkyl, C₃-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R² are independently alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group;
or R¹ and R², taken together, form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, halogen, C₁-C₁₂ perfluoroalkyl group, C₁-C₁₂ alkoxy group, C₃-C₂₄ aryloxy group, C₅-C₂₀ heteroaryloxy group, C₁-C₂₅ alkyl group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two R" groups, taken together, form C₅-C₂₅ ring, which alternatively may contain at least one heteroatom selected from oxygen, sulfur, selenium, nitrogen, phosphorus.

11. Compound according to claims 8, 9 or 10, **characterized in that** its structure is represented by a formula selected from 3**-Zn1,** 3**-Zn2,** 3**-Zn3,** 3**-Zn4,** 3**-Zn5,** 3**-Zn6,** 3**-Zn7,** 3-**Zn8,** 3**-Zn9,** 3**-Zn10,** 3**-Zn11,** 3**-Zn12,** 3**-Zn13** and 3**-K1:**

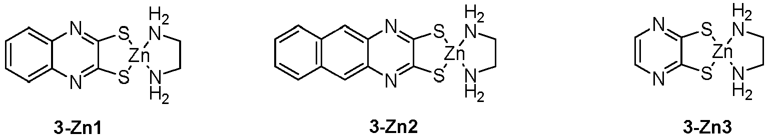

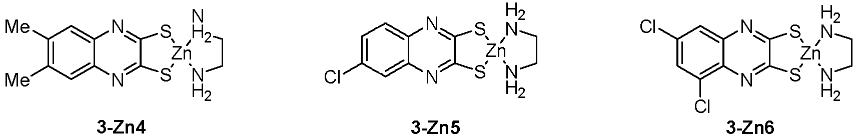

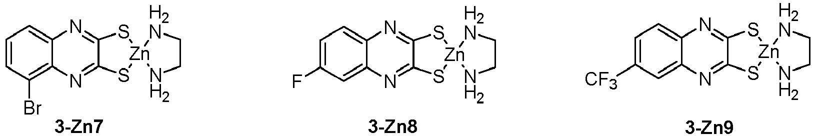

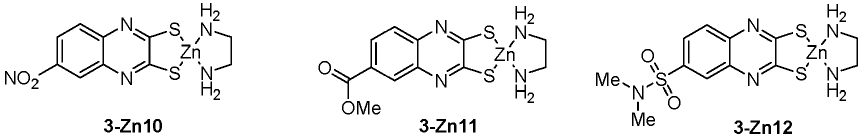

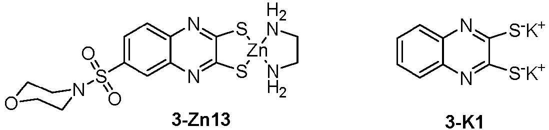

12. A method of producing the ruthenium complex of formula **1-Ru,** as defined in any of the claims 1 to 6: 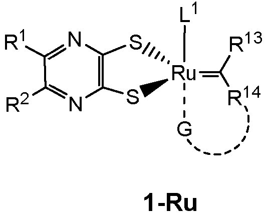 in which:
L¹ is a neutral ligand selected from N-heterocyclic carbenes (NHCs), cyclic alkylaminocarbene (CAAC), or phosphines;
R¹ and R², are independently hydrogen, halogen, C₁-C₂₅ alkyl, C₅-C₂₀ alkoxy, C₅-C₂₀ aryl, C₇-C₂₀ aralkyl, C₃-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R² are independently alkoxy group (-OR"), sulfide group (-SR"), sulfoxide group (-S(O)R"), sulfonium group (-S⁺R"₂), sulfonyl group (-SO₂R'), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group;
or R¹ and R², taken together, form a substituted or unsubstituted cyclic C₄-C₁₀, polycyclic C₄-C₁₂, aromatic C₄-C₁₀, heteroaromatic C₄-C₁₀ system, which can be substituted by one and/or more substituents selected from hydrogen, halogen, C₁-C₂₅ alkyl group, C₁-C₁₂ perfluoroalkyl group, C₁-C₁₂ alkoxy group, C₃-C₂₄ aryloxy group, C₃-C₂₀ heteroaryloxy group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two R" groups, taken together, form C₅-C₂₅ ring, which alternatively may contain at least one heteroatom selected from oxygen, sulfur, selenium, nitrogen, phosphorus.
R¹³ and R¹⁴ are independently hydrogen, halogen, optionally substituted C₁-C₂₅ alkyl, optionally substituted C₃-C₂₅ cycloalkyl, optionally substituted C₁-C₁₂ perfluoroalkyl, optionally substituted C₂-C₂₅ alkene, optionally substituted C₂-C₂₅ alkenyl, optionally substituted C₃-C₂₅ cycloalkenyl, optionally substituted C₂-C₂₅ alkynyl, optionally substituted C₃-C₂₅ cycloalkynyl, optionally substituted C₁-C₂₅ alkoxy, optionally substituted C₅-C₂₅ aryl, optionally substituted C₅-C₂₅ aryloxy, optionally substituted C₆-C₂₅ arylalkyl, optionally substituted C₅-C₂₅ heteroaryl, optionally substituted C₅-C₂₅ heteroaryloxy, optionally substituted C₅-C₂₅ perfluoroaryl, 3-12-membered heterocycle containing sulfur, oxygen, nitrogen, selenium or phosphorus, optionally substituted;
wherein R¹³ and R¹⁴ substituents, taken together, may form a ring selected from a group comprising C₃-C₂₅ cycloalkyl, C₃-C₂₅ cycloalkenyl, C₃-C₂₅ cycloalkynyl, C₅-C₂₅ aryl, C₅-C₂₅ heteroaryl, C₅-C₂₅ perfluoroaryl, 3-12-membered heterocycle containing sulfur, oxygen, nitrogen, selenium or phosphorus which may be substituted independently with one and/or more substituents selected from a group comprising hydrogen, halogen, C₁-C₂₅ alkyl, C₃-C₂₅ cycloalkyl, C₁-C₁₂ perfluoroalkyl, C₂-C₂₅ alkene, C₂-C₂₅ alkenyl, C₃-C₂₅ cycloalkenyl, C₂-C₂₅ alkynyl, C₃-C₂₅ cycloalkynyl, C₁-C₂₅ alkoxy, C₅-C₂₅ aryl, C₅-C₂₅ aryloxy, C₆-C₂₅ arylalkyl, C₅-C₂₅ heteroaryl, C₅-C₂₅ heteroaryloxy, C₅-C₂₅ perfluoroaryl, 3-12-membered heterocycle;
wherein the R¹³ and R¹⁴ substituents are independently preferably hydrogen and/or an C₅-C₂₅ aryl independently substituted with hydrogen, halogen, C₁-C₂₅ alkyl group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group independently is hydrogen, C₁-C₅ alkyl, C₁-C₅ perfluoroalkyl, C₆-C₂₄ aryl, C₇-C₂₄ aralkyl, C₃-C₂₄ perfluoroaryl, the two R" groups, taken together, may form either C₃-C₁₂ cycloalkyl ring or C₃-C₂₅ heterocycloalkyl ring containing nitrogen, oxygen or sulfur, optionally additionally substituted with C₁-C₁₂ alkyl group, alternatively R" is a ketone group (-COR^{c}) in which R^{c} is C₁-C₁₂ perfluoroalkyl or alkoxy group (-OR^{d}) in which R^{d} is C₁-C₁₂ alkyl or C₃-C₁₂ heterocycloalkyl containing nitrogen, oxygen or sulfur optionally additionally substituted with C₁-C₁₂ alkyl group;
G is selected from
- L² ligand 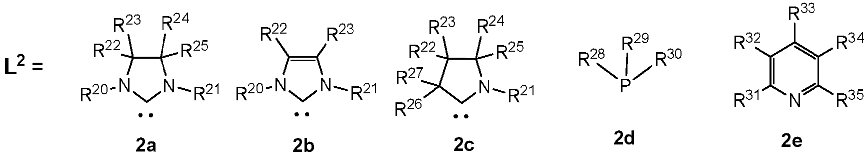
in which the R²⁰ and R²¹ substituents are independently C₁-C₁₂ alkyl group, C₃-C₁₂ cycloalkyl group, C₃-C₂₀ aryl group or C₃-C₂₀ heteroaryl group, C₅-C₂₅ aralkyl group, which may be substituted independently by one and/or more substituents selected from a group comprising hydrogen,
C₁-C₁₂ alkyl group, C₁-C₁₂ perfluoroalkyl group, C₅-C₂₀ aryl group, C₅-C₂₀ perfluoroaryl group, C₅-C₂₀ heteroaryl group, C₁-C₁₂ alkoxy group, C₅-C₂₄ aryloxy group, C₅-C₂₀ heteroaryloxy group, or halogen, alkoxy group (-OR"), sulfide group (-SR"), halogen, amine group (-NR"₂), in which the R" group independently is hydrogen, C₁-C₅ alkyl, C₆-C₂₄ aryl, C₇-C₂₄ aralkyl, alternatively R²⁰ and R²¹, taken together, form C₅-C₂₅ ring;
each R²⁰, R²¹, R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a}₂), in which each R^{a} is independently either hydrogen or C₁-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-COR^{d}) group, methylester group (-CH₂OCOR^{b}), in which R^{b} is either C₅-C₂₀ aryl group or C₃-C₂₀ perfluoroaryl group; amine group (-NR^{c}₂), methylamine group (-CH₂NR^{c}₂), in which each R^{c} is independently either hydrogen or C₁-C₁₂ alkyl, the two R^{c} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
which can be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted with C₁-C₁₂ alkyl group, ester group (-COOR^{d}) or (-COR^{d}) group, in which R^{d} is C₅-C₂₀ aryl group or C₃-C₂₀ perfluoroaryl group, or an amino group (-NR^{e}₂) in which each R^{d} is independently hydrogen or C₁-C₁₂ alkyl, the two R^{e} groups may, taken together, form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group, and R²², R²¹, R²², R²³, R²⁴, R²⁵, R²⁶, and R²⁷ substituents may optionally be interconnected to form cyclic C₄-C₁₀ system or polycyclic C₄-C₁₂ system;
each R²⁸, R²⁹, and R³⁰ substituent is independently C₁-C₂₅ alkyl, C₁-C₂₅ cycloalkyl, C₅-C₂₀ alkoxy, C₅-C₂₀ aryl, C₇-C₂₀ aralkyl, C₃-C₂₄ aryloxy, C₂-C₁₂ alkenyl, C₆-C₂₀ heteroaryl, or C₅-C₂₄ heteroaryloxy, which are optionally substituted by at least one C₄-C₁₂ alkyl or C₁-C₁₂ perfluoroalkyl, or R²⁸, R²⁹, R³⁰, taken together, form a substituted or unsubstituted cyclic C₄-C₁₀, polycyclic C₄-C₁₂, aromatic C₄-C₁₀, heteroaromatic C₄-C₁₀ system which may be substituted by one and/or more substituents selected from hydrogen, C₁-C₁₂ alkyl, C₁-C₁₂ perfluoroalkyl, C₁-C₁₂ alkoxy, C₃-C₂₄ aryloxy, C₅-C₂₀ heteroaryloxy and halogen;
each R³¹, R³², R³³, R³⁴ and R³⁵ substituent is independently C₁-C₁₂ alkyl group, C₃-C₁₂ cycloalkyl group, C₅-C₂₀ aryl group or C₅-C₂₀ heteroaryl group, which may be substituted independently by one and/or more substituents selected from a group comprising hydrogen, C₁-C₁₂ alkyl group, C₁-C₁₂ perfluoroalkyl group, C₁-C₁₂ alkoxy group, C₃-C₂₄ aryloxy group, C₅-C₂₀ heteroaryloxy group, or halogen; or
- heteroatom 1
selected from a group comprising oxygen, sulfur, selenium, substituted by a group selected from hydrogen, halogen, oxygen, C₁-C₂₅ alkyl, C₁-C₂₅ perfluoroalkyl, C₃-C₂₅ cycloalkyl, Cs-C₂₀ alkoxy, C₅-C₂₀ aryl, C₃-C₂₀ perfluoroaryl, C₇-C₂₀ aralkyl, C₃-C₂₄ aryloxy, C₂-C₁₂ alkenyl, C₆-C₂₀ heteroaryl or C₅-C₂₄ heteroaryloxy, 3-12-membered heterocycle, optionally substituted by acyl group (-COR'), cyano (-CN), carboxyl (-COOH), ester (-COOR'), ester (-CH₂COOR'), ester (-CHR'COOR'), ester (-C(R')₂COOR'), amide (-CONR'₂), Weinrebtype amide (-CON(R')(OR')), sulfonic (-SO₂R'), formyl (-COH), sulfonamide (-SO₂NR'₂), ketone (-COR'), thioamide (-CSNR'₂), thioketone (-CSR'), thionoester (-CSOR'), thioester (-COSR'), dithioester (-CS₂R') group, in which R' group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy and then the dashed line represents a direct binding of the heteroatom to the R¹⁴ substituent or represents the connection of the R¹⁴ substituent to the heteroatom via (CH₂)-, -(CHR')-, or (CR'₂)- methylene bridge, wherein the R¹⁴ substituent is C₅-C₁₅ aryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₃-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl; or
- heteroatom 2
selected from a group comprising nitrogen, or phosphorus, substituted by a group selected from hydrogen, methylidene optionally substituted by an R' substituent, C₁-C₂₅ alkyl, C₁-C₂₅ perfluoroalkyl, C₃-C₂₅ cycloalkyl, C₅-C₂₀ alkoxy, C₅-C₂₀ aryl, C₃-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, acyl group (-COR'), tert-butyloxycarbonyl group (t-Boc) or 9-fluorenylmethoxycarbonyl group (Fmoc), carbamate group (-CONR'₂), sulfonic group (-SO₂R'), formyl group (-COH), in which R' group is C₁-C₂₅ alkyl, C₁-C₂₅ perfluoroalkyl, C₃-C₂₅ cycloalkyl, C₅-C₂₀ alkoxy, C₅-C₂₀ aryl, C₃-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy optionally substituted by acyl (-COR"), cyano (-CN), carboxyl (-COOH), ester (-COOR"), ester (-CH₂COOR"), ester (-CHR"COOR"), ester (-C(R")₂COOR"), amide (-CONR"₂), sulfonic (-SO₂R"), formyl (-COH), sulfonamide (-SO₂NR"₂), ketone (-COR"), thioamide (-CSNR"₂), thioketone (-CSR"), thionoester (-CSOR"), thioester (-COSR"), dithioester (-CS₂R") group, in which the R" group is C₁-C₂₅ alkyl, C₁-C₂₅ perfluoroalkyl, C₃-C₂₅ cycloalkyl, C₅-C₂₀ alkoxy, C₅-C₂₀ aryl, C₃-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy and then the dashed line represents a direct binding of the heteroatom to the R¹⁴ substituent or represents the connection of the R¹⁴ substituent to the heteroatom via (CH₂)-, -(CHR')-, or (CR'₂)- methylene bridge; wherein the R¹⁴ substituent is C₅-C₁₅ aryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₃-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, or
- heteroatom 3
selected from a group comprising halogen, and then the dashed line represents a direct binding of the heteroatom to the R¹⁴ substituent, wherein the R¹⁴ substituent is C₅-C₁₅ aryl, or C₅-C₂₅ polyaryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₃ alkynyl, C₃-C₂₅ cycloalkynyl, C₁-C₂₅ perfluoroalkyl, C₅-C₂₀ alkoxy, C₅-C₂₀ aryl, C₃-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which R" group is C₁-C₅ alkyl, C₁-C₅ perfluoroalkyl, C₆-C₂₄ aryl, C₇-C₂₄ aralkyl, C₅-C₂₄ perfluoroaryl;
**characterized in that** the alkylidene ruthenium complex of formula **4-Ru** : 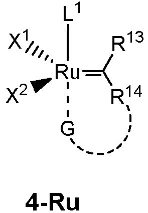 in which:
X¹ and X² independently are anionic ligands selected from a group comprising halogen anion, -CN, -SCN, -OR^{a}, -SR^{a}, -O(C=O)R^{a}, -O(SO₂)R^{a}, and -OSi(R^{a})₃ group, in which R^{a} is C₁-C₁₂ alkyl, C₃-C₁₂ cycloalkyl, C₂-C₁₂ alkenyl or C₃-C₂₀ aryl, which is optionally substituted by at least one C₁-C₁₂ alkyl, C₁-C₁₂ perfluoroalkyl, C₁-C₁₂ alkoxy, C₅-C₂₄ aryloxy, C₅-C₂₀ heteroaryloxy or halogen;
L¹ is a neutral ligand selected from N-heterocyclic carbenes (NHCs), cyclic alkylaminocarbene (CAAC) or phosphines;
R¹³ and R¹⁴ are independently hydrogen, halogen, optionally substituted C₁-C₂₅ alkyl, optionally substituted C₃-C₂₅ cycloalkyl, optionally substituted C₁-C₁₂ perfluoroalkyl, optionally substituted C₂-C₂₅ alkene, optionally substituted C₂-C₂₅ alkenyl, optionally substituted C₃-C₂₅ cycloalkenyl, optionally substituted C₂-C₂₅ alkynyl, optionally substituted C₃-C₂₅ cycloalkynyl, optionally substituted C₁-C₂₅ alkoxy, optionally substituted C₅-C₂₅ aryl, optionally substituted C₅-C₂₅ aryloxy, optionally substituted C₆-C₂₅ arylalkyl, optionally substituted C₅-C₂₅ heteroaryl, optionally substituted C₅-C₂₅ heteroaryloxy, optionally substituted C₅-C₂₅ perfluoroaryl, 3-12-membered heterocycle containing sulfur, oxygen, nitrogen, selenium or phosphorus, optionally substituted;
wherein R¹³ and R¹⁴ substituents, taken together, may form a ring selected from a group comprising C₃-C₂₅ cycloalkyl, C₃-C₂₅ cycloalkenyl, C₃-C₂₅ cycloalkynyl, C₅-C₂₅ aryl, C₅-C₂₅ heteroaryl, C₅-C₂₅ perfluoroaryl, 3-12-membered heterocycle containing sulfur, oxygen, nitrogen, selenium or phosphorus which may be substituted independently with one and/or more substituents selected from a group comprising hydrogen, halogen, C₁-C₂₅ alkyl, C₃-C₂₅ cycloalkyl, C₁-C₁₂ perfluoroalkyl, C₂-C₂₅ alkene, C₂-C₂₅ alkenyl, C₃-C₂₅ cycloalkenyl, C₂-C₂₅ alkynyl, C₃-C₂₅ cycloalkynyl, C₁-C₂₅ alkoxy, C₅-C₂₅ aryl, C₅-C₂₅ aryloxy, C₆-C₂₅ arylalkyl, C₅-C₂₅ heteroaryl, C₅-C₂₅ heteroaryloxy, C₅-C₂₅ perfluoroaryl, 3-12-membered heterocycle;
wherein the R¹³ and R¹⁴ substituents independently preferably are hydrogen and/or C₅-C₂₅ aryl independently substituted with hydrogen, C₁-C₂₅ alkyl group, C₂-C₂₅ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄aralkyl, C₅-C₂₄ perfluoroaryl;
G is selected from
- L² ligand 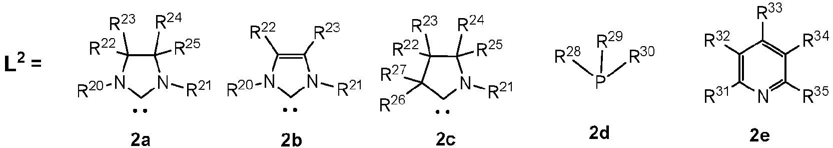
in which the R²⁰ and R²¹ substituents are independently C₁-C₁₂ alkyl group, C₃-C₁₂ cycloalkyl group, C₃-C₂₀ aryl group or C₃-C₂₀ heteroaryl group, C₅-C₂₅ aralkyl group which can be substituted independently by one and/or more substituents selected from a group comprising hydrogen,
C₁-C₁₂ alkyl group, C₁-C₁₂ perfluoroalkyl group, C₅-C₂₀ aryl group, C₅-C₂₀ perfluoroaryl group, C₅-C₂₀ heteroaryl group, C₁-C₁₂ alkoxy group, C₅-C₂₄ aryloxy group, C₅-C₂₀ heteroaryloxy group, or halogen, alkoxy group (-OR"), sulfide group (-SR"), halogen, amine group (-NR"₂), in which the R" group independently is hydrogen, C₁-C₅ alkyl, C₆-C₂₄ aryl, C₇-C₂₄ aralkyl, alternatively R²⁰ and R²¹, taken together, form C₅-C₂₅ ring;
each R²⁰, R²¹, R²², R²³, R²⁴, R²⁵, R²⁶, and R²⁷ substituent independently is hydrogen, halogen, hydroxyl group, C₁-C₁₂ alkoxy group, hydroxymethyl group (-CH₂OH), C₁-C₁₂ alkyl group optionally substituted with an amine group (-NR^{a}₂), in which each R^{a} is independently either hydrogen or C₁-C₁₂ alkyl, the two R^{a} groups, taken together, may form either C₃-C₁₂ cycloalkyl ring or C₃-C₂₅ heterocycloalkyl, C₃-C₁₂ cycloalkyl group; C₅-C₂₀ aryl group, C₅-C₂₀ heteroaryl group, ester group (-OCOR^{b}), (-COR^{d}) group, methylester group (-CH₂OCOR^{b}), in which R^{b} is either C₅-C₂₀ aryl group or C₃-C₂₀ perfluoroaryl group; amine group (-NR^{c}₂), methylamine group (-CH₂NR^{c}₂), in which each R^{c} is independently either hydrogen or C₁-C₁₂ alkyl, the two R^{c} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
which can be substituted independently by at least one substituent selected from a group comprising hydroxyl (OH), C₁-C₁₂ alkyl, C₁-C₁₂ perfluoroalkyl, C₁-C₁₂ alkoxy, halogen, C₃-C₁₂ heterocycloalkyl optionally substituted with C₁-C₁₂ alkyl group, ester group (-COOR^{d}) or (-COR^{d}) group, in which R^{d} is C₅-C₂₀ aryl group or C₃-C₂₀ perfluoroaryl group, or an amino group (-NR^{e}₂) in which each R^{d} is independently hydrogen or C₁-C₁₂ alkyl, the two R^{e} groups, taken together, may form C₃-C₁₂ cycloalkyl ring or C₃-C₂₅ heterocycloalkyl containing nitrogen, oxygen or sulfur, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group, and R²⁰, R²¹, R²², R²³, R²⁴, R²⁵, R²⁶, and R²⁷ substituents may optionally be interconnected to form cyclic C₄-C₁₀ system or polycyclic C₄-C₁₂ system;
each R²⁸, R²⁹, and R³⁰ substituent independently is C₁-C₂₅ alkyl, C₃-C₁₂ cycloalkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₄-C₁₂ alkyl or C₁-C₁₂ perfluoroalkyl, or R²⁸, R²⁹, R³⁰, taken together, form a substituted or unsubstituted cyclic C₄-C₁₀, polycyclic C₄-C₁₂, aromatic C₄-C₁₀, heteroaromatic C₄-C₁₀ system which can be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₅-C₂₀ heteroaryloxy, and halogen;
each R³¹, R³², R³³, R³⁴ and R³⁵ substituent is independently C₁-C₁₂ alkyl group, C₃-C₁₂ cycloalkyl group, C₅-C₂₀ aryl group or C₅-C₂₀ heteroaryl group, which may be substituted independently by one and/or more substituents selected from a group comprising hydrogen, C₁-C₁₂ alkyl group, C₁-C₁₂ perfluoroalkyl group, C₁-C₁₂ alkoxy group, C₅-C₂₄ aryloxy group, C₅-C₂₀ heteroaryloxy group, or halogen; or
- heteroatom 1
selected from a group comprising oxygen, sulfur, selenium, substituted by a group selected from hydrogen, halogen, oxygen, C₁-C₂₅ alkyl, C₁-C₂₅ perfluoroalkyl, C₃-C₂₅ cycloalkyl, C₅-C₂₀ alkoxy, C₃-C₂₀ aryl, C₃-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, optionally substituted by acyl (-COR'), cyano (-CN), carboxyl (-COOH), ester (-COOR'), ester (-CH₂COOR'), ester (-CHR'COOR'), ester (-C(R')₂COOR'), amide (-CONR'₂), Weinreb-type amide (-CON(R')(OR')), sulfonic (-SO₂R'), formyl (-COH), sulfonamide (-SO₂NR'₂), ketone (-COR'), thioamide (-CSNR'₂), thioketone (-CSR'), thionoester (-CSOR'), thioester (-COSR'), dithioester (-CS₂R') group, in which the R' group is C₁-C₂₅ alkyl, C₁-C₂₅ perfluoroalkyl, C₃-C₂₅ cycloalkyl, C₅-C₂₀ alkoxy, C₅-C₂₀ aryl, C₅-C₂₀ perfluoroaryl, C₇-C₂₀ aralkyl, C₅-C₂₄ aryloxy, C₂-C₁₂ alkenyl, C₆-C₂₀ heteroaryl, or C₅-C₂₄ heteroaryloxy and then the dashed line represents a direct binding of the heteroatom to the R¹⁴ substituent or represents the connection of the R¹⁴ substituent to the heteroatom via -CH₂-, -CHR'-, or - CR'₂- methylene bridge, wherein the R¹⁴ substituent is C₅-C₁₅ aryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₅-C₂₀ alkoxy, C₅-C₂₀ aryl, C₃-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, or
- heteroatom 2
selected from a group comprising nitrogen, or phosphorus, substituted by a group selected from hydrogen, methylidene optionally substituted by an R' substituent, C₁-C₂₅ alkyl, C₁-C₂₅ perfluoroalkyl, C₃-C₂₅ cycloalkyl, C₅-C₂₀ alkoxy, C₅-C₂₀ aryl, C₃-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy, 3-12-membered heterocycle, acyl group (-COR'), tert-butyloxycarbonyl group (t-Boc) or 9-fluorenylmethoxycarbonyl group (Fmoc), carbamate group (-CONR'₂), sulfonyl group (-SO₂R'), formyl group (-COH), in which R' group is C₁-C₂₅ alkyl, C₁-C₂₅ perfluoroalkyl, C₃-C₂₅ cycloalkyl, C₅-C₂₀ alkoxy, C₅-C₂₀ aryl, C₃-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy optionally substituted by acyl group (-COR"), cyano (-CN), carboxyl (-COOH), ester (-COOR"), ester (-CH₂COOR"), ester (-CHR"COOR"), ester (-C(R")₂COOR"), amide (-CONR"₂), sulfonic (-SO₂R"), formyl (-COH), sulfonamide (-SO₂NR"₂), ketone (-COR"), thioamide (-CSNR"₂), thioketone (-CSR"), thionoester (-CSOR"), thioester (-COSR"), dithioester (-CS₂R") group, in which the R" group is C₁-C₂₅ alkyl, C₁-C₂₅ perfluoroalkyl, C₃-C₂₅ cycloalkyl, C₅-C₂₀ alkoxy, C₅-C₂₀ aryl, C₃-C₂₀ perfluoroaryl, C₇-C₂₀ aralkyl, C₅-C₂₄ aryloxy, C₂-C₁₂ alkenyl, C₆-C₂₀ heteroaryl or C₅-C₂₄ heteroaryloxy and then the dashed line represents a direct binding of the heteroatom to the R¹⁴ substituent or represents the connection of the R¹⁴ substituent to the heteroatom via (CH₂)-, -(CHR')-, or (CR'₂)- methylene bridge; wherein the R¹⁴ substituent is C₅-C₁₅ aryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₅ alkynyl, C₃-C₂₅ cycloalkynyl, C₁-C₂₅ perfluoroalkyl, C₃-C₂₀ alkoxy, C₃-C₂₀ aryl, C₃-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, or
- heteroatom 3
selected from a group comprising a halogen, and then the dashed line represents a direct binding of the heteroatom to the R¹⁴ substituent, wherein the R¹⁴ substituent is C₅-C₁₅ aryl, or C₅-C₂₅ polyaryl optionally substituted by 1-4 substituents independently selected from a group comprising hydrogen, halogen, C₁-C₂₅ alkyl, C₃-C₂₅ cycloalkyl, C₂-C₂₅ alkenyl, C₃-C₂₅ cycloalkenyl, C₂-C₂₃ alkynyl, C₃-C₂₅ cycloalkynyl, C₁-C₂₅ perfluoroalkyl, C₅-C₂₀ alkoxy, C₅-C₂₀ aryl, C₃-C₂₀ perfluoroaryl, C₇-C₂₀ aralkyl, C₅-C₂₄ aryloxy, C₆-C₂₀ heteroaryl or C₅-C₂₄ heteroaryloxy, 3-12-membered heterocycle, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl;
is reacted with a compound of the structure defined by formula **3a** or **3b** 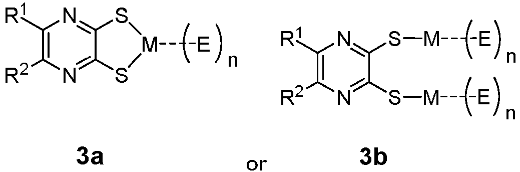 in which
M is monovalent or divalent metal cation;
n is 0, 1 or 2;
E is at least one heteroatom selected from a group comprising oxygen, sulfur, selenium, nitrogen, phosphorus, which are substituted with a group, or if the heteroatom is nitrogen or phosphorus, with groups: C₁-C₂₅ alkyl group, C₁-C₂₅ cycloalkyl group, C₅-C₂₀ alkoxy group, C₅-C₂₀ aryl group, C₇-C₂₀ aralkyl group, C₅-C₂₄ aryloxy group, C₂-C₁₂ alkenyl group, C₆-C₂₀ heteroaryl group, C₅-C₂₄ heteroaryloxy group, or hydrogen, which are optionally substituted by at least one C₁-C₁₂ alkyl or C₁-C₁₂ perfluoroalkyl, or if two identical or different heteroatoms constitute a chelating system then, taken together, they form a substituted or unsubstituted cyclic C₄-C₁₀, polycyclic C₄-C₁₂, aromatic C₄-C₁₀, heteroaromatic C₄-C₁₀ system, which may be substituted by one and/or more substituents selected from hydrogen, C₁-C₁₂ alkyl, C₁-C₁₂ perfluoroalkyl, C₁-C₁₂ alkoxy, C₅-C₂₄ aryloxy, C₃-C₂₀ heteroaryloxy, and halogen;
R¹ and R² are independently hydrogen, halogen, C₁-C₂₅ alkyl, C₅-C₂₀ alkoxy, C₅-C₂₀ aryl, C₇-C₂₀ aralkyl, C₅-C₂₄ aryloxy, C₂-C₁₂ alkenyl, C₆-C₂₀ heteroaryl, or C₅-C₂₄ heteroaryloxy, which are optionally substituted by at least one C₁-C₁₂ alkyl or C₁-C₁₂ perfluoroalkyl, or R¹ and R² are independently alkoxy group (-OR"), sulfide group (-SR"), sulfoxide group (-S(O)R"), sulfonium group (-S⁺R"₂), sulfonyl group (-SO₂R'), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively two R" groups, taken together, form C₅-C₂₅ ring, which alternatively may contain at least one heteroatom selected from oxygen, sulfur, selenium, nitrogen, phosphorus, optionally additionally substituted with C₁-C₁₂ alkyl group, wherein the heteroatom present in the heterocyclic ring may be substituted by one or two C₁-C₁₂ alkyl groups which form a primary, secondary or tertiary amine, or a quaternary ammonium group, a tertiary sulfonium group or a quaternary phosphonium group,
or R¹ and R², taken together, form a substituted or unsubstituted cyclic C₄-C₁₀, polycyclic C₄-C₁₂, aromatic C₄-C₁₀, heteroaromatic C₄-C₁₀, polyaromatic C₄-C₁₀, and polyheteroaromatic C₄-C₁₀ system, which can be substituted by one and/or more substituents selected from hydrogen, halogen, C₁-C₂₅ alkyl group, C₁-C₁₂ perfluoroalkyl group, C₁-C₁₂ alkoxy group, C₅-C₂₄ aryloxy group, C₃-C₂₀ heteroaryloxy group, C₂-C₂₃ alkenyl group, alkoxy group (-OR"), sulfide group (-SR"), sulfoxide group (-S(O)R"), sulfonium group (-S⁺R"₂), sulfonyl group (-SO₂R"), sulfonamide group (-SO₂NR"₂), amine group (-NR"₂), ammonium group (-N⁺R"₃), nitro group (-NO₂), cyano group (-CN), phosphonate group (-P(O)(OR")₂), phosphinate group (-P(O)R"(OR")), phosphonite group (-P(OR")₂), phosphine group (-PR"₂), phosphine oxide group (-P(O)R"₂), phosphonium group (-P⁺R"₃), carboxyl group (-COOH), ester group (-COOR"), amide group (-CONR"₂), amide group (-NR"C(O)R"), formyl group (-CHO), ketone group (-COR"), thioamide group (-CSNR"₂), thioketone group (-CSR"), thionoester group (-CSOR"), thioester group (-COSR"), dithioester group (-CS₂R"), in which the R" group is C₁-C₅ alkyl, C₁-C₅ perfluoroalkyl, C₆-C₂₄ aryl, C₇-C₂₄ aralkyl, C₅-C₂₄ perfluoroaryl, alternatively, the two R" groups, taken together, form C₅-C₂₅ ring, which alternatively may contain at least one heteroatom selected from oxygen, sulfur, selenium, nitrogen, phosphorus.

13. Use of a compound of formula 1-Ru according to any of the claims 1 to 7 as a precatalyst and/or catalyst in olefin metathesis reactions, particularly in ring-closing metathesis (RCM), cross-metathesis (CM), homometathesis (cross-metathesis between two molecules of the same olefin), ethenolysis, isomerization, in diastereoselective ring rearrangement metathesis (DRRM) reaction, alkene-alkyne (ene-yne) metathesis or ROMP or ADMET polymerization reaction.

14. The use according to claim 13, wherein the olefin metathesis reactions are carried out with the catalyst and/or precatalyst **1-Ru** defined in any of the claims 1 to 7 in the presence of a compound having a structure represented by a formula selected from **3-Zn1, 3-Zn2, 3-Zn3,** 3-**Zn4, 3-Zn5, 3-Zn6, 3-Zn7, 3-Zn8, 3-Zn9, 3-Zn10, 3-Zn11, 3-Zn12, 3-Zn13, 3-K1** as defined in claim 11 in an
amount ranging from 0.0001 mol% to 200 mol%.

15. The use according to claim 13 or 14, wherein the reaction is carried out in an organic solvent selected from toluene, benzene, mesylene, hexane, dichloromethane, dichloroethane, chlorobenzene, perfluorobenzene, perfluorotoluene, ethyl acetate, methyl acetate, methyl carbonate, ethyl carbonate, methyl tert-butyl ether, cyclopentyl methyl ether, diethyl ether, THF, 2-ME-THF, 4-ME-THP, dioxane, DME, PAO, PEG, paraffin, esters of saturated fatty acids, or the reaction is carried out in a solvent-free system, and/or the reaction is carried out at a temperature of 20 to 200°C, and/or the reaction is carried out over a period of 5 minutes to 48 hours, and/or wherein the **1-Ru** compound is used in an amount of not more than 10 mol%, preferably not more than 0.1 mol%, and/or wherein the **1-Ru** compound is added to the reaction mixture portionwise in a solid form and/or continuously, using a pump, as a solution in an organic solvent, and/or wherein the gaseous by-product of the reaction, selected from ethylene, propylene, butylene, is actively removed from the reaction mixture using an inert gas barbotage or by vacuum.

## Patentansprüche

1. Rutheniumkomplex der Formel **1-Ru** 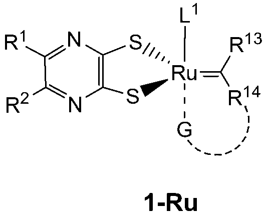 in der:
L¹ ein neutraler Ligand ausgewählt aus *N*-heterocyclischen Carbenen (NHCs),
cyclischen Alkylaminocarbenen (CAAC) oder Phosphinen ist;
R¹ und R² unabhängig Wasserstoff, Halogen, ein C₁-C₂₅-Alkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy, die optional durch mindestens ein C₁-C₁₂-Alkyl, C₁-C₁₂-Perfluoralkyl substituiert sind, oder R¹ und R² unabhängig eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"₃), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (-PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R") sind, in der die R"-Gruppe ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl ist, alternativ zwei R"-Gruppen zusammengenommen einen C₅-C₂₅-Ring bilden, die alternativ mindestens ein Heteroatom, ausgewählt aus Sauerstoff, Schwefel, Selen, Stickstoff, Phosphor enthalten können, optional zusätzlich substituiert mit einer C₁-C₁₂-Alkylgruppe, wobei das im heterocyclischen Ring vorhandene Heteroatom durch eine oder zwei C₁-C₁₂-Alkylgruppen substituiert sein kann, um eine quartäre Ammoniumgruppe, eine tertiäre Sulfoniumgruppe oder eine quartäre Phosphoniumgruppe zu bilden;
oder R¹ und R² zusammengenommen ein substituiertes oder unsubstituiertes cyclisches C₄-C₁₀- polycyclisches C₄-C₁₂-, aromatisches C₄-C₁₀-, heteroaromatisches C₄-C₁₀-System bilden, das durch einen und/oder mehrere Substituenten substituiert sein kann, ausgewählt aus Wasserstoff, Halogen, einer C₁-C₂₅-Alkylgruppe, einer C₁-C₁₂-Perfluoralkylgruppe, einer C₁-C₁₂-Alkoxygruppe, einer C₅-C₂₄-Aryloxygruppe, einer C₅-C₂₀-Heteroaryloxygruppe, einer C₂-C₂₅-Alkenylgruppe, einer Alkoxygruppe (-OR"), einer Sulfidgruppe (-SR"), einer Sulfoxidgruppe (-S(O)R"), einer Sulfoniumgruppe (-S⁺R"₂), einer Sulfonylgruppe (-SO₂R"), einer Sulfonamidgruppe (-SO₂NR"₂), einer Aminogruppe (-NR"₂), einer Ammoniumgruppe (-N⁺R"₃), einer Nitrogruppe (-NO₂), einer Cyanogruppe (-CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), einer Carboxylgruppe (-COOH), einer Estergruppe (-COOR"), einer Amidgruppe (-CONR"₂), einer Amidgruppe (-NR"C(O)R"), einer Formylgruppe (-CHO), einer Ketogruppe (-COR"), einer Thioamidgruppe (-CSNR"₂), einer Thioketongruppe (-CSR"), einer Thionoestergruppe (-CSOR"), einer Thioestergruppe (-COSR"), einer Dithioestergruppe (-CS₂R"), wobei die R"-Gruppe ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl ist, alternativ bilden die beiden R"-Gruppen zusammengenommen einen C₅-C₂₅-Ring, der alternativ mindestens ein Heteroatom enthalten kann, ausgewählt aus Sauerstoff, Schwefel, Selen, Stickstoff, Phosphor;
R¹³ und R¹⁴ unabhängig Wasserstoff, Halogen, ein optional substituiertes C₁-C₂₅-Alkyl, ein optional substituiertes C₃-C₂₅-Cycloalkyl, ein optional substituiertes C₁-C₁₂-Perfluoralkyl, ein optional substituiertes C₂-C₂₅-Alken, ein optional substituiertes C₂-C₂₅-Alkenyl, ein optional substituiertes C₃-C₂₅-Cycloalkenyl, ein optional substituiertes C₂-C₂₅-Alkinyl, ein optional substituiertes C₃-C₂₅-Cycloalkinyl, ein optional substituiertes C₁-C₂₅-Alkoxy, ein optional substituiertes C₅-C₂₅-Aryl, ein optional substituiertes C₅-C₂₅-Aryloxy, ein optional substituiertes C₆-C₂₅-Aralkyl, ein optional substituiertes C₅-C₂₅-Heteroaryl, ein optional substituiertes C₅-C₂₅-Heteroaryloxy, ein optional substituiertes C₅-C₂₅-Perfluoraryl, ein 3-12-gliedriger Heterocyclus enthaltend Schwefel, Sauerstoff, Stickstoff, Selen oder Phosphor, optional substituiert, sind;
wobei die Substituenten R¹³ und R¹⁴ zusammengenommen einen Ring bilden können, ausgewählt aus einer Gruppe, bestehend aus einem C₃-C₂₅-Cycloalkyl, einem C₃-C₂₅-Cycloalkenyl, einem C₃-C₂₅-Cycloalkinyl, einem C₅-C₂₅-Aryl, einem C₅-C₂₅-Heteroaryl, einem C₅-C₂₅-Perfluoraryl, einem 3-12-gliedrigen Heterocyclus enthaltend Schwefel, Sauerstoff, Stickstoff, Selen oder Phosphor, gegebenenfalls substituiert mit einem und/oder mehreren Substituenten, unabhängig ausgewählt aus einer Gruppe umfassend Wasserstoff, Halogen, ein C₁-C₂₅-Alkyl, ein C₃-C₂₅-Cycloalkyl, ein C₁-C₁₂-Perfluoralkyl, ein C₂-C₂₅-Alken, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Alkoxy, ein C₅-C₂₅-Aryl, ein C₅-C₂₅-Aryloxy, ein C₆-C₂₅-Arylalkyl, ein C₅-C₂₅-Heteroaryl, ein C₅-C₂₅-Heteroaryloxy, ein C₅-C₂₅-Perfluoraryl, einen 3-12-gliedrigen Heterocyclus;
G ist ausgewählt aus
- Ligand L²
L² = 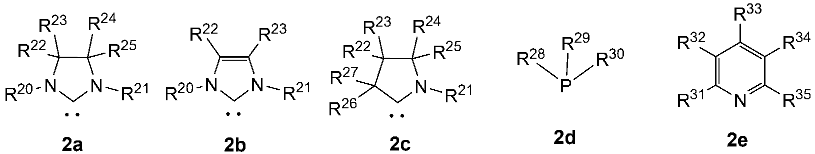
in denen die R²⁰ und R²¹ Substituenten unabhängig C₁-C₁₂-Alkylgruppen, C₃-C₁₂-Cycloalkylgruppen, C₅-C₂₀-Arylgruppen oder C₅-C₂₀-Heteroarylgruppen, C₅-C₂₅-Aralkylgruppen sind, die unabhängig substituiert sein können durch einen und/oder mehrere Substituenten ausgewählt aus einer Gruppe umfassend Wasserstoff, ein Halogen, ein C₁-C₁₂-Alkyl, ein C₁-C₁₂-Perfluoralkyl, ein C₅-C₂₀-Aryl, ein C₅-C₂₀-Perfluoraryl, ein C₅-C₂₀-Heteroaryl, ein C₁-C₁₂-Alkoxy, ein C₅-C₂₄-Aryloxy, ein C₅-C₂₀-Heteroaryloxy, ein Alkoxy (-OR"), ein Sulfid (-SR"), eine Aminogruppe (-NR"₂), wobei die R"-Gruppe unabhängig Wasserstoff, ein C₁-C₅-Alkyl, ein C₆-C₂₄-Aryl, ein C₇-C₂₄-Aralkyl ist, alternativ bilden R²⁰ und R²¹ zusammengenommen einen C₅-C₂₅-Ring;
jeder Substituent R²², R²³, R²⁴, R²⁵, R²⁶ und R²⁷ ist unabhängig Wasserstoff, ein Halogen, eine Hydroxylgruppe, eine C₁-C₁₂-Alkoxygruppe, eine Hydroxymethylgruppe (-CH₂OH), eine C₁-C₁₂-Alkylgruppe, die optional mit einer Aminogruppe (-NR^{a}₂) substituiert ist, in der jedes R^{a} unabhängig entweder Wasserstoff oder ein C₁-C₁₂-Alkyl ist, die beiden R^{a}-Gruppen zusammengenommen können entweder einen C₃-C₁₂-Cycloalkylring oder ein C₃-C₂₅-Heterocycloalkyl, eine C₃-C₁₂-Cycloalkylgruppe bilden; eine C₅-C₂₀-Arylgruppe, eine C₅-C₂₀-Heteroarylgruppe, eine Estergruppe (-OCOR^{b}), eine (-COR^{d})-Gruppe, eine Methylestergruppe (-CH₂OCOR^{b}), in der R^{b} entweder eine C₅-C₂₀-Arylgruppe oder eine C₅-C₂₀-Perfluorarylgruppe ist; eine Aminogruppe (-NR^{c}₂), eine Methylaminogruppe (-CH₂NR^{C}₂), in der jedes R^{c} unabhängig entweder Wasserstoff oder ein C₁-C₁₂-Alkyl ist, wobei die beiden R^{c}-Gruppen zusammengenommen einen C₃-C₁₂-Cycloalkylring oder ein C₃-C₂₅-Heterocycloalkyl, das Stickstoff, Sauerstoff oder Schwefel enthält, optional zusätzlich mit einer C₁-C₁₂-Alkylgruppe substituiert, bilden können, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden,
die unabhängig durch mindestens einen Substituenten substituiert sein können, ausgewählt aus einer Gruppe umfassend ein Hydroxyl (OH), ein C₁-C₁₂-Alkyl, ein C₁-C₁₂-Perfluoralkyl, ein C₁-C₁₂-Alkoxy, ein Halogen, ein C₃-C₁₂-Heterocycloalkyl, das optional mit einer C₁-C₁₂-Alkylgruppe substituiert ist, eine Estergruppe (-COOR^{d}) oder eine (-COR^{d})-Gruppe, in der R^{d} eine C₅-C₂₀-Arylgruppe oder eine C₋₅-C₂₀-Perfluorarylgruppe ist, oder eine Aminogruppe (-NR^{e}2), in der jedes R^{e} unabhängig Wasserstoff oder ein C₁-C₁₂-Alkyl ist, die beiden R^{e}-Gruppen zusammengenommen einen C₃-C₁₂-Cycloalkylring oder ein C₃-C₂₋₅-Heterocycloalkyl, das Stickstoff, Sauerstoff oder Schwefel enthält, optional zusätzlich mit einer C₁-C₁₂-Alkylgruppe substituiert, bilden können, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden, und R²⁰, R²¹, R²², R²³, R²⁴, R²⁵, R²⁶ und R²⁷ optional miteinander verbunden sein können, um ein cyclisches C₄-C₁₀-System oder ein polycyclisches C₄-C₁₂-System zu bilden;
jeder Substituent R²⁸-, R²⁹- und R³⁰ ist unabhängig ein C₁-C₂₅-Alkyl, ein C₃-C₁₂-Cycloalkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy, die optional durch mindestens ein C₁-C₁₂-Alkyl oder ein C₁-C₁₂-Perfluoralkyl substituiert sind, oder R²⁸, R²⁹, R³⁰ bilden zusammengenommen ein substituiertes oder unsubstituiertes cyclisches C₄-C₁₀-, polyzyklisches C₄-C₁₂-, aromatisches C₄-C₁₀- oder heteroaromatisches C₄-C₁₀-System, das durch einen und/oder mehrere Substituenten substituiert sein kann ausgewählt aus Wasserstoff, einem C₁-C₁₂-Alkyl-, einem C₁-C₁₂-Perfluoralkyl-, einem C₁-C₁₂-Alkoxy-, einem C₅-C₂₄-Aryloxy-, einem C₅-C₂₀-Heteroaryloxy und einem Halogen; jeder Substituent R³¹, R³², R³³, R³⁴ und **R³⁵** unabhängig eine C₁-C₁₂-Alkylgruppe, eine C₃-C₁₂-Cycloalkylgruppe, eine C₅-C₂₀-Arylgruppe oder eine C₅-C₂₀-Heteroarylgruppe ist, die unabhängig durch einen und/oder mehrere Substituenten substituiert sein können, ausgewählt aus einer Gruppe umfassend Wasserstoff, eine C₁-C₁₂-Alkylgruppe, eine C₁-C₁₂-Perfluoralkylgruppe, eine C₁-C₁₂-Alkoxygruppe, eine C₅-C₂₄-Aryloxygruppe, eine C₅-C₂₀-Heteroaryloxygruppe oder ein Halogen;
oder
- Heteroatom 1
ausgewählt aus einer Gruppe umfassend Sauerstoff, Schwefel, Selen, substituiert durch eine Gruppe ausgewählt aus Wasserstoff, einem Halogen, Sauerstoff, einem C₁-C₂₅-Alkyl, einem C₁-C₂₅-Perfluoralkyl, einem C₃-C₂₅-Cycloalkyl, einem C₅-C₂₀-Alkoxy, einem C₅-C₂₀-Aryl, einem C₅-C₂₀-Perfluoraryl, einem C₇-C₂₀-Aralkyl, einem C₅-C₂₄-Aryloxy, einem C₂-C₁₂-Alkenyl, einem C₆-C₂₀-Heteroaryl oder einem C₃-C₂₄-Heteroaryloxy, einem 3-12-gliedrigen Heterocyclus, optional substituiert durch eine Acyl (COR')-, Cyano (-CN), Carboxyl (-COOH)-, Ester (-COOR')-, Ester (-CH₂COOR')-, Ester (-CHR'COOR')-, Ester (-C(R')₂COOR')-, Amid (-CONR'₂)-, Weinreb-Typ Amid (-CON(R')(OR'))-, Sulfonsäure (-SO₂R')-, Formyl (-COH)-, Sulfonamid (-SO₂NR'₂)-, Keto (-COR')-, Thioamid (-CSNR'₂)-, Thioketo (CSR')-, Thionoester (-CSOR')-, Thioester (-COSR')- oder eine Dithioester (-CS₂R')-Gruppe, in denen die R'-Gruppe unabhängig ein C₁-C₂₅-Alkyl, ein C₁-C₂₅-Perfluoralkyl, ein C₃-C₂₅-Cycloalkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₂-C₁₂-Alkenyl, ein C₆-C₂₀-Heteroaryl, ein C₅-C₂₄-Heteroaryloxy ist, und dann repräsentiert die gestrichelte Linie eine direkte Bindung des Heteroatoms an den R¹⁴-Substituenten oder repräsentiert die Verbindung des R¹⁴-Substituenten mit dem Heteroatom über eine -CH₂-, -CHR'- oder CR'₂-Methylenbrücke, wobei der R¹⁴-Substituent ein C₅-C₁₅-Aryl ist, das optional durch 1-4 Substituenten substituiert ist, die unabhängig aus einer Gruppe ausgewählt sind umfassend Wasserstoff, ein Halogen, ein C₁-C₂₅-Alkyl, ein C₃-C₂₅-Cycloalkyl, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Perfluoralkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₆-C₂₀-Heteroaryl oder ein C₅-C₂₄-Heteroaryloxy, einen 3-12-gliedrigen Heterocyclus, eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"₃), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"2), eine Thioketongruppe (-CSR"), eine Thionoestergruppe (-CSOR"), eine Thioestergruppe (-COSR"), eine Dithioestergruppe (-CS₂R"), in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl ist; oder
- Heteroatom 2
ausgewählt aus einer Gruppe, die entweder Stickstoff oder Phosphor umfasst, substituiert durch eine Gruppe, ausgewählt aus Wasserstoff, Methyliden, optional substituiert durch einen R'-Substituenten, ein C₁-C₂₅-Alkyl, ein C₁-C₂₅-Perfluoralkyl, ein C₃-C₂₅-Cycloalkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy, einen 3-12-gliedrigen Heterocyclus, eine Acylgruppe (-COR'), eine Estergruppe (-COOR'), eine tert-Butyloxycarbonylgruppe (t-Boc) oder eine 9-Fluorenylmethoxycarbonylgruppe (Fmoc), eine Carbamatgruppe (-CONR'₂), eine Sulfongruppe (-SO₂R'), eine Formylgruppe (-COH), in denen die Gruppe R' eine C₁-C₂₅-Alkyl-, C₁-C₂₅-Perfluoralkyl-, C₃-C₂₅-Cycloalkyl-, C₅-C₂₀-Alkoxy-, C₅-C₂₀-Aryl-, C₅-C₂₀-Perfluoraryl-, C₇-C₂₀-Aralkyl-, C₅-C₂₄-Aryloxy-, C₂-C₁₂-Alkenyl-, C₆-C₂₀-Heteroaryl- oder C₅-C₂₄-Heteroaryloxygruppe, die optional substituiert ist durch eine Acyl (-COR")-, eine Cyano (-CN)-, Carboxyl (-COOH)-, Ester (-COOR")-, Ester (-CH₂COOr")-, Ester (-CHR'COOR")-, Ester (-C(R")- 2COOR"), Amid (-CONR"₂)-, Sulfonsäure (-SO₂R")-, Formyl (-COH)-, Sulfonamid (-SO₂NR"₂)-, Keto (-COR")-, Thioamid (-CSNR"₂)-, Thioketo (-CSR")-, Thionoester (-CSOR")-, Thioester (-COSR")-, Dithioester (-CS₂R")-Gruppe, in denen die Gruppe R" ein C₁-C₂₅-Alkyl, ein C₁-C₂₅-Perfluoralkyl, ein C₃-C₂₅-Cycloalkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy ist, und die gestrichelte Linie eine direkte Bindung des Heteroatoms an den R¹⁴-Substituenten darstellt oder die Verbindung des R¹⁴-Substituenten mit dem Heteroatom über eine (CH₂)-, -(CHR')- oder (CR'₂)-Methylenbrücke darstellt; wobei der R¹⁴-Substituent ein C₅-C₁₅-Aryl ist, das optional mit 1-4 Substituenten substituiert ist, die unabhängig aus einer Gruppe ausgewählt sind umfassend die Wasserstoff, ein Halogen, ein C₁-C₂₅-Alkyl, ein C₃-C₂₅-Cycloalkyl, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Perfluoralkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₆-C₂₀-Heteroaryl oder ein C₅-C₂₄-Heteroaryloxy ein 3-12-gliedriger Heterocyclus, eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"3), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R"), in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl ist, oder
- Heteroatom 3
ausgewählt aus einer Gruppe umfassend ein Halogen, und dann repräsentiert die gestrichelte Linie eine direkte Bindung des Heteroatoms an den R¹⁴-Substituenten, wobei der R¹⁴-Substituent ein C₅-C₁₅-Aryl oder ein C₅-C₂₅-Polyaryl ist, das optional mit 1-4 Substituenten substituiert ist, die unabhängig ausgewählt sind aus einer Gruppe umfassend Wasserstoff, ein Halogen, ein C₁-C₂₅-Alkyl, ein C₃-C₂₅-Cycloalkyl, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Perfluoralkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₆-C₂₀-Heteroaryl oder ein C₅-C₂₄-Heteroaryloxy, einen 3-12-gliedriger Heterocyclus, eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"3), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (-PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R"), in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl ist.

2. Rutheniumkomplex nach Anspruch 1, wobei die Substituenten R¹³ und R¹⁴ unabhängig Wasserstoff und/oder ein C₅-C₂₅-Aryl sind, das unabhängig substituiert ist mit Wasserstoff, einem Halogen, einer C₁-C₂₅-Alkylgruppe, einer C₂-C₂₅-Alkenylgruppe, einer Alkoxygruppe (-OR"), einer Sulfidgruppe (-SR"), einer Sulfoxidgruppe (-S(O)R"), einer Sulfoniumgruppe (-S⁺R"₂), einer Sulfonylgruppe (-SO₂R"), einer Sulfonamidgruppe (-SO₂NR"₂), einer Aminogruppe (-NR"₂), einer Ammoniumgruppe (-N⁺R"3), einer Nitrogruppe (-NO₂), einer Cyanogruppe (-CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), einer Carboxylgruppe (-COOH), einer Estergruppe (-COOR"), einer Amidgruppe (-CONR"₂), einer Amidgruppe (-NR"C(O)R"), einer Formylgruppe (-CHO), einer Ketogruppe (-COR"), einer Thioamidgruppe (-CSNR"₂), einer Thioketongruppe (-CSR"), einer Thionoesterguppe (-CSOR"), einer Thioestergruppe (-COSR"), einer Dithioestergruppe (-CS₂R"), bei denen die R"-Gruppe unabhängig Wasserstoff, C₁-C₅-Alkyl, C₁-C₅-Perfluoralkyl, C₆-C₂₄-Aryl, C₇-C₂₄-Aralkyl, C₅-C₂₄-Perfluoraryl ist, die beiden R"-Gruppen zusammengengenommen entweder einen C₃-C₁₂-Cycloalkylring oder einen C₃-C₂₅-Heterocycloalkylring, der Stickstoff, Sauerstoff oder Schwefel enthält, optional zusätzlich mit einer C₁-C₁₂-Alkylgruppe substituiert ist, bilden können, alternativ ist R" eine Ketogruppe (-COR^{c}), wobei R^{c} eine C₁-C₁₂-Perfluoralkyl- oder Alkoxygruppe (-OR^{d}) ist, in denen R^{d} eine C₁-C₁₂-Alkyl- oder C₃-C₁₂-Heterocycloalkylgruppe ist, die Stickstoff, Sauerstoff oder Schwefel enthält und optional zusätzlich mit einer C₁-C₁₂-Alkylgruppe substituiert ist;

3. Rutheniumkomplex nach Anspruch 1 oder 2,
in dem der neutrale L¹-Ligand eine Struktur aufweist, die durch eine aus **2a, 2b, 2c** oder **2d** ausgewählte allgemeine Formel dargestellt wird 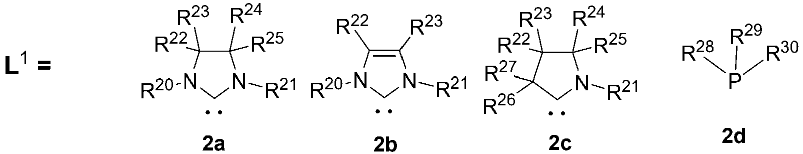 in denen
jeder Substituent R²⁰ und R²¹ unabhängig eine C₁-C₁₂-Alkylgruppe, eine C₃-C₁₂-Cycloalkylgruppe, eine C₅-C₂₀-Arylgruppe oder eine C₅-C₂₀-Heteroarylgruppe ist, die unabhängig durch einen und/oder mehrere Substituenten substituiert sein können, ausgewählt aus eine Gruppe umfassend Wasserstoff, eine C₁-C₁₂-Alkylgruppe, eine C₁-C₁₂-Perfluoralkylgruppe, eine C₅-C₂₀-Arylgruppe, eine C₅-C₂₀-Perfluorarylgruppe, eine C₅-C₂₀-Heteroarylgruppe, eine C₁-C₁₂-Alkoxygruppe, eine C₅-C₂₄-Aryloxygruppe, eine C₅-C₂₀-Heteroaryloxygruppe oder ein Halogen, eine Alkoxygruppe (-OR"), eine Sulfidgruppe (-SR"), ein Halogen, eine Aminogruppe (-NR"₂), bei denen die Gruppe R" unabhängig Wasserstoff, ein C₁-C₅-Alkyl, ein C₆-C₂₄-Aryl, ein C₇-C₂₄-Aralkyl ist, alternativ bilden R²⁰ und R²¹ zusammengengenommen eine Ringgruppe C₅-C₂₅;
jeder Substituent R²², R²³, R²⁴, R²⁵, R²⁶ und R²⁷ unabhängig Wasserstoff, ein Halogen, eine Hydroxylgruppe, eine C₁-C₁₂-Alkoxygruppe, eine Hydroxymethylgruppe (-CH₂OH), eine C₁-C₁₂-Alkylgruppe, die optional mit einer Aminogruppe (-NR^{a}₂) substituiert ist, wobei jedes R^{a} unabhängig entweder Wasserstoff oder ein C₁-C₁₂-Alkyl ist, die beiden R^{a}-Gruppen zusammengengenommen können entweder einen C₃-C₁₂-Cycloalkylring oder C₃-C₂₅-Heterocycloalkyl bilden, eine C₃-C₁₂-Cycloalkylgruppe; eine C₅-C₂₀-Arylgruppe, eine C₅-C₂₀-Heteroarylgruppe, eine Estergruppe (-OCOR^{b}), eine (-COR^{d})-Gruppe, eine Methylestergruppe (-CH₂OCOR^{b}), in denen R^{b} entweder eine C₅-C₂₀-Arylgruppe oder eine C₅-C₂₀-Perfluorarylgruppe ist; eine Aminogruppe (-NR^{C}₂), eine Methylaminogruppe (-CH₂NR^{C}₂) ist, in denen jedes R^{c} unabhängig entweder Wasserstoff oder ein C₁-C₁₂-Alkyl ist, die beiden R^{c}-Gruppen zusammengengenommen einen C₃-C₁₂-Cycloalkylring oder ein C₃-C₂₅-Heterocycloalkyl, das Stickstoff, Sauerstoff oder Schwefel enthält, optional zusätzlich mit einer C₁-C₁₂-Alkylgruppe substituiert ist, bilden können, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden,
die unabhängig durch mindestens einen Substituenten substituiert sein können, ausgewählt aus einer Gruppe umfassend Hydroxyl (OH), ein C₁-C₁₂-Alkyl, ein C₁-C₁₂-Perfluoralkyl, ein C₁-C₁₂-Alkoxy, ein Halogen, ein C₃-C₁₂-Heterocycloalkyl, das optional mit einer C₁-C₁₂-Alkylgruppe substituiert ist, eine Estergruppe (-COOR^{d}) oder eine (-COR^{d})-Gruppe, in denen R^{d} eine C₅-C₂₀-Arylgruppe oder eine C₅-C₂₀-Perfluorarylgruppe ist, oder eine Aminogruppe (-NR^{e}₂), in denen jedes R^{d} unabhängig Wasserstoff oder ein C₁-C₁₂-Alkyl ist, die beiden R^{e}-Gruppen zusammengengenommen einen C₃-C₁₂-Cycloalkylring oder einen C₃-C₂₅-Heterocycloalkylring, der Stickstoff, Sauerstoff oder Schwefel enthält, optional zusätzlich substituiert mit einer C₁-C₁₂-Alkylgruppe, bilden können, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden, und Substituenten R²⁰, R²¹, R²², R²³, R²⁴, R²⁵, R²⁶ und R²⁷ können optional miteinander verbunden sein, um ein cyclisches C₄-C₁₀-System oder ein polycyclisches C₄-C₁₂-System zu bilden;
R²⁸, R²⁹ und R³⁰ unabhängig ein C₁-C₂₅-Alkyl, ein C₃-C₁₂-Cycloalkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy sind, die optional durch mindestens ein C₁-C₁₂-Alkyl oder ein C₁-C₁₂-Perfluoralkyl substituiert sind, oder R¹ und R² zusammengengenommen ein substituiertes oder unsubstituiertes cyclisches C₄-C₁₀-, polyzyklisches C₄-C₁₂-, aromatisches C₄-C₁₀-, heteroaromatisches C₄-C₁₀-System bilden, das durch einen und/oder mehrere Substituenten substituiert sein kann ausgewählt aus Wasserstoff, einem C₁-C₁₂-Alkyl, einem C₁-C₁₂-Perfluoralkyl, einem C₁-C₁₂-Alkoxy, einem C₅-C₂₄-Aryloxy, einem C₅-C₂₀-Heteroaryloxy und einem Halogen.

4. Rutheniumkomplex nach Anspruch 1 oder 2 oder 3, dargestellt durch die Formel **1a-Ru** 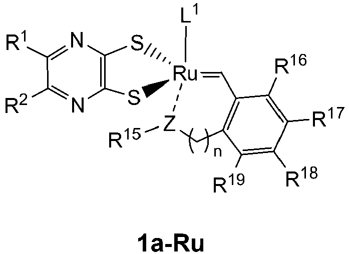 in der
L¹ ein neutraler Ligand ausgewählt aus N-heterocyclischen Carbenen (NHCs), cyclischen Alkylaminocarbenen (CAAC) oder Phosphinen ist;
'n' 1 oder 0 ist
Z ausgewählt ist aus einer Gruppe umfassend ein Halogen, O, S, Se oder eine NR"-Gruppe, in der R" Methyliden, ein C₁-C₂₅-Alkyl, ein C₁-C₂₅-Perfluoralkyl, ein C₃-C₂₅-Cycloalkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy, ein 3-12-gliedriger Heterocyclus, eine Acylgruppe (-COR'), eine Estergruppe (-COOR'), eine tert-Butyloxycarbonylgruppe (t-Boc) oder eine 9-Fluorenylmethoxycarbonylgruppe (Fmoc), eine Carbamatgruppe (-CONR'₂), eine Sulfongruppe (-SO₂R'), eine Formylgruppe (-COH) ist, in denen die Gruppe R' ein C₁-C₂₅-Alkyl, ein C₁-C₂₅-Perfluoralkyl, ein C₃-C₂₅-Cycloalkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy
oder ein Halogen ist, wobei, wenn Z ein Halogen ist, R¹⁵ nicht existiert;
R¹ und R² unabhängig Wasserstoff, ein Halogen, ein C₁-C₂₅-Alkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy sind, die optional durch mindestens ein C₁-C₁₂-Alkyl oder C₁-C₁₂-Perfluoralkyl substituiert sind, oder R¹ und R² zusammengengenommen ein substituiertes oder unsubstituiertes cyclisches C₄-C₁₀-, ein polyzyklisches C₄-C₁₂-, aromatisches C₄-C₁₀- oder heteroaromatisches C₄-C₁₀-System bilden, das durch einen und/oder mehrere Substituenten substituiert sein kann ausgewählt aus Wasserstoff, einem Halogen, einem C₁-C₁₂-Alkyl-, einem C₁-C₁₂-Perfluoralkyl, einem C₁-C₁₂-Alkoxy, einem C₅-C₂₄-Aryloxy, einem C₅-C₂₀-Heteroaryloxy, einer C₁-C₂₅-Alkylgruppe, einer C₂-C₂₅-Alkenylgruppe, einer Alkoxygruppe (-OR"), einer Sulfidgruppe (-SR"), einer Sulfoxidgruppe (-S(O)R"), einer Sulfoniumgruppe (-S⁺R"₂), einer Sulfonylgruppe (-SO₂R"), einer Sulfonamidgruppe (-SO₂NR"₂), einer Aminogruppe (-NR"₂), einer Ammoniumgruppe (-N⁺R"3), einer Nitrogruppe (-NO₂), einer Cyanogruppe (-CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), einer Carboxylgruppe (-COOH), einer Estergruppe (-COOR"), einer Amidgruppe (-CONR"₂), einer Amidgruppe (-NR"C(O)R"), einer Formylgruppe (-CHO), einer Ketogruppe (-COR"), einer Thioamidgruppe (-CSNR"₂), einer Thioketongruppe (-CSR"), einer Thionoestergruppe (-CSOR"), einer Thioestergruppe (-COSR"), einer Dithioestergruppe (-CS₂R"), in denen die Gruppe R" ein C₁-C₅-Alkyl, ein C₁-C₅-Perfluoralkyl, ein C₆-C₂₄-Aryl, ein C₇-C₂₄-Aralkyl oder ein C₅-C₂₄-Perfluoraryl ist;
R¹⁵ unabhängig Wasserstoff, ein C₁-C₂₅-Alkyl, ein C₁-C₂₅-Cycloalkyl, ein C₅-C₂₀-Alkoxy, ein C₅-C₂₀-Aryl, ein C₅-C₂₄-Aryloxy, eine -COOR"'-Gruppe, eine -CH₂COOR‴-Gruppe, eine -CONR‴2-Gruppe, eine -CH₂CONR‴₂-Gruppe, eine -COR‴-Gruppe, eine -CH₂COR‴-Gruppe, eine -CON(OR"')(R"')-Gruppe, eine -CH₂CON(OR‴)(R‴)-Gruppe oder ein Halogenatom ist, wobei R‴ ein C₁-C₁₂-Alkyl-, ein C₃-C₁₂-Cycloalkyl, ein C₂-C₁₂-Alkenyl, ein C₆-C₂₀-Aryl ist, die optional durch mindestens ein C₁-C₁₂-Alkyl, C₁-C₁₂-Perfluoralkyl, C₁-C₁₂-Alkoxy, C₆-C₂₄-Aryloxy oder Halogen substituiert sind;
R¹⁶, R¹⁷, R¹⁸ und R¹⁹ unabhängig Wasserstoff, ein Halogen, eine C₁-C₂₅-Alkylgruppe, eine C₂-C₂₅-Alkenylgruppe, eine C₅-C₂₅-Arylgruppe, eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"3), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R"), in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl ist, wobei Substituenten R¹⁶, R¹⁷ R¹⁸ und R¹⁹ zusammengengenommen ein substituiertes oder unsubstituiertes cyclisches C₄-C₁₀- oder polycyclisches C₄-C₁₂-System bilden können.

5. Rutheniumkomplex nach Anspruch 1 oder 2 oder 3 mit der Formel **1b-Ru** 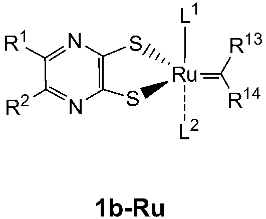 in der
L¹ ein neutraler Ligand ausgewählt aus *N*-heterocyclischen Carbenen (NHCs), cyclischen Alkylaminocarbenen (CAAC) oder PR3-Phosphinen ist;
L² ein neutraler Ligand ausgewählt aus *N*-heterocyclischen Carbenen (NHCs), cyclischen Alkylaminocarbenen (CAAC), PR₃-Phosphinderivaten oder Pyridinderivaten ist;
R¹ und R² unabhängig Wasserstoff, ein Halogen, ein C₁-C₂₅-Alkyl-, ein C₅-C₂₀-Alkoxy-, ein C₅-C₂₀-Aryl-, ein C₇-C₂₀-Aralkyl-, ein C₅-C₂₄-Aryloxy-, ein C₂-C₁₂-Alkenyl-, ein C₆-C₂₀-Heteroaryl oder ein C₅-C₂₄-Heteroaryloxy sind, die optional durch mindestens ein C₁-C₁₂-Alkyl oder ein C₁-C₁₂-Perfluoralkyl substituiert sind, oder R¹ und R² zusammengengenommen ein substituiertes oder unsubstituiertes cyclisches C₄-C₁₀-, polycyclisches C₄-C₁₂-, aromatisches C₄-C₁₀-, heteroaromatisches C₄-C₁₀-System bilden, das durch einen und/oder mehrere Substituenten substituiert sein kann ausgewählt aus Wasserstoff, einem Halogen, einer C₁-C₂₅-Alkylgruppe, einer C₁-C₁₂-Perfluoralkylgruppe, einer C₁-C₁₂-Alkoxygruppe, einer C₅-C₂₄-Aryloxygruppe, einer C₅-C₂₀-Heteroaryloxygruppe, einer C₂-C₂₅-Alkenylgruppe, einer Alkoxygruppe (-OR"), einer Sulfidgruppe (-SR"), einer Sulfoxidgruppe (-S(O)R"), einer Sulfoniumgruppe (-S⁺R"₂), einer Sulfonylgruppe (-SO₂R'), einer Sulfonamidgruppe (-SO₂NR"₂), einer Aminogruppe (-NR"₂), einer Ammoniumgruppe (-N⁺R"3), einer Nitrogruppe (-NO₂), einer Cyanogruppe (-CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), einer Carboxylgruppe (-COOH), einer Estergruppe (-COOR"), einer Amidgruppe (-CONR"₂), einer Amidgruppe (-NR"C(O)R"), einer Formylgruppe (-CHO), einer Ketogruppe (-COR"), einer Thioamidgruppe (-CSNR"₂), einer Thioketogruppe (-CSR"), einer Thionoestergruppe (-CSOR"), einer Thioestergruppe (-COSR"), einer Dithioestergruppe (-CS₂R"), in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl ist, alternativ zwei R"-Gruppen zusammengengenommen einen C₅-C₂₅-Ring bilden, welcher alternativ mindestens ein Heteroatom ausgewählt aus Sauerstoff, Schwefel, Selen, Stickstoff, Phosphor enthalten kann; R¹³ und R¹⁴ unabhängig Wasserstoff, ein Halogen, ein optional substituiertes C₁-C₂₅-Alkyl, ein optional substituiertes C₃-C₂₅-Cycloalkyl, ein optional substituiertes C₁-C₁₂-Perfluoralkyl, ein optional substituiertes C₂-C₂₅-Alken, ein optional substituiertes C₂-C₂₅-Alkenyl, ein optional substituiertes C₃-C₂₅-Cycloalkenyl, ein optional substituiertes C₂-C₂₅-Alkinyl, ein optional substituiertes C₃-C₂₅-Cycloalkinyl, ein optional substituiertes C₁-C₂₅-Alkoxy, ein optional substituiertes C₅-C₂₅-Aryl, ein optional substituiertes C₅-C₂₅-Aryloxy, ein optional substituiertes C₆-C₂₅-Arylalkyl,ein optional substituiertes C₅-C₂₅-Heteroaryl, ein optional substituiertes C₅-C₂₅-Heteroaryloxy, ein optional substituiertes C₅-C₂₅-Perfluoraryl, ein 3-12-gliedriger Heterocyclus, der Schwefel, Sauerstoff, Stickstoff, Selen oder Phosphor enthält, optional substituiert, sind;
wobei Substituenten R¹³ und R¹⁴ zusammengengenommen einen Ring bilden können, ausgewählt aus einer Gruppe umfassend ein C₃-C₂₅-Cycloalkyl, ein C₃-C₂₅-Cycloalkenyl, ein C₃-C₂₅-Cycloalkinyl, ein C₅-C₂₅-Aryl, ein C₅-C₂₅-Heteroaryl, ein C₅-C₂₅-Perfluoraryl, einen 3-12-gliedrigen Heterocyclus, die Schwefel, Sauerstoff, Stickstoff, Selen oder Phosphor enthalten und unabhängig mit einem und/oder mehreren Substituenten substituiert sein können, ausgewählt aus einer Gruppe umfassend Wasserstoff, ein Halogen, ein C₁-C₂₅-Alkyl, ein C₃-C₂₅-Cycloalkyl, ein C₁-C₁₂-Perfluoralkyl, ein C₂-C₂₅-Alken, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Alkoxy, ein C₅-C₂₅-Aryl, ein C₅-C₂₅-Aryloxy, ein C₆-C₂₅-Arylalkyl, ein C₅-C₂₅-Heteroaryl, ein C₅-C₂₅-Heteroaryloxy, ein C₅-C₂₅-Perfluoraryl, einen 3-12-gliedrigen Heterocyclus.

6. Rutheniumkomplex nach einem der Ansprüche 1 bis 5 mit der Formel **1b-Ru** 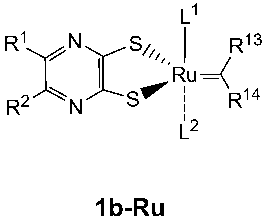
in dem der L¹-Ligand 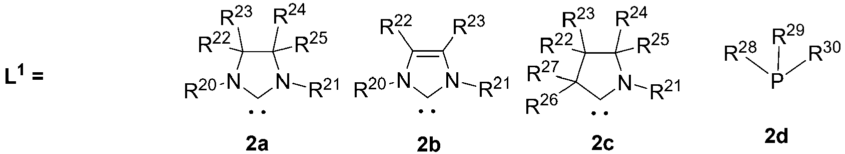
ist
in denen
jeder Substituent R²⁰ und R²¹ unabhängig eine C₁-C₁₂-Alkylgruppe, eine C₃-C₁₂-Cycloalkylgruppe, eine C₅-C₂₀-Arylgruppe oder eine C₅-C₂₀-Heteroarylgruppe ist, die unabhängig durch einen und/oder mehrere Substituenten substituiert sein können, ausgewählt aus einer Gruppe umfassend Wasserstoff, eine C₁-C₁₂-Alkylgruppe, eine C₁-C₁₂-Perfluoralkylgruppe, eine C₅-C₂₀-Arylgruppe, eine C₅-C₂₀-Perfluorarylgruppe, eine C₅-C₂₀-Heteroarylgruppe, eine C₁-C₁₂-Alkoxygruppe, eine C₅-C₂₄-Aryloxygruppe, eine C₅-C₂₀-Heteroaryloxygruppe oder ein Halogen, eine Alkoxygruppe (-OR"), eine Sulfidgruppe (-SR"), ein Halogen, eine Aminogruppe (-NR"₂), in denen die Gruppe R" unabhängig Wasserstoff, ein C₁-C₅-Alkyl, ein C₆-C₂₄-Aryl, ein C₇-C₂₄-Aralkyl ist, alternativ bilden R²⁰ und R²¹ zusammengenommen eine Ring C₅-C₂₅-Gruppe;
jeder Substituent R²⁰, R²¹, R²², R²³, R²⁴, R²⁵, R²⁶ und R²⁷ unabhängig Wasserstoff, ein Halogen, eine Hydroxylgruppe, eine C₁-C₁₂-Alkoxygruppe, eine Hydroxymethylgruppe (-CH₂OH), eine C₁-C₁₂-Alkylgruppe, die optional mit einer Aminogruppe (-NR^{a}₂) substituiert ist, in der jedes R^{a} unabhängig entweder Wasserstoff oder ein C₁-C₁₂-Alkyl, wobei die beiden R^{a}-Gruppen zusammengenommen entweder einen C₃-C₁₂-Cycloalkylring oder ein C₃-C₂₅-Heterocycloalkyl, eine C₃-C₁₂-Cycloalkylgruppe bilden können; eine C₅-C₂₀-Arylgruppe, eine C₅-C₂₀-Heteroarylgruppe, eine Estergruppe (-OCOR^{b}), eine (-COR^{d})-Gruppe, eine Methylestergruppe (-CH₂OCOR^{b}), in denen R^{b} entweder eine C₅-C₂₀-Arylgruppe oder eine C₅-C₂₀-Perfluorarylgruppe; eine Aminogruppe (-NR^{c}₂), eine Methylaminogruppe (-CH₂NR^{c}₂) ist, in denen jedes R^{c} unabhängig entweder Wasserstoff oder ein C₁-C₁₂-Alkylrest ist, wobei die beiden R^{c}-Gruppen zusammen einen C₃-C₁₂-Cycloalkylring oder einen C₃-C₂₅-Heterocycloalkylring, der Stickstoff, Sauerstoff oder Schwefel enthält, optional zusätzlich mit einer C₁-C₁₂-Alkylgruppe substituiert, bilden können, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden,
die unabhängig durch mindestens einen Substituenten substituiert sein können, ausgewählt aus einer Gruppe umfassend Hydroxyl (OH), ein C₁-C₁₂-Alkyl, ein C₁-C₁₂-Perfluoralkyl, ein C₁-C₁₂-Alkoxy, ein Halogen, ein optional mit einer C₁-C₁₂-Alkylgruppe substituiertes C₃-C₁₂-Heterocycloalkyl, eine Estergruppe (-COOR^{d}) oder eine (-COR^{d})-Gruppe, in denen R^{d} eine C₅-C₂₀-Arylgruppe oder eine C₅-C₂₀-Perfluorarylgruppe ist, oder eine Aminogruppe (-NR^{e}2), in denen jedes R^{d} unabhängig Wasserstoff oder ein C₁-C₁₂-Alkyl ist, wobei die beiden R^{e}-Gruppen zusammengenommen einen C₃-C₁₂-Cycloalkylring oder ein C₃-C₂₅-Heterocycloalkyl, das Stickstoff, Sauerstoff oder Schwefel enthält, optional zusätzlich mit einer C₁-C₁₂-Alkylgruppe substituiert, bilden können, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden, und Substituenten R²⁰, R²¹, R²², R²³, R²⁴, R²⁵, R²⁶ und R²⁷ optional miteinander verbunden sein können, um ein cyclisches C₄-C₁₀-System oder ein polycyclisches C₄-C₁₂-System zu bilden;
R²⁸, R²⁹ und R³⁰ unabhängig ein C₁-C₂₅-Alkyl, ein C₃-C₁₂-Cycloalkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, C₆-C₂₀-Heteroaryl oder C₅-C₂₄-Heteroaryloxy sind, die optional durch mindestens ein C₁-C₁₂-Alkyl oder C₁-C₁₂-Perfluoralkyl substituiert sind, oder R²⁸, R²⁹ und R³⁰ zusammengenommen ein substituiertes oder unsubstituiertes cyclisches C₄-C₁₀-, polycyclisches C₄-C₁₂-, aromatisches C₄-C₁₀-, heteroaromatisches C₄-C₁₀-System bilden, das durch einen und/oder mehrere Substituenten substituiert sein kann, ausgewählt aus Wasserstoff, einem C₁-C₁₂-Alkyl, einem C₁-C₁₂-Perfluoralkyl, einem C₁-C₁₂-Alkoxy, einem C₅-C₂₄-Aryloxy, einem C₅-C₂₀-Heteroaryloxy und einem Halogen;
in dem der L¹-Ligand 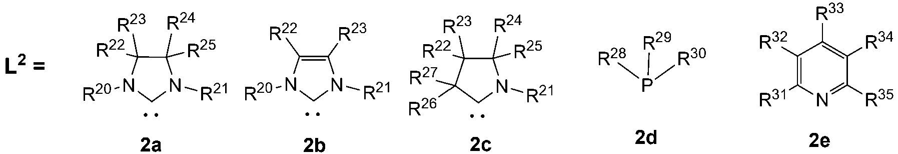
ist
in denen
jeder Substituent R²⁰ und R²¹ unabhängig eine C₁-C₁₂-Alkylgruppe, eine C₃-C₁₂-Cycloalkylgruppe, eine C₅-C₂₀-Arylgruppe oder eine C₅-C₂₀-Heteroarylgruppe ist, die unabhängig durch einen und/oder mehrere Substituenten substituiert sein können, ausgewählt aus einer Gruppe umfassend Wasserstoff, eine C₁-C₁₂-Alkylgruppe, eine C₁-C₁₂-Perfluoralkylgruppe, eine C₅-C₂₀-Arylgruppe, eine C₅-C₂₀-Perfluorarylgruppe, eine C₅-C₂₀-Heteroarylgruppe, eine C₁-C₁₂-Alkoxygruppe, eine C₅-C₂₄-Aryloxygruppe, eine C₅-C₂₀-Heteroaryloxygruppe oder ein Halogen, eine Alkoxygruppe (-OR"), eine Sulfidgruppe (-SR"), ein Halogen, eine Aminogruppe (-NR"₂), bei denen die Gruppe R" unabhängig Wasserstoff, ein C₁-C₅-Alkyl, ein C₆-C₂₄-Aryl, ein C₇-C₂₄-Aralkyl ist, alternativ bilden R²⁰ und R²¹ zusammengengenommen eine Ringgruppe C₅-C₂₅;
jeder Substituent R²², R²³, R²⁴, R²⁵, R²⁶ und R²⁷ unabhängig Wasserstoff, ein Halogen, eine Hydroxylgruppe, eine C₁-C₁₂-Alkoxygruppe, eine Hydroxymethylgruppe (-CH₂OH), eine C₁-C₁₂-Alkylgruppe, die optional mit einer Aminogruppe (-NR^{a}₂) substituiert ist, in der jedes R^{a} unabhängig entweder Wasserstoff oder ein C₁-C₁₂-Alkyl ist, wobei die beiden R^{a}-Gruppen zusammengenommen können entweder einen C₃-C₁₂-Cycloalkylring oder ein C₃-C₂₅-Heterocycloalkyl, eine C₃-C₁₂-Cycloalkylgruppe bilden; eine C₅-C₂₀-Arylgruppe, eine C₅-C₂₀-Heteroarylgruppe, eine Estergruppe (-OCOR^{b}), eine (-COR^{d})-Gruppe, eine Methylestergruppe (-CH₂OCOR^{b}), in der R^{b} entweder eine C₅-C₂₀-Arylgruppe oder eine C₅-C₂₀-Perfluorarylgruppe ist; eine Aminogruppe (-NR^{C}₂), eine Methylaminogruppe (-CH₂NR^{C}₂), ist, in der jedes R^{c} unabhängig entweder Wasserstoff oder ein C₁-C₁₂-Alkyl ist, wobei die beiden R^{c}-Gruppen zusammengenommen einen C₃-C₁₂-Cycloalkylring oder ein C₃-C₂₅-Heterocycloalkyl, der Stickstoff, Sauerstoff oder Schwefel enthält, optional zusätzlich mit einer C₁-C₁₂-Alkylgruppe substituiert, bilden können, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden,
die unabhängig durch mindestens einen Substituenten substituiert sein können, ausgewählt aus einer Gruppe umfassend Hydroxyl (OH), ein C₁-C₁₂-Alkyl, ein C₁-C₁₂-Perfluoralkyl, ein C₁-C₁₂-Alkoxy, ein Halogen, ein C₃-C₁₂-Heterocycloalkyl, das optional mit einer C₁-C₁₂-Alkylgruppe substituiert ist, eine Estergruppe (-COOR^{d}) oder eine (-COR^{d})-Gruppe, in denen R^{d} eine C₅-C₂₀-Arylgruppe oder eine C₅-C₂₀-Perfluorarylgruppe ist, oder eine Aminogruppe (-NR^{e}₂), in denen jedes R^{d} unabhängig Wasserstoff oder ein C₁-C₁₂-Alkyl ist, die beiden R^{e}-Gruppen können zusammengengenommen einen C₃-C₁₂-Cycloalkylring oder einen C₃-C₂₅-Heterocycloalkylring bilden, der Stickstoff, Sauerstoff oder Schwefel enthält, optional zusätzlich substituiert mit einer C₁-C₁₂-Alkylgruppe, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden, und Substituenten R²⁰, R²¹, R²², R²³, R²⁴, R²⁵, R²⁶ und R²⁷ können optional miteinander verbunden sein, um ein C₄-C₁₀ cyclisches System oder ein C₄-C₁₂ polycyclisches System zu bilden;
jeder Substituent R²⁸, R²⁹ und R³⁰ unabhängig Wasserstoff, ein Halogen, ein C₁-C₂₅-Alkyl, ein C₃-C₁₂-Cycloalkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, C₆-C₂₀-Heteroaryl oder C₅-C₂₄-Heteroaryloxy sind, die optional durch mindestens ein C₁-C₁₂-Alkyl oder C₁-C₁₂-Perfluoralkyl substituiert sind, oder R²⁸, R²⁹ und R³⁰ zusammengenommen ein substituiertes oder unsubstituiertes cyclisches C₄-C₁₀-, polycyclisches C₄-C₁₂-, aromatisches C₄-C₁₀-, heteroaromatisches C₄-C₁₀-System bilden, das durch einen und/oder mehrere Substituenten substituiert sein kann, ausgewählt aus Wasserstoff, einem C₁-C₁₂-Alkyl, einem C₁-C₁₂-Perfluoralkyl, einem C₁-C₁₂-Alkoxy, einem C₅-C₂₄-Aryloxy, einem C₅-C₂₀-Heteroaryloxy und einem Halogen;
jeder Substituent R³¹, R³², R³³, R³⁴ und R³⁵ unabhängig Wasserstoff, ein Halogen, eine C₁-C₁₂-Alkylgruppe, eine C₃-C₁₂-Cycloalkylgruppe, eine C₅-C₂₀-Arylgruppe oder eine C₅-C₂₀-Heteroarylgruppe ist, die unabhängig durch einen und/oder mehrere Substituenten substituiert sein können, ausgewählt aus einer Gruppe umfassend Wasserstoff, eine C₁-C₁₂-Alkylgruppe, eine C₁-C₁₂-Perfluoralkylgruppe, eine C₁-C₁₂-Alkoxygruppe, eine C₅-C₂₄-Aryloxygruppe, eine C₅-C₂₀-Heteroaryloxygruppe oder ein Halogen;
R¹³ und R¹⁴ unabhängig Wasserstoff, Halogen, ein optional substituiertes C₁-C₂₅-Alkyl, ein optional substituiertes C₃-C₂₅-Cycloalkyl, ein optional substituiertes C₁-C₁₂-Perfluoralkyl, ein optional substituiertes C₂-C₂₅-Alken, ein optional substituiertes C₂-C₂₅-Alkenyl, ein optional substituiertes C₃-C₂₅-Cycloalkenyl, ein optional substituiertes C₂-C₂₅-Alkinyl, ein optional substituiertes C₃-C₂₅-Cycloalkinyl, ein optional substituiertes C₁-C₂₅-Alkoxy, ein optional substituiertes C₅-C₂₅-Aryl, ein optional substituiertes C₅-C₂₅-Aryloxy, ein optional substituiertes C₆-C₂₅-Aralkyl, ein optional substituiertes C₅-C₂₅-Heteroaryl, ein optional substituiertes C₅-C₂₅-Heteroaryloxy, ein optional substituiertes C₅-C₂₅-Perfluoraryl, ein 3-12-gliedriger Heterocyclus enthaltend Schwefel, Sauerstoff, Stickstoff, Selen oder Phosphor, optional substituiert, sind;
wobei Substituenten R¹³ und R¹⁴ zusammengengenommen einen Ring bilden können, ausgewählt aus einer Gruppe umfassend ein C₃-C₂₅-Cycloalkyl, ein C₃-C₂₅-Cycloalkenyl, ein C₃-C₂₅-Cycloalkinyl, ein C₅-C₂₅-Aryl, ein C₅-C₂₅-Heteroaryl, ein C₅-C₂₅-Perfluoraryl, einen 3-12-gliedrigen Heterocyclus, die Schwefel, Sauerstoff, Stickstoff, Selen oder Phosphor enthalten und unabhängig mit einem und/oder mehreren Substituenten substituiert sein können, ausgewählt aus einer Gruppe umfassend Wasserstoff, ein Halogen, ein C₁-C₂₅-Alkyl, ein C₃-C₂₅-Cycloalkyl, ein C₁-C₁₂-Perfluoralkyl, ein C₂-C₂₅-Alken, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Alkoxy, ein C₅-C₂₅-Aryl, ein C₅-C₂₅-Aryloxy, ein C₆-C₂₅-Arylalkyl, ein C₅-C₂₅-Heteroaryl, ein C₅-C₂₅-Heteroaryloxy, ein C₅-C₂₅-Perfluoraryl, einen 3-12-gliedrigen Heterocyclus.

7. Rutheniumkomplex nach einem der Ansprüche 1 bis 6, **dadurch gekennzeichnet, dass** seine Struktur durch eine Formel dargestellt wird, die ausgewählt ist aus

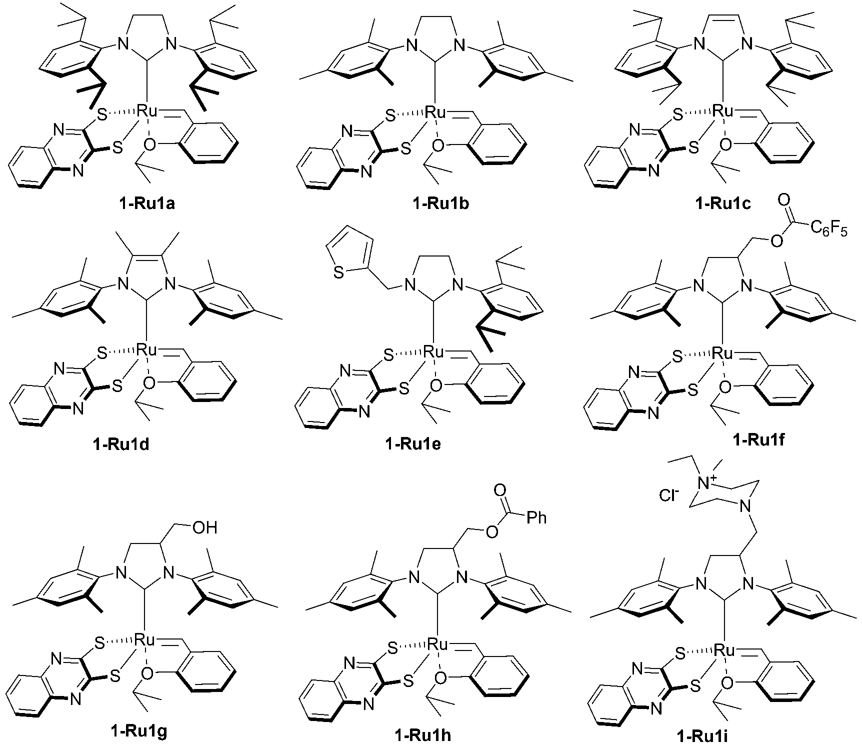

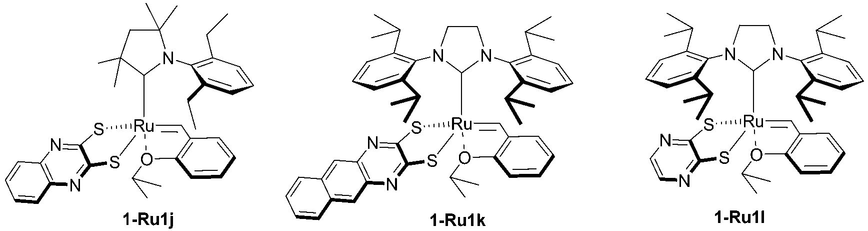

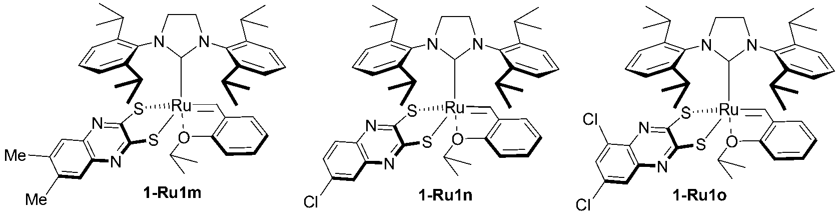

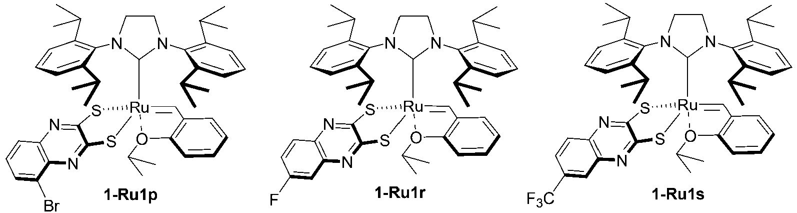

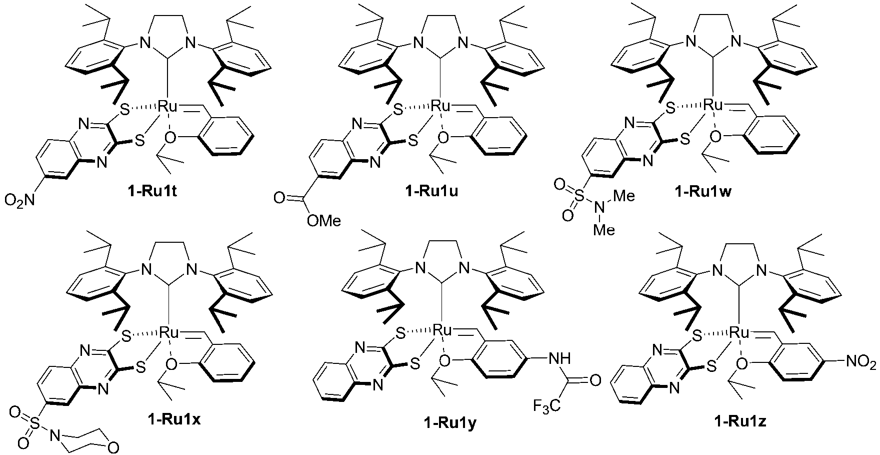

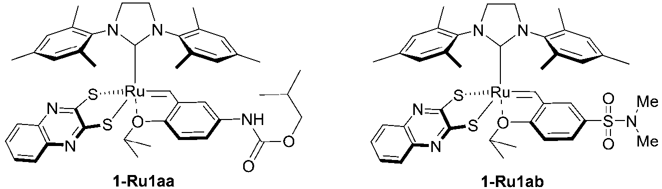

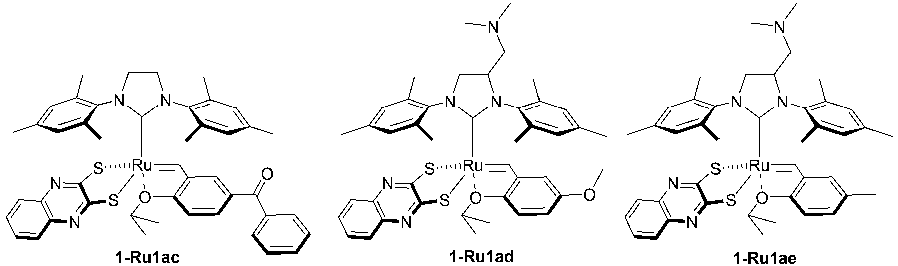

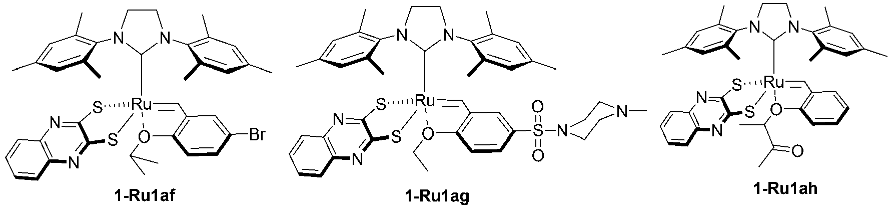

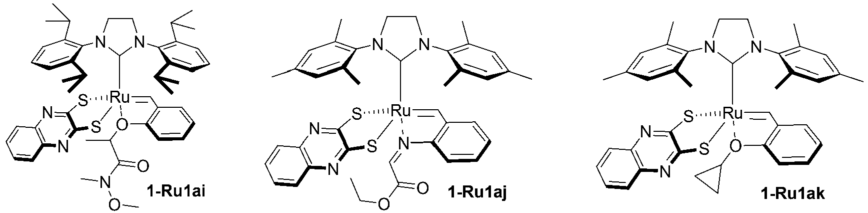

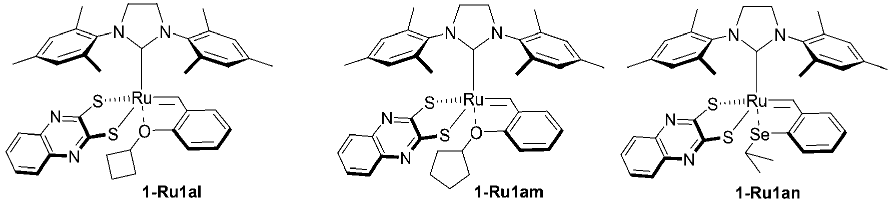

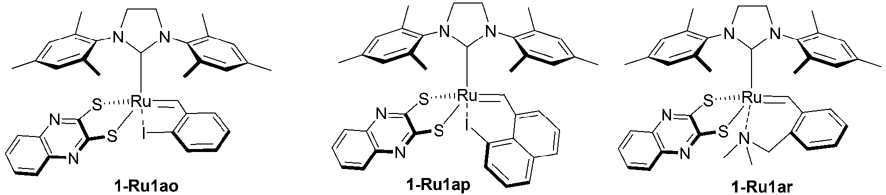

8. Verbindung mit der durch Formel **3a** oder **3b** definierten Struktur 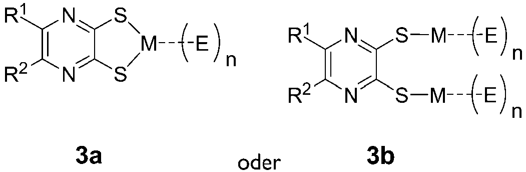 in denen
M ein monovalentes oder divalentes Metallkation ist;
n 0, 1, 2 oder 3 ist;
E mindestens ein Heteroatom, ausgewählt aus einer Gruppe umfassend Sauerstoff, Schwefel, Selen, Stickstoff, Phosphor ist, die mit einer Gruppe substituiert sind, oder, wenn das Heteroatom Stickstoff oder Phosphor ist, mit Gruppen: C₁-C₂₅-Alkylgruppe, C₁-C₂₅-Cycloalkylgruppe, C₅-C₂₀-Alkoxygruppe, C₅-C₂₀-Arylgruppe, C₇-C₂₀-Aralkylgruppe, C₅-C₂₄-Aryloxygruppe, C₂-C₁₂-Alkenylgruppe, C₆-C₂₀-Heteroarylgruppe, C₅-C₂₄-Heteroaryloxygruppe oder Wasserstoff, die optional durch mindestens eine C₁-C₁₂-Alkyl- oder C₁-C₁₂-Perfluoralkylgruppe substituiert sind, oder, wenn zwei identische oder unterschiedliche Heteroatome ein Chelatsystem bilden, dann bilden sie zusammengenommen ein substituiertes oder unsubstituiertes cyclisches C₄-C₁₀-, polycyclisches C₄-C₁₂-, aromatisches C₄-C₁₀-, heteroaromatisches C₄-C₁₀-System, das durch einen und/oder mehrere Substituenten substituiert sein kann, ausgewählt aus Wasserstoff, einem C₁-C₁₂-Alkyl, einem C₁-C₁₂-Perfluoralkyl, einem C₁-C₁₂-Alkoxy, einem C₅-C₂₄-Aryloxy, einem C₅-C₂₀-Heteroaryloxy und einem Halogen;
R¹ und R² unabhängig Wasserstoff, ein Halogen, ein C₁-C₂₅-Alkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy sind, die optional durch mindestens ein C₁-C₁₂-Alkyl oder C₁-C₁₂-Perfluoralkyl substituiert sind, oder R¹ und R² unabhängig eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R'), eine Sulfonamidgruppe (-SO₂NR"₂), eine Aminogruppe (-NR"₂), eine Ammoniumgruppe (-N⁺R"3), eine Nitrogruppe (-NO₂), eine Cyanogruppe ( -CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R") sind, in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl sind, alternativ zwei R"-Gruppen zusammengenommen einen C₅-C₂₅-Ring bilden, die alternativ mindestens ein Heteroatom, ausgewählt aus Sauerstoff, Schwefel, Selen, Stickstoff, Phosphor enthalten können, optional zusätzlich substituiert mit einer C₁-C₁₂-Alkylgruppe, wobei das im heterocyclischen Ring vorhandene Heteroatom durch eine oder zwei C₁-C₁₂-Alkylgruppen substituiert sein kann, um eine quartäre Ammoniumgruppe, eine tertiäre Sulfoniumgruppe oder eine quartäre Phosphoniumgruppe zu bilden,
oder R¹ und R² zusammengenommen einen substituiertes oder unsubstituiertes cyclisches C₄-C₁₀-, polycyclisches C₄-C₁₂-, aromatisches C₄-C₁₀-, heteroaromatisches C₄-C₁₀-, polyaromatisches C₄-C₁₀- und polyheteroaromatisches C₄-C₁₀-System bilden, das durch einen und/oder mehrere Substituenten substituiert sein kann ausgewählt aus Wasserstoff, einem Halogen, einer C₁-C₂₅-Alkylgruppe, einer C₁-C₁₂-Perfluoralkylgruppe, einer C₁-C₁₂-Alkoxygruppe, einer C₅-C₂₄-Aryloxygruppe, einer C₅-C₂₀-Heteroaryloxygruppe, einer C₂-C₂₅-Alkenylgruppe, einer Alkoxygruppe (-OR"), einer Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"₃), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (-PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R") sind, in der die R"-Gruppe ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl ist, alternativ zwei R"-Gruppen zusammengenommen einen C₅-C₂₅-Ring bilden, die alternativ mindestens ein Heteroatom, ausgewählt aus Sauerstoff, Schwefel, Selen, Stickstoff, Phosphor enthalten können.

9. Verbindung **3c** oder **3d** oder **3e** nach Anspruch 8 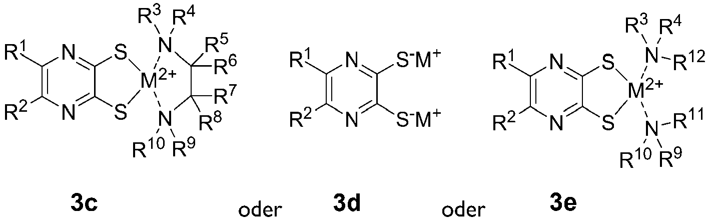 in denen
M²⁺ Zn, Cu, Mg, ein Ca-Kation ist,
M⁺ Li, Na, K, Cs, Cu oder ein Cu×(E)ₙ-Kation ist
n 1 oder 2 ist;
R¹ und R² unabhängig Wasserstoff, ein Halogen, ein C₁-C₂₅-Alkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy sind, die optional durch mindestens ein C₁-C₁₂-Alkyl oder C₁-C₁₂-Perfluoralkyl substituiert sind, oder R¹ und R² unabhängig eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R'), eine Sulfonamidgruppe (-SO₂NR"₂), eine Aminogruppe (-NR"₂), eine Ammoniumgruppe (-N⁺R"3), eine Nitrogruppe (-NO₂), eine Cyanogruppe ( -CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R") sind, in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl sind, alternativ zwei R"-Gruppen zusammengenommen einen C₅-C₂₅-Ring bilden, die alternativ mindestens ein Heteroatom, ausgewählt aus Sauerstoff, Schwefel, Selen, Stickstoff, Phosphor enthalten können, optional zusätzlich substituiert mit einer C₁-C₁₂-Alkylgruppe, wobei das im heterocyclischen Ring vorhandene Heteroatom durch eine oder zwei C₁-C₁₂-Alkylgruppen substituiert sein kann, um eine quartäre Ammoniumgruppe, eine tertiäre Sulfoniumgruppe oder eine quartäre Phosphoniumgruppe zu bilden,
oder R¹ und R² zusammengenommen einen substituiertes oder unsubstituiertes cyclisches C₄-C₁₀-, polycyclisches C₄-C₁₂-, aromatisches C₄-C₁₀-, heteroaromatisches C₄-C₁₀-, polyaromatisches C₄-C₁₀- und polyheteroaromatisches C₄-C₁₀-System bilden, das durch einen und/oder mehrere Substituenten substituiert sein kann ausgewählt aus Wasserstoff, einem Halogen, einer C₁-C₂₅-Alkylgruppe, einer C₁-C₁₂-Perfluoralkylgruppe, einer C₁-C₁₂-Alkoxygruppe, einer C₅-C₂₄-Aryloxygruppe, einer C₅-C₂₀-Heteroaryloxygruppe, einer C₂-C₂₅-Alkenylgruppe, einer Alkoxygruppe (-OR"), einer Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"₃), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (-PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R") sind, in der die R"-Gruppe ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl ist, alternativ zwei R"-Gruppen zusammengenommen einen C₅-C₂₅-Ring bilden, die alternativ mindestens ein Heteroatom, ausgewählt aus Sauerstoff, Schwefel, Selen, Stickstoff, Phosphor enthalten können;
R³, R⁴, R⁵, R⁶, R⁷, R⁸, R⁹, R¹⁰, R¹¹ und R¹² unabhängig Wasserstoff, ein C₁-C₂₅-Alkyl, ein C₁-C₂₅-Cycloalkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy sind, die optional durch mindestens ein C₁-C₁₂-Alkyl oder C₁-C₁₂-Perfluoralkyl substituiert sind, oder zwei ausgewählte Substituenten R³, R⁴, R⁵, R⁶, R⁷, R⁸, R⁹, R¹⁰, R¹¹ und R¹² zusammengenommen ein substituiertes oder unsubstituiertes cyclisches C₄-C₁₀-, polycyclisches C₄-C₁₂-, heterocyclisches C₄-C₁₂-, aromatisches C₄-C₁₀- , heteroaromatisches C₄-C₁₀-System bilden, das durch einen und/oder mehrere Substituenten substituiert sein kann, ausgewählt aus Wasserstoff, einem C₁-C₁₂-Alkyl, einem C₁-C₁₂-Perfluoralkyl, einem C₁-C₁₂-Alkoxy, einem C₅-C₂₄-Aryloxy, einem C₅-C₂₀-Heteroaryloxy und einem Halogen.

10. Verbindung **3f** nach Anspruch 8 oder 9 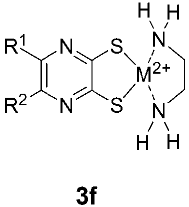 in der
M²⁺ ein Zn-Kation ist,
R¹ und R² unabhängig Wasserstoff, ein Halogen, ein C₁-C₂₅-Alkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy sind, die optional durch mindestens ein C₁-C₁₂-Alkyl oder C₁-C₁₂-Perfluoralkyl substituiert sind, oder R¹ und R² unabhängig eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"3), eine Nitrogruppe (-NO₂), eine Cyanogruppe ( -CN), eine Phosphonatgruppe (-P(O)(OR")₂), eine Phosphinatgruppe (-P(O)R"(OR")), eine Phosphonitgruppe (-P(OR")₂), eine Phosphingruppe (-PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R") sind, in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl sind, alternativ zwei R"-Gruppen zusammengenommen einen C₅-C₂₅-Ring bilden, die alternativ mindestens ein Heteroatom, ausgewählt aus Sauerstoff, Schwefel, Selen, Stickstoff, Phosphor enthalten können, optional zusätzlich substituiert mit einer C₁-C₁₂-Alkylgruppe, wobei das im heterocyclischen Ring vorhandene Heteroatom durch eine oder zwei C₁-C₁₂-Alkylgruppen substituiert sein kann, um eine quartäre Ammoniumgruppe, eine tertiäre Sulfoniumgruppe oder eine quartäre Phosphoniumgruppe zu bilden;
oder R¹ und R² zusammengenommen ein substituiertes oder unsubstituiertes cyclisches C₄-C₁₀-, polycyclisches C₄-C₁₂-, aromatisches C₄-C₁₀-, heteroaromatisches C₄-C₁₀-System bilden, das durch einen und/oder mehrere Substituenten substituiert sein kann, ausgewählt aus Wasserstoff, einem Halogen, einer C₁-C₁₂-Perfluoralkylgruppe, einer C₁-C₁₂-Alkoxygruppe, einer C₅-C₂₄-Aryloxygruppe, einer C₅-C₂₀-Heteroaryloxygruppe, einer C₁-C₂₅-Alkylgruppe, einer C₂-C₂₅-Alkenylgruppe, einer Alkoxygruppe (-OR"), einer Sulfidgruppe (-SR"), einer Sulfoxidgruppe (-S(O)R"), einer Sulfoniumgruppe (-S⁺R"₂), einer Sulfonylgruppe (-SO₂R"), einer Sulfonamidgruppe (-SO₂NR"₂), einer Aminogruppe (-NR"₂), einer Ammoniumgruppe (-N⁺R"3), einer Nitrogruppe (-NO₂), einer Cyanogruppe (-CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), einer Carboxylgruppe (-COOH), einerr Estergruppe (-COOR"), eine Amidgruppe (-CONR"₂), einer Amidgruppe (-NR"C(O)R"), einer Formylgruppe (-CHO), einer Ketogruppe (-COR"), einer Thioamidgruppe (-CSNR"₂), einer Thioketongruppe (-CSR"), einer Thionoestergruppe (-CSOR"), einer Thioestergruppe (-COSR"), einer Dithioestergruppe (-CS₂R"), in der die R"-Gruppe ein C₁-C₃-Alkyl, ein C₁-C₃-Perfluoralkyl, ein C₆-C₂₄-Aryl, ein C₇-C₂₄-Aralkyl, ein C₅-C₂₄-Perfluoraryl ist, alternativ zwei R"-Gruppen zusammengenommen einen C₅-C₂₅-Ring bilden, die alternativ mindestens ein Heteroatom, ausgewählt aus Sauerstoff, Schwefel, Selen, Stickstoff, Phosphor enthalten können.

11. Verbindung nach Ansprüchen 8, 9 oder 10, **dadurch gekennzeichnet, dass** ihre Struktur durch eine Formel dargestellt wird ausgewählt aus 3**-Zn1,** 3-**Zn2,** 3**-Zn3, 3-Zn4,** 3**-Zn5,** 3**-Zn6,** 3-**Zn7,** 3**-Zn8,** 3**-Zn9,** 3**-Zn10,** 3**-Zn11,** 3-**Zn12,** 3**-Zn13** und 3**-K1:**

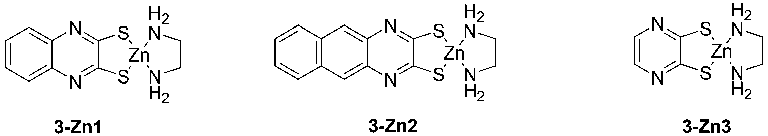

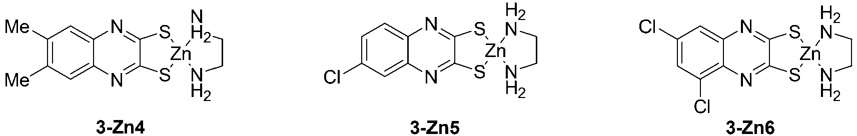

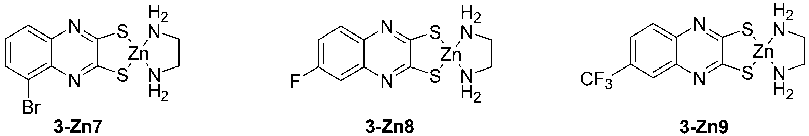

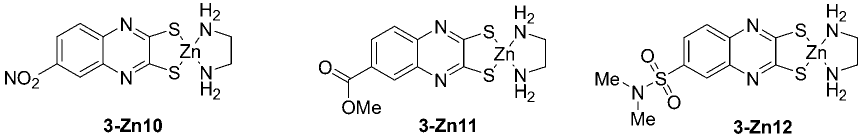

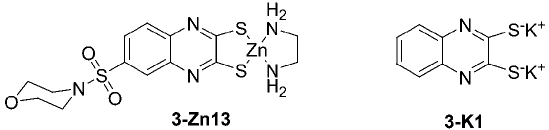

12. Verfahren zur Herstellung des Rutheniumkomplexes der Formel **1-Ru,** wie in einem der Ansprüche 1 bis 6 definiert: 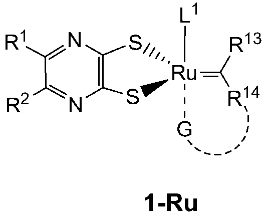 in der
L¹ ein neutraler Ligand ausgewählt aus N-heterocyclischen Carbenen (NHCs), cyclischen Alkylaminocarbenen (CAAC) oder Phosphinen ist;
R¹ und R² unabhängig Wasserstoff, ein Halogen, ein C₁-C₂₅-Alkyl-, ein C₅-C₂₀-Alkoxy-, ein C₅-C₂₀-Aryl-, ein C₇-C₂₀-Aralkyl-, ein C₅-C₂₄-Aryloxy, ein C₂-C₁₂-Alkenyl, ein C₆-C₂₀-Heteroaryl oder ein C₃-C₂₄-Heteroaryloxy sind, die optional durch mindestens ein C₁-C₁₂-Alkyl oder C₁-C₁₂-Perfluoralkyl substituiert sind, oder R¹ und R² unabhängig eine Alkoxygruppe (-OR"), einer Alkoxygruppe (-OR"), einer Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"₃), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (-PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R") sind, in denen die Gruppe R" ein C₁-C₅-Alkyl, ein C₁-C₅-Perfluoralkyl, ein C₆-C₂₄-Aryl, ein C₇-C₂₄-Aralkyl, ein C₃-C₂₄-Perfluoraryl sind, alternativ zwei R"-Gruppen zusammengenommen einen C₅-C₂₅-Ring bilden, die alternativ mindestens ein Heteroatom, ausgewählt aus Sauerstoff, Schwefel, Selen, Stickstoff, Phosphor enthalten können, optional zusätzlich substituiert mit einer C₁-C₁₂-Alkylgruppe, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden;
oder R¹ und R² zusammengenommen ein substituiertes oder unsubstituiertes cyclisches C₄-C₁₀-, polycyclisches C₄-C₁₂-, aromatisches C₄-C₁₀-, heteroaromatisches C₄-C₁₀-System bilden, das durch einen und/oder mehrere Substituenten substituiert sein kann, ausgewählt aus Wasserstoff, einem Halogen, einer C₁-C₂₅-Alkylgruppe, einer C₁-C₁₂-Perfluoralkylgruppe, einer C₁-C₁₂-Alkoxygruppe, einer C₅-C₂₄-Aryloxygruppe, einer C₅-C₂₀-Heteroaryloxygruppe, einer C₂-C₂₅-Alkenylgruppe, einer Alkoxygruppe (-OR"), einer Sulfidgruppe (-SR"), einer Sulfoxidgruppe (S(O)R"), einer Sulfoniumgruppe (-S⁺R"₂), einer Sulfonylgruppe (-SO₂R"), einer Sulfonamidgruppe (-SO₂NR"₂), einer Aminogruppe (-NR"₂), einer Ammoniumgruppe (-N⁺R"₃), einer Nitrogruppe (-NO₂), einer Cyanogruppe (-CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), einer Carboxylgruppe (-COOH), einer Estergruppe (-COOR"), einer Amidgruppe (-CONR"₂), einer Amidgruppe (-NR"C(O)R"), einer Formylgruppe (-CHO), einer Ketogruppe (-COR"), einer Thioamidgruppe (-CSNR"₂), einer Thioketongruppe (-CSR"), einer Thionoestergruppe (-CSOR"), einer Thioestergruppe (-COSR"), einer Dithioestergruppe (-CS₂R"), in denen die R"-Gruppe ein C₁-C₃-Alkyl, ein C₁-C₃-Perfluoralkyl, ein C₆-C₂₄-Aryl, ein C₇-C₂₄-Aralkyl, ein C₅-C₂₄-Perfluoraryl ist, alternativ zwei R"-Gruppen zusammengenommen einen C₅-C₂₅-Ring bilden, die alternativ mindestens ein Heteroatom, ausgewählt aus Sauerstoff, Schwefel, Selen, Stickstoff, Phosphor enthalten können.
R¹³ und R¹⁴ unabhängig Wasserstoff, ein Halogen, ein optional substituiertes C₁-C₂₅-Alkyl, ein optional substituiertes C₃-C₂₅-Cycloalkyl, ein optional substituiertes C₁-C₁₂-Perfluoralkyl, ein optional substituiertes C₂-C₂₅-Alken, ein optional substituiertes C₂-C₂₅-Alkenyl, ein optional substituiertes C₃-C₂₅-Cycloalkenyl, ein optional substituiertes C₂-C₂₃-Alkinyl, ein optional substituiertes C₃-C₂₅-Cycloalkinyl, ein optional substituiertes C₁-C₂₅-Alkoxy, ein optional substituiertes C₅-C₂₅-Aryl, ein optional substituiertes C₅-C₂₅-Aryloxy, ein optional substituiertes C₆-C₂₅-Aralkyl, ein optional substituiertes C₅-C₂₅-Heteroaryl, ein optional substituiertes C₅-C₂₅-Heteroaryloxy, ein optional substituiertes C₅-C₂₅-Perfluoraryl, ein 3-12-gliedriger Heterocyclus enthaltend Schwefel, Sauerstoff, Stickstoff, Selen oder Phosphor, optional substituiert, sind,
wobei Substituenten R¹³ und R¹⁴ zusammengengenommen einen Ring bilden können, ausgewählt aus einer Gruppe umfassend ein C₃-C₂₅-Cycloalkyl, ein C₃-C₂₅-Cycloalkenyl, ein C₃-C₂₃-Cycloalkinyl, ein C₅-C₂₅-Aryl, ein C₅-C₂₅-Heteroaryl, ein C₃-C₂₃-Perfluoraryl, einen 3-12-gliedrigen Heterocyclus, der Schwefel, Sauerstoff, Stickstoff, Selen oder Phosphor enthalten und unabhängig mit einem und/oder mehreren Substituenten substituiert sein kann, ausgewählt aus einer Gruppe umfassend Wasserstoff, ein Halogen, ein C₁-C₂₅-Alkyl, ein C₃-C₂₅-Cycloalkyl, ein C₁-C₁₂-Perfluoralkyl, ein C₂-C₂₅-Alken, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Alkoxy, ein C₅-C₂₅-Aryl, ein C₅-C₂₅-Aryloxy, ein C₆-C₂₅-Arylalkyl, ein C₅-C₂₅-Heteroaryl, ein C₃-C₂₃-Heteroaryloxy, ein C₅-C₂₅-Perfluoraryl, einen 3-12-gliedrigen Heterocyclus;
wobei die Substituenten R¹³ und R¹⁴ unabhängig bevorzugt Wasserstoff und/oder eine C₃-C₂₃-Arylgruppe sind, die unabhängig substituiert sind mit Wasserstoff, einem Halogen, einer C₁-C₂₅-Alkylgruppe, einer C₂-C₂₅-Alkenylgruppe, einer Alkoxygruppe (-OR"), einer Sulfidgruppe (-SR"), einer Sulfoxidgruppe (-S(O)R"), einer Sulfoniumgruppe (-S⁺R"₂), einer Sulfonylgruppe (-SO₂R"), einer Sulfonamidgruppe (-SO₂NR"₂), einer Aminogruppe (-NR"₂), einer Ammoniumgruppe (-N⁺R"₃), einer Nitrogruppe (-NO₂), einer Cyanogruppe (CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), einer Carboxylgruppe (-COOH), einer Estergruppe (-COOR"), einer Amidgruppe (-CONR"₂), einer Amidgruppe (-NR"C(O)R"), einer Formylgruppe (-CHO), einer Ketogruppe (-COR"), einer Thioamidgruppe (-CSNR"₂), einer Thioketongruppe (-CSR"), einer Thionoestergruppe (-CSOR"), einer Thioestergruppe (-COSR"), einer Dithioestergruppe (-CS₂R"), in denen die R"-Gruppe unabhängig Wasserstoff, ein C₁-C₃-Alkyl, ein C₁-C₃-Perfluoralkyl, ein C₆-C₂₄-Aryl, ein C₇-C₂₄-Aralkyl, ein C₃-C₂₄-Perfluoraryl ist, wobei die beiden R"-Gruppen zusammengenommen entweder einen C₃-C₁₂-Cycloalkylring oder einen C₃-C₂₅-Heterocycloalkylring, der Stickstoff, Sauerstoff oder Schwefel enthält, optional zusätzlich mit einer C₁-C₁₂-Alkylgruppe substituiert, bilden können, alternativ ist R" eine Ketogruppe (-COR^{c}), in der R^{c} eine C₁-C₁₂-Perfluoralkyl- oder Alkoxygruppe (-OR^{d}) ist, in der R^{d} ein C₁-C₁₂Alkyl oder ein Stickstoff, Sauerstoff oder Schwefel enthaltenes C₃-C₁₂-Heterocycloalkyl ist, das optional zusätzlich mit einer C₁-C₁₂-Alkylgruppe substituiert ist;
G ist ausgewählt aus
- Ligand L² 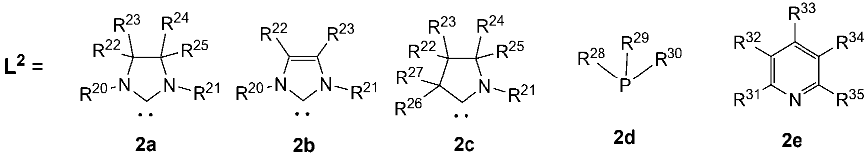
in denen die Substituenten R²⁰und R²¹ unabhängig eine C₁-C₁₂-Alkylgruppe, eine C₃-C₁₂-Cycloalkylgruppe, eine C₅-C₂₀-Arylgruppe oder eine C₅-C₂₀-Heteroarylgruppe, eine C₅-C₂₅-Aralkylgruppe sind, die unabhängig durch einen und/oder mehrere Substituenten substituiert sein können, ausgewählt aus einer Gruppe umfassend Wasserstoff,
eine C₁-C₁₂-Alkylgruppe, eine C₁-C₁₂-Perfluoralkylgruppe, eine C₅-C₂₀-Arylgruppe, eine C₅-C₂₀-Perfluorarylgruppe, eine C₅-C₂₀-Heteroarylgruppe, eine C₁-C₁₂-Alkoxygruppe, eine C₅-C₂₄-Aryloxygruppe, eine C₅-C₂₀-Heteroaryloxygruppe oder ein Halogen, eine Alkoxygruppe (-OR"), eine Sulfidgruppe (-SR"), ein Halogen, eine Aminogruppe (-NR"₂), in denen die Gruppe R" unabhängig Wasserstoff, ein C₁-C₅-Alkyl, ein C₆-C₂₄-Aryl, ein C₇-C₂₄-Aralkyl ist, alternativ bilden R²⁰ und R²¹ zusammengenommen einen C₅-C₂₅-Ring;
jeder Substituent R²⁰, R²¹, R²², R²³, R²⁴, R²⁵, R²⁶ und R²⁷ unabhängig Wasserstoff, ein Halogen, eine Hydroxylgruppe, eine C₁-C₁₂-Alkoxygruppe, eine Hydroxymethylgruppe (-CH₂OH), eine C₁-C₁₂-Alkylgruppe, die optional mit einer Aminogruppe (-NR^{a}₂) substituiert ist, in der jedes R^{a} unabhängig entweder Wasserstoff oder ein C₁-C₁₂-Alkyl, wobei die beiden R^{a}-Gruppen zusammengenommen entweder einen C₃-C₁₂-Cycloalkylring oder ein C₃-C₂₅-Heterocycloalkyl, eine C₃-C₁₂-Cycloalkylgruppe bilden können; eine C₅-C₂₀-Arylgruppe, eine C₅-C₂₀-Heteroarylgruppe, eine Estergruppe (-OCOR^{b}), eine (-COR^{d})-Gruppe, eine Methylestergruppe (-CH₂OCOR^{b}), in denen R^{b} entweder eine C₅-C₂₀-Arylgruppe oder eine C₅-C₂₀-Perfluorarylgruppe; eine Aminogruppe (-NR^{c}₂), eine Methylaminogruppe (-CH₂NR^{c}₂) ist, in denen jedes R^{c} unabhängig entweder Wasserstoff oder ein C₁-C₁₂-Alkylrest ist, wobei die beiden R^{c}-Gruppen zusammen einen C₃-C₁₂-Cycloalkylring oder einen C₃-C₂₅-Heterocycloalkylring, der Stickstoff, Sauerstoff oder Schwefel enthält, optional zusätzlich mit einer C₁-C₁₂-Alkylgruppe substituiert, bilden können, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden,
die unabhängig durch mindestens einen Substituenten substituiert sein können, ausgewählt aus einer Gruppe umfassend ein Hydroxyl (OH), ein C₁-C₁₂-Alkyl, ein C₁-C₁₂-Perfluoralkyl, ein C₁-C₁₂-Alkoxy, ein Halogen, ein C₃-C₁₂-Heterocycloalkyl, das optional mit einer C₁-C₁₂-Alkylgruppe substituiert ist, eine Estergruppe (-COOR^{d}) oder eine (-COR^{d})-Gruppe, in der R^{d} eine C₅-C₂₀-Arylgruppe oder eine C₋₅-C₂₀-Perfluorarylgruppe ist, oder eine Aminogruppe (-NR^{e}2), in denen jedes R^{d} unabhängig Wasserstoff oder ein C₁-C₁₂-Alkyl ist, die beiden R^{e}-Gruppen zusammengenommen einen C₃-C₁₂-Cycloalkylring oder ein C₃-C₂₅-Heterocycloalkyl mit Stickstoff, Sauerstoff oder Schwefel, optional zusätzlich substituiert mit einer C₁-C₁₂-Alkylgruppe, bilden können, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden, und R²², R²¹, R²², R²³, R²⁴, R²⁵, R²⁶ und R²⁷ optional miteinander verbunden sein können, um ein cyclisches C₄-C₁₀-System oder ein polycyclisches C₄-C₁₂-System zu bilden;
jeder Substituent R²⁸, R²⁹ und R³⁰ unabhängig ein C₁-C₂₃-Alkyl, ein C₁-C₂₃-Cycloalkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy ist, die optional durch mindestens ein C₁-C₁₂-Alkyl oder C₁-C₁₂-Perfluoralkyl substituiert sind, oder R²⁸, R²⁹ und R³⁰ zusammengenommen ein substituiertes oder unsubstituiertes cyclisches C₄-C₁₀-, polycyclisches C₄-C₁₂-, aromatisches C₄-C₁₀-, heteroaromatisches C₄-C₁₀-System bilden, das durch einen und/oder mehrere Substituenten substituiert sein kann, ausgewählt aus Wasserstoff, einem C₁-C₁₂-Alkyl, einem C₁-C₁₂-Perfluoralkyl, einem C₁-C₁₂Alkoxy, einem C₅-C₂₄-Aryloxy, einem C₅-C₂₀-Heteroaryloxy und einem Halogen;
jeder Substituent R³¹, R³², R³³, R³⁴ und R³⁵ unabhängig eine C₁-C₁₂-Alkylgruppe, eine C₃-C₁₂-Cycloalkylgruppe, eine C₅-C₂₀-Arylgruppe oder eine C₅-C₂₀-Heteroarylgruppe ist, die unabhängig durch einen und/oder mehrere Substituenten substituiert sein können, ausgewählt aus einer Gruppe umfassend Wasserstoff, eine C₁-C₁₂-Alkylgruppe, eine C₁-C₁₂-Perfluoralkylgruppe, eine C₁-C₁₂-Alkoxygruppe, eine C₅-C₂₄-Aryloxygruppe, eine C₅-C₂₀-Heteroaryloxygruppe oder ein Halogen; oder
- Heteroatom 1
ausgewählt aus einer Gruppe umfassend Sauerstoff, Schwefel, Selen, substituiert durch eine Gruppe ausgewählt aus Wasserstoff, einem Halogen, Sauerstoff, einem C₁-C₂₅-Alkyl, einem C₁-C₂₅-Perfluoralkyl, einem C₃-C₂₅-Cycloalkyl, einem C₅-C₂₀-Alkoxy, einem C₅-C₂₀-Aryl, einem C₅-C₂₀-Perfluoraryl, einem C₇-C₂₀-Aralkyl, einem C₅-C₂₄-Aryloxy, einem C₂-C₁₂-Alkenyl, einem C₆-C₂₀-Heteroaryl oder einem C₃-C₂₄-Heteroaryloxy, einem 3-12-gliedrigen Heterocyclus, optional substituiert durch eine Acyl (COR')-, Cyano (-CN), Carboxyl (-COOH)-, Ester (-COOR')-, Ester (-CH₂COOR')-, Ester (-CHR'COOR')-, Ester (-C(R')₂COOR')-, Amid (-CONR'₂)-, Weinreb-Typ Amid (-CON(R')(OR'))-, Sulfonsäure (-SO₂R')-, Formyl (-COH)-, Sulfonamid (-SO₂NR'₂)-, Keto (-COR')-, Thioamid (-CSNR'₂)-, Thioketo (CSR')-, Thionoester (-CSOR')-, Thioester (-COSR')- oder eine Dithioester (-CS₂R')-Gruppe, in denen die R'-Gruppe ein C₁-C₂₅-Alkyl, ein C₁-C₂₅-Perfluoralkyl, ein C₃-C₂₅-Cycloalkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₂-C₁₂-Alkenyl, ein C₆-C₂₀-Heteroaryl, ein C₅-C₂₄-Heteroaryloxy ist, und dann repräsentiert die gestrichelte Linie eine direkte Bindung des Heteroatoms an den R¹⁴-Substituenten oder repräsentiert die Verbindung des R¹⁴-Substituenten mit dem Heteroatom über eine (CH₂)-, -(CHR')- oder (CR'₂)-Methylenbrücke, wobei der R¹⁴-Substituent ein C₅-C₁₅-Aryl ist, das optional durch 1-4 Substituenten substituiert ist, die unabhängig aus einer Gruppe ausgewählt sind umfassend Wasserstoff, ein Halogen, ein C₁-C₂₅-Alkyl, ein C₃-C₂₅-Cycloalkyl, ein C₂-C₂₅-Alkenyl, ein C₃-C₂₅-Cycloalkenyl, ein C₂-C₂₃-Alkinyl, ein C₃-C₂₅-Cycloalkinyl, ein C₁-C₂₅-Perfluoralkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₆-C₂₀-Heteroaryl oder ein C₅-C₂₄-Heteroaryloxy, einen 3-12-gliedrigen Heterocyclus, eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR''₂), eine Aminogruppe (-NR"₂), eine Ammoniumgruppe (-N⁺R"₃), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"2), eine Thioketongruppe (-CSR"), eine Thionoestergruppe (-CSOR"), eine Thioestergruppe (-COSR"), eine Dithioestergruppe (-CS₂R"), in denen die Gruppe R" ein C₁-C₅-Alkyl, ein C₁-C₃-Perfluoralkyl, ein C₆-C₂₄-Aryl, ein C₇-C₂₄-Aralkyl, ein C₅-C₂₄-Perfluoraryl ist; oder
- Heteroatom 2
ausgewählt aus einer Gruppe umfassend Stickstoff oder Phosphor, substituiert durch eine Gruppe ausgewählt aus Wasserstoff, Methyliden, optional substituiert durch einen R'-Substituenten, ein C₁-C₂₅-Alkyl, ein C₁-C₂₅-Perfluoralkyl, ein C₃-C₂₅-Cycloalkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy, einen 3-12-gliedrigen Heterocyclus, eine Acylgruppe (-COR'), eine tert-Butyloxycarbonylgruppe (t-Boc) oder eine 9-Fluorenylmethoxycarbonylgruppe (Fmoc), eine Carbamatgruppe (-CONR'₂), eine Sulfongruppe (-SO₂R'), eine Formylgruppe (-COH), in denen die Gruppe R' eine C₁-C₂₅-Alkyl-, C₁-C₂₅-Perfluoralkyl-, C₃-C₂₅-Cycloalkyl-, C₅-C₂₀-Alkoxy-, C₅-C₂₀-Aryl-, C₅-C₂₀-Perfluoraryl-, C₇-C₂₀-Aralkyl-, C₅-C₂₄-Aryloxy-, C₂-C₁₂-Alkenyl-, C₆-C₂₀-Heteroaryl- oder C₅-C₂₄-Heteroaryloxygruppe, die optional substituiert ist durch eine Acyl (-COR"), eine Cyano (-CN)-, Carboxyl (-COOH)-, Ester (-COOR")-, Ester (-CH₂COOR")-, Ester (-CHR'COOR")-, Ester (-C(R")- 2COOR"), Amid (-CONR"₂)-, Sulfonsäure (-SO₂R")-, Formyl (-COH)-, Sulfonamid (-SO₂NR"₂)-, Keto (-COR")-, Thioamid (-CSNR"₂)-, Thioketo (-CSR")-, Thionoester (-CSOR")-, Thioester (-COSR")-, Dithioester (-CS₂R")-Gruppe, in denen die Gruppe R" ein C₁-C₂₅-Alkyl, ein C₁-C₂₅-Perfluoralkyl, ein C₃-C₂₅-Cycloalkyl, ein C₅-C₂₀-Alkoxy, ein C₅-C₂₀-Aryl, ein C₅-C₂₀-Perfluoraryl, ein C₇-C₂₀-Aralkyl, ein C₃-C₂₄-Aryloxy, ein C₂-C₁₂-Alkenyl, ein C₆-C₂₀-Heteroaryl oder ein C₅-C₂₄-Heteroaryloxy ist, und die gestrichelte Linie eine direkte Bindung des Heteroatoms an den R¹⁴-Substituenten darstellt oder die Verbindung des R¹⁴-Substituenten mit dem Heteroatom über eine (CH₂)-, -(CHR')- oder (CR'₂)-Methylenbrücke darstellt; wobei der R¹⁴-Substituent ein C₅-C₁₅-Aryl ist, das optional mit 1-4 Substituenten substituiert ist, die unabhängig aus einer Gruppe ausgewählt sind umfassend die Wasserstoff, ein Halogen, ein C₁-C₂₅-Alkyl, ein C₃-C₂₅-Cycloalkyl, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Perfluoralkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₆-C₂₀-Heteroaryl oder ein C₅-C₂₄-Heteroaryloxy ein 3-12-gliedriger Heterocyclus, eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"₃), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (-PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R"), in denen die Gruppe R" ein C₁-C₃-Alkyl, ein C₁-C₃-Perfluoralkyl, ein C₆-C₂₄-Aryl, ein C₇-C₂₄-Aralkyl, ein C₅-C₂₄-Perfluoraryl ist, oder
- Heteroatom 3
ausgewählt aus einer Gruppe umfassend ein Halogen, und dann repräsentiert die gestrichelte Linie eine direkte Bindung des Heteroatoms an den R¹⁴-Substituenten, wobei der R¹⁴-Substituent ein C₅-C₁₅-Aryl oder ein C₅-C₂₅-Polyaryl ist, das optional mit 1-4 Substituenten substituiert ist, die unabhängig ausgewählt sind aus einer Gruppe umfassend Wasserstoff, ein Halogen, ein C₁-C₂₅-Alkyl, ein C₃-C₂₅-Cycloalkyl, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Perfluoralkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₆-C₂₀-Heteroaryl oder ein C₃-C₂₄-Heteroaryloxy, einen 3-12-gliedriger Heterocyclus, eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"₃), eine Nitrogruppe (-NO₂), eine Cyanogruppe (CN), eine Phosphonatgruppe (-P(O)(OR")₂), eine Phosphinatgruppe (-P(O)R"(OR")), eine Phosphonitgruppe (-P(OR")₂), eine Phosphingruppe (-PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R"), in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl;
**dadurch gekennzeichnet, dass** der Alkylidenrutheniumkomplex der Formel **4-Ru:** 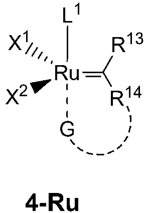 in der
X¹ und X² unabhängig anionische Liganden sind, ausgewählt aus einer Gruppe umfassend ein Halogenanion, eine -CN, -SCN, -OR^{a}, -SR^{a}, -O(C=O) R^{a}, -O(SO₂) R^{a} und -OSi(R^{a})₃-Gruppe, in denen R^{a} ein C₁-C₁₂-Alkyl, ein C₃-C₁₂-Cycloalkyl, ein C₂-C₁₂-Alkenyl oder ein C₅-C₂₀-Aryl ist, das optional durch mindestens ein C₁-C₁₂-Alkyl, ein C₁-C₁₂-Perfluoralkyl, ein C₁-C₁₂-Alkoxy, ein C₅-C₂₄-Aryloxy, ein C₅-C₂₀-Heteroaryloxy oder ein Halogen substituiert ist;
L¹ ein neutraler Ligand ausgewählt aus N-heterocyclischen Carbenen (NHCs), cyclischen Alkylaminocarbenen (CAAC) oder Phosphinen ist;
R¹³ und R¹⁴ unabhängig Wasserstoff, ein Halogen, optional substituiertes C₁-C₂₅-Alkyl, ein optional substituiertes C₃-C₂₅-Cycloalkyl, ein optional substituiertes C₁-C₁₂-Perfluoralkyl, ein optional substituiertes C₂-C₂₅-Alken, ein optional substituiertes C₂-C₂₅-Alkenyl, ein optional substituiertes C₃-C₂₅-Cycloalkenyl, ein optional substituiertes C₂-C₂₅-Alkinyl, ein optional substituiertes C₃-C₂₅-Cycloalkinyl, ein optional substituiertes C₁-C₂₅-Alkoxy, ein optional substituiertes C₅-C₂₅-Aryl, ein optional substituiertes C₅-C₂₅-Aryloxy, ein optional substituiertes C₆-C₂₅-Aralkyl, ein optional substituiertes C₅-C₂₅-Heteroaryl, ein optional substituiertes C₅-C₂₅-Heteroaryloxy, ein optional substituiertes C₅-C₂₅-Perfluoraryl, ein 3-12-gliedriger Heterocyclus enthaltend Schwefel, Sauerstoff, Stickstoff, Selen oder Phosphor, optional substituiert, sind,
wobei Substituenten R¹³ und R¹⁴ zusammengengenommen einen Ring bilden können, ausgewählt aus einer Gruppe umfassend ein C₃-C₂₅-Cycloalkyl, ein C₃-C₂₅-Cycloalkenyl, ein C₃-C₂₅-Cycloalkinyl, ein C₅-C₂₅-Aryl, ein C₃-C₂₅-Heteroaryl, ein C₅-C₂₅-Perfluoraryl, einen 3-12-gliedrigen Heterocyclus, die Schwefel, Sauerstoff, Stickstoff, Selen oder Phosphor enthalten und unabhängig mit einem und/oder mehreren Substituenten substituiert sein können, ausgewählt aus einer Gruppe umfassend Wasserstoff, ein Halogen, ein C₁-C₂₅-Alkyl, ein C₃-C₂₅-Cycloalkyl, ein C₁-C₁₂-Perfluoralkyl, ein C₂-C₂₅-Alken, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Alkoxy, ein C₃-C₂₅-Aryl, ein C₃-C₂₅-Aryloxy, ein C₆-C₂₅-Arylalkyl, ein C₅-C₂₅-Heteroaryl, ein C₃-C₂₅-Heteroaryloxy, ein C₅-C₂₅-Perfluoraryl, einen 3-12-gliedrigen Heterocyclus;
wobei die Substituenten R¹³ und R¹⁴ unabhängig bevorzugt Wasserstoff und/oder eine C₅-C₂₅-Arylgruppe sind, die unabhängig substituiert sind mit Wasserstoff, einer C₁-C₂₅-Alkylgruppe, einer C₂-C₂₅-Alkenylgruppe, einer Alkoxygruppe (-OR"), einer Sulfidgruppe (-SR"), einer Sulfoxidgruppe (-S(O)R"), einer Sulfoniumgruppe (-S⁺R"₂), einer Sulfonylgruppe (-SO₂R"), einer Sulfonamidgruppe (-SO₂NR"₂), einer Aminogruppe (-NR"₂), einer Ammoniumgruppe (-N⁺R"₃), einer Nitrogruppe (-NO₂), einer Cyanogruppe (-CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), einer Carboxylgruppe (-COOH), einer Estergruppe (-COOR"), einer Amidgruppe (-CONR"₂), einer Amidgruppe (-NR"C(O)R"), einer Formylgruppe (-CHO), einer Ketogruppe (-COR"), einer Thioamidgruppe (-CSNR"₂), einer Thioketongruppe (-CSR"), einer Thionoestergruppe (-CSOR"), einer Thioestergruppe (-COSR"), einer Dithioestergruppe (-CS₂R"), in denen die R"-Gruppe ein C₁-C₃-Alkyl, ein C₁-C₃-Perfluoralkyl, ein C₆-C₂₄-Aryl, ein C₇-C₂₄-Aralkyl, ein C₅-C₂₄-Perfluoraryl ist; G ist ausgewählt aus
- Ligand L² 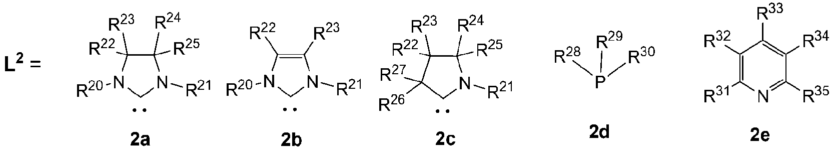
in denen die Substituenten R²⁰ und R²¹ unabhängig eine C₁-C₁₂-Alkylgruppe, eine C₃-C₁₂-Cycloalkylgruppe, eine C₅-C₂₀-Arylgruppe oder eine C₅-C₂₀-Heteroarylgruppe, eine C₅-C₂₅-Aralkylgruppe sind, die unabhängig durch einen und/oder mehrere Substituenten substituiert sein kann, ausgewählt aus einer Gruppe umfassend Wasserstoff,
eine C₁-C₁₂-Alkylgruppe, eine C₁-C₁₂-Perfluoralkylgruppe, eine C₅-C₂₀-Arylgruppe, eine C₅-C₂₀-Perfluorarylgruppe, eine C₅-C₂₀-Heteroarylgruppe, eine C₁-C₁₂-Alkoxygruppe, eine C₅-C₂₄-Aryloxygruppe, eine C₅-C₂₀-Heteroaryloxygruppe oder ein Halogen, eine Alkoxygruppe (-OR"), eine Sulfidgruppe (-SR"), ein Halogen, eine Aminogruppe (-NR"₂), in denen die Gruppe R" unabhängig Wasserstoff, ein C₁-C₅-Alkyl, ein C₆-C₂₄-Aryl, ein C₇-C₂₄-Aralkyl ist, alternativ bilden R²⁰ und R²¹ zusammengenommen einen C₅-C₂₅-Ring;
jeder Substituent R²⁰, R²¹, R²², R²³, R²⁴, R²⁵, R²⁶ und R²⁷ unabhängig Wasserstoff, ein Halogen, eine Hydroxylgruppe, eine C₁-C₁₂-Alkoxygruppe, eine Hydroxymethylgruppe (-CH₂OH), eine C₁-C₁₂-Alkylgruppe, die optional mit einer Aminogruppe (-NR^{a}₂) substituiert ist, in der jedes R^{a} unabhängig entweder Wasserstoff oder ein C₁-C₁₂-Alkyl, wobei die beiden R^{a}-Gruppen zusammengenommen entweder einen C₃-C₁₂-Cycloalkylring oder ein C₃-C₂₅-Heterocycloalkyl, eine C₃-C₁₂-Cycloalkylgruppe bilden können; eine C₅-C₂₀-Arylgruppe, eine C₅-C₂₀-Heteroarylgruppe, eine Estergruppe (-OCOR^{b}), eine (-COR^{d})-Gruppe, eine Methylestergruppe (-CH₂OCOR^{b}), in denen R^{b} entweder eine C₅-C₂₀-Arylgruppe oder eine C₅-C₂₀-Perfluorarylgruppe; eine Aminogruppe (-NR^{c}₂), eine Methylaminogruppe (-CH₂NR^{c}₂) ist, in denen jedes R^{c} unabhängig entweder Wasserstoff oder ein C₁-C₁₂-Alkylrest ist, wobei die beiden R^{c}-Gruppen zusammen einen C₃-C₁₂-Cycloalkylring oder einen C₃-C₂₅-Heterocycloalkylring, der Stickstoff, Sauerstoff oder Schwefel enthält, optional zusätzlich mit einer C₁-C₁₂-Alkylgruppe substituiert, bilden können, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden,
die unabhängig durch mindestens einen Substituenten substituiert sein können, ausgewählt aus einer Gruppe umfassend ein Hydroxyl (OH), ein C₁-C₁₂-Alkyl, ein C₁-C₁₂-Perfluoralkyl, ein C₁-C₁₂-Alkoxy, ein Halogen, ein C₃-C₁₂-Heterocycloalkyl, das optional mit einer C₁-C₁₂-Alkylgruppe substituiert ist, eine Estergruppe (-COOR^{d}) oder eine (-COR^{d})-Gruppe, in der R^{d} eine C₅-C₂₀-Arylgruppe oder eine C₅-C₂₀-Perfluorarylgruppe ist, oder eine Aminogruppe (-NR^{e}₂), in denen jedes R^{d} unabhängig Wasserstoff oder ein C₁-C₁₂-Alkyl ist, die beiden R^{e}-Gruppen zusammengenommen einen C₃-C₁₂-Cycloalkylring oder ein C₃-C₂₅-Heterocycloalkyl, das Stickstoff, Sauerstoff oder Schwefel enthält, optional zusätzlich substituiert mit einer C₁-C₁₂-Alkylgruppe, bilden können, wobei das im heterocyclischen Ring vorhandene Heteroatom durch eine oder zwei C₁-C₁₂-Alkylgruppen substituiert sein kann, die ein primäres, sekundäres oder tertiäres Amin oder eine quartäre Ammoniumgruppe, eine tertiäre Sulfoniumgruppe oder eine quartäre Phosphoniumgruppe bilden, und R²⁰, R²¹, R²², R²³, R²⁴, R²⁵, R²⁶ und R²⁷ optional miteinander verbunden sein können, um ein cyclisches C₄-C₁₀-System oder ein polycyclisches C₄-C₁₂-System zu bilden; jeder Substituent R²⁸, R²⁹ und R³⁰ unabhängig ein C₁-C₂₃-Alkyl, ein C₃-C₁₂-Cycloalkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy ist, die optional durch mindestens ein C₁-C₁₂-Alkyl oder C₁-C₁₂-Perfluoralkyl substituiert sind, oder R²⁸, R²⁹ und R³⁰ zusammengenommen ein substituiertes oder unsubstituiertes cyclisches C₄-C₁₀-, polycyclisches C₄-C₁₂-, aromatisches C₄-C₁₀-, heteroaromatisches C₄-C₁₀-System bilden, das durch einen und/oder mehrere Substituenten substituiert sein kann, ausgewählt aus Wasserstoff, einem C₁-C₁₂-Alkyl, einem C₁-C₁₂-Perfluoralkyl, einem C₁-C₁₂Alkoxy, einem C₅-C₂₄-Aryloxy, einem C₅-C₂₀-Heteroaryloxy und einem Halogen;
jeder Substituent R³¹, R³², R³³, R³⁴ und R³⁵ unabhängig eine C₁-C₁₂-Alkylgruppe, eine C₃-C₁₂-Cycloalkylgruppe, eine C₅-C₂₀-Arylgruppe oder eine C₅-C₂₀-Heteroarylgruppe ist, die unabhängig durch einen und/oder mehrere Substituenten substituiert sein können, ausgewählt aus einer Gruppe umfassend Wasserstoff, eine C₁-C₁₂-Alkylgruppe, eine C₁-C₁₂-Perfluoralkylgruppe, eine C₁-C₁₂-Alkoxygruppe, eine C₅-C₂₄-Aryloxygruppe, eine C₅-C₂₀-Heteroaryloxygruppe oder ein Halogen; oder
- Heteroatom 1
ausgewählt aus einer Gruppe umfassend Sauerstoff, Schwefel, Selen, substituiert durch eine Gruppe ausgewählt aus Wasserstoff, einem Halogen, Sauerstoff, einem C₁-C₂₅-Alkyl, einem C₁-C₂₅-Perfluoralkyl, einem C₃-C₂₅-Cycloalkyl, einem C₅-C₂₀-Alkoxy, einem C₅-C₂₀-Aryl, einem C₅-C₂₀-Perfluoraryl, einem C₇-C₂₀-Aralkyl, einem C₅-C₂₄-Aryloxy, einem C₂-C₁₂-Alkenyl, einem C₆-C₂₀-Heteroaryl oder einem C₃-C₂₄-Heteroaryloxy, einem 3-12-gliedrigen Heterocyclus, optional substituiert durch eine Acyl (COR')-, Cyano (-CN), Carboxyl (-COOH)-, Ester (-COOR')-, Ester (-CH₂COOR')-, Ester (-CHR'COOR')-, Ester (-C(R')₂COOR')-, Amid (-CONR'₂)-, Weinreb-Typ Amid (-CON(R')(OR'))-, Sulfonsäure (-SO₂R')-, Formyl (-COH)-, Sulfonamid (-SO₂NR'₂)-, Keto (-COR')-, Thioamid (-CSNR'₂)-, Thioketo (CSR')-, Thionoester (-CSOR')-, Thioester (-COSR')- oder eine Dithioester (-CS₂R')-Gruppe, in denen die R'-Gruppe ein C₁-C₂₅-Alkyl, ein C₁-C₂₅-Perfluoralkyl, ein C₃-C₂₅-Cycloalkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₂-C₁₂-Alkenyl, ein C₆-C₂₀-Heteroaryl, ein C₅-C₂₄-Heteroaryloxy ist, und dann repräsentiert die gestrichelte Linie eine direkte Bindung des Heteroatoms an den R¹⁴-Substituenten oder repräsentiert die Verbindung des R¹⁴-Substituenten mit dem Heteroatom über eine -CH₂-, -CHR'- oder CR'₂-Methylenbrücke, wobei der R¹⁴-Substituent ein C₅-C₁₅-Aryl ist, das optional durch 1-4 Substituenten substituiert ist, die unabhängig aus einer Gruppe ausgewählt sind umfassend Wasserstoff, ein Halogen, ein C₁-C₂₅-Alkyl, ein C₃-C₂₅-Cycloalkyl, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Perfluoralkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₆-C₂₀-Heteroaryl oder ein C₅-C₂₄-Heteroaryloxy, einen 3-12-gliedrigen Heterocyclus, eine Alkoxygruppe (-OR"), eine Sulfidgruppe (-SR"), eine Sulfoxidgruppe (-S(O)R"), eine Sulfoniumgruppe (-S'R"₂), eine Sulfonylgruppe (-SO₂R"), eine Sulfonamidgruppe (-SO₂NR''₂), eine Aminogruppe (-NR"₂), eine Ammoniumgruppe (-N⁺R"₃), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R"), in denen die Gruppe R" ein C₁-C₅-Alkyl, ein C₁-C₃-Perfluoralkyl, ein C₆-C₂₄-Aryl, ein C₇-C₂₄-Aralkyl, ein C₅-C₂₄-Perfluoraryl ist, oder
- Heteroatom 2
ausgewählt aus einer Gruppe umfassend Stickstoff oder Phosphor, substituiert durch eine Gruppe, ausgewählt aus Wasserstoff, Methyliden, optional substituiert durch einen R'-Substituenten, ein C₁-C₂₅-Alkyl, ein C₁-C₂₅-Perfluoralkyl, ein C₃-C₂₅-Cycloalkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy, einen 3-12-gliedrigen Heterocyclus, eine Acylgruppe (-COR'), eine tert-Butyloxycarbonylgruppe (t-Boc) oder eine 9-Fluorenylmethoxycarbonylgruppe (Fmoc), eine Carbamatgruppe (-CONR'₂), eine Sulfonylgruppe (-SO₂R'), eine Formylgruppe (-COH), in denen die Gruppe R' eine C₁-C₂₅-Alkyl-, C₁-C₂₅-Perfluoralkyl-, C₃-C₂₅-Cycloalkyl-, C₅-C₂₀-Alkoxy-, C₅-C₂₀-Aryl-, C₅-C₂₀-Perfluoraryl-, C₇-C₂₀-Aralkyl-, C₅-C₂₄-Aryloxy-, C₂-C₁₂-Alkenyl-, C₆-C₂₀-Heteroaryl- oder C₅-C₂₄-Heteroaryloxygruppe, die optional substituiert ist durch eine Acyl (-COR")-, eine Cyano (-CN)-, Carboxyl (-COOH)-, Ester (-COOR")-, Ester (-CH₂COOR")-, Ester (-CHR'COOR")-, Ester (-C(R")- 2COOR"), Amid (-CONR"₂)-, Sulfonsäure (-SO₂R")-, Formyl (-COH)-, Sulfonamid (-SO₂NR"₂)-, Keto (-COR")-, Thioamid (-CSNR"₂)-, Thioketo (-CSR")-, Thionoester (-CSOR")-, Thioester (-COSR")-, Dithioester (-CS₂R")-Gruppe, in denen die Gruppe R" ein C₁-C₂₅-Alkyl, ein C₁-C₂₅-Perfluoralkyl, ein C₃-C₂₅-Cycloalkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₂-C₁₂-Alkenyl, ein C₆-C₂₀-Heteroaryl oder ein C₃-C₂₄-Heteroaryloxy ist, und die gestrichelte Linie eine direkte Bindung des Heteroatoms an den R¹⁴-Substituenten darstellt oder die Verbindung des R¹⁴-Substituenten mit dem Heteroatom über eine (CH₂)-, -(CHR')- oder (CR'₂)-Methylenbrücke darstellt; wobei der R¹⁴-Substituent ein C₅-C₁₅-Aryl ist, das optional mit 1-4 Substituenten substituiert ist, die unabhängig aus einer Gruppe ausgewählt sind umfassend die Wasserstoff, ein Halogen, ein C₁-C₂₅-Alkyl, ein C₃-C₂₅-Cycloalkyl, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Perfluoralkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₆-C₂₀-Heteroaryl oder ein C₅-C₂₄-Heteroaryloxy ein 3-12-gliedriger Heterocyclus, eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"₃), eine Nitrogruppe (-NO₂), eine Cyanogruppe (-CN), eine Phosphonatgruppe (-P(O)(OR")₂), eine Phosphinatgruppe (-P(O)R"(OR")), eine Phosphonitgruppe (-P(OR")₂), eine Phosphingruppe (PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R"), in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl ist, oder
- Heteroatom 3
ausgewählt aus einer Gruppe umfassend ein Halogen, und dann repräsentiert die gestrichelte Linie eine direkte Bindung des Heteroatoms an den R¹⁴-Substituenten, wobei der R¹⁴-Substituent ein C₅-C₁₅-Aryl oder ein C₅-C₂₅-Polyaryl ist, das optional mit 1-4 Substituenten substituiert ist, die unabhängig ausgewählt sind aus einer Gruppe umfassend Wasserstoff, ein Halogen, ein C₁-C₂₅-Alkyl, ein C₃-C₂₅-Cycloalkyl, ein C₂-C₂₅-Alkenyl, ein C₃-C₂₅-Cycloalkenyl, ein C₂-C₂₅-Alkinyl, ein C₃-C₂₅-Cycloalkinyl, ein C₁-C₂₅-Perfluoralkyl, ein C₅-C₂₀-Alkoxy, ein C₅-C₂₀-Aryl, ein C₅-C₂₀-Perfluoraryl, ein C₇-C₂₀-Aralkyl, ein C₅-C₂₄-Aryloxy, ein C₆-C₂₀-Heteroaryl oder ein C₃-C₂₄-Heteroaryloxy, einen 3-12-gliedriger Heterocyclus, eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R"), eine Sulfonamidgruppe (-SO₂NR"₂), eine Aminogruppe (-NR"₂), eine Ammoniumgruppe (-N⁺R"₃), eine Nitrogruppe (-NO₂), eine Cyanogruppe (CN), eine Phosphonatgruppe (-P(O)(OR")₂), eine Phosphinatgruppe (-P(O)R"(OR")), eine Phosphonitgruppe (-P(OR")₂), eine Phosphingruppe (-PR"₂), eine Phosphinoxidgruppe (-P(O)R"₂), eine Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R"), in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl;
wird mit einer Verbindung der Struktur reagiert, die durch Formel 3a oder 3b definiert ist: 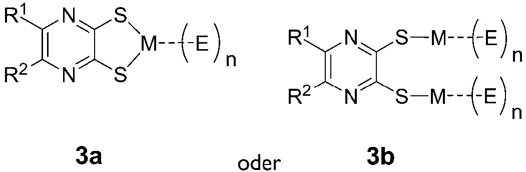 in denen
M ein monovalentes oder divalentes Metallkation ist;
n 0, 1 oder 2 ist;
E mindestens ein Heteroatom, ausgewählt aus einer Gruppe umfassend Sauerstoff, Schwefel, Selen, Stickstoff, Phosphor ist, die mit einer Gruppe substituiert sind, oder, wenn das Heteroatom Stickstoff oder Phosphor ist, mit den Gruppen: C₁-C₂₅-Alkylgruppe, C₁-C₂₅-Cycloalkylgruppe, C₅-C₂₀-Alkoxygruppe, C₅-C₂₀-Arylgruppe, C₇-C₂₀-Aralkylgruppe, C₅-C₂₄-Aryloxygruppe, C₂-C₁₂-Alkenylgruppe, C₆-C₂₀-Heteroarylgruppe, C₅-C₂₄-Heteroaryloxygruppe oder Wasserstoff, die optional durch mindestens eine C₁-C₁₂-Alkyl- oder C₁-C₁₂-Perfluoralkylgruppe substituiert sind, oder, wenn zwei identische oder unterschiedliche Heteroatome ein Chelatsystem bilden, dann bilden sie zusammengenommen ein substituiertes oder unsubstituiertes cyclisches C₄-C₁₀-, polycyclisches C₄-C₁₂-, aromatisches C₄-C₁₀-, heteroaromatisches C₄-C₁₀-System, das durch einen und/oder mehrere Substituenten substituiert sein kann,
ausgewählt aus Wasserstoff, einem C₁-C₁₂-Alkyl, einem C₁-C₁₂-Perfluoralkyl, einem C₁-C₁₂-Alkoxy, einem C₅-C₂₄-Aryloxy, einem C₅-C₂₀-Heteroaryloxy und einem Halogen;
R¹ und R² unabhängig Wasserstoff, ein Halogen, ein C₁-C₂₅-Alkyl, ein C₅-C₂₀-Alkoxy, ein C₅-C₂₀-Aryl, ein C₇-C₂₀-Aralkyl, ein C₅-C₂₄-Aryloxy, ein C₂-C₁₂-Alkenyl, ein C₆-C₂₀-Heteroaryl oder ein C₅-C₂₄-Heteroaryloxy sind, die optional durch mindestens ein C₁-C₁₂-Alkyl oder C₁-C₁₂-Perfluoralkyl substituiert sind, oder R¹ und R² unabhängig eine Alkoxygruppe (-OR"), eine Sulfidgruppe (-SR"), eine Sulfoxidgruppe (-S(O)R"), eine Sulfoniumgruppe (-S⁺R"₂), eine Sulfonylgruppe (-SO₂R'), eine Sulfonamidgruppe (-SO₂NR"₂), eine Aminogruppe (-NR"₂), eine Ammoniumgruppe (-N⁺R"₃), eine Nitrogruppe (-NO₂), eine Cyanogruppe (-CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), eine Carboxylgruppe (-COOH), eine Estergruppe (-COOR"), eine Amidgruppe (-CONR"₂), eine Amidgruppe (-NR"C(O)R"), eine Formylgruppe (-CHO), eine Ketogruppe (-COR"), eine Thioamidgruppe (-CSNR"₂), eine Thioketongruppe (-CSR"), eine Thionoestergruppe (-CSOR"), eine Thioestergruppe (-COSR"), eine Dithioestergruppe (-CS₂R") sind, in denen die Gruppe R" ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl sind, wobei alternativ zwei R"-Gruppen zusammengenommen einen C₅-C₂₅-Ring bilden, der alternativ mindestens ein Heteroatom, ausgewählt aus Sauerstoff, Schwefel, Selen, Stickstoff, Phosphor, enthalten kann, optional zusätzlich substituiert mit einer C₁-C₁₂-Alkylgruppe, wobei das im heterocyclischen Ring vorhandene Heteroatom durch eine oder zwei C₁-C₁₂-Alkylgruppen substituiert sein kann, um eine quartäre Ammoniumgruppe, eine tertiäre Sulfoniumgruppe oder eine quartäre Phosphoniumgruppe zu bilden,
oder R¹ und R² zusammengenommen einen substituiertes oder unsubstituiertes cyclisches C₄-C₁₀- polycyclisches C₄-C₁₂-, aromatisches C₄-C₁₀-, heteroaromatisches C₄-C₁₀- polyaromatisches C₄-C₁₀- und polyheteroaromatisches C₄-C₁₀-System bilden, das durch einen und/oder mehrere Substituenten substituiert sein kann ausgewählt aus Wasserstoff, einem Halogen, einer C₁-C₂₅-Alkylgruppe, einer C₁-C₁₂-Perfluoralkylgruppe, einer C₁-C₁₂-Alkoxygruppe, einer C₅-C₂₄-Aryloxygruppe, einer C₅-C₂₀-Heteroaryloxygruppe, einer C₂-C₂₅-Alkenylgruppe, einer Alkoxygruppe (-OR"), einer Sulfidgruppe (-SR"), einer Sulfoxidgruppe (-S(O)R"), einer Sulfoniumgruppe (-S⁺R"₂), einer Sulfonylgruppe (-SO₂R"), einer Sulfonamidgruppe (-SO₂NR"₂), einer Aminogruppe (-NR"₂), einer Ammoniumgruppe (-N⁺R"₃), einer Nitrogruppe (-NO₂), einer Cyanogruppe (-CN), einer Phosphonatgruppe (-P(O)(OR")₂), einer Phosphinatgruppe (-P(O)R"(OR")), einer Phosphonitgruppe (-P(OR")₂), einer Phosphingruppe (-PR"₂), einer Phosphinoxidgruppe (-P(O)R"₂), einer Phosphoniumgruppe (-P⁺R"₃), einer Carboxylgruppe (-COOH), einer Estergruppe (-COOR"), einer Amidgruppe (-CONR"₂), einer Amidgruppe (-NR"C(O)R"), einer Formylgruppe (-CHO), einer Ketogruppe (-COR"), einer Thioamidgruppe (-CSNR"₂), einer Thioketongruppe (-CSR"), einer Thionoestergruppe (-CSOR"), einer Thioestergruppe (-COSR"), einer Dithioestergruppe (-CS₂R"), in denen die R"-Gruppe ein C₁-C₅-Alkyl, ein C₁-C₅-Perfluoralkyl, ein C₆-C₂₄-Aryl, ein C₇-C₂₄-Aralkyl, ein C₅-C₂₄-Perfluoraryl ist, alternativ zwei R"-Gruppen zusammengenommen einen C₅-C₂₅-Ring bilden, der alternativ mindestens ein Heteroatom, ausgewählt aus Sauerstoff, Schwefel, Selen, Stickstoff, Phosphor enthalten kann.

13. Verwendung einer Verbindung der Formel **1-Ru** nach einem der Ansprüche 1 bis 7 als Vorkatalysator und/oder Katalysator in Olefinmetathese-Reaktionen, insbesondere in Ringschlussmetathese (RCM), Kreuzmetathese (CM), Homometathese (Kreuzmetathese zwischen zwei Molekülen desselben Olefins), Ethenolyse, Isomerisierung, in diastereoselektiver Ringumlagerungsmetathese (DRRM)-Reaktion, Alken-Alkin (En-In)-Metathese oder ROMP- oder ADMET-Polymerisationsreaktion.

14. Verwendung nach Anspruch 13, wobei die Olefinmetathese-Reaktionen mit dem Katalysator und/oder Vorkatalysator **1-Ru,** der in einem der Ansprüche 1 bis 7 definiert ist, in Gegenwart einer Verbindung durchgeführt werden, die einer Struktur aufweist, welche durch eine aus **3-Zn1, 3-Zn2, 3-Zn3, 3-Zn4, 3-Zn5, 3-Zn6, 3-Zn7, 3-Zn8, 3-Zn9, 3-Zn10, 3-Zn11, 3-Zn12, 3-Zn13,** 3-**K1** ausgewählte Formel dargestellt wird, wie in Anspruch 11 definiert, in einer Menge von 0,0001 Mol-% bis 200 Mol-%.

15. Verwendung nach Anspruch 13 oder 14, wobei die Reaktion in einem organischen Lösungsmittel ausgewählt aus Toluol, Benzol, Mesylen, Hexan, Dichlormethan, Dichlorethan, Chlorbenzol, Perfluorbenzol, Perfluorotoluol, Ethylacetat, Methylacetat, Methylcarbonat, Ethylcarbonat, Methyl-tert-butylether, Cyclopentylmethylether, Diethylether, THF, 2-ME-THF, 4-ME-THP, Dioxan, DME, PAO, PEG, Paraffin, Estern gesättigter Fettsäuren durchgeführt wird, oder die Reaktion in einem lösungsmittelfreien System durchgeführt wird, und/oder die Reaktion bei einer Temperatur von 20 bis 200 °C durchgeführt wird, und/oder die Reaktion über einen Zeitraum von 5 Minuten bis 48 Stunden durchgeführt wird, und/oder wobei die **1-Ru**-Verbindung in einer Menge von nicht mehr als 10 Mol-% verwendet wird, bevorzugt nicht mehr als 0,1 Mol-% , und/oder wobei die **1-Ru**-Verbindung dem Reaktionsgemisch portionsweise in einer festen Form und/oder kontinuierlich unter Verwenden einer Pumpe als Lösung in einem organischen Lösungsmittel zugegeben wird, und/oder wobei das gasförmige Nebenprodukt der Reaktion, ausgewählt aus Ethylen, Propylen, Butylen, unter Verwenden einer Inertgas-Barbotage oder durch Vakuum aktiv aus dem Reaktionsgemisch entfernt wird.

## Revendications

1. Complexe de ruthénium de formule **1-Ru** 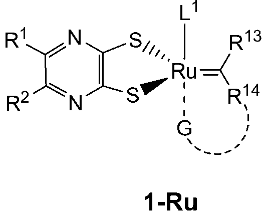 dans laquelle :
L¹ est un ligand neutre sélectionné parmi les carbènes N-hétérocycliques (NHC), les alkylaminocarbènes cycliques (CAAC) ou les phosphines ;
R¹ et R² sont indépendamment un hydrogène, un halogène, un alkyle en C₁-C₂₅, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, qui sont optionnellement substitués avec au moins un alkyle en C₁-C₁₂, un perfluoroalkyle en C₁-C₁₂, ou R¹ et R² sont indépendamment un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante deux groupes R", pris ensemble, forment un cycle en C₅-C₂₅, qui peuvent en variante contenir au moins un hétéroatome sélectionné parmi un oxygène, un soufre, un sélénium, un azote, un phosphore, optionnellement en outre substitué avec un groupe alkyle en C₁-C₁₂, dans lequel l'hétéroatome présent dans le cycle hétérocyclique peut être substitué avec un ou deux groupes alkyle en C₁-C₁₂ pour former un groupe ammonium quaternaire, un groupe sulfonium tertiaire ou un groupe phosphonium quaternaire ;
ou R¹ et R², pris ensemble, forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un halogène, un groupe alkyle en C₁-C₂₅, un groupe perfluoroalkyle en C₁-C₁₂, un groupe alcoxy en C₁-C₁₂, un groupe aryloxy en C₅-C₂₄, un groupe hétéroaryloxy en C₅-C₂₀, un groupe alcényle en C₂-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante, les deux groupes R", pris ensemble, forment un cycle en C₅-C₂₅, qui peut en variante contenir au moins un hétéroatome sélectionné parmi un oxygène, un soufre, un sélénium, un azote et un phosphore ;
R¹³ et R¹⁴ sont indépendamment un hydrogène, un halogène, un alkyle en C₁-C₂₅ optionnellement substitué, un cycloalkyle en C₃-C₂₅ optionnellement substitué, un perfluoroalkyle en C₁-C₁₂ optionnellement substitué, un alcène en C₂-C₂₅ optionnellement substitué, un alcényle en C₂-C₂₅ optionnellement substitué, un cycloalcényle en C₃-C₂₅ optionnellement substitué, un alcynyle en C₂-C₂₅ optionnellement substitué, un cycloalcynyle en C₃-C₂₅ optionnellement substitué, un alcoxy en C₁-C₂₅ optionnellement substitué, un aryle en C₅-C₂₅ optionnellement substitué, un aryloxy en C₅-C₂₅ optionnellement substitué, un aralkyle en C₆-C₂₅ optionnellement substitué, un hétéroaryle en C₅-C₂₅ optionnellement substitué, un hétéroaryloxy en C₅-C₂₅ optionnellement substitué, un perfluoroaryle en C₅-C₂₅ optionnellement substitué, un hétérocycle de 3 à 12 chaînons contenant un soufre, un oxygène, un azote, un sélénium ou un phosphore, optionnellement substitué ;
dans lequel les substituants R¹³ et R¹⁴, pris ensemble, peuvent former un cycle sélectionné dans un groupe comprenant un cycloalkyle en C₃-C₂₅, un cycloalcényle en C₃-C₂₅, un cycloalcynyle en C₃-C₂₅, un aryle en C₅-C₂₅, un hétéroaryle en C₅-C₂₅, un perfluoroaryle en C₅-C₂₅, un hétérocycle de 3 à 12 chaînons contenant un soufre, un oxygène, un azote, un sélénium ou un phosphore, optionnellement substitué avec un et/ou plusieurs substituants sélectionnés indépendamment dans un groupe comprenant un hydrogène, un halogène, un alkyle en C₁-C₂₅, un cycloalkyle en C₃-C₂₅, un perfluoroalkyle en C₁-C₁₂, un alcène en C₂-C₂₅, un alcényle en C₂-C₂₅, un cycloalcényle en C₃-C₂₅, un alcynyle en C₂-C₂₅, un cycloalcynyle en C₃-C₂₅, un alcoxy en C₁-C₂₅, un aryle en C₅-C₂₅, un aryloxy en C₅-C₂₅, un arylalkyle en C₆-C₂₅, un hétéroaryle en C₅-C₂₅, un hétéroaryloxy en C₅-C₂₅, un perfluoroaryle en C₅-C₂₅, et un hétérocycle de 3 à 12 chaînons ;
G est sélectionné parmi
- un ligand L² 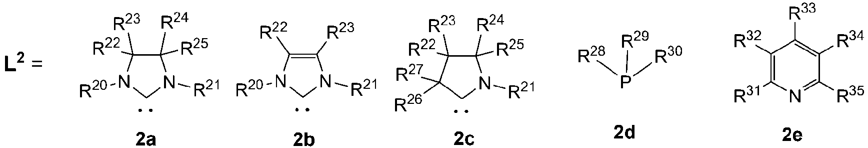
dans lequel les substituants R²⁰ et R²¹ sont indépendamment un groupe alkyle en C₁-C₁₂, un groupe cycloalkyle en C₃-C₁₂, un groupe aryle en C₅-C₂₀ ou un groupe hétéroaryle en C₅-C₂₀, un groupe aralkyle en C₅-C₂₅, qui peuvent être substitués indépendamment avec un et/ou plusieurs substituants sélectionnés dans un groupe comprenant un hydrogène, un halogène, un alkyle en C₁-C₁₂, un perfluoroalkyle en C₁-C₁₂, un aryle en C₅-C₂₀, un perfluoroaryle en C₅-C₂₀, un hétéroaryle en C₅-C₂₀, un alcoxy en C₁-C₁₂, un aryloxy en C₅-C₂₄, un hétéroaryloxy en C₅-C₂₀, un alcoxy (-OR"), un sulfure (-SR"), un groupe amine (-NR"₂), dans lesquels le groupe R" est indépendamment un hydrogène, un alkyle en C₁-C₅, un aryle en C₆-C₂₄, un aralkyle en C₇-C₂₄, en variante R²⁰ et R²¹, pris ensemble, forment un cycle en C₅-C₂₅ ;
chaque substituant R²², R²³, R²⁴, R²⁵, R²⁶ et R²⁷ est indépendamment un hydrogène, un halogène, le groupe hydroxyle, un groupe alcoxy en C₁-C₁₂, un groupe hydroxyméthyle (-CH₂OH), un groupe alkyle en C₁-C₁₂ optionnellement substitué avec un groupe amine (-NR^{a}₂), dans lequel chaque R^{a} est indépendamment un hydrogène ou un alkyle en C₁-C₁₂, les deux groupes R^{a}, pris ensemble, peuvent former soit un cycle cycloalkyle en C₃-C₁₂, soit un groupe hétérocycloalkyle en C₃-C₂₅, cycloalkyle en C₃-C₁₂ ; un groupe aryle en C₅-C₂₀, un groupe hétéroaryle en C₅-C₂₀, un groupe ester (-OCOR^{b}), un groupe (-COR^{d}), un groupe méthylester (-CH₂OCOR^{b}), dans lequel R^{b} est soit un groupe aryle en C₅-C₂₀, soit un groupe perfluoroaryle en C₅-C₂₀ ; un groupe amine (-NR^{c}₂), un groupe méthylamine (-CH₂NR^{c}₂), dans lequel chaque R^{c} est indépendamment un hydrogène ou un alkyle en C₁-C₁₂, les deux groupes R^{c}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₁-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire,
qui peut être substitué indépendamment avec au moins un substituant sélectionné dans un groupe comprenant un hydroxyle (OH), un alkyle en C₁-C₁₂, un perfluoroalkyle en C₁-C₁₂, un alcoxy en C₁-C₁₂, un halogène, un hétérocycloalkyle en C₃-C₁₂ optionnellement substitué avec un groupe alkyle en C₁-C₁₂, un groupe ester (-COOR^{d}) ou un groupe (-COR^{d}), dans lesquels R^{d} est un groupe aryle en C₅-C₂₀ ou un groupe perfluoroaryle en C₅-C₂₀, ou un groupe amine (-NR^{e}₂) dans lequel chaque R^{e} est indépendamment un hydrogène ou un alkyle en C₁-C₁₂, les deux groupes R^{e}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₁-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire, et les substituants R²⁰, R²¹, R²², R²³, R²⁴, R²⁵, R²⁶, et R²⁷ peuvent optionnellement être interconnectés pour former un système cyclique en C₄-C₁₀ ou un système polycyclique en C₄-C₁₂ ;
chaque substituant R²⁸, R²⁹ et R³⁰ est indépendamment un alkyle en C₁-C₂₅, un cycloalkyle en C₃-C₁₂, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀, ou un hétéroaryloxy en C₅-C₂₄, qui sont optionnellement substitués avec au moins un alkyle en C₁-C₁₂ ou un perfluoroalkyle en C₁-C₁₂, ou R²⁸, R²⁹ et R³⁰, pris ensemble, forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un alkyle en C₁-C₁₂, un perfluoroalkyle en C₁-C₁₂, un alcoxy en C₁-C₁₂, un aryloxy en C₅-C₂₄, un hétéroaryloxy en C₅-C₂₀ et un halogène ;
chaque substituant R³¹, R³², R³³, R³⁴ et R³⁵ est indépendamment un groupe alkyle en C₁-C₁₂, un groupe cycloalkyle en C₃-C₁₂, un groupe aryle en C₅-C₂₀ ou un groupe hétéroaryle en C₅-C₂₀, qui peuvent être substitués indépendamment avec un et/ou plusieurs substituants sélectionnés dans un groupe comprenant un hydrogène, un groupe alkyle en C₁-C₁₂, un groupe perfluoroalkyle en C₁-C₁₂, un groupe alcoxy en C₁-C₁₂, un groupe aryloxy en C₅-C₂₄, un groupe hétéroaryloxy en C₅-C₂₀, ou un halogène ;
ou
- un hétéroatome 1
sélectionné dans un groupe comprenant un oxygène, un soufre, un sélénium, substitué avec un groupe sélectionné parmi un hydrogène, un halogène, un oxygène, un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, un hétérocycle de 3 à 12 chaînons, optionnellement substitué avec un groupe acyle (-COR'), cyano (-CN), carboxyle (-COOH), ester (-COOR'), ester (-CH₂COOR'), ester (-CHR'COOR'), ester (-C(R')₂COOR'), amide (-CONR'₂), amide de type Weinreb (-CON(R')(OR')), sulfonique (-SO₂R'), formyle (-COH), sulfonamide (-SO₂NR'₂), cétone (-COR'), thiamide (-CSNR'₂), thiocétone (-CSR'), thionoester (-CSOR'), thioester (-COSR'), dithioester (-CS₂R"), dans lesquels le groupe R' est indépendamment un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀, un hétéroaryloxy en C₅-C₂₄ et ensuite la ligne en pointillé représente une liaison directe de l'hétéroatome au substituant R¹⁴ ou représente la liaison du substituant R¹⁴ à l'hétéroatome via un pont méthylène -CH₂-, -CHR'- ou CR'₂ -, dans lequel le substituant R¹⁴ est un aryle en C₅-C₁₅ optionnellement substitué avec 1 à 4 substituants sélectionnés indépendamment dans un groupe comprenant un hydrogène, un halogène, un alkyle en C₁-C₂₅, un cycloalkyle en C₃-C₂₅, un alcényle en C₂-C₂₅, un cycloalcényle en C₃-C₂₅, un alcynyle en C₂-C₂₅, un cycloalcynyle en C₃-C₂₅, un perfluoroalkyle en C₁-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un hétéroaryle en C₆-C₂₀ ou un hétéroaryloxy en C₅-C₂₄, un hétérocycle de 3 à 12 chaînons, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans lesquels le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄ ; ou
- un hétéroatome 2
sélectionné dans un groupe comprenant un azote ou un phosphore, substitué avec un groupe sélectionné parmi un hydrogène, un méthylidène optionnellement substitué avec un substituant R', un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, un hétérocycle de 3 à 12 chaînons, un groupe acyle (-COR'), un groupe ester (-COOR'), un groupe tert-butyloxycarbonyle (t-Boc) ou un groupe 9-fluorénylméthoxycarbonyle (Fmoc), un groupe carbamate (-CONR'₂), un groupe sulfonique (-SO₂R'), un groupe formyle (-COH), dans lesquels le groupe R' est un alkyle en C₁ -C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄ optionnellement substitué avec un groupe acyle (-COR"), cyano (-CN), carboxyle (-COOH), ester (-COOR"), ester (-CH₂COOR"), ester (-CHR"COOR"), ester (-C(R")₂COOR"), amide (-CONR"₂), sulfonique (-SO₂R"), formyle (-COH), sulfonamide (-SO₂NR"₂), cétone (-COR"), thioamide (-CSNR"₂), thiocétone (-CSR"), thionoester (-CSOR"), thioester (-COSR"), dithioester (-CS₂R"), dans lesquels le groupe R" est un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀, ou un hétéroaryloxy en C₅-C₂₄, et ensuite la ligne en pointillé représente une liaison directe de l'hétéroatome au substituant R¹⁴ ou représente la liaison du substituant R¹⁴ à l'hétéroatome via un pont méthylène (CH₂)-, -(CHR')- ou (CR'₂)- ; dans lequel le substituant R¹⁴ est un aryle en C₅-C₁₅ optionnellement substitué avec 1 à 4 substituants sélectionnés indépendamment dans un groupe comprenant un hydrogène, un halogène, un alkyle en C₁-C₂₅, un cycloalkyle en C₃-C₂₅, un alcényle en C₂-C₂₅, un cycloalcényle en C₃-C₂₅, un alcynyle en C₂-C₂₅, un cycloalcynyle en C₃-C₂₅, un perfluoroalkyle en C₁-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un hétéroaryle en C₆-C₂₀ ou un hétéroaryloxy en C₅-C₂₄, un hétérocycle de 3 à 12 chaînons, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans lesquels le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, ou
- un hétéroatome 3
sélectionné dans un groupe comprenant un halogène, et ensuite la ligne en pointillé représente une liaison directe de l'hétéroatome au substituant R¹⁴, dans lequel le substituant R¹⁴ est un aryle en C₅-C₁₅ ou un polyaryle en C₅-C₂₅ optionnellement substitué avec 1 à 4 substituants sélectionnés indépendamment dans un groupe comprenant un hydrogène, un halogène, un alkyle en C₁-C₂₅, un cycloalkyle en C₃-C₂₅, un alcényle en C₂-C₂₅, un cycloalcényle en C₃-C₂₅, un alcynyle en C₂-C₂₅, un cycloalcynyle en C₃-C₂₅, un perfluoroalkyle en C₁-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un hétéroaryle en C₆-C₂₀ ou un hétéroaryloxy en C₅-C₂₄, un hétérocycle de 3 à 12 chaînons, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR")₂, un groupe oxyde de phosphine (-P(O)R")₂, un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans lesquels le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄.

2. Complexe de ruthénium selon la revendication 1, dans lequel les substituants R¹³ et R¹⁴ sont indépendamment un hydrogène et/ou un aryle en C₅-C₂₅ substitué indépendamment avec un hydrogène, un halogène, un groupe alkyle en C₁-C₂₅, un groupe alcényle en C₂-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂ R"), dans lesquels le groupe R" est indépendamment un hydrogène, un alkyle en C₁-C₅, un perfluoroalkyle en C₁-C₅, un aryle en C₆-C₂₄, un aralkyle en C₇-C₂₄, un perfluoroaryle en C₅-C₂₄, les deux groupes R", pris ensemble, peuvent former soit un cycle cycloalkyle en C₃-C₁₂, soit un cycle hétérocycloalkyle en C₃-C₂₅ contenant un azote, un oxygène ou un soufre, optionnellement substitué en outre avec un groupe alkyle en C₁-C₁₂, en variante R" est un groupe cétone (-COR^{c}) dans lequel R^{c} est un groupe perfluoroalkyle ou alcoxy en C₁-C₁₂ (-OR^{d}) dans lequel R^{d} est un alkyle en C₁-C₁₂ ou un hétérocycloalkyle en C₃-C₁₂ contenant un azote, un oxygène ou un soufre optionnellement substitué en outre avec un groupe alkyle en C₁-C₁₂ ;

3. Complexe de ruthénium selon la revendication 1 ou 2,
dans lequel le ligand L¹ neutre présente une structure représentée par une formule générale sélectionnée parmi **2a, 2b, 2c ou 2d** 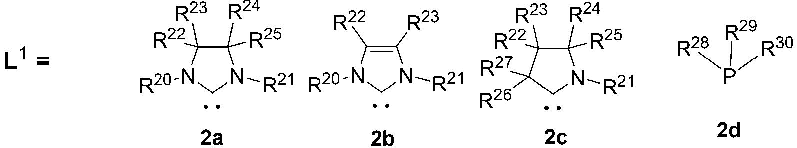 dans laquelle :
chaque substituant R²⁰ et R²¹ est indépendamment un groupe alkyle en C₁-C₁₂, un groupe cycloalkyle en C₃-C₁₂, un groupe aryle en C₅-C₂₀ ou un groupe hétéroaryle en C₅-C₂₀, qui peuvent être substitués indépendamment avec un et/ou plusieurs substituants sélectionnés dans un groupe comprenant un hydrogène, un groupe alkyle en C₁-C₁₂, un groupe perfluoroalkyle en C₁-C₁₂, un groupe aryle en C₅-C₂₀, un groupe perfluoroaryle en C₅-C₂₀, un groupe hétéroaryle en C₅-C₂₀, un groupe alcoxy en C₁-C₁₂, un groupe aryloxy en C₅-C₂₄, un groupe hétéroaryloxy en C₅-C₂₀, ou un halogène, un groupe alcoxy (-OR"), un groupe sulfure (-SR"), un halogène, un groupe amino (-NR"₂), dans lesquels le groupe R" est indépendamment un hydrogène, un alkyle en C₁-C₅, un aryle en C₆-C₂₄, un aralkyle en C₇-C₂₄, en variante R²⁰ et R²¹, pris ensemble, forment un groupe cyclique en C₅-C₂₅ ;
chaque substituant R²², R²³, R²⁴, R²⁵, R²⁶ et R²⁷ est indépendamment un hydrogène, un halogène, le groupe hydroxyle, un groupe alcoxy en C₁-C₁₂, un groupe hydroxyméthyle (-CH₂OH), un groupe alkyle en C₁-C₁₂ optionnellement substitué avec un groupe amine (-NR^{a}₂), dans lequel chaque R^{a} est indépendamment un hydrogène ou un alkyle en C₁-C₁₂, les deux groupes R^{a}, pris ensemble, peuvent former soit un cycle cycloalkyle en C₃-C₁₂, soit un groupe hétérocycloalkyle en C₃-C₂₅, cycloalkyle en C₃-C₁₂ ; un groupe aryle en C₅-C₂₀, un groupe hétéroaryle en C₅-C₂₀, un groupe ester (-OCOR^{b}), un groupe (-COR^{d}), un groupe méthylester (-CH₂OCOR^{b}), dans lequel R^{b} est soit un groupe aryle en C₅-C₂₀, soit un groupe perfluoroaryle en C₅-C₂₀ ; un groupe amine (-NR^{c}₂), un groupe méthylamine (-CH₂NR^{c}₂), dans lequel chaque R^{c} est indépendamment un hydrogène ou un alkyle en C₁-C₁₂, les deux groupes R^{c}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₁-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire,
qui peut être substitué indépendamment avec au moins un substituant sélectionné dans un groupe comprenant un hydroxyle (OH), un alkyle en C₁-C₁₂, un perfluoroalkyle en C₁-C₁₂, un alcoxy en C₁-C₁₂, un halogène, un hétérocycloalkyle en C₃-C₁₂ optionnellement substitué avec un groupe alkyle en C₁-C₁₂, un groupe ester (-COOR^{d}) ou un groupe (-COR^{d}), dans lesquels R^{d} est un groupe aryle en C₅-C₂₀ ou un groupe perfluoroaryle en C₅-C₂₀, ou un groupe amine (-NR^{e}₂) dans lequel chaque R^{e} est indépendamment un hydrogène ou un alkyle en C₁-C₁₂, les deux groupes R^{e}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₁-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire, et les substituants R²⁰, R²¹, R²², R²³, R²⁴, R²⁵, R²⁶, et R²⁷ peuvent optionnellement être interconnectés pour former un système cyclique en C₄-C₁₀ ou un système polycyclique en C₄-C₁₂ ; R²⁸, R²⁹ et R³⁰ sont indépendamment un alkyle en C₁-C₂₅, un cycloalkyle en C₃-C₁₂, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀, ou un hétéroaryloxy en C₅-C₂₄, qui sont optionnellement substitués avec au moins un alkyle en C₁-C₁₂ ou un perfluoroalkyle en C₁-C₁₂, ou R¹ et R², pris ensemble, forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un alkyle en C₁-C₁₂, un perfluoroalkyle en C₁-C₁₂, un alcoxy en C₁-C₁₂, un aryloxy en C₅-C₂₄, un hétéroaryloxy en C₅-C₂₀ et un halogène.

4. Complexe de ruthénium selon la revendication 1 ou 2 ou 3, représenté par la formule **1a-Ru** 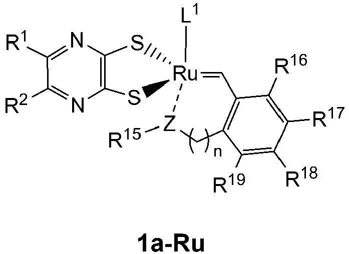 dans laquelle :
L¹ est un ligand neutre sélectionné parmi les carbènes N-hétérocycliques (NHC), les alkylaminocarbènes cycliques (CAAC) ou les phosphines ;
'n' est 1 ou 0
Z est sélectionné dans un groupe comprenant un halogène, O, S, Se, ou groupe NR", dans lequel R" est un méthylidène, un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, un hétérocycle de 3 à 12 chaînons, un groupe acyle (-COR'), un groupe ester (-COOR'), un groupe tert-butyloxycarbonyle (t-Boc) ou un groupe 9-fluorénylméthoxycarbonyle (Fmoc), un groupe carbamate (-CONR'₂), un groupe sulfonique (-SO₂R'), un groupe formyle (-COH), dans lesquels le groupe R' est un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄ ou un halogène, dans lequel lorsque Z est un halogène, R¹⁵ n'existe pas ;
R¹ et R² sont indépendamment un hydrogène, un halogène, un alkyle en C₁-C₂₅, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀, ou un hétéroaryloxy en C₅-C₂₄, qui sont optionnellement substitués avec au moins un alkyle en C₁-C₁₂ ou un perfluoroalkyle en C₁-C₁₂ ou R¹ et R², pris ensemble, forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un halogène, un alkyle en C₁-C₁₂, un perfluoroalkyle en C₁-C₁₂, un alcoxy en C₄-C₁₂, un aryloxy en C₅-C₂₄, un hétéroaryloxy en C₅-C₂₀, un alkyle en C₁-C₂₅, un groupe alcényle en C₂-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-Cs, un aryle en C₆-C₂₄, un aralkyle en C₇-C₂₄, un perfluoroaryle en C₅-C₂₄ ;
R¹⁵ est indépendamment un hydrogène, un alkyle en C₁-C₂₅, un cycloalkyle en C₁-C₂₅, un alcoxy en C₅-C₂₀, un aryle en C₅-C₂₀, un aryloxy en C₅-C₂₄, un groupe -COOR"', un groupe -CH₂COOR‴, un groupe -CONR‴₂, un groupe -CH₂CONR‴₂, un groupe -COR"', un groupe -CH₂COR‴, un groupe -CON(OR‴)(R‴), un groupe -CH₂CON(OR‴)(R‴), ou un halogène, dans lesquels R"' est un alkyle en C₁-C₁₂, un cycloalkyle en C₃-C₁₂, un alcényle en C₂-C₁₂, un aryle en C₆-C₂₀, qui peuvent être optionnellement substitués avec au moins un alkyle en C₁-C₁₂, un perfluoroalkyle en C₁-C₁₂, un alcoxy en C₁-C₁₂, un aryloxy en C₆-C₂₄, ou un halogène ;
R¹⁶, R¹⁷, R¹⁸ et R¹⁹ sont indépendamment un hydrogène, un halogène, un groupe alkyle en C₁-C₂₅, un groupe alcényle en C₂-C₂₅, un groupe aryle en C₅-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans lesquels le groupe R" est un alkyle en C₁-C₅, un perfluoroalkyle en C₁-C₅, un aryle en C₆-C₂₄, un aralkyle en C₇-C₂₄, et un perfluoroaryle en C₅-C₂₄, dans lequel les substituants R¹⁶, R¹⁷, R¹⁸ et R¹⁹, pris ensemble, peuvent former un système cyclique en C₄-C₁₀ ou polycyclique en C₄-C₁₂, substitué ou non substitué.

5. Complexe de ruthénium selon la revendication 1 ou 2 ou 3, ayant la formule **1b-Ru** 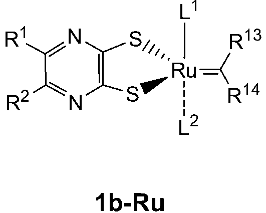 dans laquelle :
L¹ est un ligand neutre sélectionné parmi les carbènes N-hétérocycliques (NHC), les alkylaminocarbènes cycliques (CAAC) ou les phosphines PR₃ ;
L² est un ligand neutre sélectionné parmi les carbènes N-hétérocycliques (NHC), les alkylaminocarbènes cycliques (CAAC), les dérivés de phosphine PR₃ ou les dérivés de pyridine ;
R¹ et R² sont indépendamment un hydrogène, un halogène, un alkyle en C₁-C₂₅, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, qui sont optionnellement substitués avec au moins un alkyle en C₁-C₁₂ ou un perfluoroalkyle en C₁-C₁₂, ou R¹ et R², pris ensemble, forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un halogène, un groupe alkyle en C₁-C₂₅, un groupe perfluoroalkyle en C₁-C₁₂, un groupe alcoxy en C₁-C₁₂, un groupe aryloxy en C₅-C₂₄, un groupe hétéroaryloxy en C₅-C₂₀, un groupe alcényle en C₂-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante deux groupes R", pris ensemble, forment un cycle en C₅-C₂₅, qui peut en variante contenir au moins un hétéroatome sélectionné parmi un oxygène, un soufre, un sélénium, un azote, un phosphore ; R¹³ et R¹⁴ sont indépendamment un hydrogène, un halogène, un alkyle en C₁-C₂₅ optionnellement substitué, un cycloalkyle en C₃-C₂₅ optionnellement substitué, un perfluoroalkyle en C₁-C₁₂ optionnellement substitué, un alcène en C₂-C₂₅ optionnellement substitué, un alcényle en C₂-C₂₅ optionnellement substitué, un cycloalcényle en C₃-C₂₅ optionnellement substitué, un alcynyle en C₂-C₂₅ optionnellement substitué, un cycloalcynyle en C₃-C₂₅ optionnellement substitué, un alcoxy en C₁-C₂₅ optionnellement substitué, un aryle en C₅-C₂₅ optionnellement substitué, un aryloxy en C₅-C₂₅ optionnellement substitué, un arylalkyle en C₆-C₂₅ optionnellement substitué, un hétéroaryle en C₅-C₂₅ optionnellement substitué, un hétéroaryloxy en C₅-C₂₅ optionnellement substitué, un perfluoroaryle en C₅-C₂₅ optionnellement substitué, un hétérocycle de 3 à 12 chaînons contenant un soufre, un oxygène, un azote, un sélénium ou un phosphore, optionnellement substitué ;
dans lequel les substituants R¹³ et R¹⁴, pris ensemble, peuvent former un cycle sélectionné dans un groupe comprenant un cycloalkyle en C₃-C₂₅, un cycloalcényle en C₃-C₂₅, un cycloalcynyle en C₃-C₂₅, un aryle en C₅-C₂₅, un hétéroaryle en C₅-C₂₅, un perfluoroaryle en C₅-C₂₅, un hétérocycle de 3 à 12 chaînons contenant un soufre, un oxygène, un azote, un sélénium ou un phosphore, qui peuvent être substitués indépendamment avec un et/ou plusieurs substituants sélectionnés dans un groupe comprenant un hydrogène, un halogène, un alkyle en C₁-C₂₅, un cycloalkyle en C₃-C₂₅, un perfluoroalkyle en C₁-C₁₂, un alcène en C₂-C₂₅, un alcényle en C₂-C₂₅, un cycloalcényle en C₃-C₂₅, un alcynyle en C₂-C₂₅, un cycloalcynyle en C₃-C₂₅, un alcoxy en C₁-C₂₅, un aryle en C₅-C₂₅, un aryloxy en C₅-C₂₅, un arylalkyle en C₆-C₂₅, un hétéroaryle en C₅-C₂₅, un hétéroaryloxy en C₅-C₂₅, un perfluoroaryle en C₅-C₂₅, et un hétérocycle de 3 à 12 chaînons.

6. Complexe de ruthénium selon l'une des revendications 1 à 5, ayant la formule **1b-Ru** 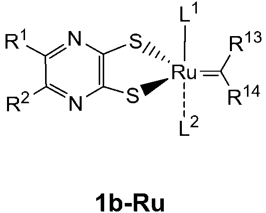 dans laquelle le ligand L¹ est 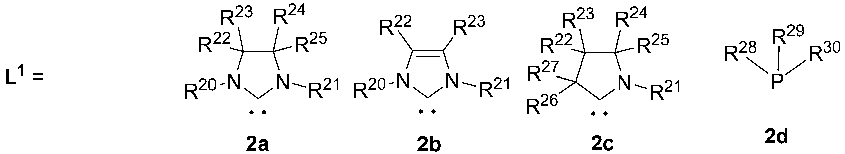 dans laquelle :
chaque substituant R²⁰ et R²¹ est indépendamment un groupe alkyle en C₁-C₁₂, un groupe cycloalkyle en C₃-C₁₂, un groupe aryle en C₅-C₂₀ ou un groupe hétéroaryle en C₅-C₂₀, qui peuvent être substitués indépendamment avec un et/ou plusieurs substituants sélectionnés dans un groupe comprenant un hydrogène, un groupe alkyle en C₁-C₁₂, un groupe perfluoroalkyle en C₁-C₁₂, un groupe aryle en C₅-C₂₀, un groupe perfluoroaryle en C₅-C₂₀, un groupe hétéroaryle en C₅-C₂₀, un groupe alcoxy en C₁-C₁₂, un groupe aryloxy en C₅-C₂₄, un groupe hétéroaryloxy en C₅-C₂₀, ou un halogène, un groupe alcoxy (-OR"), un groupe sulfure (-SR"), un halogène, un groupe amino (-NR"₂), dans lesquels le groupe R" est indépendamment un hydrogène, un alkyle en C₁-C₅, un aryle en C₆-C₂₄, un aralkyle en C₇-C₂₄, en variante R²⁰ et R²¹, pris ensemble, forment un groupe cyclique en C₅-C₂₅ ;
chaque substituant R²⁰, R²¹, R²², R²³, R²⁴, R²⁵, R²⁶, et R²⁷ est indépendamment un hydrogène, un halogène, le groupe hydroxyle, un groupe alcoxy en C₁-C₁₂, un groupe hydroxyméthyle (-CH₂OH), un groupe alkyle en C₁-C₁₂ optionnellement substitué avec un groupe amine (-NR^{a}₂), dans lequel chaque R^{a} est indépendamment un hydrogène ou un alkyle en C₁-C₁₂, les deux groupes R^{a}, pris ensemble, peuvent former soit un cycle cycloalkyle en C₃-C₁₂, soit un groupe hétérocycloalkyle en C₃-C₂₅, cycloalkyle en C₃-C₁₂ ; un groupe aryle en C₅-C₂₀, un groupe hétéroaryle en C₅-C₂₀, un groupe ester (-OCOR^{b}), un groupe (-COR^{d}), un groupe méthylester (-CH₂OCOR^{b}), dans lequel R^{b} est soit un groupe aryle en C₅-C₂₀, soit un groupe perfluoroaryle en C₅-C₂₀ ; un groupe amine (-NR^{c}₂), un groupe méthylamine (-CH₂NR^{c}₂2), dans lequel chaque R^{c} est indépendamment un hydrogène ou un alkyle en C₁-C₁₂, les deux groupes R^{c}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₁-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire,
qui peut être substitué indépendamment avec au moins un substituant sélectionné dans un groupe comprenant un hydroxyle (OH), un alkyle en C₁-C₁₂, un perfluoroalkyle en C₁-C₁₂, un alcoxy en C₁-C₁₂, un halogène, un hétérocycloalkyle en C₃-C₁₂ optionnellement substitué avec un groupe alkyle en C₁-C₁₂, un groupe ester (-COOR^{d}) ou un groupe (-COR^{d}), dans lesquels R^{d} est un groupe aryle en C₅-C₂₀ ou un groupe perfluoroaryle en C₅-C₂₀, ou un groupe amine (-NR^{e}₂) dans lequel chaque R^{e} est indépendamment un hydrogène ou un alkyle en C₁-C₁₂, les deux groupes R^{e}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₁-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire, et les substituants R²⁰, R²¹, R²², R²³, R²⁴, R²⁵, R²⁶, et R²⁷ peuvent optionnellement être interconnectés pour former un système cyclique en C₄-C₁₀ ou un système polycyclique en C₄-C₁₂ ;
R²⁸, R²⁹ et R³⁰ sont indépendamment un alkyle en C₁-C₂₅, un cycloalkyle en C₃-C₁₂, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀, ou un hétéroaryloxy en C₅-C₂₄, qui sont optionnellement substitués avec au moins un alkyle en C₁-C₁₂ ou un perfluoroalkyle en C₁-C₁₂, ou R²⁸, R²⁹ et R³⁰, pris ensemble, forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un alkyle en C₁-C₁₂, un perfluoroalkyle en C₁-C₁₂, un alcoxy en C₄-C₁₂, un aryloxy en C₅-C₂₄, un hétéroaryloxy en C₅-C₂₀ et un halogène ;
dans laquelle le ligand L² est: 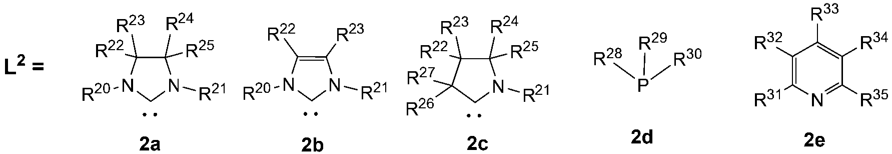 dans laquelle
chaque substituant R²⁰ et R²¹ est indépendamment un groupe alkyle en C₁-C₁₂, un groupe cycloalkyle en C₃-C₁₂, un groupe aryle en C₅-C₂₀ ou un groupe hétéroaryle en C₅-C₂₀, qui peuvent être substitués indépendamment avec un et/ou plusieurs substituants sélectionnés dans un groupe comprenant un hydrogène, un groupe alkyle en C₁-C₁₂, un groupe perfluoroalkyle en C₁-C₁₂, un groupe aryle en C₅-C₂₀, un groupe perfluoroaryle en C₅-C₂₀, un groupe hétéroaryle en C₅-C₂₀, un groupe alcoxy en C₁-C₁₂, un groupe aryloxy en C₅-C₂₄, un groupe hétéroaryloxy en C₅-C₂₀, ou un halogène, un groupe alcoxy (-OR"), un groupe sulfure (-SR"), un halogène, un groupe amino (-NR"₂), dans lesquels le groupe R" est indépendamment un hydrogène, un alkyle en C₁-C₅, un aryle en C₆-C₂₄, un aralkyle en C₇-C₂₄, en variante R²⁰ et R²¹, pris ensemble, forment un groupe cyclique en C₅-C₂₅ ;
chaque substituant R²², R²³, R²⁴, R²⁵, R²⁶ et R²⁷ est indépendamment un hydrogène, un halogène, le groupe hydroxyle, un groupe alcoxy en C₁-C₁₂, un groupe hydroxyméthyle (-CH₂OH), un groupe alkyle en C₁-C₁₂ optionnellement substitué avec un groupe amine (-NR^{a}₂), dans lequel chaque R^{a} est indépendamment un hydrogène ou un alkyle en C₁-C₁₂, les deux groupes R^{a}, pris ensemble, peuvent former soit un cycle cycloalkyle en C₃-C₁₂, soit un groupe hétérocycloalkyle en C₃-C₂₅, cycloalkyle en C₃-C₁₂ ; un groupe aryle en C₅-C₂₀, un groupe hétéroaryle en C₅-C₂₀, un groupe ester (-OCOR^{b}), un groupe (-COR^{d}), un groupe méthylester (-CH₂OCOR^{b}), dans lequel R^{b} est soit un groupe aryle en C₅-C₂₀, soit un groupe perfluoroaryle en C₅-C₂₀ ; un groupe amine (-NR^{c}₂), un groupe méthylamine (-CH₂NR^{c}₂), dans lequel chaque R^{c} est indépendamment un hydrogène ou un alkyle en C₁-C₁₂, les deux groupes R^{c}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₁-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire,
qui peut être substitué indépendamment avec au moins un substituant sélectionné dans un groupe comprenant un hydroxyle (OH), un alkyle en C₁-C₁₂, un perfluoroalkyle en C₁-C₁₂, un alcoxy en C₁-C₁₂, un halogène, un hétérocycloalkyle en C₃-C₁₂ optionnellement substitué avec un groupe alkyle en C₁-C₁₂, un groupe ester (-COOR^{d}) ou un groupe (-COR^{d}), dans lesquels R^{d} est un groupe aryle en C₅-C₂₀ ou un groupe perfluoroaryle en C₅-C₂₀, ou un groupe amine (-NR^{e}₂) dans lequel chaque R^{e} est indépendamment un hydrogène ou un alkyle en C₁-C₁₂, les deux groupes R^{e}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₁-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire, et les substituants R²⁰, R²¹, R²², R²³, R²⁴, R²⁵, R²⁶, et R²⁷ peuvent optionnellement être interconnectés pour former un système cyclique en C₄-C₁₀ ou un système polycyclique en C₄-C₁₂ ;
chaque substituant R²⁸, R²⁹ et R³⁰ est indépendamment un hydrogène, un halogène, un alkyle en C₁-C₂₅, un cycloalkyle en C₃-C₁₂, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀, ou un hétéroaryloxy en C₅-C₂₄, qui sont optionnellement substitués avec au moins un alkyle en C₁-C₁₂ ou un perfluoroalkyle en C₁-C₁₂, ou R²⁸, R²⁹ et R³⁰, pris ensemble, forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un alkyle en C₁-C₁₂, un perfluoroalkyle en C₁-C₁₂, un alcoxy en C₁-C₁₂, un aryloxy en C₅-C₂₄, un hétéroaryloxy en C₅-C₂₀ et un halogène ;
chaque substituant R³¹, R³², R³³, R³⁴ et R³⁵ est indépendamment un hydrogène, un halogène un groupe alkyle en C₁-C₁₂, un groupe cycloalkyle en C₃-C₁₂, un groupe aryle en C₅-C₂₀ ou un groupe hétéroaryle en C₅-C₂₀, qui peuvent être substitués indépendamment avec un et/ou plusieurs substituants sélectionnés dans un groupe comprenant un hydrogène, un groupe alkyle en C₁-C₁₂, un groupe perfluoroalkyle en C₁-C₁₂, un groupe alcoxy en C₁-C₁₂, un groupe aryloxy en C₅-C₂₄, un groupe hétéroaryloxy en C₅-C₂₀, ou un halogène ;
R¹³ et R¹⁴ sont indépendamment un hydrogène, un halogène, un alkyle en C₁-C₂₅ optionnellement substitué, un cycloalkyle en C₃-C₂₅ optionnellement substitué, un perfluoroalkyle en C₁-C₁₂ optionnellement substitué, un alcène en C₂-C₂₅ optionnellement substitué, un alcényle en C₂-C₂₅ optionnellement substitué, un cycloalcényle en C₃-C₂₅ optionnellement substitué, un alcynyle en C₂-C₂₅ optionnellement substitué, un cycloalcynyle en C₃-C₂₅ optionnellement substitué, un alcoxy en C₁-C₂₅ optionnellement substitué, un aryle en C₅-C₂₅ optionnellement substitué, un aryloxy en C₅-C₂₅ optionnellement substitué, un arylalkyle en C₆-C₂₅ optionnellement substitué, un hétéroaryle en C₅-C₂₅ optionnellement substitué, un hétéroaryloxy en C₅-C₂₅ optionnellement substitué, un perfluoroaryle en C₅-C₂₅ optionnellement substitué, un hétérocycle de 3 à 12 chaînons contenant un soufre, un oxygène, un azote, un sélénium ou un phosphore, optionnellement substitué ;
dans lequel les substituants R¹³ et R¹⁴, pris ensemble, peuvent former un cycle sélectionné dans un groupe comprenant un cycloalkyle en C₃-C₂₅, un cycloalcényle en C₃-C₂₅, un cycloalcynyle en C₃-C₂₅, un aryle en C₅-C₂₅, un hétéroaryle en C₅-C₂₅, un perfluoroaryle en C₅-C₂₅, un hétérocycle de 3 à 12 chaînons contenant un soufre, un oxygène, un azote, un sélénium ou un phosphore, qui peuvent être substitués indépendamment avec un et/ou plusieurs substituants sélectionnés dans un groupe comprenant un hydrogène, un halogène, un alkyle en C₁-C₂₅, un cycloalkyle en C₃-C₂₅, un perfluoroalkyle en C₁-C₁₂, un alcène en C₂-C₂₅, un alcényle en C₂-C₂₅, un cycloalcényle en C₃-C₂₅, un alcynyle en C₂-C₂₅, un cycloalcynyle en C₃-C₂₅, un alcoxy en C₁-C₂₅, un aryle en C₅-C₂₅, un aryloxy en C₅-C₂₅, un arylalkyle en C₆-C₂₅, un hétéroaryle en C₅-C₂₅, un hétéroaryloxy en C₅-C₂₅, un perfluoroaryle en C₅-C₂₅, et un hétérocycle de 3 à 12 chaînons.

7. Complexe de ruthénium selon l'une des revendications 1 à 6, **caractérisé en ce que** sa structure est représentée par une formule sélectionnée parmi

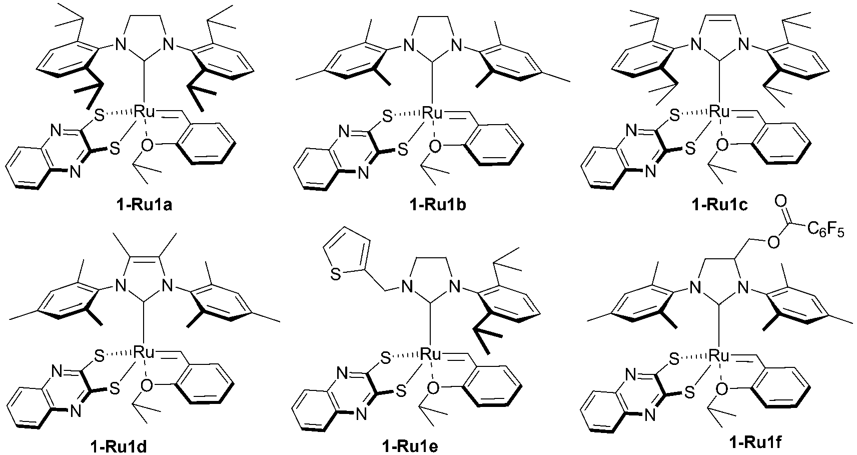

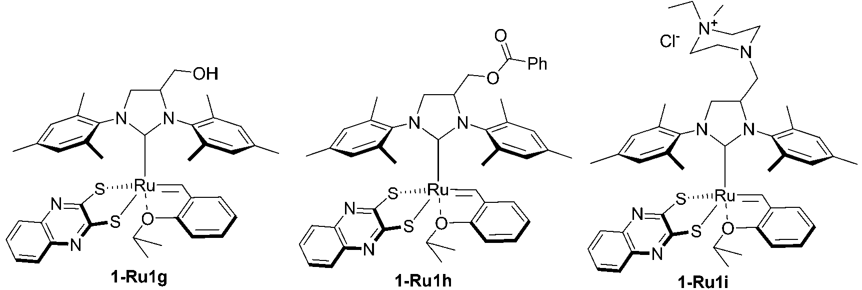

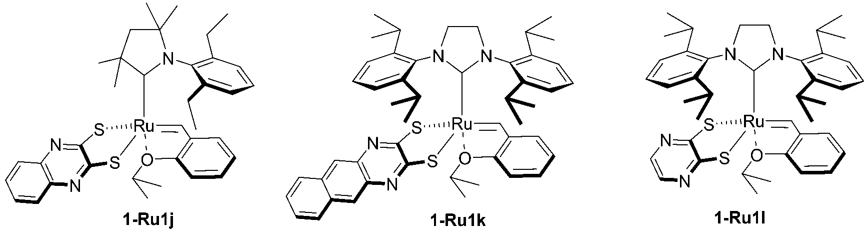

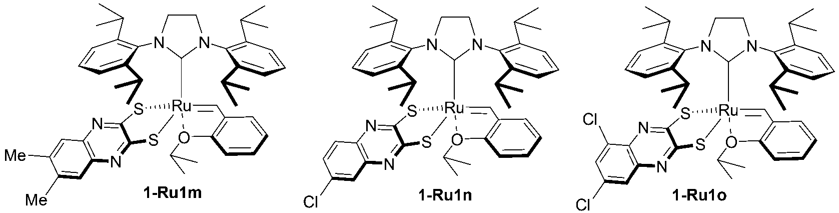

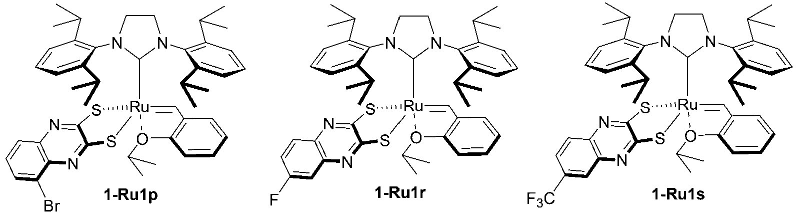

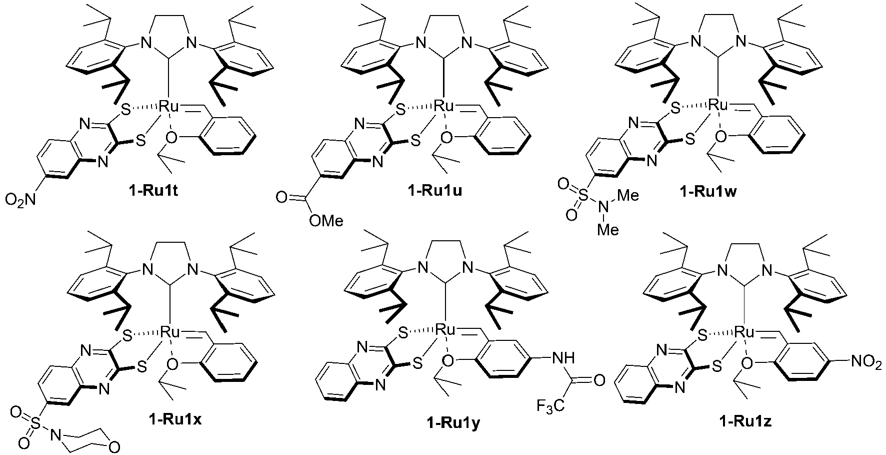

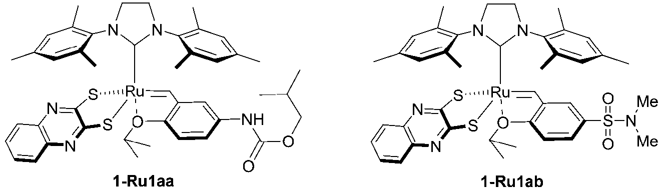

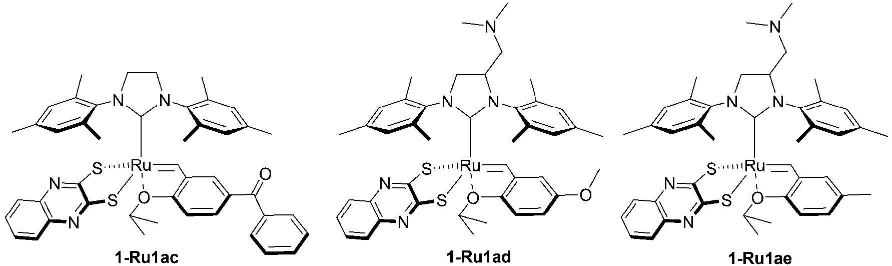

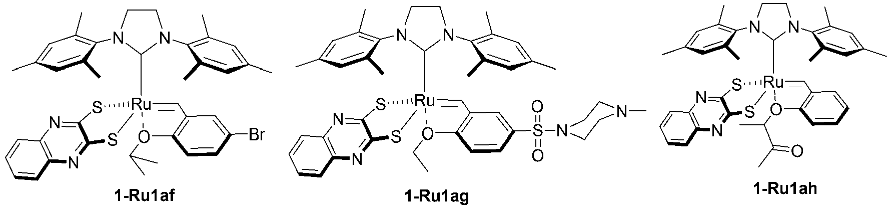

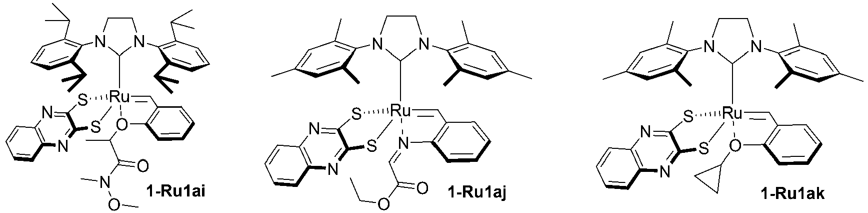

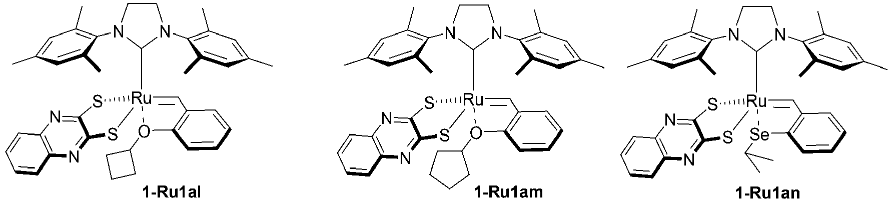

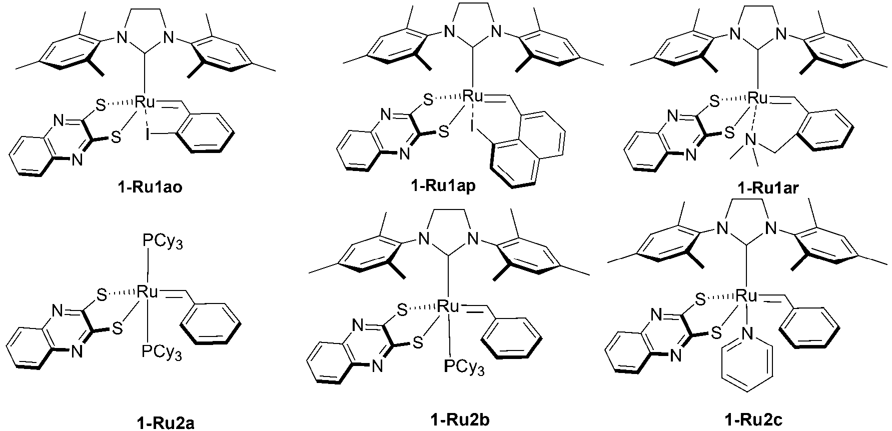

8. Composé ayant la structure définie par la formule **3a** ou **3b** 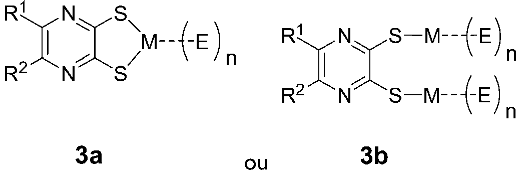 dans lesquelles
M est un cation de métal monovalent ou divalent ;
n est 0, 1, 2 ou 3 ;
E est au moins un hétéroatome sélectionné dans un groupe comprenant un oxygène, un soufre, un sélénium, un azote, un phosphore, qui sont substitués avec un groupe ou, si l'hétéroatome est un azote ou un phosphore, avec les groupes : groupe alkyle en C₁-C₂₅, groupe cycloalkyle en C₁-C₂₅, groupe alcoxy en C₅-C₂₀, groupe aryle en C₅-C₂₀, groupe aralkyle en C₇-C₂₀, groupe aryloxy en C₅-C₂₄, groupe alcényle en C₂-C₁₂, groupe hétéroaryle en C₆-C₂₀, groupe hétéroaryloxy en C₅-C₂₄, ou hydrogène, qui sont optionnellement substitués avec au moins un alkyle en C₁-C₁₂ ou un perfluoroalkyle en C₁-C₁₂, ou si deux hétéroatomes identiques ou différents constituent un système chélateur, alors, pris ensemble, ils forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un alkyle en C₁-C₁₂, un perfluoroalkyle en C₁-C₁₂, un alcoxy en C₁-C₁₂, un aryloxy en C₅-C₂₄, un hétéroaryloxy en C₅-C₂₀ et un halogène ;
R¹ et R² sont indépendamment un hydrogène, un halogène, un alkyle en C₁-C₂₅, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, qui sont optionnellement substitués avec au moins un alkyle en C₁-C₁₂ ou un perfluoroalkyle en C₁-C₄₂, ou R¹ et R² sont indépendamment un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante deux groupes R", pris ensemble, forment un cycle en C₅-C₂₅, qui peuvent en variante contenir au moins un hétéroatome sélectionné parmi un oxygène, un soufre, un sélénium, un azote, un phosphore, optionnellement en outre substitué avec un groupe alkyle en C₁-C₁₂, dans lequel l'hétéroatome présent dans le cycle hétérocyclique peut être substitué avec un ou deux groupes alkyle en C₁-C₁₂ pour former une amine primaire, secondaire ou tertiaire, un groupe ammonium quaternaire, un groupe sulfonium tertiaire ou un groupe phosphonium quaternaire,
ou R¹ et R², pris ensemble, forment un système cyclique en C₄-C₁₀, polycyclique en C₄-C₁₂, aromatique en C₄-C₁₀, hétéroaromatique en C₄-C₁₀, polyaromatique en C₄-C₁₀, et
polyhétéroaromatique en C₄-C₁₀, substitué ou non substitué, qui peut être substitué avec un et/ou plusieurs substituants sélectionnés parmi un hydrogène, un halogène, un groupe alkyle en C₁-C₂₅, un groupe perfluoroalkyle en C₁-C₁₂, un groupe alcoxy en C₁-C₁₂, un groupe aryloxy en C₅-C₂₄, un groupe hétéroaryloxy en C₅-C₂₀, un groupe alcényle en C₂-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante, les deux groupes R", pris ensemble, forment un cycle en C₅-C₂₅, qui peut en variante contenir au moins un hétéroatome sélectionné parmi un oxygène, un soufre, un sélénium, un azote et un phosphore.

9. Composé **3c** ou **3d** ou **3e** selon la revendication 8 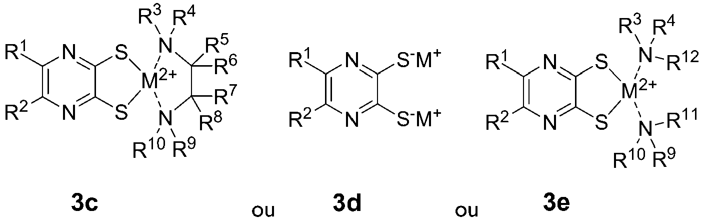 dans lesquels
M²⁺ est un cation de Zn, de Cu, de Mg, de Ca,
M⁺ est un cation de Li, de Na, de K, de Cs, de Cu ou de Cu×(E)*ₙ*
n est 1 ou 2 ;
R¹ et R² sont indépendamment un hydrogène ; un halogène, un alkyle en C₁-C₂₅, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, qui sont optionnellement substitués avec au moins un alkyle en C₁-C₁₂ ou un perfluoroalkyle en C₁-C₄₂, ou R¹ et R² sont indépendamment un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante deux groupes R", pris ensemble, forment un cycle en C₅-C₂₅, qui peuvent en variante contenir au moins un hétéroatome sélectionné parmi un oxygène, un soufre, un sélénium, un azote, un phosphore, optionnellement en outre substitué avec un groupe alkyle en C₁-C₁₂, dans lequel l'hétéroatome présent dans le cycle hétérocyclique peut être substitué avec un ou deux groupes alkyle en C₁-C₁₂ pour former une amine primaire, secondaire ou tertiaire, un groupe ammonium quaternaire, un groupe sulfonium tertiaire ou un groupe phosphonium quaternaire ;
ou R¹ et R², pris ensemble, forment un système cyclique en C₄-C₁₀, polycyclique en C₄-C₁₂, aromatique en C₄-C₁₀, hétéroaromatique en C₄-C₁₀, polyaromatique en C₄-C₁₀, et polyhétéroaromatique en C₄-C₁₀, substitué ou non substitué, qui peut être substitué avec un et/ou plusieurs substituants sélectionnés parmi un hydrogène, un halogène, un groupe alkyle en C₁-C₂₅, un groupe perfluoroalkyle en C₁-C₁₂, un groupe alcoxy en C₁-C₁₂, un groupe aryloxy en C₅-C₂₄, un groupe hétéroaryloxy en C₅-C₂₀, un groupe alcényle en C₂-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante, les deux groupes R", pris ensemble, forment un cycle en C₅-C₂₅, qui peut en variante contenir au moins un hétéroatome sélectionné parmi un oxygène, un soufre, un sélénium, un azote et un phosphore ;
R³, R⁴, R⁵, R⁶, R⁷, R⁸, R⁹, R¹⁰, R¹¹ et R¹² sont indépendamment un hydrogène, un alkyle en C₁-C₂₅, un cycloalkyle en C₁-C₂₅, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀, ou un hétéroaryloxy en C₅-C₂₄, qui sont optionnellement substitués avec au moins un alkyle en C₁-C₁₂ ou un perfluoroalkyle en C₁-C₁₂, ou deux sélectionnés parmi les substituants R³, R⁴, R⁵, R⁶, R⁷, R⁸, R⁹, R¹⁰, R¹¹ et R¹², pris ensemble, forment un système cyclique en C₄-C₁₀, polycyclique en C₄-C₁₂, hétérocyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un alkyle en C₁-C₁₂, un perfluoroalkyle en C₁-C₁₂, un alcoxy en C₁-C₁₂, un aryloxy en C₅-C₂₄, un hétéroaryloxy en C₅-C₂₀ et un halogène.

10. Composé **3f** selon la revendication 8 ou 9 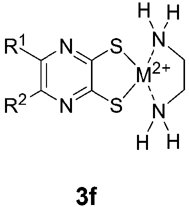 dans lequel
M²⁺ est un cation de Zn,
R¹ et R² sont indépendamment un hydrogène ; un halogène, un alkyle en C₁-C₂₅, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, qui sont optionnellement substitués avec au moins un alkyle en C₁-C₁₂ ou un perfluoroalkyle en C₁-C₁₂, ou R¹ et R² sont indépendamment un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante deux groupes R", pris ensemble, forment un cycle en C₅-C₂₅, qui peuvent en variante contenir au moins un hétéroatome sélectionné parmi un oxygène, un soufre, un sélénium, un azote, un phosphore, optionnellement en outre substitué avec un groupe alkyle en C₁-C₁₂, dans lequel l'hétéroatome présent dans le cycle hétérocyclique peut être substitué avec un ou deux groupes alkyle en C₁-C₁₂ pour former une amine primaire, secondaire ou tertiaire, un groupe ammonium quaternaire, un groupe sulfonium tertiaire ou un groupe phosphonium quaternaire ;
ou R¹ et R², pris ensemble, forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un halogène, un groupe perfluoroalkyle en C₁-C₁₂, un groupe alcoxy en C₁-C₁₂, un groupe aryloxy en C₅-C₂₄, un groupe hétéroaryloxy en C₅-C₂₀, un groupe alkyle en C₁-C₂₅, un groupe alcényle en C₂-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante, les deux groupes R", pris ensemble, forment un cycle en C₅-C₂₅, qui peut en variante contenir au moins un hétéroatome sélectionné parmi un oxygène, un soufre, un sélénium, un azote et un phosphore.

11. Composé selon les revendications 8, 9 ou 10, **caractérisé en ce que** sa structure est représentée par une formule sélectionnée parmi **3-Zn1, 3-Zn2, 3-Zn3, 3-Zn4, 3-Zn5, 3-Zn6, 3-Zn7, 3-Zn8, 3-Zn9, 3-Zn10, 3-Zn11, 3-Zn12, 3-Zn13 et 3-K1** :

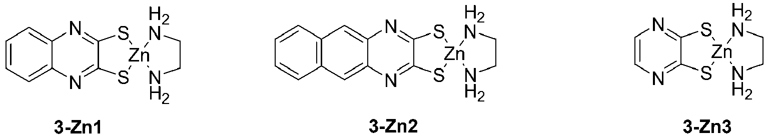

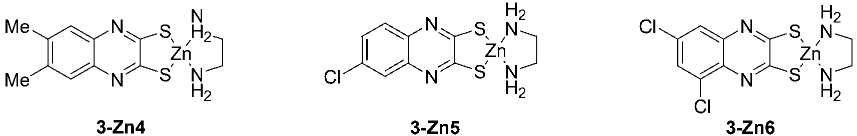

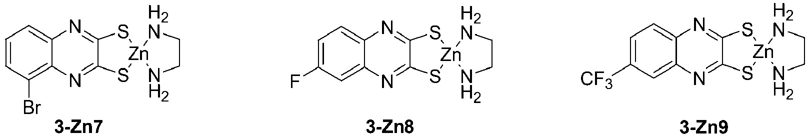

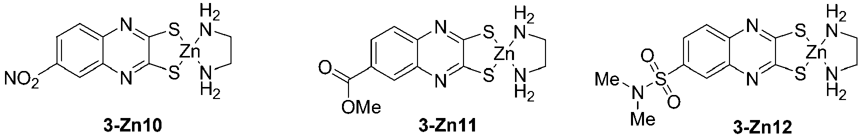

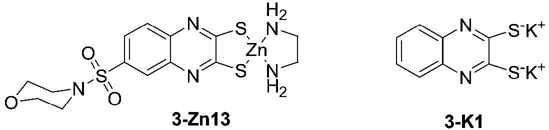

12. Procédé de production du complexe de ruthénium de formule **1-Ru,** telle que définie dans l'une des revendications 1 à 6 : 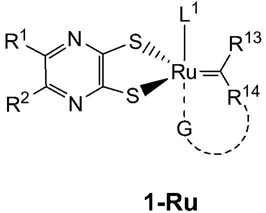 dans laquelle :
L¹ est un ligand neutre sélectionné parmi les carbènes N-hétérocycliques (NHC), les alkylaminocarbènes cycliques (CAAC) ou les phosphines ;
R¹ et R² sont indépendamment un hydrogène ; un halogène, un alkyle en C₁-C₂₅, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, qui sont optionnellement substitués avec au moins un alkyle en C₁-C₁₂ ou un perfluoroalkyle en C₁-C₁₂, ou R¹ et R² sont indépendamment un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante deux groupes R", pris ensemble, forment un cycle en C₅-C₂₅, qui peuvent en variante contenir au moins un hétéroatome sélectionné parmi un oxygène, un soufre, un sélénium, un azote, un phosphore, optionnellement en outre substitué avec un groupe alkyle en C₁-C₁₂, dans lequel l'hétéroatome présent dans le cycle hétérocyclique peut être substitué avec un ou deux groupes alkyle en C₁-C₁₂ pour former une amine primaire, secondaire ou tertiaire, un groupe ammonium quaternaire, un groupe sulfonium tertiaire ou un groupe phosphonium quaternaire ;
ou R¹ et R², pris ensemble, forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un halogène, un groupe alkyle en C₁-C₂₅, un groupe perfluoroalkyle en C₁-C₁₂, un groupe alcoxy en C₁-C₁₂, un groupe aryloxy en C₅-C₂₄, un groupe hétéroaryloxy en C₅-C₂₀, un groupe alcényle en C₂-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante, les deux groupes R", pris ensemble, forment un cycle en C₅-C₂₅, qui peut en variante contenir au moins un hétéroatome sélectionné parmi un oxygène, un soufre, un sélénium, un azote et un phosphore.
R¹³ et R¹⁴ sont indépendamment un hydrogène, un halogène, un alkyle en C₁-C₂₅ optionnellement substitué, un cycloalkyle en C₃-C₂₅ optionnellement substitué, un perfluoroalkyle en C₁-C₁₂ optionnellement substitué, un alcène en C₂-C₂₅ optionnellement substitué, un alcényle en C₂-C₂₅ optionnellement substitué, un cycloalcényle en C₃-C₂₅ optionnellement substitué, un alcynyle en C₂-C₂₅ optionnellement substitué, un cycloalcynyle en C₃-C₂₅ optionnellement substitué, un alcoxy en C₁-C₂₅ optionnellement substitué, un aryle en C₅-C₂₅ optionnellement substitué, un aryloxy en C₅-C₂₅ optionnellement substitué, un arylalkyle en C₆-C₂₅ optionnellement substitué, un hétéroaryle en C₅-C₂₅ optionnellement substitué, un hétéroaryloxy en C₅-C₂₅ optionnellement substitué, un perfluoroaryle en C₅-C₂₅ optionnellement substitué, un hétérocycle de 3 à 12 chaînons contenant un soufre, un oxygène, un azote, un sélénium ou un phosphore, optionnellement substitué ;
dans lequel les substituants R¹³ et R¹⁴, pris ensemble, peuvent former un cycle sélectionné dans un groupe comprenant un cycloalkyle en C₃-C₂₅, un cycloalcényle en C₃-C₂₅, un cycloalcynyle en C₃-C₂₅, un aryle en C₅-C₂₅, un hétéroaryle en C₅-C₂₅, un perfluoroaryle en C₅-C₂₅, un hétérocycle de 3 à 12 chaînons contenant un soufre, un oxygène, un azote, un sélénium ou un phosphore, qui peuvent être substitués indépendamment avec un et/ou plusieurs substituants sélectionnés dans un groupe comprenant un hydrogène, un halogène, un alkyle en C₁-C₂₅, un cycloalkyle en C₃-C₂₅, un perfluoroalkyle en C₁-C₁₂, un alcène en C₂-C₂₅, un alcényle en C₂-C₂₅, un cycloalcényle en C₃-C₂₅, un alcynyle en C₂-C₂₅, un cycloalcynyle en C₃-C₂₅, un alcoxy en C₁-C₂₅, un aryle en C₅-C₂₅, un aryloxy en C₅-C₂₅, un arylalkyle en C₆-C₂₅, un hétéroaryle en C₅-C₂₅, un hétéroaryloxy en C₅-C₂₅, un perfluoroaryle en C₅-C₂₅, et un hétérocycle de 3 à 12 chaînons ;
dans lequel les substituants R¹³ et R¹⁴ sont indépendamment de préférence un hydrogène et/ou un aryle en C₅-C₂₅ substitué indépendamment avec un hydrogène, un halogène, un groupe alkyle en C₁-C₂₅, un groupe alcényle en C₂-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂ R"), dans lesquels le groupe R" est indépendamment un hydrogène, un alkyle en C₁-C₅, un perfluoroalkyle en C₁-C₅, un aryle en C₆-C₂₄, un aralkyle en C₇-C₂₄, un perfluoroaryle en C₅-C₂₄, les deux groupes R", pris ensemble, peuvent former soit un cycle cycloalkyle en C₃-C ₁₂, soit un cycle hétérocycloalkyle en C₃-C₂₅ contenant un azote, un oxygène ou un soufre, optionnellement substitué en outre avec un groupe alkyle en C₁-C₁₂, en variante R" est un groupe cétone (-COR^{c}) dans lequel R^{c} est un groupe perfluoroalkyle ou alcoxy en C₁-C₁₂ (-OR^{d}) dans lequel R^{d} est un alkyle en C₁-C₁₂ ou un hétérocycloalkyle en C₃-C₁₂ contenant un azote, un oxygène ou un soufre optionnellement substitué en outre avec un groupe alkyle en C₁-C₁₂ ;
G est sélectionné parmi
- un ligand L² 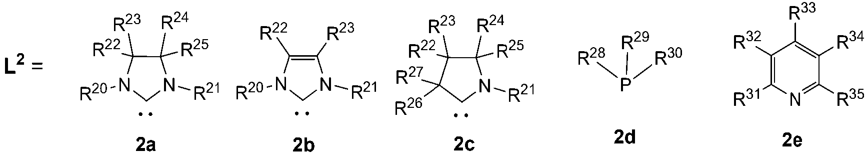
dans lequel les substituants R²⁰ et R²¹ sont indépendamment un groupe alkyle en C₁-C₁₂, un groupe cycloalkyle en C₃-C₁₂, un groupe aryle en C₅-C₂₀ ou un groupe hétéroaryle en C₅-C₂₀, un groupe aralkyle en C₅-C₂₅, qui peuvent être substitués indépendamment avec un et/ou plusieurs substituants sélectionnés dans un groupe comprenant un hydrogène,
un groupe alkyle en C₁-C₁₂, un groupe perfluoroalkyle en C₁-C₁₂, un groupe aryle en C₅-C₂₀, un groupe perfluoroaryle en C₅-C₂₀, un groupe hétéroaryle en C₅-C₂₀, un groupe alcoxy en C₁-C₁₂, un groupe aryloxy en C₅-C₂₄, un groupe hétéroaryloxy en C₅-C₂₀, ou un halogène, un groupe alcoxy (-OR"), un groupe sulfure (-SR"), un halogène, un groupe amine (-NR"₂), dans lesquels le groupe R" est indépendamment un hydrogène, un alkyle en C₁-C₅, un aryle en C₆-C₂₄, un aralkyle en C₇-C₂₄, en variante R²⁰ et R²¹, pris ensemble, forment un cycle en C₅-C₂₅ ;
chaque substituant R²⁰, R²¹, R²², R²³, R²⁴, R²⁵, R²⁶, et R²⁷ est indépendamment un hydrogène, un halogène, le groupe hydroxyle, un groupe alcoxy en C₁-C₁₂, un groupe hydroxyméthyle (-CH₂OH), un groupe alkyle en C₁-C₁₂ optionnellement substitué avec un groupe amine (-NR^{a}₂), dans lequel chaque R^{a} est indépendamment soit un hydrogène, soit un alkyle en C₁-C₁₂, les deux groupes R^{a}, pris ensemble, peuvent former soit un cycle cycloalkyle en C₃-C₁₂, soit un groupe hétérocycloalkyle en C₃-C₂₅, cycloalkyle en C₃-C₁₂ ; un groupe aryle en C₅-C₂₀, un groupe hétéroaryle en C₅-C₂₀, un groupe ester (-OCOR^{b}), un groupe (-COR^{d}), un groupe méthylester (-CH₂OCOR^{b}), dans lequel R^{b} est soit un groupe aryle en C₅-C₂₀, soit un groupe perfluoroaryle en C₅-C₂₀ ; un groupe amine (-NR^{c}₂), un groupe méthylamine (-CH₂NR^{c}₂), dans lequel chaque R^{c} est indépendamment soit un hydrogène, soit un alkyle en C₁-C₁₂, les deux groupes R^{c}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₄-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire,
qui peut être substitué indépendamment avec au moins un substituant sélectionné dans un groupe comprenant un hydroxyle (OH), un alkyle en C₁-C₁₂, un perfluoroalkyle en C₁-C₁₂, un alcoxy en C₁-C₁₂, un halogène, un hétérocycloalkyle en C₃-C₁₂ optionnellement substitué avec un groupe alkyle en C₁-C₁₂, un groupe ester (-COOR^{d}) ou un groupe (-COR^{d}), dans lesquels R^{d} est un groupe aryle en C₅-C₂₀ ou un groupe perfluoroaryle en C₅-C₂₀, ou un groupe amino (-NR^{e}₂) dans lequel chaque R^{e} est indépendamment un hydrogène ou un alkyle en C₁-C₁₂, les deux groupes R^{e}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₄-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire, et les substituants R²⁰, R²¹, R²², R²³, R²⁴, R²⁵, R²⁶, et R²⁷ peuvent optionnellement être interconnectés pour former un système cyclique en C₄-C₁₀ ou un système polycyclique en C₄-C₁₂ ;
chaque substituant R²⁸, R²⁹ et R³⁰ est indépendamment un alkyle en C₁-C₂₅, un cycloalkyle en C₁-C₂₅, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀, ou un hétéroaryloxy en C₅-C₂₄, qui sont optionnellement substitués avec au moins un alkyle en C₁-C₁₂ ou un perfluoroalkyle en C₁-C₁₂, ou R²⁸, R²⁹ et R³⁰, pris ensemble, forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un alkyle en C₁-C₁₂, un perfluoroalkyle en C₁-C₁₂, un alcoxy en C₁-C₁₂, un aryloxy en C₅-C₂₄, un hétéroaryloxy en C₅-C₂₀ et un halogène ;
chaque substituant R³¹, R³², R³³, R³⁴ et R³⁵ est indépendamment un groupe alkyle en C₁-C₁₂, un groupe cycloalkyle en C₃-C₁₂, un groupe aryle en C₅-C₂₀ ou un groupe hétéroaryle en C₅-C₂₀, qui peuvent être substitués indépendamment avec un et/ou plusieurs substituants sélectionnés dans un groupe comprenant un hydrogène, un groupe alkyle en C₁-C₁₂, un groupe perfluoroalkyle en C₁-C₁₂, un groupe alcoxy en C₁-C₁₂, un groupe aryloxy en C₅-C₂₄, un groupe hétéroaryloxy en C₅-C₂₀, ou un halogène ; ou
- un hétéroatome 1
sélectionné dans un groupe comprenant un oxygène, un soufre, un sélénium, substitué avec un groupe sélectionné parmi un hydrogène, un halogène, un oxygène, un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, un hétérocycle de 3 à 12 chaînons, optionnellement substitué avec un groupe acyle (-COR'), cyano (-CN), carboxyle (-COOH), ester (-COOR'), ester (-CH₂COOR'), ester (-CHR'COOR'), ester (-C(R')₂COOR'), amide (-CONR'₂), amide de type Weinreb (-CON(R')(OR')), sulfonique (-SO₂R'), formyle (-COH), sulfonamide (-SO₂NR'₂), cétone (-COR'), thiamide (-CSNR'₂), thiocétone (-CSR'), thionoester (-CSOR'), thioester (-COSR'), dithioester (-CS₂R'), dans lesquels le groupe R' est un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄ et ensuite la ligne en pointillé représente une liaison directe de l'hétéroatome au substituant R¹⁴ ou représente la liaison du substituant R¹⁴ à l'hétéroatome via un pont méthylène -(CH₂)-, -(CHR')- ou (CR'₂)-, dans lequel le substituant R¹⁴ est un aryle en C₅-C₁₅ optionnellement substitué avec 1 à 4 substituants sélectionnés indépendamment dans un groupe comprenant un hydrogène, un halogène, un alkyle en C₁-C₂₅, un cycloalkyle en C₃-C₂₅, un alcényle en C₂-C₂₅, un cycloalcényle en C₃-C₂₅, un alcynyle en C₂-C₂₅, un cycloalcynyle en C₃-C₂₅, un perfluoroalkyle en C₁-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un hétéroaryle en C₆-C₂₀ ou un hétéroaryloxy en C₅-C₂₄, un hétérocycle de 3 à 12 chaînons, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans lesquels le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄ ; ou
- un hétéroatome 2
sélectionné dans un groupe comprenant un azote ou un phosphore, substitué avec un groupe sélectionné parmi un hydrogène, un méthylidène optionnellement substitué avec un substituant R', un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, un hétérocycle de 3 à 12 chaînons, un groupe acyle (-COR'), un groupe tert-butyloxycarbonyle (t-Boc) ou un groupe 9-fluorénylméthoxycarbonyle (Fmoc), un groupe carbamate (-CONR'₂), un groupe sulfonique (-SO₂R'), un groupe formyle (-COH), dans lesquels le groupe R' est un alkyle en C₁ -C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄ optionnellement substitué avec un groupe acyle (-COR"), cyano (-CN), carboxyle (-COOH), ester (-COOR"), ester (-CH₂COOR"), ester (-CHR"COOR"), ester (-C(R")₂COOR"), amide (-CONR"₂), sulfonique (-SO₂R"), formyle (-COH), sulfonamide (-SO₂NR"₂), cétone (-COR"), thioamide (-CSNR"₂), thiocétone (-CSR"), thionoester (-CSOR"), thioester (-COSR"), dithioester (-CS₂R"), dans lesquels le groupe R" est un alkyle en C₁-C₂₅, un perfluoroalkyle en C₁-C₂₅, un cycloalkyle en C₃-C₂₅, un alcoxy en C₅-C₂₀, un aryle en C₅-C_{20,} un perfluoroaryle en C₅-C₂₀, un aralkyle en C₇-C₂₀, un aryloxy en C₅-C₂₄, un alcényle en C₂-C₁₂, un hétéroaryle en C₆-C₂₀, ou un hétéroaryloxy en C₅-C_{24,} et ensuite la ligne en pointillé représente une liaison directe de l'hétéroatome au substituant R¹⁴ ou représente la liaison du substituant R¹⁴ à l'hétéroatome via un pont méthylène (CH₂)-, -(CHR')- ou (CR'₂)- ; dans lequel le substituant R¹⁴ est un aryle en C₅-C₁₅ optionnellement substitué avec 1 à 4 substituants sélectionnés indépendamment dans un groupe comprenant un hydrogène, un halogène, un alkyle en C₁-C₂₅, un cycloalkyle en C₃-C₂₅, un alcényle en C₂-C₂₅, un cycloalcényle en C₃-C₂₅, un alcynyle en C₂-C₂₅, un cycloalcynyle en C₃-C₂₅, un perfluoroalkyle en C₁-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un hétéroaryle en C₆-C₂₀ ou un hétéroaryloxy en C₅-C₂₄, un hétérocycle de 3 à 12 chaînons, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans lesquels le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, ou
- un hétéroatome 3
sélectionné dans un groupe comprenant un halogène, et ensuite la ligne en pointillé représente une liaison directe de l'hétéroatome au substituant R¹⁴, dans lequel le substituant R¹⁴ est un aryle en C₅-C₁₅ ou un polyaryle en C₅-C₂₅ optionnellement substitué avec 1 à 4 substituants sélectionnés indépendamment dans un groupe comprenant un hydrogène, un halogène, un alkyle en C₁-C₂₅, un cycloalkyle en C₃-C₂₅, un alcényle en C₂-C₂₅, un cycloalcényle en C₃-C₂₅, un alcynyle en C₂-C₂₅, un cycloalcynyle en C₃-C₂₅, un perfluoroalkyle en C₁-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un hétéroaryle en C₆-C₂₀ ou un hétéroaryloxy en C₅-C_{24,} un hétérocycle de 3 à 12 chaînons, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR")₂, un groupe oxyde de phosphine (-P(O)R")₂, un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans lesquels le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄ ;
**caractérisé en ce que** le complexe alkylidène-ruthénium de formule **4-Ru** : 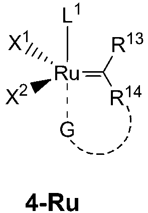 dans laquelle :
X¹ et X² sont indépendamment des ligands anioniques sélectionnés dans un groupe comprenant un anion d'halogène, -CN, -SCN, -OR^{a}, -SR^{a}, -O(C=O)R^{a}, -O(SO₂)R^{a}, et -OSi(R^{a})_{3,} dans lesquels R^{a} est un alkyle en C₁-C₁₂, un cycloalkyle en C₃-C₁₂, un alcényle en C₂-C₁₂ ou un aryle en C₅-C₂₀, qui est optionnellement substitué avec au moins un alkyle en C₁-C₁₂, un perfluoroalkyle en C₁-C₁₂, un alcoxy en C₁-C₁₂, un aryloxy en C₅-C₂₄, un hétéroaryloxy en C₅-C₂₀ ou un halogène ;
L¹ est un ligand neutre sélectionné parmi les carbènes N-hétérocycliques (NHC), les alkylaminocarbènes cycliques (CAAC) ou les phosphines ;
R¹³ et R¹⁴ sont indépendamment un hydrogène, un halogène, un alkyle en C₁-C₂₅ optionnellement substitué, un cycloalkyle en C₃-C₂₅ optionnellement substitué, un perfluoroalkyle en C₁-C₁₂ optionnellement substitué, un alcène en C₂-C₂₅ optionnellement substitué, un alcényle en C₂-C₂₅ optionnellement substitué, un cycloalcényle en C₃-C₂₅ optionnellement substitué, un alcynyle en C₂-C₂₅ optionnellement substitué, un cycloalcynyle en C₃-C₂₅ optionnellement substitué, un alcoxy en C₁-C₂₅ optionnellement substitué, un aryle en C₅-C₂₅ optionnellement substitué, un aryloxy en C₅-C₂₅ optionnellement substitué, un arylalkyle en C₆-C₂₅ optionnellement substitué, un hétéroaryle en C₅-C₂₅ optionnellement substitué, un hétéroaryloxy en C₅-C₂₅ optionnellement substitué, un perfluoroaryle en C₅-C₂₅ optionnellement substitué, un hétérocycle de 3 à 12 chaînons contenant un soufre, un oxygène, un azote, un sélénium ou un phosphore, optionnellement substitué ;
dans lequel les substituants R¹³ et R¹⁴, pris ensemble, peuvent former un cycle sélectionné dans un groupe comprenant un cycloalkyle en C₃-C₂₅, un cycloalcényle en C₃-C₂₅, un cycloalcynyle en C₃-C₂₅, un aryle en C₅-C₂₅, un hétéroaryle en C₅-C₂₅, un perfluoroaryle en C₅-C₂₅, un hétérocycle de 3 à 12 chaînons contenant un soufre, un oxygène, un azote, un sélénium ou un phosphore, qui peuvent être substitués indépendamment avec un et/ou plusieurs substituants sélectionnés dans un groupe comprenant un hydrogène, un halogène, un alkyle en C₁-C₂₅, un cycloalkyle en C₃-C₂₅, un perfluoroalkyle en C₁-C₁₂, un alcène en C₂-C₂₅, un alcényle en C₂-C₂₅, un cycloalcényle en C₃-C₂₅, un alcynyle en C₂-C₂₅, un cycloalcynyle en C₃-C₂₅, un alcoxy en C₁-C₂₅, un aryle en C₅-C₂₅, un aryloxy en C₅-C₂₅, un arylalkyle en C₆-C₂₅, un hétéroaryle en C₅-C₂₅, un hétéroaryloxy en C₅-C₂₅, un perfluoroaryle en C₅-C₂₅, et un hétérocycle de 3 à 12 chaînons ;
dans lequel les substituants R¹³ et R¹⁴ sont de préférence indépendamment un hydrogène et/ou un aryle en C₅-C₂₅ substitué indépendamment avec un hydrogène, un groupe alkyle en C₁-C₂₅, un groupe alcényle en C₂-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans lesquels le groupe R" est un alkyle en C₁-C₅, un perfluoroalkyle en C₁-C₅, un aryle en C₆-C₂₄, un aralkyle en C₇-C₂₄, et un perfluoroaryle en C₅-C₂₄ ;
G est sélectionné parmi
- un ligand L² 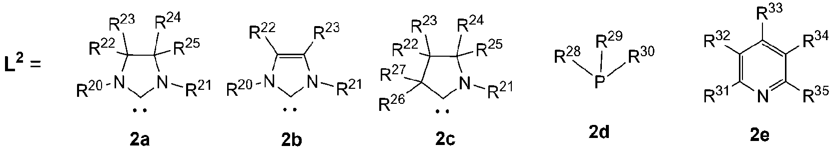
dans lequel les substituants R²⁰ et R²¹ sont indépendamment un groupe alkyle en C₁-C₁₂, un groupe cycloalkyle en C₃-C₁₂, un groupe aryle en C₅-C₂₀ ou un groupe hétéroaryle en C₅-C₂₀, un groupe aralkyle en C₅-C₂₅, qui peuvent être substitués indépendamment avec un et/ou plusieurs substituants sélectionnés dans un groupe comprenant un hydrogène,
un groupe alkyle en C₁-C₁₂, un groupe perfluoroalkyle en C₁-C₁₂, un groupe aryle en C₅-C₂₀, un groupe perfluoroaryle en C₅-C₂₀, un groupe hétéroaryle en C₅-C₂₀, un groupe alcoxy en C₁-C₁₂, un groupe aryloxy en C₅-C₂₄, un groupe hétéroaryloxy en C₅-C₂₀, ou un halogène, un groupe alcoxy (-OR"), un groupe sulfure (-SR"), un halogène, un groupe amine (-NR"₂), dans lesquels le groupe R" est indépendamment un hydrogène, un alkyle en C₁-C₅, un aryle en C₆-C₂₄, un aralkyle en C₇-C₂₄, en variante R²⁰ et R²¹, pris ensemble, forment un cycle en C₅-C₂₅ ;
chaque substituant R²⁰, R²¹, R²², R²³, R²⁴, R²⁵, R²⁶, et R²⁷ est indépendamment un hydrogène, un halogène, le groupe hydroxyle, un groupe alcoxy en C₁-C₁₂, un groupe hydroxyméthyle (-CH₂OH), un groupe alkyle en C₁-C₁₂ optionnellement substitué avec un groupe amine (-NR^{a}₂), dans lequel chaque R^{a} est indépendamment soit un hydrogène, soit un alkyle en C₁-C₁₂, les deux groupes R^{a}, pris ensemble, peuvent former soit un cycle cycloalkyle en C₃-C₁₂, soit un groupe hétérocycloalkyle en C₃-C₂₅, cycloalkyle en C₃-C₁₂ ; un groupe aryle en C₅-C₂₀, un groupe hétéroaryle en C₅-C₂₀, un groupe ester (-OCOR^{b}), un groupe (-COR^{d}), un groupe méthylester (-CH₂OCOR^{b}), dans lequel R^{b} est soit un groupe aryle en C₅-C₂₀, soit un groupe perfluoroaryle en C₅-C₂₀ ; un groupe amine (-NR^{c}₂), un groupe méthylamine (-CH₂NR^{c}₂), dans lequel chaque R^{c} est indépendamment soit un hydrogène, soit un alkyle en C₁-C₁₂, les deux groupes R^{c}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₁-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire,
qui peut être substitué indépendamment avec au moins un substituant sélectionné dans un groupe comprenant un hydroxyle (OH), un alkyle en C₁-C₁₂, un perfluoroalkyle en C₁-C₁₂, un alcoxy en C₁-C₁₂, un halogène, un hétérocycloalkyle en C₃-C₁₂ optionnellement substitué avec un groupe alkyle en C₁-C₄₂, un groupe ester (-COOR^{d}) ou un groupe (-COR^{d}), dans lesquels R^{d} est un groupe aryle en C₅-C₂₀ ou un groupe perfluoroaryle en C₅-C₂₀, ou un groupe amino (-NR^{e}₂) dans lequel chaque R^{e} est indépendamment un hydrogène ou un alkyle en C₁-C₁₂, les deux groupes R^{e}, pris ensemble, peuvent former un cycle cycloalkyle en C₃-C₁₂ ou un hétérocycloalkyle en C₃-C₂₅ contenant un azote, un oxygène ou un soufre, optionnellement substitué en outre avec un groupe alkyle en C₁-C₁₂, dans lequel l'hétéroatome présent dans le cycle hétérocyclique peut être substitué avec un ou deux groupes alkyle en C₁-C₁₂ qui forment une amine primaire, secondaire ou tertiaire, ou un groupe ammonium quaternaire, un groupe sulfonium tertiaire ou un groupe phosphonium quaternaire, et les substituants R²⁰, R²¹, R²², R²³, R²⁴, R²⁵, R²⁶, et R²⁷ peuvent optionnellement être interconnectés pour former un système cyclique en C₄-C₄₀ ou un système polycyclique en C₄-C₁₂ ;
chaque substituant R²⁸, R²⁹ et R³⁰ est indépendamment un alkyle en C₁-C₂₅, un cycloalkyle en C₃-C₁₂, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀, ou un hétéroaryloxy en C₅-C₂₄, qui sont optionnellement substitués avec au moins un alkyle en C₁-C₁₂ ou un perfluoroalkyle en C₁-C₁₂, ou R²⁸, R²⁹ et R³⁰, pris ensemble, forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un alkyle en C₁-C₁₂, un perfluoroalkyle en C₁-C₁₂, un alcoxy en C₁-C₁₂, un aryloxy en C₅-C₂₄, un hétéroaryloxy en C₅-C₂₀ et un halogène ;
chaque substituant R³¹, R³², R³³, R³⁴ et R³⁵ est indépendamment un groupe alkyle en C₁-C₁₂, un groupe cycloalkyle en C₃-C₁₂, un groupe aryle en C₅-C₂₀ ou un groupe hétéroaryle en C₅-C₂₀, qui peuvent être substitués indépendamment avec un et/ou plusieurs substituants sélectionnés dans un groupe comprenant un hydrogène, un groupe alkyle en C₁-C₁₂, un groupe perfluoroalkyle en C₁-C₁₂, un groupe alcoxy en C₁-C₁₂, un groupe aryloxy en C₅-C₂₄, un groupe hétéroaryloxy en C₅-C₂₀, ou un halogène ; ou
- un hétéroatome 1
sélectionné dans un groupe comprenant un oxygène, un soufre, un sélénium, substitué avec un groupe sélectionné parmi un hydrogène, un halogène, un oxygène, un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, un hétérocycle de 3 à 12 chaînons, optionnellement substitué avec un groupe acyle (-COR'), cyano (-CN), carboxyle (-COOH), ester (-COOR'), ester (-CH₂COOR'), ester (-CHR'COOR'), ester (-C(R')₂COOR'), amide (-CONR'₂), amide de type Weinreb (-CON(R')(OR')), sulfonique (-SO₂R'), formyle (-COH), sulfonamide (-SO₂NR'₂), cétone (-COR'), thiamide (-CSNR'₂), thiocétone (-CSR'), thionoester (-CSOR'), thioester (-COSR'), dithioester (-CS₂R'), dans lesquels le groupe R' est un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄ et ensuite la ligne en pointillé représente une liaison directe de l'hétéroatome au substituant R¹⁴ ou représente la liaison du substituant R¹⁴ à l'hétéroatome via un pont méthylène -CH₂-, -CHR'- ou -CR'₂-, dans lequel le substituant R¹⁴ est un aryle en C₅-C₁₅ optionnellement substitué avec 1 à 4 substituants sélectionnés indépendamment dans un groupe comprenant un hydrogène, un halogène, un alkyle en C₁-C₂₅, un cycloalkyle en C₃-C₂₅, un alcényle en C₂-C₂₅, un cycloalcényle en C₃-C₂₅, un alcynyle en C₂-C₂₅, un cycloalcynyle en C₃-C₂₅, un perfluoroalkyle en C₁-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un hétéroaryle en C₆-C₂₀ ou un hétéroaryloxy en C₅-C₂₄, un hétérocycle de 3 à 12 chaînons, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans lesquels le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, ou
- un hétéroatome 2
sélectionné dans un groupe comprenant un azote ou un phosphore, substitué avec un groupe sélectionné parmi un hydrogène, un méthylidène optionnellement substitué avec un substituant R', un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, un hétérocycle de 3 à 12 chaînons, un groupe acyle (-COR'), un groupe tert-butyloxycarbonyle (t-Boc) ou un groupe 9-fluorénylméthoxycarbonyle (Fmoc), un groupe carbamate (-CONR'₂), un groupe sulfonyle (-SO₂R'), un groupe formyle (-COH), dans lesquels le groupe R' est un alkyle en C₁ -C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄ optionnellement substitué avec un groupe acyle (-COR"), cyano (-CN), carboxyle (-COOH), ester (-COOR"), ester (-CH₂COOR"), ester (-CHR"COOR"), ester (-C(R")₂COOR"), amide (-CONR"₂), sulfonique (-SO₂R"), formyle (-COH), sulfonamide (-SO₂NR"₂), cétone (-COR"), thioamide (-CSNR"₂), thiocétone (-CSR"), thionoester (-CSOR"), thioester (-COSR"), dithioester (-CS₂R"), dans lesquels le groupe R" est un alkyle en C₁-C₂₅, un perfluoroalkyle en C₁-C₂₅, un cycloalkyle en C₃-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un alcényle en C₂-C₁₂, un hétéroaryle en C₆-C₂₀, ou un hétéroaryloxy en C₅-C₂₄, et ensuite la ligne en pointillé représente une liaison directe de l'hétéroatome au substituant R¹⁴ ou représente la liaison du substituant R¹⁴ à l'hétéroatome via un pont méthylène (CH₂)-, -(CHR')- ou (CR'₂)- ; dans lequel le substituant R¹⁴ est un aryle en C₅-C₁₅ optionnellement substitué avec 1 à 4 substituants sélectionnés indépendamment dans un groupe comprenant un hydrogène, un halogène, un alkyle en C₁-C₂₅, un cycloalkyle en C₃-C₂₅, un alcényle en C₂-C₂₅, un cycloalcényle en C₃-C₂₅, un alcynyle en C₂-C₂₅, un cycloalcynyle en C₃-C₂₅, un perfluoroalkyle en C₁-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un hétéroaryle en C₆-C₂₀ ou un hétéroaryloxy en C₅-C₂₄, un hétérocycle de 3 à 12 chaînons, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans lesquels le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, ou
- un hétéroatome 3
sélectionné dans un groupe comprenant un halogène, et ensuite la ligne en pointillé représente une liaison directe de l'hétéroatome au substituant R¹⁴, dans lequel le substituant R¹⁴ est un aryle en C₅-C₁₅ ou un polyaryle en C₅-C₂₅ optionnellement substitué avec 1 à 4 substituants sélectionnés indépendamment dans un groupe comprenant un hydrogène, un halogène, un alkyle en C₁-C₂₅, un cycloalkyle en C₃-C₂₅, un alcényle en C₂-C₂₅, un cycloalcényle en C₃-C₂₅, un alcynyle en C₂-C₂₅, un cycloalcynyle en C₃-C₂₅, un perfluoroalkyle en C₁-C₂₅, un alcoxy en C₅-C₂₀, un aryle en C₅-C₂₀, un perfluoroaryle en C₅-C₂₀, un aralkyle en C₇-C₂₀, un aryloxy en C₅-C₂₄, un hétéroaryle en C₆-C₂₀ ou un hétéroaryloxy en C₅-C₂₄, un hétérocycle de 3 à 12 chaînons, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR")₂, un groupe oxyde de phosphine (-P(O)R")₂, un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans lesquels le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄ ;
est mis à réagir avec un composé ayant la structure définie par la formule **3a** ou **3b** 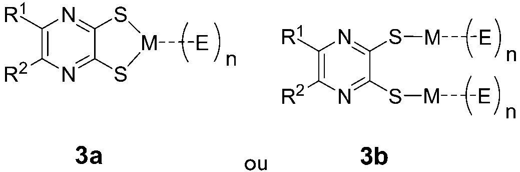 dans lesquelles
M est un cation de métal monovalent ou divalent ;
n est 0, 1 ou 2 ;
E est au moins un hétéroatome sélectionné dans un groupe comprenant un oxygène, un soufre, un sélénium, un azote, un phosphore, qui sont substitués avec un groupe ou, si l'hétéroatome est un azote ou un phosphore, avec les groupes : groupe alkyle en C₁-C₂₅, groupe cycloalkyle en C₁-C₂₅, groupe alcoxy en C₅-C₂₀, groupe aryle en C₅-C₂₀, groupe aralkyle en C₇-C₂₀, groupe aryloxy en C₅-C₂₄, groupe alcényle en C₂-C₁₂, groupe hétéroaryle en C₆-C₂₀, groupe hétéroaryloxy en C₅-C₂₄, ou hydrogène, qui sont optionnellement substitués avec au moins un alkyle en C₁-C₁₂ ou un perfluoroalkyle en C₁-C₁₂, ou si deux hétéroatomes identiques ou différents constituent un système chélateur, alors, pris ensemble, ils forment un système cyclique en C₄-C₁₀, polycyclique en C₄-C₁₂, aromatique en C₄-C₁₀, hétéroaromatique en C₄-C₁₀, substitué ou non substitué, qui peut être substitué avec un et/ou plusieurs substituants sélectionnés parmi un hydrogène, un alkyle en C₁-C₁₂, un perfluoroalkyle en C₁-C₁₂, un alcoxy en C₁-C₁₂, un aryloxy en C₅-C₂₄, un hétéroaryloxy en C₅-C₂₀ et un halogène ;
R¹ et R² sont indépendamment un hydrogène, un halogène, un alkyle en C₁-C₂₅, un alcoxy en C₅-C₂₀, un aryle en C₅-C₂₀, un aralkyle en C₇-C₂₀, un aryloxy en C₅-C₂₄, un alcényle en C₂-C₁₂, un hétéroaryle en C₆-C₂₀ ou un hétéroaryloxy en C₅-C₂₄, qui sont optionnellement substitués avec au moins un alkyle en C₁-C₁₂ ou un perfluoroalkyle en C₁-C₁₂, ou R¹ et R² sont indépendamment un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante deux groupes R", pris ensemble, forment un cycle en C₅-C₂₅, qui peuvent en variante contenir au moins un hétéroatome sélectionné parmi un oxygène, un soufre, un sélénium, un azote, un phosphore, optionnellement en outre substitué avec un groupe alkyle en C₁-C₁₂, dans lequel l'hétéroatome présent dans le cycle hétérocyclique peut être substitué avec un ou deux groupes alkyle en C₁-C₁₂ pour former une amine primaire, secondaire ou tertiaire, un groupe ammonium quaternaire, un groupe sulfonium tertiaire ou un groupe phosphonium quaternaire,
ou R¹ et R², pris ensemble, forment un système cyclique en C₄-C₁₀, polycyclique en C₄-C₁₂, aromatique en C₄-C₁₀, hétéroaromatique en C₄-C₁₀, polyaromatique en C₄-C₁₀, et polyhétéroaromatique en C₄-C₁₀, substitué ou non substitué, qui peut être substitué avec un et/ou plusieurs substituants sélectionnés parmi un hydrogène, un halogène, un groupe alkyle en C₁-C₂₅, un groupe perfluoroalkyle en C₁-C₁₂, un groupe alcoxy en C₁-C₁₂, un groupe aryloxy en C₅-C₂₄, un groupe hétéroaryloxy en C₅-C₂₀, un groupe alcényle en C₂-C₂₅, un groupe alcoxy (-OR"), un groupe sulfure (-SR"), un groupe sulfoxyde (-S(O)R"), un groupe sulfonium (-S⁺R"₂), un groupe sulfonyle (-SO₂R"), un groupe sulfonamide (-SO₂NR"₂), un groupe amine (-NR"₂), un groupe ammonium (-N⁺R"₃), un groupe nitro (-NO₂), un groupe cyano (-CN), un groupe phosphonate (-P(O)(OR")₂), un groupe phosphinate (-P(O)R"(OR")), un groupe phosphonite (-P(OR")₂), un groupe phosphine (-PR"₂), un groupe oxyde de phosphine (-P(O)R"₂), un groupe phosphonium (-P⁺R"₃), un groupe carboxyle (-COOH), un groupe ester (-COOR"), un groupe amide (-CONR"₂), un groupe amide (-NR"C(O)R"), un groupe formyle (-CHO), un groupe cétone (-COR"), un groupe thioamide (-CSNR"₂), un groupe thiocétone (-CSR"), un groupe thionoester (-CSOR"), un groupe thioester (-COSR"), un groupe dithioester (-CS₂R"), dans laquelle le groupe R" est un alkyle en C₁-C₅, un perfluoroalkyle en C₁-C₅, un aryle en C₆-C₂₄, un aralkyle en C₇-C₂₄, un perfluoroaryle en C₅-C₂₄, en variante, les deux groupes R", pris ensemble, forment un cycle en C₅-C₂₅, qui peut en variante contenir au moins un hétéroatome sélectionné parmi un oxygène, un soufre, un sélénium, un azote et un phosphore.

13. Utilisation d'un composé de formule **1-Ru** selon l'une des revendications 1 à 7 comme précatalyseur et/ou catalyseur dans des réactions de métathèse d'oléfine, en particulier dans des réactions de métathèse par fermeture de cycle (RCM), de métathèse croisée (CM), d'homométathèse (métathèse croisée entre deux molécules de la même oléfine), d'éthénolyse, d'isomérisation, de métathèse diastéréosélective par réarrangement de cycle (DRRM), de métathèse alcène-alcyne (ène-yne), ou dans des réactions de polymérisation de type ROMP ou ADMET.

14. Utilisation selon la revendication 13, dans laquelle les réactions de métathèse d'oléfine sont réalisées avec le catalyseur et/ou le précatalyseur **1-Ru** défini dans l'une des revendications 1 à 7 en présence d'un composé ayant une structure représentée par une formule sélectionnée parmi 3-**Zn1, 3-Zn2, 3-Zn3, 3-Zn4, 3-Zn5, 3-Zn6, 3-Zn7, 3-Zn8, 3-Zn9, 3-Zn10, 3-Zn11, 3-Zn12,** 3-**Zn13, 3-K1** telles que définies dans la revendication 11, en une quantité allant de 0,0001 % en mole à 200 % en mole.

15. Utilisation selon la revendication 13 ou 14, dans laquelle la réaction est réalisée dans un solvant organique sélectionné parmi le toluène, le benzène, le mésylène, l'hexane, le dichlorométhane, le dichloroéthane, le chlorobenzène, le perfluorobenzène, le perfluorotoluène, l'acétate d'éthyle, l'acétate de méthyle, le carbonate de méthyle, le carbonate d'éthyle, le méthyl-tert-butyléther, le cyclopentylméthyléther, le diéthyléther, le THF, le 2-ME-THF, le 4-ME-THP, le dioxane, le DME, le PAO, le PEG, la paraffine, les esters d'acides gras saturés, ou la réaction est réalisée dans un système sans solvant, et/ou la réaction est réalisée à une température de 20 à 200 °C, et/ou la réaction est réalisée sur une période de 5 minutes à 48 heures, et/ou dans laquelle le composé **1-Ru** est utilisé en une quantité de pas plus de 10 % en mole, de préférence pas plus de 0,1 % en mole, et/ou dans laquelle le composé **1-Ru** est ajouté au mélange réactionnel par portions sous forme solide et/ou en continu, au moyen d'une pompe, sous forme de solution dans un solvant organique, et/ou dans laquelle le sous-produit gazeux de la réaction, sélectionné parmi l'éthylène, le propylène, le butylène, est activement éliminé du mélange réactionnel par barbotage de gaz inerte ou par vide.
